# EUROPEAN PATENT APPLICATION

(11) **EP 1 704 769 A1**
(43) Date of publication of application: **27.09.2006**
(21) Application number: 04807555.0
(22) Date of filing: 22.12.2004
(51) Int. Cl.: A01G 1/00, A01G 5/06, A01G 7/00, A01G 13/00, A01N 27/00, A01N 31/02, A01N 61/00

(54) **METHOD OF GROWING PLANT, WATER FRESHNESS PRESERVER, ROOT ROT INHIBITOR, PLANT MEDIUM, WATER HOLDER, BACTERICIDE, HERBICIDE, HEAT INSULATOR, IMPROVER, DEODORIZER AND WATER-FRESHNESS PRESERVATION**

(30) Priority: 26.12.2003 JP 2003435983; 31.03.2004 JP 2004101769
(71) Applicant: Takeda, Noriko, Niigata-shi Niigata 9500088 (JP)
(72) Inventor: Takeda, Noriko, Niigata-shi Niigata 9500088 (JP)
(74) Representative: Graf Lambsdorff, Matthias
(86) International application number: PCT/JP2004/019198
(87) International publication number: WO 2005/065443

(57) **Abstract**

On an ornamental foliage plant 2, a flowering grass or a flowering tree is grown in a soil medium 1, a nonionic resin, a mixture of a nonionic resin with an acrylic resin, or a mixture of a nonionic resin with titanium and a liquid fertilizer is sprinkled. This nonionic resin also serves as a bactericide, a water holder, a herbicide, a heat insulator, etc. A plant is grown in a medium containing titanium. A plant is grown by sprinkling water (for example, vital atom water or natural brine) containing titanium, a nonionic resin, etc. on the medium. Titanium and a nonionic resin are added to water to preserve water freshness.

## Description

### BACKGROUND ART

### Field of the Invention:

This invention is related with the method of growing the plants for admiration or the like, the freshner of water, the root rot inhibitor, the vegetable culture medium and the water retention agent, the disinfectant, the weed killer, the heat insulation agent, the improvement agent, and the deodorizer.

### Description of the Related Art:

The vegetable cultivation by the artificial hilling made from a water absorption polymer is using a coloring polymer hilling for a clear container, it will become colorful, and being carried out as cultivation for indoor admiration is known (patent documents 1).

However, cultivation of the plant in the artificial culture medium of these polymer made from water absorption is restricted to the hydroponics plant.
That is, if the plant that carried out soil cultivation is again planted in hydroponics or hilling made from a water absorption polymer as it is, root rot will be started and a plant will wither.

Then, since the personnel of the present invention has knowledge of the transplant cultivation to the water absorption polymer hilling of soil cultivated plants becoming possible to the plant by giving a habituation process, this invention is proposed.

Hydrophilic resin (water absorption polymer) is adopted as a culture medium of the potted plant for indoor admiration. Since the moisture currently held can be directly supplied to a vegetable root, hydrophilic resin (thermoplastic nonionic type resin) is suitable as a culture medium.

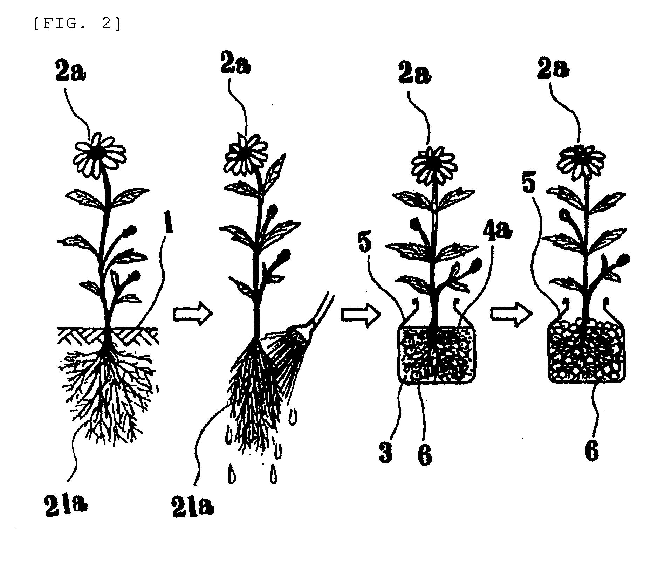

[Patent documents 1]
   JP,60-133776,U (the 5-10th page, Fig. 2)

### [Disclosure of the Invention]

### [Problem(s) to be Solved by the Invention]

However, the type of usage is used only by the block-shaped for the potted plant now.
Therefore, this invention invents the water holding object of a new structure that can use a water absorption polymer more effectively.

The cellular porous medium and sponge body which are called "oasis (trademark)" as a vegetable support material for decorating with branch end plants, such as cut flowers and sakaki, indoors or the like are known. These cellular porous medium and sponge bodies are objects of the hardness, which can stab a plant, water permeates in a member by arranging underwater, and water supply to the stabbed plant is realized.

By the way, it cannot be said that said cellular porous medium or the like is not necessarily beautiful on appearance.
So, in interior decoration, such as cut flowers, in a suitable flower vase, a cellular porous medium is stored, or a cellular-porous-medium portion is wrapped and hidden with a building paper.
In order to make it stabilized, it stores in a rattan basket or the like, and it is decorated.

However, if a water absorption polymer is arranged to the circumference of a cellular porous medium in order to hide said cellular porous medium when a clear container is adopted, moisture of a water absorption polymer will absorb water the part which decreased, and the moisture currently held at the cellular porous medium by an evaporation or the like.
Therefore, the water supply capability to a plant decreases and a flower does not last long.
Then, this invention proposes the water holding object that can also realize the combined use with a water absorption polymer easily, and its use.

The importance of tree planting is exclaimed for in recent years for the purpose of prevention of the global warming by the increase in carbon dioxide.
However, cultivation of the plant using hydrophilic resin was difficult once.
It is because acrylic resin was used.
That is, the water absorptive of acrylic resin is high. However, it is because a plant must be grown, without decomposing the water repelled from acrylic resin.

Without decomposing water, by raising fertilizer concentration, a plant absorbs the ion of the manure and it grows.
However, if sap discharged from a plant is not adsorbed, unclean organic acid will be accumulated.
For this reason, after planting a plant, although it is fine from 3 days to 5 days, it will lose vitality in about one week, and it withers little by little or will decline. This shows that the plant has started root rot.
When acrylic resin is used as a vegetable culture medium, it is shown that growth of a plant is difficult.

There is a root rot inhibitor that solves these problems. However, even if it uses this root rot inhibitor together, the manure ion that melts and comes out of acrylic resin is absorbed, and the root of the plant growing up is a root of hydroponics.
With the indoor horticulture of plant with water holding property, cultivation is possible.
However, the root of hydroponics rots in a soil culture medium.
If there is much acrylic resin, it will become a root of hydroponics and the root of a soil culture medium will rot. By mixing an equivalent amount of acrylic resin and nonionic resin, it becomes a root of a soil culture medium. Then, also in acrylic resin, the same use for vegetable as a soil culture medium is possible.
In a soil culture medium, use of a soil water holding agent is good similarly.

Then, an object of this invention is to provide the new culture medium that has a root rot preventive effect using the adsorbing action, and the sterilization and the disinfection operation of nonionic resin, which do not contain ion.
Moreover, an object of this invention is to provide the vegetable culture medium used sprinkling soil using the adsorbing action, and the sterilization and the disinfection operation of nonionic resin, which do not contain ion.
Further, an object of this invention is to provide a vegetable cultivation method, a water freshner method for cut flowers or the like, and an aromatic, a deodorizer, a disinfectant, or the like using the bactericidal action by a photocatalyst of titanium, and the adsorbing action and bactericidal action by nonionic resin.

### [Means for Solving the Problem]

In order to solve the above-mentioned subject, in the invention in this application, the vegetable cultivation method, the freshner method of water, the root rot prevention method, the vegetable culture medium, the water retention agent, the disinfectant, the weed killer, the heat insulation agent, the improvement agent, and the deodorizer are as the composition shown below.
A cultivation method of the plant according to claim 1 is sprinkling nonionic resin over a hydroponics culture medium and soil for hydroculture.
About cultivation method of an above-mentioned plant, said nonionic resin is a simple substance or a mixture with polyvinyl alcohol, a polyalkylene oxide, polyethylene oxide or polyvinyl alcohol and a polyalkylene oxide, and/or polyethylene oxide.
The water retention agent according to claim 6 is sprinkling nonionic resin over soil or a hydroponics culture medium.
Let a water retention agent which mixes the conventional water retention agent in soil be adjustment of resin that carried out mixed use of the resin, a reformed thing, or nonionic resin.
About water retention agent of above-mentioned soil, said nonionic resin is a simple substance or a mixture with polyvinyl alcohol, a polyalkylene oxide, polyethylene oxide or polyvinyl alcohol and a polyalkylene oxide, and/or polyethylene oxide.
The disinfectant according to claim 11 is sprinkling nonionic resin over soil or a hydroponics culture medium. It is related with an above-mentioned disinfectant. Said nonionic resin is a simple substance or a mixture with polyvinyl alcohol, a polyalkylene oxide, polyethylene oxide or polyvinyl alcohol and a polyalkylene oxide, and/or polyethylene oxide.
The weed killer according to claim 16 is sprinkling nonionic resin over soil.
It is related with an above-mentioned weed killer.
Said nonionic resin is a simple substance or a mixture with polyvinyl alcohol, a polyalkylene oxide, polyethylene oxide or polyvinyl alcohol and a polyalkylene oxide, and/or polyethylene oxide.
The heat insulation agent according to claim 21 is sprinkling nonionic resin over soil or a hydroponics culture medium.
About the above-mentioned heat insulation agent, said nonionic resin is a simple substance or a mixture with polyvinyl alcohol, a polyalkylene oxide, polyethylene oxide or polyvinyl alcohol and a polyalkylene oxide, and/or polyethylene oxide.
A cultivation method of the plant according to claim 26 adsorbs liquid manure at nonionic resin, and is sprinkled over soil.
About cultivation method of an above-mentioned plant, said nonionic resin is a simple substance or a mixture with polyvinyl alcohol, a polyalkylene oxide, polyethylene oxide or polyvinyl alcohol and a polyalkylene oxide, and/or polyethylene oxide.
The disinfectant according to claim 31 adsorbs liquid manure at nonionic resin, and is sprinkled over a hydroponics culture medium or soil.
About a disinfectant of above-mentioned soil, said nonionic resin is a mixture of polyvinyl alcohol, a polyalkylene oxide, polyethylene oxide or polyvinyl alcohol, and a polyalkylene oxide and/or polyethylene oxide.
The water retention agent according to claim 36 adsorbs liquid manure at nonionic resin, and is sprinkled over soil or a hydroponics culture medium.
About above-mentioned water holding agent, said nonionic resin is a simple substance or a mixture with polyvinyl alcohol, a polyalkylene oxide, polyethylene oxide or polyvinyl alcohol and a polyalkylene oxide, and/or polyethylene oxide.
The weed killer according to claim 41 adsorbs liquid manure at nonionic resin, and is sprinkled over soil. About an above-mentioned weed killer, said nonionic resin is a mixture with polyvinyl alcohol, a polyalkylene oxide, polyethylene oxide or polyvinyl alcohol and a polyalkylene oxide, and/or polyethylene oxide.
The heat insulation agent according to claim 46 adsorbs liquid manure at nonionic resin, and is sprinkled over soil or a hydroponics culture medium.
About the above-mentioned heat insulation agent, said nonionic resin is a simple substance or a mixture with polyvinyl alcohol, a polyalkylene oxide, polyethylene oxide or polyvinyl alcohol and a polyalkylene oxide, and/or polyethylene oxide.
A cultivation method of the plant according to claim 51 is mixing nonionic resin and titanium in soil.
About cultivation method of an above-mentioned plant, said nonionic resin is a simple substance or a mixture with polyvinyl alcohol, a polyalkylene oxide, polyethylene oxide or polyvinyl alcohol and a polyalkylene oxide, and/or polyethylene oxide.
The disinfectant according to claim 56 is mixing nonionic resin and titanium in soil.
About an above-mentioned disinfectant, said nonionic resin is a simple substance or a mixture with polyvinyl alcohol, a polyalkylene oxide, polyethylene oxide or polyvinyl alcohol and a polyalkylene oxide, and/or polyethylene oxide.
The water retention agent according to claim 61 mixes nonionic resin and titanium in soil.
About above-mentioned water holding agent, said nonionic resin is a simple substance or a mixture with polyvinyl alcohol, a polyalkylene oxide, polyethylene oxide or polyvinyl alcohol and a polyalkylene oxide, and/or polyethylene oxide.
The weed killer according to claim 66 mixes nonionic resin and titanium in soil.
About an above-mentioned weed killer, said nonionic resin is a simple substance or a mixture with polyvinyl alcohol, a polyalkylene oxide, polyethylene oxide or polyvinyl alcohol and a polyalkylene oxide, and/or polyethylene oxide.
The heat insulation agent according to claim 71 mixes nonionic resin and titanium in soil.
About the above-mentioned heat insulation agent, said nonionic resin is a simple substance or a mixture with polyvinyl alcohol, a polyalkylene oxide, polyethylene oxide or polyvinyl alcohol and a polyalkylene oxide, and/or polyethylene oxide.
A cultivation method of the plant according to claim 76 sprinkles nonionic resin and titanium over soil or a hydroponics culture medium.
About cultivation method of an above-mentioned plant, said nonionic resin is a simple substance or a mixture with polyvinyl alcohol, a polyalkylene oxide, polyethylene oxide or polyvinyl alcohol and a polyalkylene oxide, and/or polyethylene oxide.
The disinfectant according to claim 81 sprinkles nonionic resin and titanium over soil or a hydroponics culture medium.
About an above-mentioned disinfectant, said nonionic resin is a simple substance or a mixture with polyvinyl alcohol, a polyalkylene oxide, polyethylene oxide or polyvinyl alcohol and a polyalkylene oxide, and/or polyethylene oxide.
The water retention agent according to claim 86 sprinkles nonionic resin and titanium over soil.
About an above-mentioned water holding agent, said nonionic resin is a simple substance or a mixture with polyvinyl alcohol, a polyalkylene oxide, polyethylene oxide or polyvinyl alcohol and a polyalkylene oxide, and/or polyethylene oxide.
The weed killer according to claim 91 sprinkles nonionic resin and titanium over soil.
About an above-mentioned weed killer, said nonionic resin is a simple substance or a mixture with polyvinyl alcohol, a polyalkylene oxide, polyethylene oxide or polyvinyl alcohol and a polyalkylene oxide, and/or polyethylene oxide.
The heat insulation agent according to claim 96 sprinkles nonionic resin and titanium over soil.
About the above-mentioned heat insulation agent, said nonionic resin is a simple substance or a mixture of polyvinyl alcohol, a polyalkylene oxide, polyethylene oxide or polyvinyl alcohol, and a polyalkylene oxide and/or polyethylene oxide.
A cultivation method of the plant according to claim 101 adsorbs liquid manure at nonionic resin and titanium, and is sprinkled over soil.
About a cultivation method of an above-mentioned plant, said nonionic resin is a simple substance or a mixture with polyvinyl alcohol, a polyalkylene oxide, polyethylene oxide or polyvinyl alcohol and a polyalkylene oxide, and/or polyethylene oxide.
The disinfectant according to claim 106 adsorbs nonionic resin, titanium, and liquid manure, and is sprinkled over soil.
About an above-mentioned disinfectant, said nonionic resin is a simple substance or a mixture with polyvinyl alcohol, a polyalkylene oxide, polyethylene oxide or polyvinyl alcohol and a polyalkylene oxide, and/or polyethylene oxide.
The water retention agent according to claim 111 adsorbs liquid manure at nonionic resin and titanium, and is sprinkled over soil.
About an above-mentioned water holding agent, said nonionic resin is a simple substance or a mixture with polyvinyl alcohol, a polyalkylene oxide, polyethylene oxide or polyvinyl alcohol and a polyalkylene oxide, and/or polyethylene oxide.
The weed killer according to claim 116 adsorbs liquid manure at nonionic resin and titanium, and is sprinkled over soil.
About an above-mentioned weed killer, said nonionic resin is a simple substance or a mixture of polyvinyl alcohol, a polyalkylene oxide, polyethylene oxide or polyvinyl alcohol, and a polyalkylene oxide and/or polyethylene oxide.
The heat insulation agent according to claim 121 adsorbs liquid manure at nonionic resin and titanium, and is sprinkled over soil.
About the above-mentioned heat insulation agent, said nonionic resin is a simple substance or a mixture with polyvinyl alcohol, a polyalkylene oxide, polyethylene oxide or polyvinyl alcohol and a polyalkylene oxide, and/or polyethylene oxide.
A cultivation method of the plant according to claim 126 sprinkles nonionic resin and acrylic resin over soil.
The disinfectant according to claim 128 sprinkles nonionic resin and acrylic resin over soil. The water retention agent according to claim 130 sprinkles nonionic resin and acrylic resin over soil.
The weed killer according to claim 132 sprinkles nonionic resin and acrylic resin over soil.
The heat insulation agent according to claim 134 sprinkles nonionic resin and acrylic resin over soil.
Nonionic resin of a statement is contained 80% or more in Claims 126, 128, 130, 132, and 134.
A cultivation method of the plant according to claim 136 sprinkles nonionic resin and liquid manure over soil.
About a cultivation method of an above-mentioned plant, said nonionic resin is a simple substance or a mixture with polyvinyl alcohol, a polyalkylene oxide, polyethylene oxide or polyvinyl alcohol and a polyalkylene oxide, and/or polyethylene oxide.
The disinfectant according to claim 141 sprinkles nonionic resin and liquid manure over soil.
About an above-mentioned disinfectant, said nonionic resin is a simple substance or a mixture with polyvinyl alcohol, a polyalkylene oxide, polyethylene oxide or polyvinyl alcohol and a polyalkylene oxide, and/or polyethylene oxide.
The water retention agent according to claim 146 sprinkles nonionic resin and liquid manure over soil.
About an above-mentioned water holding agent, said nonionic resin is a simple substance or a mixture with polyvinyl alcohol, a polyalkylene oxide, polyethylene oxide or polyvinyl alcohol and a polyalkylene oxide, and/or polyethylene oxide.
The weed killer according to claim 151 sprinkles nonionic resin and liquid manure over soil.
About an above-mentioned weed killer, said nonionic resin is a simple substance or a mixture with polyvinyl alcohol, a polyalkylene oxide, polyethylene oxide or polyvinyl alcohol and a polyalkylene oxide, and/or polyethylene oxide.
A heat insulation agent of the soil according to claim 156 sprinkles nonionic resin and liquid manure over soil.
About a heat insulation agent of above-mentioned soil, said nonionic resin is a simple substance or a mixture of polyvinyl alcohol, a polyalkylene oxide, polyethylene oxide or polyvinyl alcohol, and a polyalkylene oxide and/or polyethylene oxide.
A freshner of the water according to claim 161 mixes titanium to acrylic resin.
The root rot inhibitor according to claim 162 mixes titanium to acrylic resin.
A disinfectant of the soil according to claim 163 mixes titanium to acrylic resin.
Antibacteria medicine of the soil according to claim 164 mixes titanium to acrylic resin.
The vegetable culture medium according to claim 165 mixes titanium to acrylic resin.
A water retention agent of the soil according to claim 166 mixes titanium to acrylic resin.
An improvement agent of the soil according to claim 167 mixes titanium to acrylic resin.
The vegetable culture medium according to claim 168 sprinkles nonionic resin and acrylic resin over soil. Antibacteria medicine of the soil according to claim 170 sprinkles nonionic resin and acrylic resin over soil.
The root rot inhibitor according to claim 172 sprinkles nonionic resin and acrylic resin over soil.
A freshner of the water according to claim 174 sprinkles nonionic resin and acrylic resin over soil.
An improvement agent of the soil according to claim 176 sprinkles nonionic resin and acrylic resin over soil. Nonionic resin of a statement is contained 80% or more in Claims 168, 170, 172, 174, and 176.
A freshness holding method of the cut flowers according to claim 178 adds titanium to tap water.
The titanium according to claim 178 is 0.1 to 80 % of the weight to weight of said tap water.
A cultivation method of the plant according to claim 180 adds tap water, liquid manure, and titanium to a flowerpot. The titanium according to claim 180 is 100 to 300 % of the weight to weight of said tap water and liquid manure.
A hole has opened the flowerpot according to claim 180 in the bottom.
A cultivation method of the plant according to claim 183 impregnates nonionic resin with liquid manure, and adds titanium further.
The titanium according to claim 183 is 0.5 to 60 % of the weight to weight of nonionic resin and liquid manure.
The nonionic resin according to claim 183 is polyvinyl alcohol.
The nonionic resin according to claim 183 is a polyalkylene oxide.
The nonionic resin according to claim 183 is polyethylene oxide.
The nonionic resin according to claim 183 is a mixture of polyvinyl alcohol, and a polyalkylene oxide and/or polyethylene oxide.
A cultivation method of the plant according to claim 189 impregnates nonionic resin and acrylic resin with liquid manure, and adds titanium further. The titanium according to claim 189 is 0.5 to 60 % of the weight to weight of nonionic resin, acrylic resin, and liquid manure.
The nonionic resin according to claim 189 is polyvinyl alcohol.
The nonionic resin according to claim 189 is a polyalkylene oxide.
The nonionic resin according to claim 189 is polyethylene oxide.
The nonionic resin according to claim 189 is a mixture of polyvinyl alcohol, and a polyalkylene oxide and/or polyethylene oxide.
The vegetable culture medium according to claim 195 mixes titanium and soil.
The titanium according to claim 195 is 0.5 to 80 % of the weight to weight of soil.
The vegetable culture medium according to claim 197 mixes titanium, soil, and acrylic resin.
The titanium according to claim 197 is 0.5 to 80 % of the weight to weight of soil and acrylic resin.
The vegetable culture medium according to claim 199 mixes titanium, soil, and nonionic resin.
The titanium according to claim 199 is 0.5 to 80 % of the weight to weight of soil and nonionic resin.
The nonionic resin according to claim 199 is polyvinyl alcohol.
The nonionic resin according to claim 199 is a polyalkylene oxide.
The nonionic resin according to claim 199 is polyethylene oxide.
The nonionic resin according to claim 199 is a mixture of polyvinyl alcohol, and a polyalkylene oxide and/or polyethylene oxide.
The deodorizer according to claim 205 mixes titanium and acrylic resin.
The deodorizer according to claim 206 mixes titanium and nonionic resin.
The deodorizer according to claim 207 mixes titanium, nonionic resin, and acrylic resin.
The nonionic resin according to claim 206 or 207 is polyvinyl alcohol.
The nonionic resin according to claim 206 or 207 is a polyalkylene oxide.
The nonionic resin according to claim 206 or 207 is polyethylene oxide.
The nonionic resin according to claim 206 or 207 is a mixture of polyvinyl alcohol, and a polyalkylene oxide and/or polyethylene oxide.
The deodorizer according to claim 212 mixes titanium, acrylic resin, and an aromatic.
The deodorizer according to claim 213 mixes titanium, nonionic resin, and an aromatic.
The deodorizer according to claim 214 mixes titanium, nonionic resin, acrylic resin, and an aromatic.
The deodorizer according to claim 213 or 214 is polyvinyl alcohol.
The deodorizer according to claim 213 or 214 is a polyalkylene oxide.
The deodorizer according to claim 213 or 214 is polyethylene oxide.
The deodorizer according to claim 213 or 214 is a mixture of polyvinyl alcohol, and a polyalkylene oxide and/or polyethylene oxide.
Freshness maintenance of the water according to claim 219 added titanium in water.
The titanium according to claim 220 is a glass cullet. Freshness maintenance of the water according to claim 221 added titanium and nonionic resin in water.
The nonionic resin according to claim 221 is characterized by being polyvinyl alcohol.
The water according to claim 221 contains a chlorine ion. The water according to claim 221 contains a deep-sea water of hard water in sea.
The water according to claim 221 contains a natural bittern.
The vegetable culture medium according to claim 226 is characterized a culture medium that natural bittern water of is poured.
The culture medium according to claim 226 is mixing powder of titanium.
The vegetable culture medium according to claim 228 uses a natural bittern and nonionic resin for a culture medium. The nonionic resin according to claim 228 is characterized by being polyvinyl alcohol.
The culture medium according to claim 228 is mixing powder of titanium.
The vegetable culture medium according to claim 231 uses a natural bittern, nonionic resin, and titanium for a culture medium.
The culture medium according to claim 231 is mixing powder of titanium.

### [Effect of the Invention]

When according to this invention explained above planting soil cultivated plants in an artificial hilling made from water absorption polymer again and growing them, it is what performs cultivation by the conditioned medium which once adds ion-exchange resin, waits for growth of a new root, and is made to shift to planting by an artificial hilling made from water absorption polymer, and planting by the artificial hilling made from water absorption polymer of soil cultivated plants is enabled.

This invention is a water holding object for plants that makes scattered granular or microparticulate water absorption resin, and also comes to carry out dispersion maintenance of a liquefied fertilizer or the antibacterial medicine into the block body of the pulverization cellulose of paper, or a sheet body.
Even if a desired active ingredient and predetermined water holding function can be made to provide and it uses together with other water supply polymer resin, a water holding function is not checked, and the use area is wide and can offer an instrument convenient for vegetable interior decoration and others.

Moreover, since nonionic resin is used for this invention as a culture medium for plants, it can plant the plant of a solum again easily.
Moreover, there are a root rot preventive effect and a water retention effect in nonionic resin, and a plant can be made to last long even if it does not apply time and effort.
Moreover, since this invention sprinkles and uses nonionic resin for soil, it can plant the plant of a solum again easily.
Further, by adding and using titanium for a vegetable culture medium or water, the sterilization and the antibacterial effect over soil and water can be performed, and vegetable freshness maintenance can be made into a long time.

Moreover, by using titanium for tap water, the prolonged freshness maintenance of water becomes possible and prolonged use of the cut flower is attained.
Moreover, what titanium and polyvinyl alcohol are used for the tank of a fish, the freshness maintenance of prolonged water becomes possible.
In addition, while a fish is colored, the color of the body can be good and can grow up a fish greatly.
Further, the freshness maintenance effect of water is increased by the water containing a chlorine ion, deep-sea water of hard water in sea, or water with natural bittern. By this, the freshness maintenance time of a cut flower becomes long.
By sprinkling the water of a natural bittern, the water of a natural bittern and nonionic resin, or the water of a natural bittern, nonionic resin, and titanium over a vegetable culture medium, or by mixing titanium to a vegetable culture medium, the vegetable growth becomes quicker, and the taste becomes more delicious.

### [Best Mode of Carrying Out the Invention]

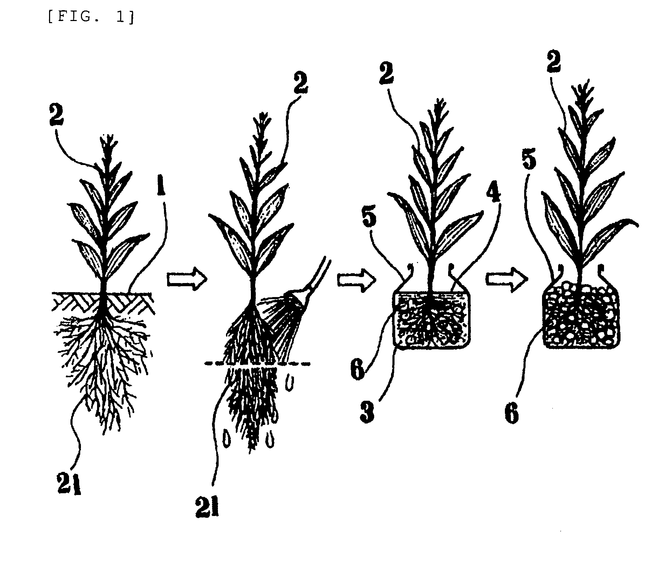

Next, the embodiment concerning the vegetable plant cultivation method by the artificial hilling made from water absorption polymer of this invention will be described. Figure.1 is applied to a foliage plant by a first embodiment of this invention.

First, foliage plant 2 currently grown by soil culture medium 1 is unearthed from the soil culture medium 1, it dissociates and the root 21 is washed. About 1/3 (in case of ferns, 2/3) of the root 21 is left and cut after washing, and the root 21 is attached to a conditioned medium 4 (a container 5 is used) which is added a proper quantity of ion-exchange resin (ion-exchange resin nutrient) 3 and if needed, a little liquefied fertilizers, and it grows for several days (three to ten days).

Ion-exchange resin 3 is the commercial item in which the nutrient was mixed. When the aqueous solution neglected for one week at the temperature of 20 degrees C was measured after adding 0.5g of ion-exchange resin nutrients to 1liter of pure water about the component of the nutrient, 1.6mg/L of total nitrogen, 0.05mg/L of phosphoric acid, and potassium 1.5mg/L was detected.

By the aforementioned hydroponics, if a new root is detected, it will grow, adding artificial hilling made from water absorption polymer 6 in small quantities. Artificial hilling 6 made from water absorption polymer are formed by thermoplastic nonionic type water absorption resin. Artificial hilling made from water absorption polymer 6 is formed by thermoplastic nonionic type water absorption resin, it is cut so that it may become a cube whose one side is about 0.5-2cm at the time of water absorption swelling, and in a water absorption state, is added so that the ratio of water and thermoplastic nonionic type water absorption resin is 3 to 1.

Ion-exchange resin nutrient 3 and artificial hilling made from water absorption polymer 6 is increased in quantity suitably according to growth of a new root.

If the new root grows about 0.5-1cm, the plant with this new root will be replanted in container 5 in which artificial hilling 6 made from water absorption polymer was stored, and cultivation by artificial hilling 6 made from water absorption polymer will be performed. It may change into polymer hilling by addition of artificial hilling 6 made from water absorption polymer, without, of course, performing a transplant.

Figure 2 is applied to flowers and flowering trees in a second embodiment of this invention. Although it is the same as that of the first embodiment described about the foliage plant fundamentally described above, a flower plant 2a currently grown by a soil culture medium 1 is unearthed from the soil culture medium 1 and dissociated, and root 21a is washed. However, the root 21a is not cut.

It is what uses a conditioned medium 4a which added a little (the ratio of water and polymer is 3 to 1) artificial hilling 6 made from water absorption polymer and a little (0.5g to 200-300 cc of water) ion-exchange resin nutrients 3 to water in the habituation process. The conditioned medium 4a is stored in the proper container 5, and the root 21a of the flower plant 2a is soaked to this and grown.

It is three to four days, or is about ten days depending on the kind of a plant, since a new root and a sprout come out, until a sprout comes out, water absorption polymer is added, moisture of the conditioned medium 4a will be made to absorb water to polymer, conditioned medium 4a will be changed into artificial hilling 6 made from water absorption polymer, and thus that cultivation will be continued. Especially long roots and thick roots, such as mini rose and gerbera, are cut and removed 1/3 - 1/2, and are planted again.

Regarding a plant of Orchidaceae like especially cattleya and Dendrobium, in the aforementioned habituation process (the ratio of water and water absorption polymer hilling is 2 to 1), making the root rot of an old root start, waiting and after making a flower once bloom, or just before bloom, an old root is cut, and growth of a new root is again planted in water absorption polymer hilling.

A third embodiment (not shown) of this invention is applied to a flower and a flower tree, and in this embodiment a root is cut like a first embodiment of the foliage plant fundamentally described above. That is, a flower and a flower tree, which are grown by the soil culture medium, are unearthed from the soil culture medium, dissociated. Then the root is washed, about 1/3 - 1/2 of a washing dorsal root are cut, and a root is grown by a conditioned medium as it is. Ion-exchange resin and a liquefied fertilizer are added, and an ion-exchange resin nutrient and liquid manure are added to a conditioned medium, observing the growth of a root and the growth of the new root that are cut.

The above-mentioned hydroponics will be performed about 3 - 10 days, and if growth of a root is observed, it will grow, adding a small amount of water absorption polymer. After checking that a new root has fully grown, it grows by artificial hilling made from water absorption polymer.

On the occasion of cultivation by the above-mentioned artificial hilling 6 made from water absorption polymer, a proper quantity liquefied fertilizer is added if needed. When a culture medium becomes dirty, water absorption polymer is once washed, liquid manure and the ion-exchange resin nutrient, which are thinned, are added after wipe-off cleaning, and cultivation is continued.

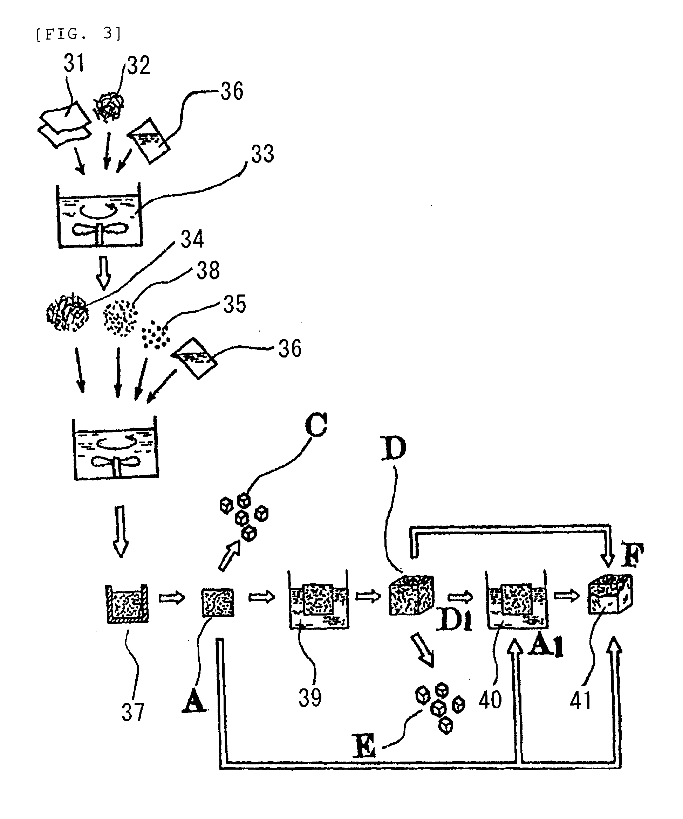

Next, each embodiment of the water retention object concerning this invention is described along with the manufacture process as shown in Fig. 3. Firstly, used paper 31 (they may be papers other than used paper) and, if needed, cotton 32 (it is not necessary to add cotton in particular) are made to become wet in formation of the cellulose matrix which constitutes the main part of a water retention object. Then they are ground using mixer 33, it once dries, and pulverization cellulose 34 is obtained. Then, it is made to agitate, mixing this pulverization cellulose 34, commercial thermoplastic nonionic type water absorption resin 35 (It is not limited to the nonionic type, and powder and grain are chosen and adopted corresponding to a use plant), and water 36, and it stores to predetermined die (block shape or sheet shape may be sufficient, and that size is also arbitrary) 37, and it is dried.

The mixing ratio of pulverization cellulose 34, commercial thermoplastic nonionic type water absorption resin 35, and water 36, are illustrated as 90g of used paper, 10g of water, and an about resin 50-100g weight percentage.

On the occasion of the above-mentioned mixed churning, antimicrobial agents (silver, copper, catechin, a nutmeg, etc.) 38, antiseptics (copper sulfate, zinc chloride, sorbic acid, benzoic acid, boric acid, etc.), perfume, or the like are added if needed, and they are made scattered in the cellulose matrix.

Block body A and sheet body B, which are taken out from the above-mentioned die, can be used as a water retention object of this invention as it is. The block body A or the sheet body B is cut out, and it can be used as die-like water retention object C.

A box made of paper, a barrel made of paper, and a paper sheet, thing whose part of water holding object is constituted by the member which laminated the coat of water permeability or no water permeability on the back of the paper sheet, may be used instead of the aforementioned die, when forming the above-mentioned water retention objects A and B.

Next, in order to improve the firmness of water retention object A, water retention object A is immersed into the aqueous solution of shape retaining agent (methyl cellulose tannate or poly vinyl alcohol) 39 which is water solubility and serves as the structure of cross linkage by dryness, and the structure of cross linkage is obtained by making it dry after that. According to the concentration and immersion time of an aqueous solution, this shape retaining agent 39 can also be made to act as a permeable coat, and that water penetration capability can also be arbitrarily changed by molar concentration adjustment of an aqueous solution.

Water retention object D which improved firmness can be used as it is, can be cut out, and can also be used as die-like water retention object E. Water retention object A1 and D1 containing a liquefied fertilizer can be produced by soaking water retention objects A and D in liquefied fertilizer 40, and making liquefied fertilizer 40 contain.

Water retention object F which improved the water retention performance can be produced by covering the side and the bottom of water retention objects A, D, A1, and D1 with peripheral surface coats 41, such as a proper no water permeability film or permeable films.

Rounding surface membrane 41 forms cylindrical covering object 41a independently, and it may be made to equip this covering object 41a with water holding objects A and D, A1, and D1, without making water holding objects A, D, A1, and D1 cover directly (refer to Fig. 13). When the above-mentioned composition is adopted, there is an advantage that can detach and attach covering object 41a and water holding objects A, D, A1, and D1.

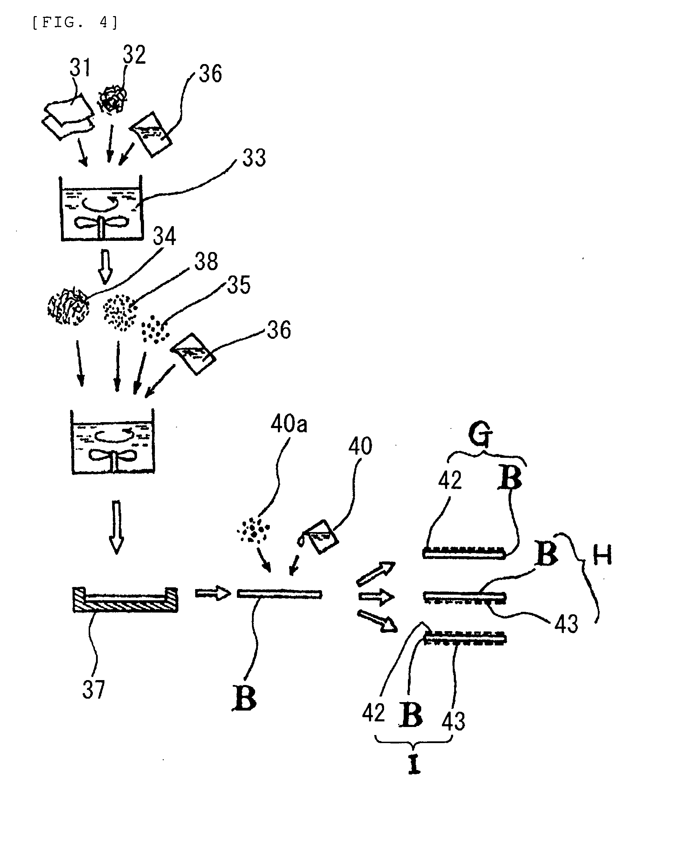

Also in water retention object B formed in the sheet shaped, the water retention object that is easier to use can be offered by processing it into them further as illustrated to Fig. 4. It is covering the upper surface with permeable coat (for example, non-woven fabric) 42 so that sheet-shaped water retention object B as it is and liquefied fertilizer 40, solid fertilizer 40a, an antimicrobial agent, which addition mixture is not carried out at the time of cellulose matrix formation, or the like may be sprinkled on the upper surface and scattering of the sprinkled solid content may specifically be prevented, and water retention object G may be produced.

No-water-permeability-coating membrane (waterproofing tunic) 43 is laminated on the undersurface (external surface at the time of packing use) of water holding object B, and water holding object H is produced.
The upper surface may be water holding object I which covers with permeable membrane 42 and covers the undersurface with no-water-permeability-coating membrane 43 and others. The film provided with water permeability and an adverse current function may be adopted as a no-water-permeability-coating membrane.

A proper layered product may be formed in the lower part of water holding object B especially in the above-mentioned water holding object I. As the layered product, what is formed in water holding object I1 which piles up silicate clay (or silica) 44 and cotton 32 under the water holding object B, covers the lowest side with tarpaulin (no-water-permeability-coating membrane) 43 and covers the water holding object upper surface with non-woven fabric 42 can be illustrated.

Next, the directions for the above-mentioned water holding object are explained. As most general use means, it is used as a culture medium for vegetable nourishment. When using it as a culture medium, water holding objects C and E of the dice-like are suitable, and water holding objects C and E can be made to support a predetermined liquefied fertilizer, an antimicrobial agent and also perfume, coloring matter, an ion-exchange resin grain, or the like if needed according to the purpose of use.

### <The example of 1st use>

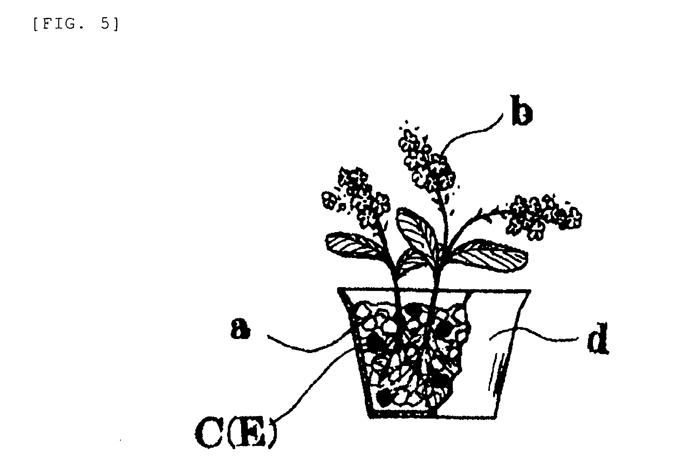

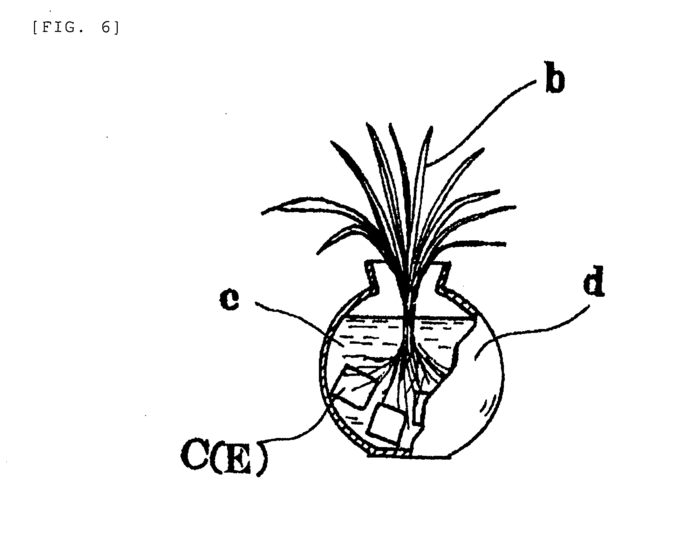

As specifically shown in Fig. 5, mixed use with other water-absorption-polymer-culture-medium a is also possible. If a cellulose matrix (water holding objects C and E) is made to support beforehand the insufficient ingredient of the plant nourishment active ingredient in water-absorption-polymer-culture-medium a and it is set especially in a transplant etc., the optimal culture-medium environment for cultivation of the plant b concerned can be given.

### <The example of 2nd use>

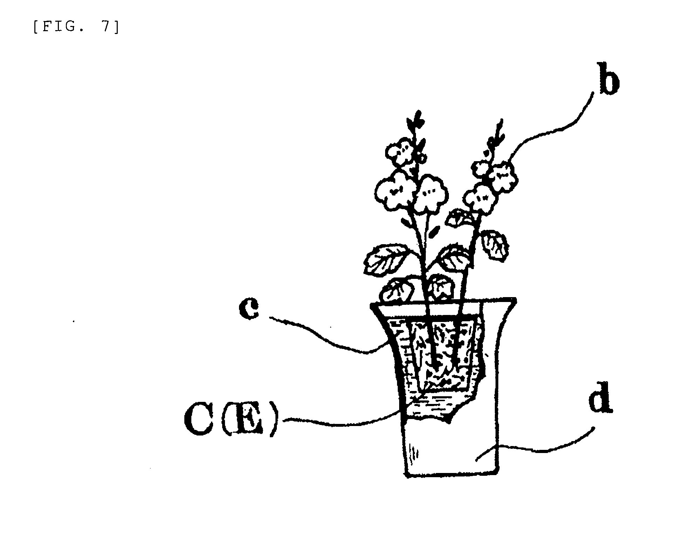

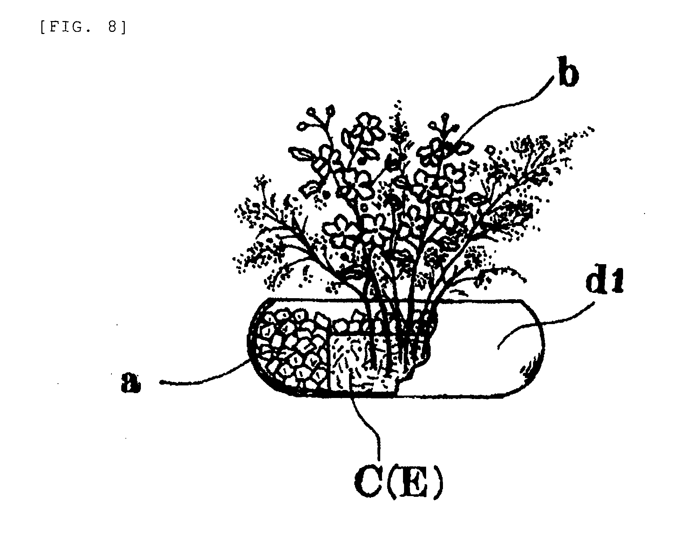

If floating mixture of the water holding objects C and E is carried out into water culture medium c in hydroponics as illustrated to Fig. 6, by making the water holding objects C and E concerned support a proper component, the active principle concerned can be made eluted slowly and a water substitute interval can be lengthened.

### <The example of 3rd use>

A water holding object can be used as ornament base bodies, such as cut-flowers b, when it forms in the shape of a block. For example, if the root portion of cut-flowers b is stabbed to the water holding object (A, A1, D, D1, F) as illustrated to Fig. 7, the moisture currently maintained by the water holding object (A, A1, D, D1, F) will be used as water for growth of a plant. Therefore, even if water c of bowl d is exhausted, water supply can fully be carried out for several days of the water retention component of a water holding object (A, A1, D, D1, F). Of course, naturally, a vegetable active ingredient also works.

### <Example of 4th use>

When the polymer hilling of transparent bottle object d1, colorless transparence, or coloring transparence is used as interior decoration (flower arrangement), such as cut flowers, as illustrated to Fig. 8, a water holding object (A, A1, D, D1, F) as a base body of cut flowers can be used, and the above-mentioned water-absorption-polymer-culture-medium a can be used for the circumference of the water holding object (A, A1, D, D1, F). The water supply to cut flowers is attained especially by the permeable capability of rounding surface membrane 41 of water holding object F, without being influenced by water absorption polymer hilling a.

Even if it is a case where water-absorption-polymer-culture-medium a is combined with circumference hilling with the water holding object (A, A1, D, D1) which does not have coat 40, of course, since a part for vegetable water supply service water can be supported with water absorption resin 35 in a water holding object (A, A1, D, D1, F), without incorporating support moisture into other water-absorption-polymer-culture-medium a like an old cellular porous medium (oasis), a plant can be made to last long enough.

### <The example of 5th use>

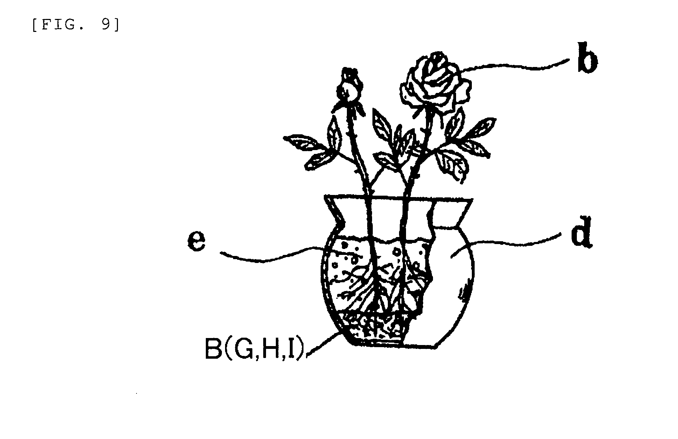

A sheet shaped water holding object (B, G, H, I) can also be used as support, such as manure in potted plant cultivation, again. For example, if make a water holding object (B, G, H, I) contain a predetermined active ingredient (cellulose matrices are beforehand made scattered or it impregnates with a liquefied component like a liquefied fertilizer), the bottom of bowl d is covered, it is filled up with soil e on it and potted plant cultivation of plant b is performed as shown in Fig. 9, even if he does not forget water supply or it does not perform an additional fertilizer, it will become risible the plant b.

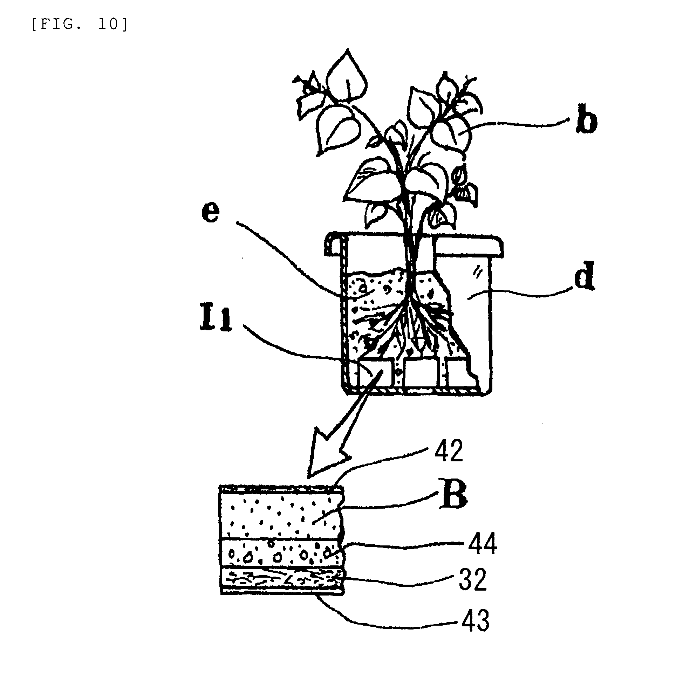

As shown in Fig. 10, since silicate clay or silica 44 carries out the operation of root rot prevention, especially water holding object I1 made into the suitable layered product is the best for potted plant cultivation. Moreover, since solid fertilizer 40a begins to melt slowly, a fertilizer effect can be made to last long by sprinkling solid granular fertilizer 40a especially under the non-woven fabric 42.

### <The example of 6th use>

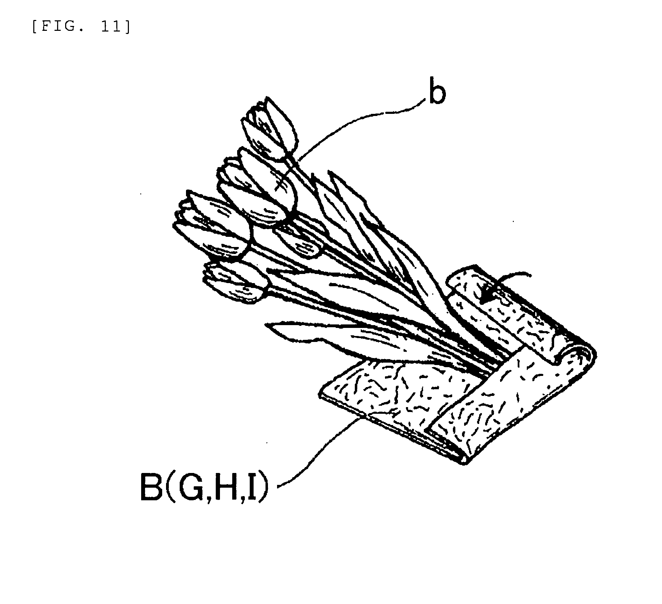

As shown in Fig. 11, as an object for packing, a sheet shaped water holding object (B, G, H, I) can be used. Even if especially water holding object H that forms no-water-permeability-coating membrane 41 in the undersurface (it becomes the external surface at the time of packing) is a case where moisture is made to support, it can prevent a leak, it can realize water supply to cut flowers or the like at the time of conveyance, and can make a plant last long by making an active ingredient support. There is also an advantage whose direct packing is attained, of course.

### <The example of 7th use>

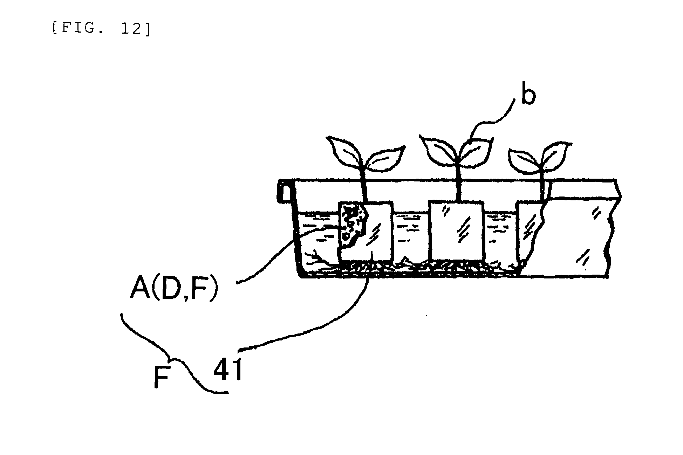

It can be used also as using for seedling rising so that it may illustrate to figure 12. Since it enabled it to grow up a root at least as using for seedling raising, for example in water holding object F, only a peripheral surface is covered with no-water-permeability-coating membrane 41, and if it has composition to which a coat does not exist in the bottom, growth of the root of plant b is not obstructed.

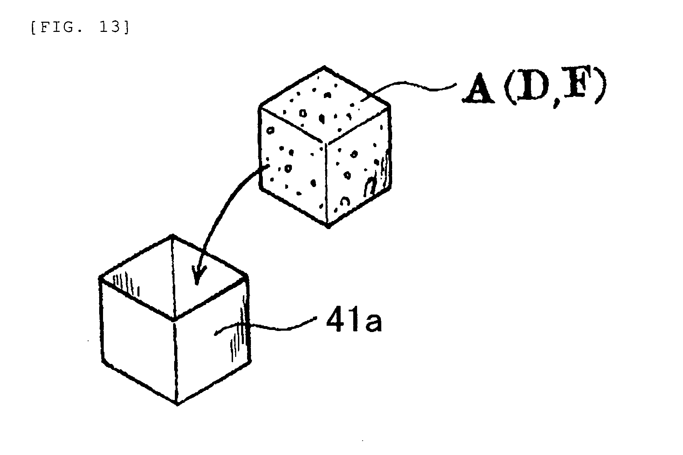

As shown in Fig. 13, if it replaces with water holding object F and the combination of covering object 41a and water holding object (A, D, A1, D1) is adopted, after using it as a raising seedling bed, covering object 41a can be removed, it can plant in a soil as it is, and water holding object (A, D, A1, D1) will return to natural soil.

Next, the embodiment concerning the root rot inhibitor and root rot prevention method of this invention will be described. This invention uses having a root rot preventive effect, when nonionic resin (thermoplastic nonionic type water absorption resin) is used as a vegetable culture medium. Water is added to the culture medium using nonionic resin as a root rot inhibitor, and a plant is planted there. Thereby, vegetable root rot can be prevented. It becomes possible to plant the plant of soil cultivation again simply. Below, the culture medium, which used nonionic resin, is explained in detail.

In a transplant of a plant or hydroponics, it is important to make it not decay water. In order to plant the plant of soil cultivation in the culture medium of hydroponics again, it is required to root a plant and to once grow the root of hydroponics for it. In the case of the culture medium (henceforth a "nonionic resin culture medium") using nonionic resin, it becomes transplantable simply by washing in cold water so that its root of the plant of soil cultivation may not be hurt, and planting the plant of the soil cultivation.

This is because vegetable root rot is prevented in a nonionic resin culture medium by the disinfection operation or bactericidal action which prevents decomposition of water working, adsorbing organic acid, such as sap out of which a plant comes originally, and disinfecting and sterilizing. Usually, since water will be decomposed in 2 or 3 days, in cultivation of a plant, use with cut flowers, etc., it was difficult in especially the summer to have made a plant last long. Using a nonionic resin culture medium can prevent decomposition of water.

Since nonionic resin does not contain ion, it can promote growth of a plant or can make a plant and cut flowers withstand long use with using it, making the ion water of a positive ion adsorb, or a chlorine ion.

The following table 1 shows the result of having inspected the degree of soil of the water of 25 days of back the case where what added 300g of water to 200g of nonionic resin is used as a culture medium of mini rose cultivation, and at the time of using what added 300g of water to 200g of acrylic resin. It adds 0.6g of ion-exchange resin at a time, respectively.

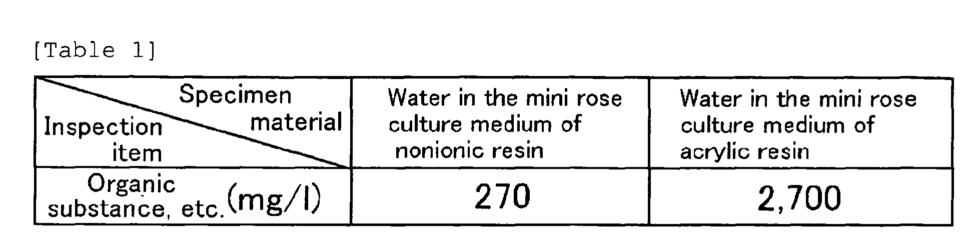

As shown in Table 1, in the culture medium using acrylic resin, the quantity of the organic substance contained in water is 2700mg/L On the other hand, in the culture medium using nonionic resin, it is 270mg/L and the yield of the organic substance in the culture medium using nonionic resin or the like is 1/10 of the yield of the organic substance in the culture medium, which used acrylic resin or the like Thus, in an acrylic resin culture medium, it turns out that the organic substance is increasing and the adsorbing action of ion-exchange resin is seldom functioning. This shows that the effect does not show up unless it uses it for a large quantity, since ion-exchange resin is particulates.

In nonionic resin, it turns out that the adsorbing action and disinfection operation of nonionic resin are working, and it is working effectively even if ion-exchange resin of a positive ion is little. Therefore, the problem that an adsorbing action seldom functions in an acrylic resin culture medium is solvable by using the culture medium, which mixed ion-exchange resin for nonionic resin.

Next, growth of the root by the mixed use of nonionic resin and acrylic resin is explained. If the root that grows up in a vegetable culture medium is compared, the root of the plant of hydroponics is growing up in the water that always has moisture and nourishment (fertilizer), and a root can absorb this moisture and nourishment easily. It is the feature that is seldom inelastic in a root. On the other hand, there is the feature kicked to an acrylic resin culture medium in surrounding so that a root may hold acrylic resin, sticking, and absorbing moisture.

Although a root sticks to nonionic resin and absorbs moisture similarly in a nonionic resin culture medium, it is the feature for a root to penetrate the inside of nonionic resin and to grow up. It is also the feature for the plant of soil cultivation to have to search for moisture or nourishment in a bowl or a soil, and for a root to spread in all directions, and to become a long root.

Also in a nonionic resin culture medium, the root of white a large number is extended in a straight lower part from under a stem, it spreads in all directions, and it can be said that growth of the root of a solum is resembled. It can be said that these of growth of the root in acrylic resin are the same as that of the case of hydroponics, and growth of the root in nonionic resin is the same as that of the case of soil cultivation.

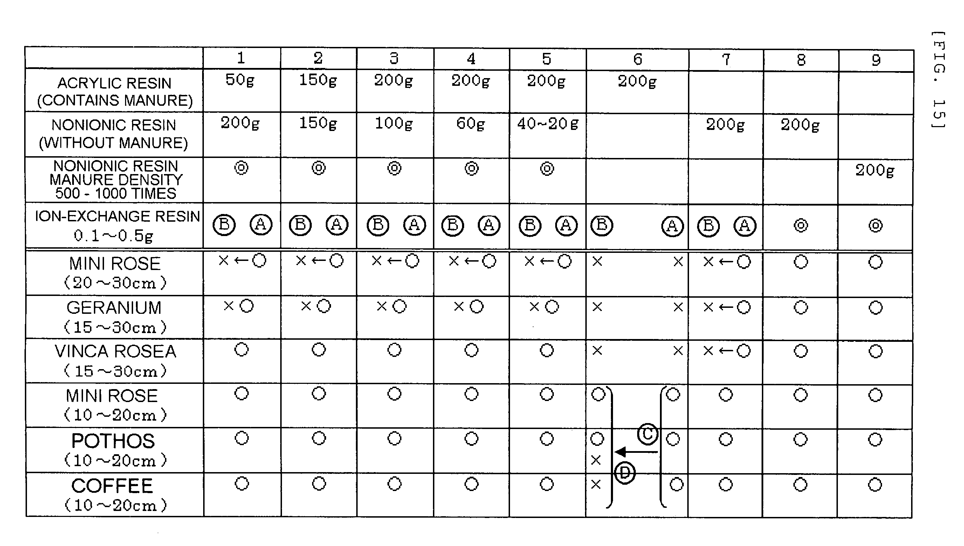

In the culture medium, which mixed acrylic resin and nonionic resin, it was checked by experiment that growth of a root changes. Fig. 15 shows the result of this experiment. The details of an experimental result are mentioned later. In this experiment, the culture medium that changed the mixed rate, respectively and mixed acrylic resin 50g - 200g and nonionic resin 20g - 200g was created, and the plant of soil cultivation was planted into this culture medium. Thereby, a root once changes to the root in hydroponics. The epidermis of the root in soil cultivation rots and this means that the thin white core inside a root changes to the root in hydroponics.

By increasing the quantity of nonionic resin to the quantity of acrylic resin, a root like yarn of the thin white silk of hydroponics becomes thick. And it became clear that it was growing up in the form in which the root was stabilized muscularly thickly, without the epidermis of the root in soil cultivation rotting and changing by mixing an equivalent amount of acrylic resin and nonionic resin. Although it is difficult to plant the plant of soil cultivation again in the culture medium of only acrylic resin, and to make it grow up However, by increasing nonionic resin little by little and mixing, it is lost that rot from the tip of the root of soil cultivation, and epidermis changes on the whole, and growth becomes possible, without the root in the soil cultivation which takes drainage to use an equivalent amount mostly rotting. The length of ivy is growing up also into about 10-30cm in the culture medium that added 60g of nonionic resin to 200g of acrylic resin.
In this example, since ivy is a plant that likes moisture and it is a plant suitable for the hydroponics of acrylic resin, a little nonionic resin is used, and soils, such as a plant, adsorb, and, as a result, a bactericidal action works effectively.

When nonionic resin is used as a root rot inhibitor, there are the following effects. The 1st effect is taking a vegetable soil (adsorbing action). The 2nd effect is that a root does not rot (a disinfection operation, or a bactericidal action and an antibacterial action). The 3rd effect is having adsorbed the sap in which resin became dirty and having given beautiful moisture nourishment to the plant (filtration). The 4th effect is holding water (water holding operation). The 5th effect is supporting and hardening a plant (solidification operation). In the case of nonionic resin, if it does not always put in water, it will be easy to solidify, and it will solidify by eliminating excessive moisture of a container in about 3 - 4 days.

In acrylic resin, about growth of a root, a root changes and grows at the root of hydroponics by repelling water. On the other hand, in nonionic resin, since a bactericidal action occurs, even if there is no fertilizer, transplant cultivation is possible, and it is the feature that a root grows while it has been a root of a solum.

Since there is a solidification operation in nonionic resin, the use as a vegetable raising seedling bed is possible. For example, if five lumps of 500g of nonionic resin (total 2.5kg) are put into a container 20cm in diameter, and 22cm in depth and ion water is added to it, it will solidify in three to four months.
Each nonionic resin sticks and it solidifies in the shape of the mold of a container.
Then, even if it moves a plant, it can not fall and but fix.
It is stabilized without falling, even if it stabs the solidified nonionic resin with cut flowers.

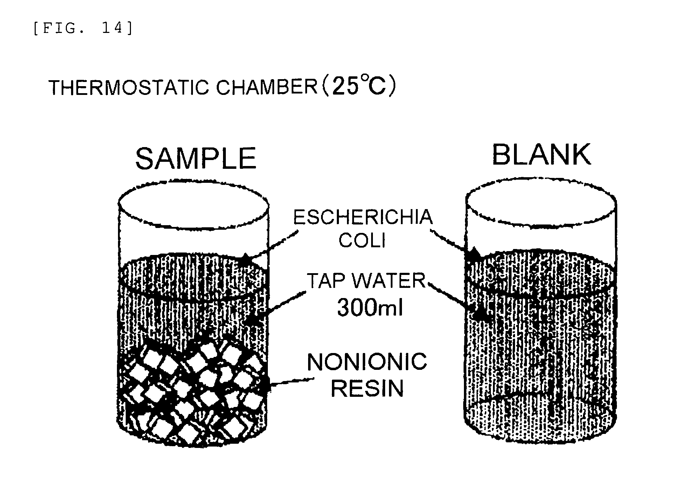

Next, the examination, which shows that nonionic resin has a bacteria breeding depression effect, is explained. Fig. 14 is a diagrammatic illustration of the apparatus for doing this examination. First, a beaker into which 1.5g of nonionic resin is put, a beaker into which 5g of nonionic resin is put, a beaker into which 15g of nonionic resin is put, and a beaker (blank) which nothing puts in are prepared. Next, 300mL of tap water from which the residual chlorine is removed is put into each beaker. Next, it adds only an about 10³ / mL bacteria (in this case, Escherichia coli) to each beaker.

Next, each beaker is put into the thermostatic chamber set to 25-degree Centigrade. Then, it samples temporally from each beaker and a bacterial count is measured. As a result, the result as shown in Table 2 was obtained.

**[Table 2]**

| | **The number of bacterial** (/ml) | | |
|---|---|---|---|
| **Sample** | **Immediately after a start** | **3 days after** | **5 days after** |
| 1.5g | 8.3×10² | 7.3×10⁴ (4.7×10⁵) | 1.5×10⁶ |
| 5g | 8.6×10² | 1.6×10⁴ (2.7×10⁴) | 4.9×10⁵ |
| 15g | 9.5×10² | 3.2×10³ | 1.0×10³ |
| **Blank** | 8.9 × 10² | 8.4×10⁴ (8.3 × 10⁵) | 1.6×10⁶ |

The values in a parenthesis are a bacterial number of sum totals.

As shown in Table 2, in nonionic resin, in the experiment which put in 1.5g, the bacterial count was set to 8.3x10² immediately after the start, three days afterward was set to 7.3x10⁴ (all the bacterial counts are 4.7x10⁵), and, five days afterward, was set to 1.5x10⁶ (all the bacterial counts). In the experiment that put in 5g of nonionic resin, the bacterial count was 8.6x10² immediately after the start, three days afterward was set to 1.6x10⁴ (all the bacterial counts are 2.7x10⁴), and, five days afterward, was set to 4.9x10⁵ (all the bacterial counts). In the experiment that put in 15g of nonionic resin, the bacterial count was 9.5x10² immediately after the start, three days afterward was set to 3.2x10³, and, five days afterward, was set to 1.0x10³ (all the bacterial counts). In the experiment using the blank which does not put in nonionic resin, the bacterial count was immediately after the start 8.9x10², three days afterward was set to 8.4x10⁴ (all the bacterial counts are 8.3x10⁵), and, five days afterward, was set to 1.6x10⁶ (all the bacterial counts). From this result, it can be said that there is a bacteria breeding depression effect in the culture medium using nonionic resin.

Next, the fertilizer component and effect of ion-exchange resin are explained. After adding 0.5g of ion-exchange resin nutrients to 1L of pure water, a nutrient ingredient is adjusted to 20-degree Centigrade, and is neglected for one week. Then, the concentration of the total nitrogen contained in solution, phosphoric acid, and potassium was measured. As a result, 1.6mg/L of total nitrogen, 0.05mg/L of phosphoric acid, and potassium 1.5mg/L was detected.

Next, the water absorption power of nonionic resin is explained. It is 20 to 40 times the water absorption power to the pure water of nonionic resin of this, is 20 to 40 times the absorbing power to a physiological saline of this, and is 20 to 35 times the absorbing power to artificial sea water of this.

Next, with reference to Fig. 15, the experimental result, which investigated change of the various plants at the time of planting a various plant in the culture medium using nonionic resin, again is explained. The culture medium of No.1 mixes 50g of acrylic resin (manure content), and 200g of nonionic resin (with no fertilizer) and the thing, which thinned liquid manure 500 to 1000 times. The culture medium of No.2 mixes 150g of acrylic resin (manure content), and 150g of nonionic resin (with no fertilizer) and the thing, which thinned liquid manure 500 to 1000 times. The culture medium of No.3 mixes 200g of acrylic resin (manure content), and 100g of nonionic resin (with no fertilizer) and the thing, which thinned liquid manure 500 to 1000 times. The culture medium of No.4 mixes 200g of acrylic resin (manure content), and 60g of nonionic resin (with no fertilizer) and the thing, which thinned liquid manure 500 to 1000 times. The culture medium of No.5 mixes 200g of acrylic resin (manure content), nonionic resin (with no fertilizer) 20-40g, and the thing that thinned liquid manure 500 to 1000 times. The culture medium of No.6 consists of 200g of acrylic resin (manure content). The culture medium of No.7 consists of 200g of nonionic resin (with no fertilizer).
The culture medium of No.8 mixes 200g of nonionic resin (with no fertilizer), and ion-exchange resin 0.1-0.5g. The culture medium of No.9 consists of 200g of things, which made nonionic resin contain a fertilizer, and a thing, which mixed ion-exchange resin 0.1-0.5g.

The culture medium of No.1 - No.5 is a culture medium, which uses nonionic resin for an acrylic resin culture medium. In the culture medium of No.1 - No.5, a flower and a foliage plant are transplantable. Although a foliage plant seldom needs a fertilizer, if neither what thinned liquid manure 500 to 1000 times by 7 to 10 days, nor ion-exchange resin 0.1-0.5g is added, the state of a flower will change from A (good) to B (bad). In the figure, it is shown that the "round" mark has a good growth state, and it is shown that a "cross" mark has a bad growth state.

In No.2, if a flower runs short of fertilizers, it will not grow up. In No.6, it will be in state A in about one week. About ivy, pothos, and coffee, it changes to state D in two weeks - one month after state C.
In the state C and D in No.6, growth is hardly carried out. In No.5, although a foliage plant regains energy by a root rot preventive effect, there is not big growth. When about one week has passed, a root rot preventive effect starts, and growth of a root stops and begins to rot.

In No.7, it is shown that it can transplant even if nonionic resin does not contain the fertilizer. It is shown that it grows up even if a foliage plant does not have a fertilizer. In No.7, No.8, and No.9, it is shown that the plant in soil cultivation grows up by the root same as a nonionic resin culture medium. In No.7, with the flower, the concentration of a fertilizer is important, and it is shown that it is necessary to give the fertilizer thinned 500 to 1000 times, or 0.1- 0.5g ion-exchange resin so that it may not change from state A to state B in the period by 7th to 14th day after an experiment start. This experiment shows that there is a root rot preventive effect in nonionic resin.

Next, the pot bottom using the root rot preventive effect of nonionic resin and a garden mat are explained. When the nonionic resin culture medium has the effect of preventing root rot and this is used, even if there is no fertilizer, a transplant and growth of a foliage plant are possible. Nonionic resin does not contain ion. In this culture medium, ion-exchange resin of a positive ion is the main ingredients, nitrogen, phosphoric acid, and potassium, which are the positive ions of a cation. The counteraction of ion happens by using a little this. It is possible to promote growth of a plant by putting them in 0.1-0.2g to a nonionic resin culture medium of 200-300g.

By combining nonionic resin and ion-exchange resin of a positive ion, since using it as a pot bottom of hydroponics, using it as hilling, mixture, and hilling or using it as a garden mat in the pot bottom of soil cultivation, and mixture with soil can be performed, a vegetable root rot preventive effect, a water retention effect, and the effect as a fertilizer are simultaneously made possible.

By using it for a pot bottom by making nonionic resin of 20 - 40 mass percents of the high draw corn in a bowl, or the quantity of a soil into a garden mat, for about one month, even if there is no adding water, a plant can be grown.

In this case, ion-exchange resin 0.1-0.2g can be added to nonionic resin. Thereby, in about three to 4 everyday life, the leaf of the vegetable parietal region is glossy just as if it applied oil. Automatically, it spreads from a top to the bottom and is glossily made the whole. This means that the plant is emitting oxygen. This is a phenomenon of the leaf of hydroponics. Although it does not become such with the plant of soil cultivation, the flower and leaf of the plant itself are also full of life. When using nonionic resin for the pot bottom of soil cultivation, it is the feature for a vegetable root not to have any resistance and to grow up by the root of the soil cultivation.

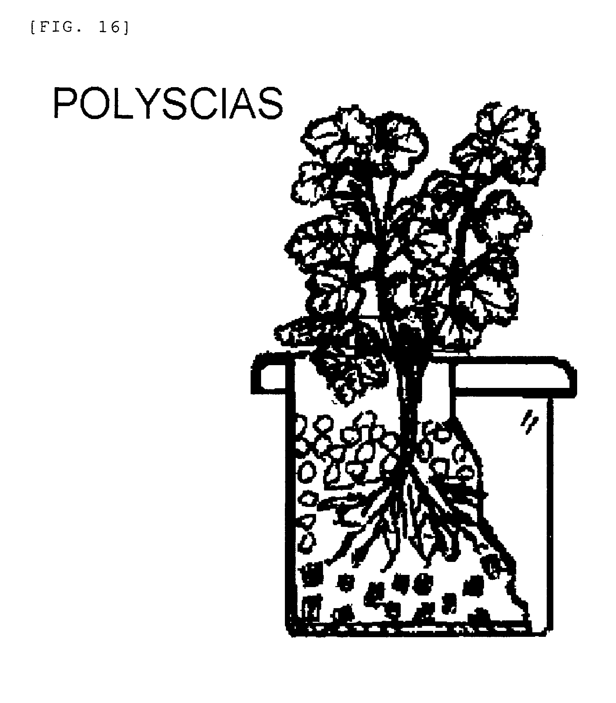

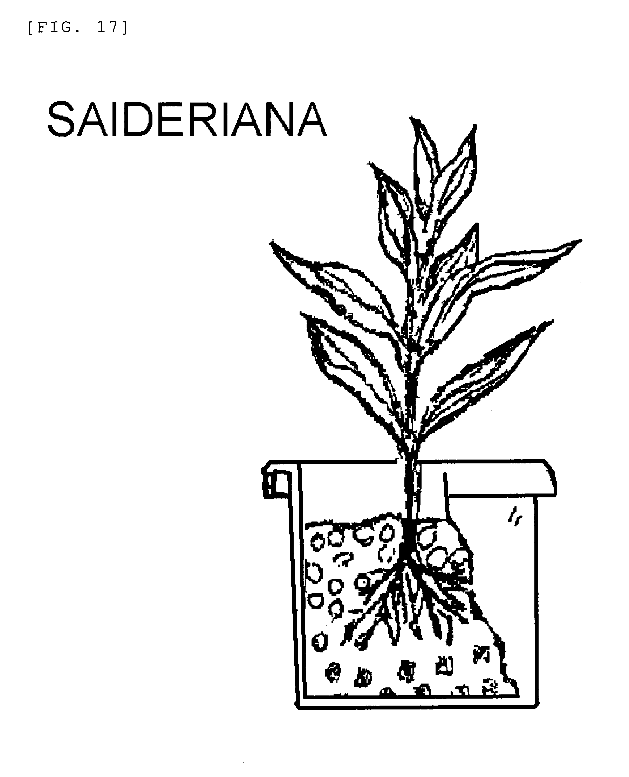

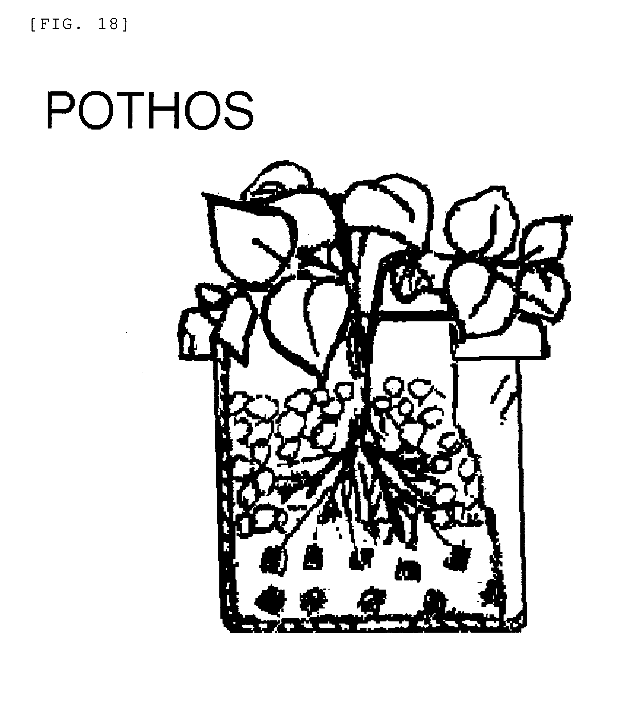

Next, the case where nonionic resin is used for the pot bottom of hydroponics is explained. If 20 to 40% of nonionic resin of the entire volume of a high draw corn is used for a pot bottom, supply of water will become unnecessary for about one month. A root grows 2-6cm in two weeks. It grows up 4-10cm in one month. For example, Polyscias grows about 1.5cm in one week, and about 3.0cm in two weeks (Fig. 16). Saideriana grows about 1.5cm in one week, and about 2.8-3.0cm in two weeks (Fig. 17). Pothos grows about 1.5-3.0cm in one week, and about 3.0-6.0cm in two weeks (Fig. 18).

By using nonionic resin for the pot bottom of hydroponics, from the leaf of the vegetable parietal region, as oil was applied completely, a leaf will be glossy from the 3 to 4th day. And the whole is glossily used in about one week. This phenomenon is not seen with the plant of soil cultivation.

Next, the effect at the time of using nonionic resin for the pot bottom of hydroponics or soil cultivation is explained. The amount of the ion-exchange resin used of the high draw corn used by the foliage plant of hydroponics is 2g by the type-two-sized pot. This is valid for three months. It is used putting 2g ion water and water about 1cm deep into the pot bottom of a type-two-sized pot containing an inner pot. In a foliage plant, using nonionic resin for the pot bottom of the culture medium of a high draw corn, and using about 0.1g ion-exchange resins can carry out valid maintenance during about three months.

By using nonionic resin for hydroponics or soil culture, supply of water can become unnecessary, and a plant cannot hurt, but cost can be reduced at a retail store or the like Also at a retail store, such nonionic resin can be used for vegetable mixed species gathered and planted. The production maker can make a water retention effect maintain for one to two months by adding the nonionic resin that contains a fertilizer as a garden mat 20 to 40% to the culture medium of hydroponics or soil culture.

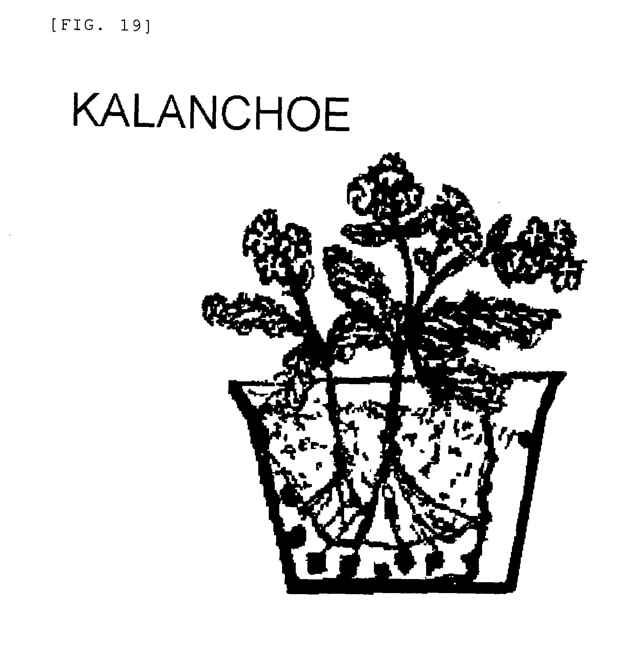

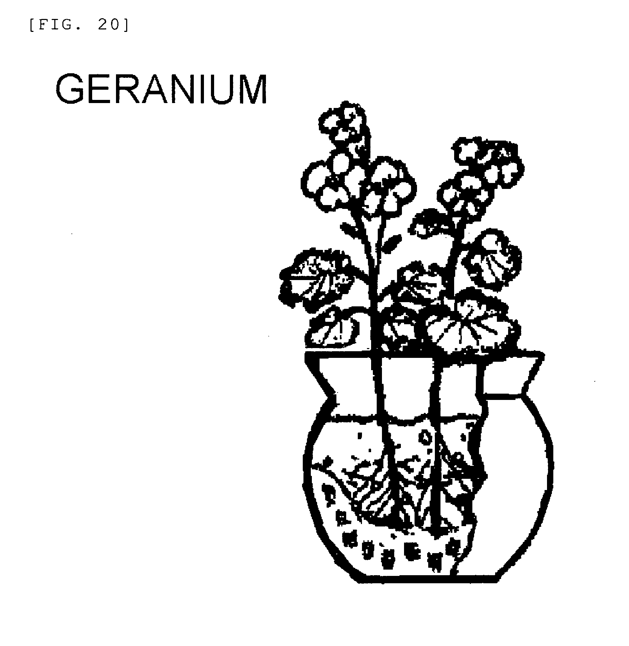

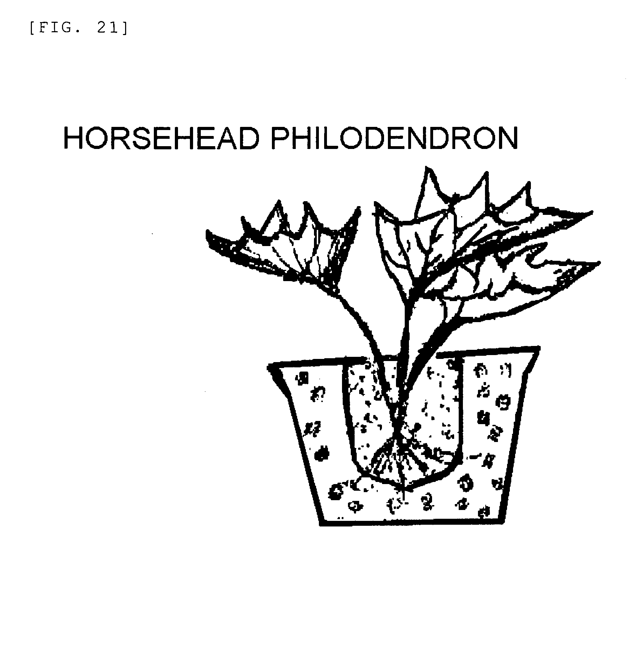

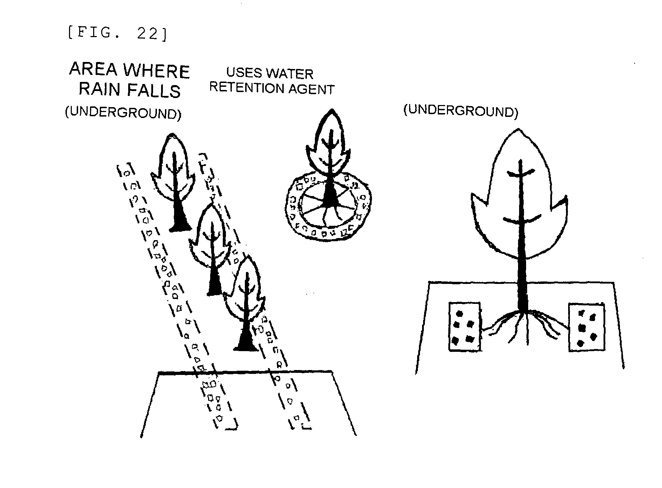

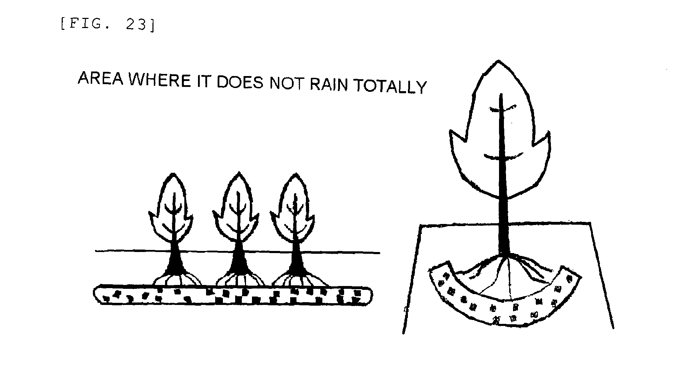

When using nonionic resin for soil cultivation, liquid manure is made to stick to nonionic resin, or ion-exchange resin is used for nonionic resin in small quantities. It is the feature for the root of the plant grown by soil cultivation not to have any resistance in the culture medium of nonionic resin, and for it to be adapted, it to be extended automatically, and to grow. Even if a plant is taken out from the bowl of soil cultivation and it plants in a nonionic resin culture medium again, there is also no change of what and it grows. The feature is almost equal to the thing of a solum, and nonionic resin is substitution of soil. For example, in the case of Kalanchoe, if the plant, which carried out soil cultivation, is again planted in the bowl, which uses the garden mat of nonionic resin for a pot bottom, a root will be extended 4-5cm in about two weeks (Fig. 19). In the case of geranium, a root grows 8-10cm in about two weeks (Fig. 20). In the case of a horsehead philodendron, a root grows 5-10cm in about two weeks (Fig. 21). These causes are because nonionic resin adsorbs and filters a vegetable soil and organic acid, gives clean moisture to a plant, without repelling water and is carrying out the same operation as a solum. As shown in Fig. 20 and Fig. 21, nonionic resin is arranged not only on the bottom of a bowl but on the side of a bowl, and a root can be surrounded. The garden mat of this nonionic resin is used for a pot bottom, and also it can be used for a flower bed, a planter, a roof garden, or the like (Fig. 22). It is also possible to use it as a soil conditioner that improves the polluted soil using the adsorbing action of nonionic resin or the like (Fig. 23).

Cultivation of a plant is enabled in the culture medium into which a plant does not grow by using as a soil conditioner by using the bactericidal action of nonionic resin and making control of all pH easy. The most familiar trees can carry out what kind of growth underground, and it can be used as teaching materials of the science of the school which looks at an underground stem for whether moisture is absorbed originally. In the culture medium of a planter, a flower bed, a field, and others, nonionic resin other than a use of pot bottom can be used as a soil water holding agent, an improvement agent, and an active agent.

Next, the utility of ion-exchange resin in the culture medium using nonionic resin is explained. The counteraction of a positive ion happens by using ion-exchange resin for a nonionic resin culture medium. For example, it is used to nonionic resin 200 to 300g, sprinkling ion-exchange resin 0.1 to 0.2g on nonionic resin.

Thus, when only a small quantity uses ion-exchange resin with nonionic resin, a vegetable growth facilitatory effect is acquired. By using what mixed ion-exchange resin to nonionic resin for a pot bottom or a garden bottom, or using it as a soil conditioner, the root rot preventive effect by the water holding operation, the disinfection operation, an adsorbing action, or the like is produced, and the time and effort which management takes can be reduced.

Use with cut flowers, such as cultivation of a plant, Chrysanthemum morifolium, Rose, sakaki, can be enabled by making ion water (pure water) stick to nonionic resin. In cultivation of a flower, growth of marigold, a saintpaulia, Zinnia elegans, a begonia, or the like had an effect.

Any trouble could not be found in the transplant of a plant by which hydroponics was mainly carried out in the culture medium using acrylic resin, and it was possible.
However, when planting again the plant by which soil cultivation was carried out in hydroponics, it was difficult to fix the root, which does not get used to hydroponics to the hydroponics culture medium that consists of acrylic resin suddenly.

The nonionic resin culture medium has so far been considered to be a base material of hydroponics like an acrylic resin culture medium. In the culture medium of the acrylic resin generally marketed, a plant grows up by the root of hydroponics with the water-repelling operation of acrylic resin. On the other hand, in the culture medium (mixed medium) which mixed an equivalent amount of nonionic resin and acrylic resin every, a plant grows up by the root of a solum.

It turned out that the above-mentioned mixed medium carries out the same operation as the culture medium of a solum. By the root rot preventive effect of nonionic resin, the mixed medium in which both the plant by which hydroponics was carried out, and the plant grown by the solum can grow up can be created, and the transplant to a mixed medium from a solum becomes easy.

As shape of nonionic resin, a cube, and a sphere and the polyhedron, which is not fixed shape, can be considered. Moreover, a rectangular parallelepiped, a globular shape, a tetrahedron, a polyhedron, a rod-like structure, a formed body in which the hole opened tubular like macaroni, a formed body (it is hereafter called a "Baumkuchen type") which rolled the beltlike laminated thing spirally, powder, and Five face pieces whose two fields which counter are triangles, can be considered.

Next, the case where nonionic resin is used as a water retention agent is explained. It is as having mentioned above about the mixed use and the use of pot bottom of acrylic resin by the experiment of the root rot preventive effect. However, with the plant planted in the high draw corn of hydroponics, it roots only by planting in a nonionic resin culture medium. The utilizing method for which nonionic resin is most suitable is using as substitution of the high draw corn of hydroponics, and substitution of soil cultivation.

By global warming, although outdoors gardening, a planter, the flower bed, the roof garden, the lawn, the field, or the like are increasing importance, nonionic resin can be used as those water retention agents.

As for the amount used, although a vegetable root absorbs moisture directly from nonionic resin about the amount of the nonionic resin used, 1 / 3 - 1/2 of soil are good. It is good to use in summer the nonionic resin that fully absorbed water moisture. It is good for a rainy season to give the remaining power that can absorb water moisture and to use what carried out half grade swelling. With a planter, about 1/3 to 1/2 nonionic resin of the quantity of a soil is mixed and used. Once or twice per month may be sufficient as supply of water.

In the interior of a room, it is possible to spend the life which an old person, a child, and physically handicapped people enjoy cultivation of a plant on a table easily, has communication with people, and has a dream and definite aim in life. Although people grow crops and a plant over many years and the solum is made artificially, it is possible that workers will run short in the future with reduction in the younger age group. It is possible for this making a solum to raise manufacturing efficiency, such as growth of a plant and crops and freshness maintenance, and to reduce a help over the future, from now on, by using hard water, wood vinegar, etc., such as a fertilizer and deep sea water, for nonionic resin, by the bactericidal action and pH control by the adsorbing action of nonionic resin, and by using the nonionic resin containing a fertilizer for a field, a park, a flower bed, rooftop gardening and a vegetable potted plant, and a pot bottom as a garden mat.

Conventionally, in cultivation of a plant, the resin used as a water retention agent existed including water or a fertilizer. However, each of these is acrylic resin and it aimed at obtaining a water retention effect. Even if nonionic resin was used, directions for use differed and the purpose was not achieved well. It is most important that water and a fertilizer are important and keep water fresh also in cultivation of the plant in a solum and crops by the above-mentioned experiment. The bactericidal action that keeps this water and fertilizer fresh can also be said to be three important elements in cultivation of a plant. In cultivation of a plant and crops, such as tree planting, tree planting, or the like in the desert from these things, nonionic resin is indispensable. Nonionic resin can be called artificial vegetable culture medium in which the two ways of the culture medium of hydroponics and the culture medium of soil cultivation which have a bactericidal action of a water retention effect and a root rot preventive effect are possible.

### (Soil water holding agent)

Next, the directions for use as a water retention agent of nonionic resin are explained. Tree planting to a desert is performed in recent years a battle against global warming and for the purpose of carbon dioxide reduction, or rooftop gardening is performed for the purpose of relief of the heat island effect of a building. It is important for the soil water holding agent used for tree planting and tree planting to such desert tree planting, the roof or a flower bed, or the like to use nonionic resin with long water retention and holding power. Conventionally, acrylic resin has been used for the water holding agent use mixed with the soil. This acrylic resin will be reduced by a water-repelling operation for a short period of time, although swelling magnification is large. Acrylic resin has the fault of absorbing vegetable moisture, when it reduces. On the other hand, as for nonionic resin, although swelling magnification of the feature is small, it is possible for the effect of a fertilizer, water retention, and root rot prevention to make it act simultaneously by using nonionic resin or what mixed an equivalent amount of nonionic resin and acrylate resins. And, it is possible to consider it as the culture medium stabilized in the long run. Nonionic resin adsorbs and filters soils, such as sap that a plant discharges, and gives moisture to a plant, and it holds the cooling action that cools the adsorbing action and soil of carbon dioxide. Since the power which roots, buds again and is reproduced by the bactericidal action by adsorption is held even after a plant withers in the middle of growth, this vegetable culture medium can be used like a soil water holding agent.

Although it changed with conditions, such as natural environment, a solum, and the weather, when 100kg of nonionic resin having contained water and 100kg of acrylic resin having contained water are mixed and used in tree planting in a flower bed, a field, the roof, a desert, etc., Nonionic resin absorbed the moisture which acrylic resin repelled periodically, and like the vegetable experiment, by the amount of almost an equivalent amount of resin used, the root of the solum grew up as it is, and it did not become a root of hydroponics so that it might understand also in the experiment of the vegetable culture medium of resin. When more acrylic resin than nonionic resin is used, it becomes impossible for nonionic resin to absorb moisture from acrylic resin, and is saturated, and even if it repels water, it is not absorbed, but moisture collects. As a result, the soil of a terrestrial part becomes wet and evaporates. When water collects, a vegetable root changes to the root of hydroponics. Thereby, the plant which was being grown by the root of the solum until now will once start a root rot state with superfluous moisture, and will change to the root of hydroponics. These things show that it is hard to grow with a plant suitable for growth of the root of a solum.

Acrylic resin was used in the desert tree planting project undertaken once. In this acrylate resin, ion evaporates immediately to a high temperature terrestrial part, the effect of soil water holding agent is not acquired, and it can be said that it was the same as that of the state of the flower of the planter in intense heat. In order to prevent this, it is good to use the tank in which only nonionic resin is used, and water is stored without repelling water, and to often hold moisture for a long time. In order to soak a terrestrial part, it is preferred to mix and use a little acrylic resin, but acrylic resin will repel water for a short period of time. Water is repelled, and moisture of nonionic resin is absorbed and water is repelled. However, at the place where rain hardly falls, a tank becomes empty and use of acrylic resin serves as a waste of moisture.

It is important for the water retention agent used for tree planting of desert tree planting or the like to make the same culture medium as the soil which trees grow, the amount used mixes an equivalent amount of nonionic resin and acrylate resins, or only its nonionic resin is good. Polyvinyl alcohol and the acrylic resin repelled periodically of water retention are required for use to the planter, the rooftop gardening, and the plantation art of planting a plant with soft roots, such as a flower.

Polyvinyl alcohol of nonionic resin was once used for the water retention agent. The soil water holding agent which uses polyvinyl alcohol swelled greatly also about 200 to 300 times by the rainfall, and a bactericidal action was not accompanied by it, but the vegetable culture medium of water retention had started root rot. Use of a soil water holding agent has been made difficult by this. It turned out in the experiment that the bactericidal action of this nonionic resin polyvinyl alcohol has happened by a chlorine ion, potassium chloride, or the like of residual chlorine of tap water. In the culture medium with this increasing chlorine ion, it turned out that the adsorbing action that takes the soil of a root, and sterilization and a disinfection operation are continued. In contrast, the acrylic resin that swelled greatly will be in the same state as a puddle, and will cause root rot. The disinfection operation and bactericidal action of polyvinyl alcohol lengthen and happen because an underwater mineral adsorbs, it becomes impossible to adsorb chlorine and a chlorine ion increases as a result. Use of tap water is needed for the soil water holding agent of polyvinyl alcohol. Although the bactericidal action is continuing in the water that became about 250 times especially, a cut flower is not held for a long time in this water. The inside of the water used as 250 times of this polyvinyl alcohol, it is not different from use of only tap water, and it cannot hold a cut flower for a long time. The deep-sea water of hard water that contains many minerals in use of this cut flower must be used, and also the bactericidal action of an antimicrobial agent or a photocatalyst is needed.

Thus, since nonionic resin is neutralized, it filters by using deep sea water and the role of the ground is carried out, that it can be used can tell the growth and breeding of a fish other than a vegetable base material both for hydroponics and soil cultivation nonionic resin. This nonionic resin has sterilization and a disinfection operation or an antibacterial action, an adsorbing action, and filtration.

Growth is difficult if the plant of hydroponics is again planted in a soil culture medium. However, in the vegetable culture medium of nonionic resin, the plant of hydroponics is only planted and can be easily grown to a nonionic resin culture medium. The root of the plant grown by hydroponics absorbs excessive moisture between resin, and is grown at the beginning. If moisture is lost, it newly roots and grows up by the root of a new solum. By the same root of an old solum, the plant grown by soil cultivation absorbs moisture, and grows. Since soft long roots, such as a flower, cannot absorb resin moisture from the beginning, they are changed into a state with somewhat much water, and must enable it to absorb excessive moisture between resin in a nonionic resin culture medium. Therefore, mixed use of the polyvinyl alcohol of resin with water holding property is carried out. Or mixed use of nonionic resin and the acrylate resin is carried out, and the moisture, which repelled water, is given to a flower and grown. The root of this solum absorbs moisture in search of moisture, it branches off soon, and a fine root roots. It can be said that the water holding operation used for a plant with soft roots, such as a flower of a soil culture medium, is the same as that of water retention agents, such as a cut flower and sakaki-tree.

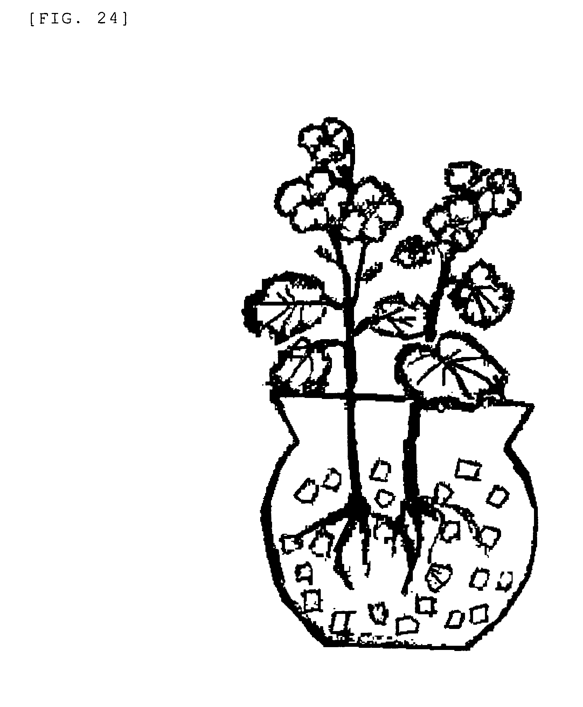

If nonionic resin repels water when the plant of hydroponics is again planted in a nonionic resin culture medium, it will grow by the root of this as (Fig. 24). Or if there is much moisture, a root will not change. It is important to make moisture into slight much from the beginning. Thereby, a plant roots newly without looking for moisture, if collected water is absorbed and moisture is lost. Even if the plant of a solum is a case where it plants in a nonionic resin culture medium again, it looks for and absorbs moisture similarly with the root of a solum.

A leaf may wither, after planting a foliage plant, flowering trees and shrubs, or the like in a nonionic resin culture medium again. Although it may wither at the burden by the root having gone out at the time of a transplant, or cold and a culture medium having changed, it carries out for about two weeks to one month, or about 1 to 2 months, and a new root and fresh leaves are made. A root rot preventive effect acts by the bactericidal action by the adsorbing action of a nonionic resin culture medium, and this roots newly, buds, and is because it reproduces. Although these things are difficult in an annual herb, it is possible in pothos, Dendrobium, a mini rose, hibiscus, Stewartia pseudo-camellia, and musk.

Even if the plant of a solum is a case where it plants in a nonionic resin culture medium again, it looks for and absorbs moisture similarly with the root of a solum. When nonionic resin is put into glassware or the like and it is used as a vegetable culture medium, moisture evaporates automatically, and a solidification operation works and solidifies. However, when it is used into a planter or soil, there are few reduction and lumps late by the ability of air not to be touched. The shape of nonionic resin is corniform etc., and when large, the interval of a field and a field is large, breath ability is made to resin, and it becomes easy to evaporate. However, in the polyvinyl alcohol from which shape differs, since the shape of a fine particle or the like laps, water retention is high, and water is held for a long period of time.

By considering it as these mixed media, the plant of fine soft roots, such as Filicineae of a foliage plant with difficult growth by a culture medium with little water retention, Adiantum, and a flower, becomes easy to absorb moisture, and growth of it is attained. In the vegetable culture medium using larger nonionic resin with little water retention, water must be given frequently. However, mixing the nonionic resin and acrylic resin of water retention attains the cultivation that excluded supply of water.

At the vegetable culture medium which consists of nonionic resin, a root can absorb moisture by itself from a nonionic resin culture medium with little water retention with the plant of strong roots, such as a foliage plant, trees, flowering trees and shrubs. However, when nonionic resin is used as a water holding object for the soft plants and cut flowers of a root, such as Filicineae and a flower, and the sakaki-tree which like water retention, neither cut flowers nor sakaki-tree absorbs the moisture contained in nonionic resin, but resin and resin collect and it absorbs water. Therefore, water is made to repel by pouring out moisture suitably or covering with cotton or paper into nonionic resin. Thereby, cut flowers and the sakaki-tree can absorb moisture.

When using them for it for Baumkuchen type resin, stabbing with cut flowers, it can be used by twisting cotton and paper around this resin as a water holding object that repels water.

In the case of acrylic resin, nonionic resin will absorb the water which acrylic resin repelled. If 500g nonionic resin is used when using this water retention agent by an arrangement by using nonionic resin in one month as a water retention agent which has about 20 to 30 percent of water-repelling nature, an amount of water-repelling will be set to 100-150g.

In order not to carry out this two to three water supply and to carry out, one water supply is made into about ten percent, and it may be about 30 percent by about three water supplies. Although the areas where rain does not fall at all differ, about one third repels water per month and a terrestrial part becomes wet with a vegetable culture medium, and if it rains, it will absorb water. Water supply becomes enough at once per month.

Next, the directions for the soil water holding agent in a planter, a bowl, a flower bed, or the like are explained. If it is used covering a bottom without mixing with a soil the resin that repels water, such as acrylic resin, water collects by water-repelling, and a plant will start root rot and will wither. This is because acrylic resin will absorb vegetable moisture if it reduces by water-repelling and moisture is lost. Swelling magnification is large, the difference of the swelling magnification by moisture content is large, and it is because a culture medium is not stabilized.

When using it, mixing acrylic resin with a soil, the mixed amount of acrylic resin is reduced according to an amount of water-repelling, and good growth can be realized by making it a plant tend to absorb moisture by water-repelling. It carries out to such an extent that the moisture generated by water-repelling does not collect. Vegetable moisture is made hard to be able to intercept vegetable moisture and to absorb, since the soil has wrapped acrylic resin even if acrylic resin contracts by water-repelling. There is sense of stability in a culture medium, so that there are few mixed amounts.

When it covers with acrylic resin under a soil, the plant of a solum cannot be grown but hydrophytes, such as pothos and ivy, can be grown. This state is the same as the state where a rice plant grows by a rice field. A rice plant is hydrophytes, and if there is sufficient rain, it will be grown also in the fields (upland rice). Therefore, acrylic resin does not have a root rot preventive effect, even if there is moisture, root rot of the plant of a solum will be carried out, and it will wither.

By the root rot preventive effect of nonionic resin, cultivation of all plants, such as flowering trees and shrubs and a garden tree, besides cultivation of a foliage plant is attained. Also in a foliage plant, cultivation of Filicineae and Adiantum becomes possible at a nonionic resin culture medium. With a flower, cultivation becomes possible in flowering trees and shrubs, such as the plant of Orchidaceae, such as cattleya and Dendrobium, lavender, a begonia, Petunia, Dianthus superbus var. longicalycinus, marigold, a saintpaulia, a pansy, and Gentiana scabra var. buergeri. Cultivation of all plants, such as rose, hibiscus, Hibiscus syriacus, Solanum malacoxylon, Stewartia pseudo-camellia, an angel earring, azalea, Rhododendron, Abelia, sakaki, a laurel, Leiognathus nuchalis, Osmanthus fragrans, and a blueberry, is possible.

Next, the case where a water retention agent is used for a flower bed or a field is explained. In the area where rain falls, it arranges in consideration of drainage as a belt of the water of the nonionic resin in a soil. For example, nonionic resin is arranged so that it may become two belts of water that were parallel to the ridge of the soil. Or nonionic resin is arranged to doughnut shape so that a plant may be surrounded (Fig. 22). According to Even if it rains, nonionic resin absorbs rain, rain permeates into a soil through between nonionic resin, and it can avoid becoming the hindrance of drainage by arranging as mentioned above.

On the other hand, in the area where rain does not fall at all, nonionic resin is arranged so that a root may be wrapped in (Fig. 23). It controls so that excessive moisture may not escape in a soil by this, and nonionic resin absorbs little moisture and it can avoid missing it. On the outdoors, the measures whose flower bed and yard made carefully consider a water shortage in case it does not rain, and store water underground locally according to the abnormal weather by global warming must be taken. By using nonionic resin, it can respond also to a water shortage.

Next, the vegetable culture medium, which added nonionic resin, ion water, ion-exchange resin, and sake, is explained. It became very fine when the vegetable culture medium of the Abelio of flower, tree, or shrub was filled with sake. A root is washed and it plants in a nonionic resin culture medium again. First, only 300g nonionic resins, 30 cc ion water, and 0.5g ion-exchange resins were added to the vegetable culture medium. The vegetable culture medium was filled only with 50 cc sake three days afterward. At this time, the flower withered and the leaf and the branch had lost energy for a while. On the next day, the flowering trees and shrubs, which had weakened, became fine. Thus, when the vegetable culture medium of the Abelio of flower, tree, or shrub was filled with sake, it became fine temporarily. However, it cannot be said that alcoholic beverages, such as sake, wine, and beer, are the best for growth of a plant. For example, in the case of beer, it is glossy for about one week, and according to the transpiration operation by sugar, although it is good growth, energy is lost in about one week. In carbonated drink water, the cultivation for about two weeks is possible by the experiment of beer culture media, such as a mini rose, pothos, ivy, and Coffea arabica. Also in cut flowers, it is the same.

Carbonated drink water contains components, such as preservatives (benzoic acid Na), fruit sugar, grape sugar, an acidulant, and perfume. When the carbonated drink water, which contains saccharides, such as sugar and grape sugar, in the vegetable culture medium that uses nonionic resin, was given, good growth was shown similarly. In lavender, geranium, a mini rose, and Dianthus superbus var. longicalycinus, the bud was attached and it became the good growth of making a flower bloom or the like However, in carbonated water and the soft drinks that do not contain saccharides, growth is bad. By absorbing saccharides, in spite of the transplant from soil cultivation, a flower is made to bloom very vigorously, a bud is attached, and it can be said from this that transpiration operation and photosynthesis are performed actively. It is effective if what included the fertilizer in these drinking water is given to the plant which weakened especially in a summer.

As a result of the above experiment, since sugar was given at the place that exhausted energy and had weakened by transplant, it can be said that energy was regained. Since the manure of ion-exchange resin also lacks in the instantaneous effect instead of a liquefied fertilizer, an effect can be raised by combination of use for cut flowers by making sugar stick to ion water. That is, if the ion water with which sugar, grape sugar, or the like were mixed is given to nonionic resin, it is metabolized actively and is effective for growth of a plant.

When Rion of a flowering trees and the Crossandra of a flowering plant were planted in a vegetable culture medium and only 1200g nonionic resin and 400 cc sake (13 to 14% of an alcohol, and a little organic acid and water are included) were added, the branch of the plant which was insufficient as for moisture became fine. When Rion of a flowering trees and the Crossandra of a flowering plant are planted in a vegetable culture medium and only 1200g nonionic resin and 400 cc beer (3.5% of an alcohol and a little carbon dioxide are included) are added, the leaf of a flowering trees begins to wither a little. According to a vegetable transpiration operation, a flowering plant is glossily carried out, as oil was applied from the parietal region. This effect appears, also when ion-exchange resin is used by the use of pot bottom of a high draw corn.

When sake is used, this contains an alcohol, water, and a little organic acid, but nonionic resin adsorbs this organic acid, resin adsorbs the moisture which evaporated, and the root is absorbing moisture from resin. If alcohol content is used in the state where it was made into lowness, saccharides will be given to the plant that consumed energy by transplant, and a good result will be brought. On the other hand, when beer is used, an alcohol is little, since nonionic resin was seldom adsorbed but moisture remains, the root of the flowering trees changed to the root of hydroponics, and the slightly thicker root has been crushed by water and carbon dioxide like about 4cm and paper. This shows that the root is not absorbing moisture normally.

Thus, by adding ion water and sugar to nonionic resin, fatigue of the plant at the time of a transplant is reduced, saccharides are given to the plant that consumed energy, and a transpiration operation is made active. Although photosynthesis is restricted to the portion containing chlorophyll, the young stem with a flowering plant performs it.

When the culture medium of a foliage plant, ivy, Coffea arabica, and pothos is filled only with 300 cc beers, and when the culture medium of a foliage plant, ivy, Coffea arabica, and pothos is filled only with 300 cc carbonated drink water, they become very fine and are carried out glossily. When the culture medium of Coffea arabica is especially filled with beer, the state of Coffea arabica is good.

Like Coffea arabica etc., when only 300 cc beer (5.5% of an alcohol, water, and carbon dioxide are included) is added to the culture medium of a flowering trees mini rose, although about seven to ten days will be good, after that, vigor is lost and it withers days for the time being. Although carbon dioxide evaporates immediately, since the alcohol remains, this withers.

The state of a flower is good when sake (alcohols of 14 %, acidity) is added to the culture medium of cut flowers, rose, gerbera, carnation, Gentiana scabra var. buergeri, small chrysanthemum morifolium, and an Astor. It is also the same as when carbonated drink water is added. Although it is also the same as when beer (5.5% of alcohol) and wine (9% of alcohol) are added, when neutral things, such as sugared water (neutrality), a cut-flowers vitality agent (neutrality), and ion water (distilled water) (neutrality), are added, with cut flowers, a flower lasts long.

What mixed 150 cc of sake with 150 cc of ion water with 100g of nonionic resin serves as acidity a little, and cut flowers, rose, gerbera, carnation, Gentiana scabra var. buergeri, a small type chrysanthemum morifolium, and an Astor will be in a good state. What mixed 150 cc of soft drinks with 150 cc of ion water with 100g of nonionic resin serves as acidity, and will be in a good state. Since neutral things, such as ion water, make cut flowers and sakaki-tree last long, it can be considered as a vegetable vitality agent by adding ion water and saccharides to nonionic resin. For example, what mixed 300 cc of ion water, saccharides 1-30g, such as sugar and grape sugar, and nonionic resin 100-150g can be used for cut flowers or the like The thing which made 300 cc ion water mix saccharides 1-30g, such as sugar, grape sugar, or the like may be made to stick to nonionic resin, and may be used.

If a plant is grown by making into a culture medium the thing which mixed sugared water and ion water to nonionic resin, or the thing to which the soft drinks with which a carbonated drink (sugar is included) or carbonic acid is not contained in nonionic resin were made to stick, the plant absorbs sugared water, complicated anabolism nourishment, such as saccharides and starch, is made with carbon dioxide in the air adopted from the stoma, and the energy of light, and oxygen is sent out from a stoma. Although the water absorbed originally may be good, also when a small amount of ion-exchange resin is used for nonionic resin, such photosynthesis is performed, but it turns out that the leaf was sticky, and sugar has blown and come out according to the state where Coffea arabica, pothos, ivy, or the like were soaked, into sweet moisture, such as a carbonated drink.

It is absorbing sugared water originally, and a transpiration operation becomes active, the parietal region of a flowering plant carries out a plant gently, and the whole leaf and a stem carry out it gently, and carry out it glossily. This is the result of planting a flowering trees mini rose, Crossandra, a flowering plant herb, Vinca rosea, marigold, a begonia, geranium, or the like in the culture medium of carbonated drink water. In particular, the leaf of Vinca rosea carries out gently and is glossy. By giving this drinking water, a transpiration operation and photosynthesis become active and the operation that generates oxygen further becomes active.

Although the lyonii of flower, tree, or shrub was grown from sake and beer, it seems that there were many alcohol contents and it failed. When flowering trees Abelia, Rion, and flowering plant Crossandra were again planted in the culture medium which gave much sake and beer to the nonionic resin culture medium, they became very fine at first, but they are withering gradually. In particular, the leaf has withered first. Although the Crossandra of the flowering plant also performed the transpiration operation actively and was carrying out it glossily, it thinks because absorption of moisture became impossible normally by the alcohol.

When wine about 50 cc was given to the unclean nonionic resin culture medium which planted Dendrobium and passed as long as seven months, it seemed that it withers at the beginning, but even if it is after two-week progress, the color of a leaf is very glossy, is bright yellowish green, and has attached fresh leaves. This is because the component of wine has a bactericidal action.

It is good although wine 20cc was given to the grown culture medium as for which about 30 cc of carbonated drinks and 15 cc of ion water gave 300g of each nonionic resin culture medium and which planted a flowering plant, marigold, Vinca rosea, Kalanchoe, Polyscias, and Zinnia elegans in it. When wine 50cc is given to about 300g of culture media which the mini rose was extended and have passed for three months, and when wine 100cc was given to 1,000g of culture media which planted Melastoma candidum, fresh leaves and a sprout came out in one day on the next day. Melastoma candidum pickled many sprouts.

Although the transpiration operation worked by giving sake and beer at the flowering plant or the flowering trees, and it had withered by the alcohol, it became good growth when it was wine. It is thought that the organic acid in the fermented liquor considered at the beginning works, the unclean nonionic resin is purified, and it is being activated. There is no alcoholic smell and the smell by the soil of a culture medium was lost.

According to the above-mentioned result, although the organic acid is contained in fermented liquor, such as sake, beer, and wine, respectively, especially wine has much content and grape sugar has achieved the good effect. This organic substance is made into this fermented liquor by carrying out the operation of a microorganism, and it can be said that the vegetable culture medium is activated and sterilized by using the wood vinegar condensed more.

Therefore, it can be said to nonionic resin that it is possible to activate a vegetable culture medium more by adding sterilization, disinfection, and antimicrobial agents, such as ion water, fruit sugar grape sugar, an organic acid, or tannin.

In a cut flower, it is important not to decay water and use of ion water is the best. By sakaki-tree, when tap water is used, it will wither in four to five days, but it can keep alive ten days or more by using ion water. When 100-600 cc of water is used, it can be kept alive further two to three days for a long time by using a small amount of ion-exchange resin. When ion-exchange resin is used for tap water, it can be kept alive for about one week. Use of ion-exchange resin is the easiest for ion water, and it is cheap, and although a cut flower, sakaki-tree, or the like can be kept alive for a long time, it is good to give fruit sugar grape sugar and carbonated drink water for a small quantity, sugar, or the like further.

Pothos was grown using a commercial soft drink, a water supplement drink, and carbonated water. A wine small quantity was given to carbonated water (with no sugar). With the pothos grown to each the soft drink come out to market, and the water supplement drink, the leaf withered, and although it was a limit, the pothos that gave wine had revived. The root became brave and the leaf was also full of life. Although one leaf was rotten, this is in the state before giving wine, and it is shown that the bactericidal action is working by having given wine. It had an illusion whether nonionic resin was contained.

There is no smell of an alcohol in having given wine to the culture medium of A and B of (iii), and neither root rot nor a smell was generated in the culture medium. In these culture media, if a plant is taken out, nonionic resin is sticking to the root. In the culture medium soaked in sweet sugar until now, the plant did not stick to resin but only the plant left it simply. This is having given sugar in large quantities, and is considered that the disinfection operation or adsorbing action of resin did not function. By having added wine, resin adsorbed the organic acid and the disinfection effect was heightened. Since the conditions that gave 50 cc wines to Dendrobium were good, 50-60 cc of wine was given further. Many 3-cm-long new roots had come out in one day.

From these things, since an alcohol is 14 to 15%, it is not thought that there is a bactericidal effect. By adding wine in a nonionic resin culture medium, activation is raised and it is thought that the disinfection operation was strengthened.

By a nonionic resin culture medium, it is thought that the adsorbing action and the disinfection operation worked effectively.
Component of wine... Tannin, an organic acid, an alcohol, fruit sugar grape sugar
Organic acid content ··· Red wine : 0.4 to 0.79%
White wine: 0.35 to 0.94%
Since there is a disinfection operation of tannin, it can be said that use of wine raised the bactericidal action.

Component of sake··· Organic acid, Small-quantity sugar, Alcohol, Moisture
Component of beer··· Organic acid, Small-quantity sugar, Alcohol, Moisture, Lactic acid, acetic acid, carbon dioxide Although sugar makes a transpiration operation active by using a little sake and beer, a bactericidal effect is seldom expectable. Therefore, the disinfection effect can be raised to nonionic resin by adding wine. Use of wood vinegar has a disinfection bactericidal effect similarly. The effect which makes active a transpiration operation and photosynthesis of a bactericidal effect, a leaf, or a root is acquired by diluting wine and giving a vegetable root.

Nonionic resin polyvinyl alcohol (Mizu-mochi-ichiban (registered trademark)) increased the bactericidal action by adsorbing tap water, and became a root rot inhibitor which has a higher water holding property by mixed use with a polyalkylene oxide (there is an AQUACALK (registered trademark) as goods).
This polyvinyl alcohol is nonionic resin, when it absorbs ion water; it swells greatly about 200 times - 300 times, serves as a strong adsorbing action, and has disinfection, filtration, and a solidification operation with it.
It seems that the water-repelling operation is working in order to absorb water tap water, not to blister not much greatly and to collect chlorine ions.
The plant made into the resin culture medium did not start root rot, and did not change into the root of hydroponics. It is not the plant to which the plant was also suitable for hydroponics but the flower and foliage plant that need the drainage of soil cultivation, and it turns out that the chlorine ion water in the repelled tap water has started the disinfection operation.

Growth of the same plant as a solum is possible for a nonionic resin culture medium.
Corneous resin of polyoxyethylene has good breath ability, and does not hold the moisture between the laps of faces, the strong root of endurance like a foliage plant absorbs moisture through resin after absorbing this moisture.
But soft roots such as a flower and ferns was not able to absorb moisture after absorbing the moisture between resins, therefore water had to be added 1 time every 7-10 days at the beginning.

Since Nonionic resin (polyvinyl alcohol), which is fine granular, has a small interval of grains and is rich in a water holding property, the plant with soft roots such as a flower absorbed this moisture, and was suitable for growth by this culture medium.
A flower, a mini rose, and ferns serve as adding water of 1 time a week at 200g in the culture medium which adsorbed ion water has a water holding property because the swelling magnification is large. In this culture medium, plants can grow without adsorbing manure water.
The vegetable cultivation in the culture medium where two nonionic resins are mixed acquires water adding of about 1 time every two weeks, and acquires water adding of 1 time a week by adsorbing manure water.
This mixture ratio serves as polyoxyethylenes 0.5-1 to polyvinyl alcohol 1.
It is almost the same in polyoxyethylene pulverulent.

In order to solve this, we were able to hold moisture for a long time no less than two weeks by mixing the granular nonionic resin (polyvinyl alcohol) of high water holding property.
The trouble for moisture of all flowers can be solved.
This polyvinyl alcohol has a water holding property, and serves as a bactericidal action that collects chlorine ions by use of tap water, and resembled the water-repelling operation.
Although the arrangement which puts a cut flower in this culture medium by the adsorbing action of polyoxyethylene has held only about 1-2 days, the water holding property increased by using polyvinyl alcohol, and it became possible to hold for a long time 1-2 weeks about some flowers.
In addition, the department of Pteridium aquilinum, Pteris, Farei, Cretica, Adiantum, Angiopteris lygodiifolia, a pumila, Nephrolepis cordifolia, or the like and flowers such as a primula, a herb, and a mini rose, or the like and Orchidaceae such as a cymbidium, cattleya, Dendrobium, or the like which could hardly grow enabled growth of all plants, and is able to solve.

This nonionic resin and a polyalkylene oxide have a surfacing operation (it does not float on the water surface but rises uniformly from the bottom of water to near the surface) besides adsorption, disinfection, filtration, and a solidification operation.
When the cut flower is put in the culture medium of this polyalkylene oxide by the arrangement, the flower is difficult because it frizzles and withers.
When mixed use of a polyalkylene oxide and the polyvinyl alcohol is carried out, easy use for cut flowers becomes possible by a filtration operation and counteraction.
The use of water containing minerals, such as deep-sea water and the use of wood vinegar in sea, are the counteraction of good resin.

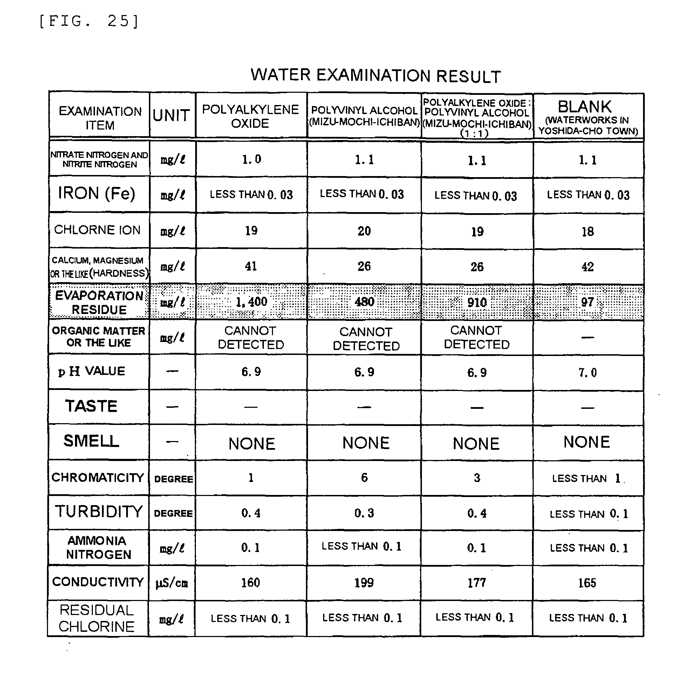

In the water examination result of Fig. 25, (i) polyalkylene oxide 500g which swelled, (ro) polyvinyl alcohol (Mizu-mochi-ichiban) 500g which swelled, (ha) putting polyalkylene oxide 250g and polyvinyl alcohol (Mizu-mochi-ichiban) 250g which swelled, into a beaker respectively, tap water (waterworks in Yoshida-cho town, residual chlorine 5 mg/l) 1.2L is added and that in which it will be left at room temperature for one day, and (=) resin is not contained is similarly neglected at room temperature for one day as blank.
By this result, a polyalkylene oxide adsorbs the chlorine ion of polyvinyl alcohol, and polyvinyl alcohol adsorbs and filters the evaporation residue of a polyalkylene oxide. This surfacing operation is improving interior design quality with a new polyalkylene oxide that carried out color coordinates, if the most important cut flower is used for a flower vase.
The use of alkylene oxide and water are nearly equal.
In acrylic resin, this rising to surface is impossible, and it solidifies in a bottom, or solidifies in the water surface.

By the experiment of water retention and drainage, soil has an important element in floriculture in vegetable cultivation.
The soil is important in order that not only a vegetable base material but a flower may maintain the moisture sucked up originally, but manure required for a plant melts into the water in a soil, sinks in, and is absorbed by the flower.
Thus, the soil and the manure play important role in growth of a flower.
Although there are various kinds of these soils, the loam, which is most suitable for vegetable cultivation, is a soil of the field where sand and clay are mixed by halves.

### (Vegetable hilling)

Some sand is made good mucilage loam by many sandy loam and bulbs (perennial herbaceous plant) at the therophyte. It turns out that there is drainage in sandy loam and mucilage loam is a soil that is rich in a water holding property.
Although it has already said that the vegetable cultivation of nonionic resin is the relation between a soil and water, and nonionic resin carries out the same growth as a solum by vegetable experiment, the adsorbing action of nonionic resin expresses a drainage operation, and the water-repelling operation of acrylic resin corresponds to a water holding operation.
The plant with soft roots, such as a flower, made moisture easy for polyvinyl alcohol to hold an adsorbing action and a water holding operation, and to absorb.
It is a culture medium of the water-repelling operation of acrylic resin, and the same operation.
It can be said that a nonionic resin polyalkylene oxide is in charge of an operation of drainage and sandy soil, in the relation of a clay operation of water retention of polyvinyl alcohol (not seeing rice cake) that this mixing ratio is a vegetable culture medium which carries out the same operation as the sandy loam of a polyalkylene oxide, and the loam which was most suitable for the vegetable cultivation which mixed the poly vinyl alcohol of mucilage loam about 1:0.1-1:3 times.

In a therophyte, partly, by sandy loam about 1:1 to 1:0.5 with much sand, and bulb (perennial herbaceous plant) about 1:0.3-1:3, mucilage loam is good, and the mixture ratio becomes important, and a polyalkylene oxide and polyvinyl alcohol can exclude adding water, and serve as good growth. With the mixed soil of a polyalkylene oxide and acrylic resin, it becomes a soil culture medium and the same culture medium about 1:1.
Although a bulb is a plant with which during winter survives and an underground portion takes out a bud in spring, in the culture medium of a polyalkylene oxide, carrying out the operation also with same department of a potato and foliage plant pothos is checked.
When adding water in winter was carried out, it withered in cold.
Although this operation is a bactericidal action of a root rot preventive effect, if a polyalkylene oxide is filled with somewhat more moisture, it will become mucilage loam, and if there is little moisture it will become sandy loam. The above is the cultivation that adsorbed the liquefied fertilizer at a polyalkylene oxide and polyvinyl alcohol at tap water.

Even if a polyalkylene oxide absorbs tap water or rain, it is changeless, but in rain, since chlorine is not contained, polyvinyl alcohol swells greatly and changes to an adsorbing action.
When these two are used for a solum, there is no periodical water-repelling operation, but it is hilling of a water holding property and is used as a soil water holding agent.

In order to make resin repel, a water-repelling operation becomes possible by making the solid fertilizer wrapped in pulp mix, or carrying out mixed use of the acrylic resin. Since the water holding property of polyvinyl alcohol is high, the water-repelling operation does not need to start, and when plants, such as a flower, a mini rose, and ferns, are planted, it is possible to absorb moisture of polyvinyl alcohol immediately to grow. On the other hand, by a polyalkylene oxide alone, an adsorbing action works when moisture between resins is lost, water repelling is possible by adding water or the use of the solid fertilizer wrapped in pulp that carried out or sterilized chaff.
The water repelled is manure water and it is also possible to improve a water holding property.
Thus, it is possible to consider it as soil water holding agent or a root rot inhibitor suitable for vegetable cultivation by the mixed use of a polyalkylene oxide and polyvinyl alcohol.

### Water examination

### 1 Examination Purpose

The exam aimed at checking whether change arises to water quality by adding nonionic resin (an AQUACALK (registered trademark), a Mizu-mochi-ichiban (registered trademark)) to tap water.

### 2 Water Examination

### 2-1 test method

1. Put 40g of solid AQUACALK, and 10g of Mizu-mochi-ichibans into a beaker, add 2L of tap water (waterworks in Yoshida-cho town) there, and swell resin at normal temperature for one day.
2. Put into a beaker (i) 500g of AQUACALK, (ii) 500g of Mizu-mochi-ichibans, (iii) 250g of AQUACALK, and 250g of Mizu-mochi-ichibans which were moistened, respectively, add 1.2Lof tap water (Yoshida waterworks and residual chlorine 0.5 mg/l) there, and leave it at normal temperature for one day.
   As a blank, (iv) tap water with no resin is similarly left for one day.
3. After that, adding water is conducted about the water of (i)-(iii) using the filter paper of No.5A.
4. According to the ministerial ordinance (December 21, Heisei 4 Ministry of Health and Welfare Ordinance No. 69) about the water quality standard based on a tap water method, a water examination is conducted about the water of (i)-(iv).

### Sample solution

(i) AQUACALK
(ii) Mizu-mochi-ichiban
(iii) AQUACALK + polyvinyl alcohol
(iv) Blank (waterworks in Yoshida-cho town)

The plant was grown to the salt culture medium and the dioxin culture medium, and it experimented in the filtration operation of a polyalkylene oxide and nonionic resin on them.
An adsorption / filtration operation experiment (1) Filtration operation of the vegetable culture medium that added salt to nonionic resin. (Salt culture medium) The salt of sea water contains the salt of 3g (3%) in 100 cc sea water.
(i) 1kg of the nonionic resin of 30g addition
(ii) 1kg of nonionic resin of 60g addition Plant the flower of the foliage plant and mini rose marigold of Pachira horsehead philodendron benjamin pothos ivy in the culture medium.
   Ingredient of salt Magnesium carbonate, solar salt (sea water), salt
   Experimental period One-month and half progress

It is concluded that a leaf carries out Pachira glossily and its transpiration is active in 3-4 everyday lives.
Mini rose and marigold wither in about 3-4 days.
Pothos, ivy, a benjamin and horsehead philodendron are almost changeless, and it is concluded that growth is possible.
(i) 30g of salt is the same concentration as sea water.
(ii) For about one month, 60g culture medium is also changeless, and salt is adsorbed by adsorption / filtration operation of nonionic resin, and the plant is absorbing moisture of the salt.
   The growth of Pachira and a horsehead philodendron of about one month was good.
   Since resin contracted, it thinks because absorption of moisture became impossible.
   Although cultivation of a durable foliage plant is possible, when about 10g (a little less than 1%) salt is added, it will decompose into water in 5 to 20 minutes at the poly vinyl alcohol of nonionic resin.
   A bactericidal action happens by considering it as the culture medium of this chlorine ion, and it seems that the plant has been grown.

In the vegetable cultivation of the acrylic resin that contains sodium ion in tree planting of a desert area in this experiment, sodium ion flows out by water-repelling, and sodium ion begins to melt into surface of the earth by evaporation of moisture.
In order to prevent this, it is heard that water was poured on the ground, and that the operation that is slush sodium ion underground is carried out.
Although the water of the river in a desert area is the same as that of sea water, salt contains and difficult of vegetable cultivation. But, in the polyvinyl alcohol culture medium that is in the state where the bittern is added to resin, the vegetable cultivation becomes possible also in sea water.
This adsorption / filtration operation can also prevent the outflow of an Escherichia coli by using it for a septic tank.

Adsorption / filtration operation experiment (2) Adsorption / filtration operation by the vegetable culture medium which uses the combustion residue (dioxin) of vinyl chloride
Experiment 5g of ashes of vinyl chloride to 1kg of nonionic resin.
Plant Pachira, Ficus retusa, a mini rose, cosmos, pothos, and ivy
Period One and a half months
5g ashes were added to 1kg of resin that swelled the ashes, which burned a dioxin ingredient and vinyl chloride to nonionic resin, and the above-mentioned plant was planted for one and a half months.
Although growth of the plant such as ivy and pothos which needs much moisture and the water holding property was bad, it seems that it is because it is also a plant weak to cold, and moisture is not supplied.
However, although any abnormalities cannot be found, it grew, and Pachira, Ficus retusa, a mini rose, and cosmos rolled vinyl and have arranged it to the outdoors, they are fine.
Although the bactericidal action and heat insulation effect by ashes could be considered and there was no supplement of moisture, it was surprised that a mini rose with an important bactericidal action and cosmos are growing.
Although these are the objects for an experiment and a little ashes are used, also in the culture medium polluted by dioxin, vegetable cultivation is possible and is based on adsorption / filtration operation of nonionic resin.
A lot of ashes can be used for a nonionic resin culture medium, toxic substances, such as dioxin in ashes, can be adsorbed and removed, and it can be made to the minimum.

### Adsorption / filtration operation (3)

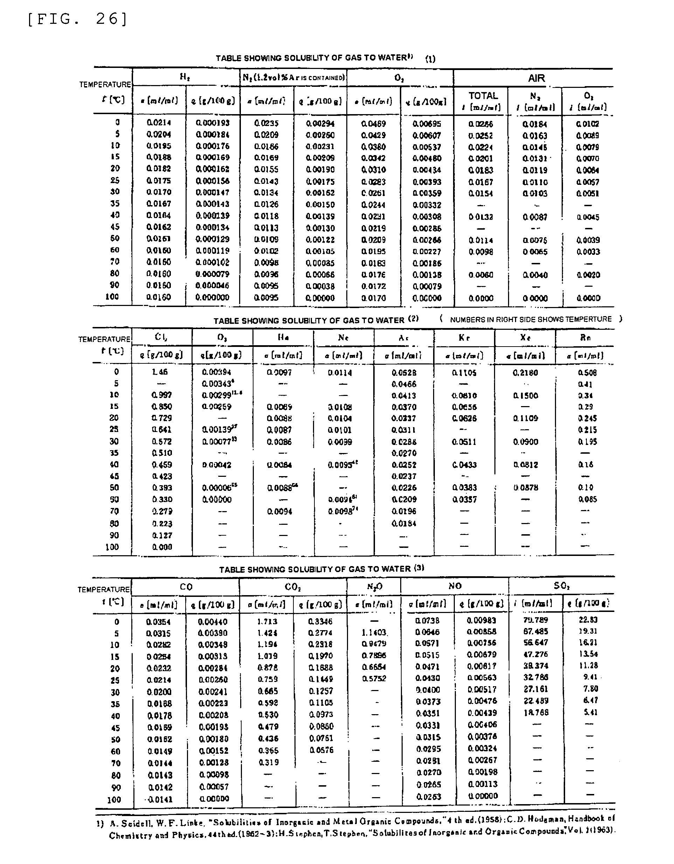

Although there is no sufficient result with the alcohol content of beer in vegetable cultivation by the experiment which made the above-mentioned charcoal water drink and beer adsorption / filtration operation of nonionic resin stick to a polyalkylene oxide, it turns out that carbon dioxide is adsorbed by the adsorbing action of nonionic resin, and it filters.
As shown in Fig. 26, it is possible for 0.1688g to melt into 100g of water (0.1688g/100g (= 0.878ml/ml)) at 20 degrees C.
In the carbon dioxide concentration (1.5-2 atmospheres) in beer, and KIRIN BREWERY, carbon dioxide has melted about 0.5%.
They are the carbon dioxide concentration (1.2-3.5 atmospheres) in a carbonated drink, and a numerical value almost near beer.
The numerical value of the carbon dioxide in the case of rain is adsorbed far, and it adsorbs by use of the nonionic resin of surface of the earth or rooftop gardening.

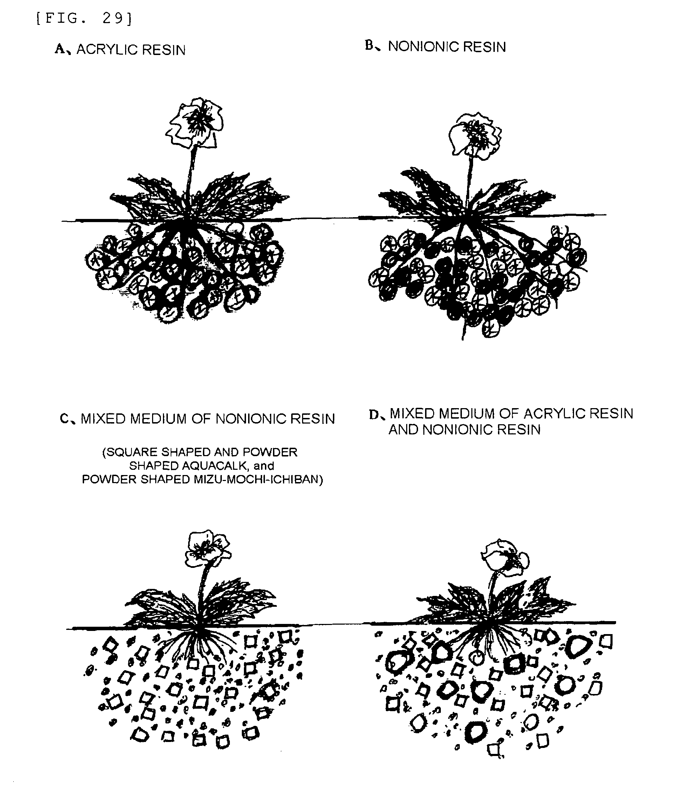

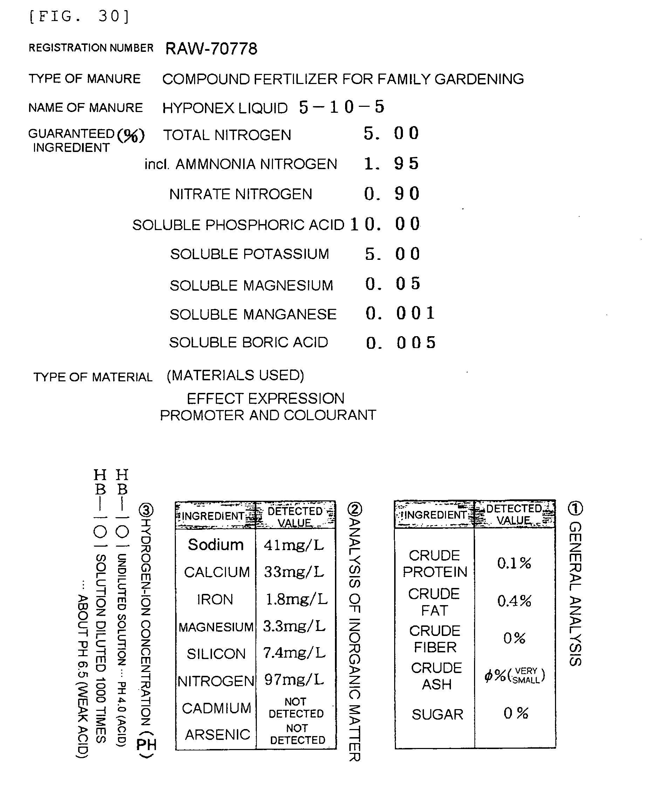

Neutralization, and a filter-medium operation, a disinfectant and water retention agent experiment (i) Figure 29
The soil water holding agent that uses mixture into soil serves as a water holding method that consists of a vegetable culture medium that consists of adsorption by polyvinyl alcohol by the polyalkylene oxide of drainage, and water retention, disinfection, a filtration operation, and counteraction.
When ion water is made to be absorbed to a polyalkylene oxide, only tap water is made to be absorbed to polyvinyl alcohol and they are used for one container, it turns out that a polyalkylene oxide adsorbs chlorine of the tap water of polyvinyl alcohol according to neutralization / filtration operation, and polyvinyl alcohol is absorbing the ion water of a polyalkylene oxide.
When only tap water is made to be absorbed to polyvinyl alcohol, since it cannot adsorb chlorine, the chlorine ion increases and a water-repelling operation will be resembled it.
When these two nonionic resins are put in tap water and a cut flower is used Although a cut flower carries out, and is difficult and it can hold only about 1-2 days only by a polyalkylene oxide, polyvinyl alcohol is known from the numerical value of the residue of a polyalkylene oxide changing and being neutralized by carrying out mixed use.
The chlorine ion is neutralized.
According to these neutralization / filtration operations, it can be considered that the same result uses it in soil as a garden mat.
Even if antibacteria medicine is made to stick to these two nonionic resins and it is used, it is possible to be the same as that of polyvinyl alcohol of experiment 2, and the experiment of acrylic resin (WaterLock).
It is that the polyvinyl alcohol that contained the antibacteria medicine of Fig. 30 since not the water in which rain was sterilized but garbage and dust were mixed absorbs this rain in a soil, and it is possible to decompose.
In order for this to use it for soil as a garden mat, the chlorine ion of manure or tap water serves as a big conclusive factor.
Therefore, the mixed use of a polyalkylene oxide and polyvinyl alcohol is a better soil water holding agent in neutralizing and filtering a mutual fault and discard, and serves as a vegetable hilling.

The experiment of a soil water holding agent
The inner pocket of a plant, rose, a snow camellia, a bluepoint, Goldcrest, sasanqua, and a pansy was removed and planted in the experiment culture medium of experiment 1 soil-water-holding-agent-A-D.
An experimental period is about three weeks.
Polyvinyl alcohol (1kg of manure adsorption, 500g of HB-101 adsorption) of A and C was used.
In the culture medium to which this A and C manure were made to stick, the bud of sasanqua bloomed immediately, and rose's bloom was also very early.
However, change of growth is seldom seen in the culture medium that does not include manure.
Unlike acrylic resin, the polyalkylene oxide do not have a water-repelling operation, when it is mixed with soil, a soil do not become wet with the same state as figure 29-B, it is difficult for a vegetable root to absorb moisture of the resin isolated with the soil, and it was not able to demonstrate a water retention effect.
In the mixed use of this polyalkylene oxide and soil, even if they are used half and half, 2 to 3 times of adding water is needed for one week in summer.

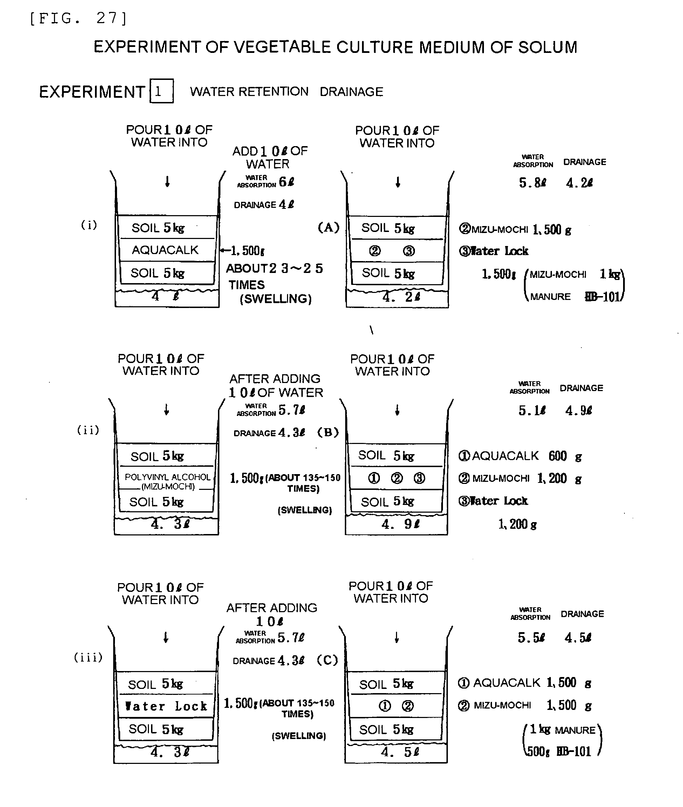

In the experiment of the soil water holding agent of experiment 1 of Fig. 27 In experiment 1-(i), the water absorption of the polyalkylene oxide was the largest, and the displacement was the least in comparison with (ii)(iii).
Although swelling magnification is the smallest and has absorbed water 100%, in (i), a polyalkylene oxide carries out a lot of water absorption, are some displacements and is maintaining the water holding operation.
It turns out that this has held moisture and resin is maintaining it by the lap of resin and resin.
Although there is a water holding operation that holds moisture of the part that does not repel water, it will absorb gradually.
This state is a difficult operation in a powdered polyalkylene oxide.
(i) Although it is the usage which covered with the polyalkylene oxide as a garden mat into soil and manure is adsorbed, when, as for a vegetable root, moisture of the surface of resin is lost, the strong root of a garden tree or trees can penetrate resin in about one to two weeks, and moisture can be absorbed water.
   In a culture medium (i), rose and sasanqua are growth that does not immediately bloom but blows up a bud slowly.
   In case of using a soil water holding agent of a polyalkylene oxide, it is difficult for a flower with a root soft to absorb moisture directly from resin. Therefore we may as well use polyvinyl alcohol mixed.
   When a powdered polyalkylene oxide is used, this flower will become usable.
   The polyalkylene oxide with big shape is a water holding method, which must wrap granulation manure in pulp and must add a hand artificially.
   Since the surface of soil has got dry most in (i), a bud is attached to a pansy and the effect of an adsorbing action or a drainage operation has good growth.
   It is a soil culture medium suitable for cultivation of a therophyte, a garden tree, and trees.

### Vegetable cultivation method by a root rot inhibitor

### Experiment 1-(ii) culture-medium of polyvinyl alcohol (Mizu-mochi)

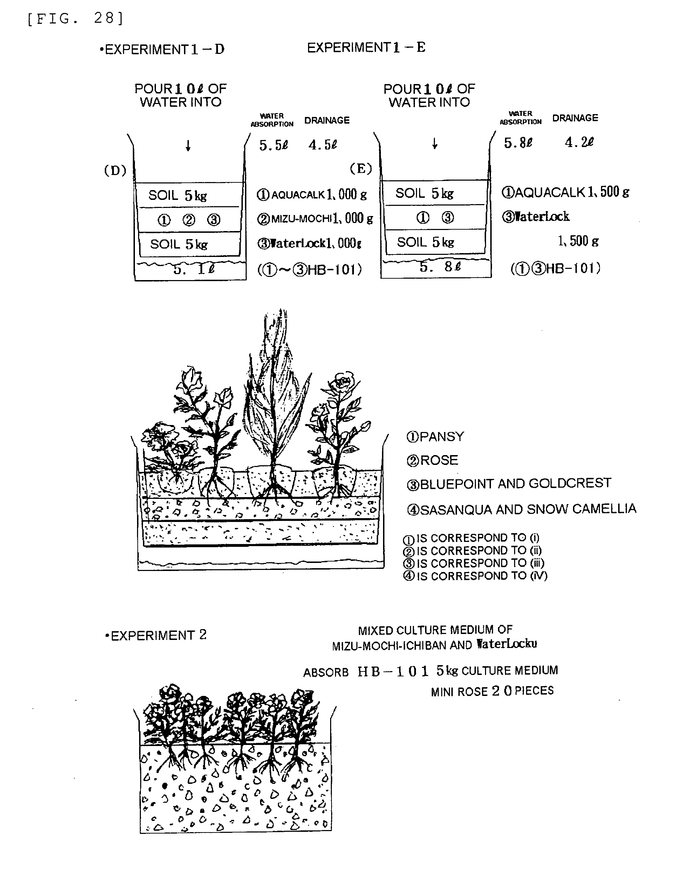

As shown in figure 27, (ii) polyvinyl alcohol seems to swell greatly, collect chlorine ions and change to the water-repelling operation by adsorbing tap water, it becomes a bactericidal action of an adsorbing action and becomes a soil water holding agent which does not cause root rot in a soil by adsorbing manure and wood vinegar.
In experiment 1-(ii), although the vegetable cultivation of only polyvinyl alcohol is rich in a water holding property, it does not evaporate within a solum and long-term use can be considered within a solum by experiment 1-(ii), since it swells greatly and an adsorbing action becomes difficult by rain, if tap water is not given periodically, a bactericidal action is no longer obtained.
Although both were adsorbing ion water HB-101 by polyvinyl alcohol and a poly starch acrylo amide culture medium (WaterLock) by the mini rose culture medium of experiment 2 of Fig. 28, it was a little use and root rot occurred by water-repelling of WaterLock in about 7-10 days.
Although it was in the bad state of drainage, it is what this is the same swelling magnification of polyvinyl alcohol and WaterLock, and is depended on water absorption with superfluous polyvinyl alcohol having become impossible.
Thus, the polyalkylene oxide of (i)(ii) and the mixing ratio of polyvinyl alcohol and acrylic resin must be set to 1:0.5-0.8 from 1:1.
Thus, since it will swell greatly and a bactericidal action will not happen, when ion water is adsorbed at polyvinyl alcohol, if it is not used for a plant using the tap water containing chlorine, the effect of a bactericidal action is not acquired.
Growth of counteraction, a filtration operation, a bactericidal action, etc., or the like and root rot prevention can be strengthened by using a polyalkylene oxide as a regulator of polyvinyl alcohol.
Growth of the sasanqua that likes a water holding property was good.

Experiment 1-(iii) Experiment 1-(iii) Although poly starch acrylamide WaterLock has a water holding operation which repels water and a water holding property, since root rot is carried out by A-C of Fig. 29, mixed use with a polyalkylene oxide is suitable.
When polyalkylene oxide WaterLock (acrylic resin starch acrylamide) equals 1:1, a plant serves as good growth by the root in soil by the mixed use of 1:1.
Since the culture medium with more WaterLock than a polyalkylene oxide becomes growth of the root of hydroponics and it is easy to carry out root rot with Fig. 15, cautions are required.
It may be about 1:0.8 less than a polyalkylene oxide.
An experiment of (iii) can be called the same pattern as the case of tree planting once performed by the desert tree planting project.
As a result, which has sunk sodium ion and moisture into the ground is brought pouring by the water-repelling operation of acrylic resin, water and sodium ion that flowed out evaporate on the ground, and water, since moisture is not retained underground.
It is considered that by water-repelling a puddle being made, or resin contracting and drinking vegetable water etc.
In summer, as for this state, the flower of the planter is telling this phenomenon by intense heat with warming in recent years.
The soil of a planter gets high temperature and is in the state where it cannot grow up.
Experiment 1-(iii) In the culture medium of WaterLock of acrylic resin, the bloom of the bud of sasanqua was early.
Although these absorbed HB-101. and bloomed by pouring out water, they made water absorption of a vegetable root active by pouring out water.
However, rose's luster and color are bad and there is no change of growth.
When it reduces, there is worry of absorbing vegetable moisture and a plant withering.

A vegetable cultivation method using a root rot inhibitor. The water of vegetable cultivation and the relation of manure are also the relation between a culture medium and manure.
It becomes possible to carry out control of drainage or water retention by making the culture medium suitable for a plant by the mixed medium and example of combination of nonionic resin.
Example of combination of a polyalkylene oxide and polyvinyl alcohol
1:1 It becomes running dry in about one week (6-7 days).
1:2 It becomes running dry in about two weeks.
1:3 It becomes running dry in about three weeks.
1:4 It becomes running dry in about four weeks.
1:5 It becomes running dry in about five weeks (30 days) Only polyvinyl alcohol
0:1 With no running dry
By polyvinyl alcohol, since it reduces for about two weeks by a 200g culture medium, it becomes the maintenance for about one month at 400g.
It is set to 200g in one month by a 600g culture medium.
By polyoxyethylene, it is maintenance for about one to two months in a 200g culture medium, and becomes the maintenance for two to four months in 400g.
In 600g, it is four to six months.
A water holding property can be maintained by these two mixed media.

### The result of experiment 1

According to the average value of the water absorption and a displacement of E experiment (i) and (iii),
(i) Polyalkylene oxide 1.5kg
(iii) WaterLock 1.5kg When they are water absorption 5.85, displacement 4.15, and (i). Polyalkylene oxide 1.5kg
(iii) Polyvinyl alcohol 1.5kg of mixture, the water absorption of 5.7L, and displacement the above of 4.3L are based on the average value of an experiment, but they are numerical value almost near C.
   With the same numerical value as polyvinyl alcohol of A, the water absorption of 5.8L of WaterLock, the displacement of 4.2L and the polyoxyethylene of E, the water absorption of 5.8L of WaterLock and the displacement of 4.21.
(ii)(iii) it can say that average value, the water absorption of 5.71., the displacement of 4.31., and the almost same water absorption and a displacement are shown. It is possible for two kinds of mixed use to absorb moisture of most quantity, and to get the minimum displacement.
Although acrylic resin contains sodium ion and a swelling time and swelling quantity are large, the gap when reducing is large, and when it reduces, it has a fault that it absorbs vegetable moisture.
Since it melts at high temperature, it is use of normal temperature.
It has a fault with it that it is hard to use it as vegetable cultivation farmland.
If there is resin that has these swelling times that nonionic resin repels, it will be the best combination, and better cultivation is attained.
However, since it serves as growth of the hydroponics by acrylic resin if an adsorbing action is not accompanied by a water-repelling operation, and root rot is started, cautions are required.
The water absorption of 5.85L the water absorption of displacement 4.151.by the average value of E(i) and (iii), the single article and a displacement are larger than C. The displacement of three kinds of mixed use is large. It is also possible to use sea water as domestic water using nonionic resin, and to filter the rain in the roof can be discharged by wrapping in filter paper

### Vegetable cultivation method by a root rot inhibitor experiment 1-(ii) culture medium of polyvinyl alcohol (Mizu-mochi)

With reference to figure 27, although (ii) polyvinyl alcohol becomes a water-repelling operation in tap water, it will serve as an adsorbing action by making manure adsorb, and will serve as an adsorbing action which does not carry out root rot in a soil.

### Experiment 1-C

It is a soil water holding agent by the mixed use of a polyalkylene oxide and polyvinyl alcohol.
With reference to Fig. 29, it is the mixed use of a polyalkylene oxide and polyvinyl alcohol, and water retention and drainage are the combination used well.
The mixing ratio is 1:1.
The plant grown is a culture medium of loam suitable for the flower etc.
In the cultivation which planted rose, sasanqua the bluepoint, and the pansy by the culture medium of C, the polyalkylene oxide culture medium is suitable for bluepoint, and a water holding property is required for the flowering trees and shrubs of rose and sasanqua.
Water holding property is improved also in use in soil, and it becomes possible by making the mixture ratio of a polyalkylene oxide and polyvinyl alcohol into the 1:1 to 1:5 amounts used to shorten adding water.
Although it is an adsorbing action of these both, a polyalkylene oxide is an adsorbing action and polyvinyl alcohol is a water holding operation that does not repel water.
The number of times of this adding water is a relation of fertilizer concentration, and it is considered as the water absorption for three to six months in soil.
Adding water and rain by one about 5 to 10 times the concentration of this at combined use of ion-exchange resin in polyalkylene oxide four to six months controls it.
It is suitable also for cultivation of a flower and flowering trees and shrubs.
Although 1kg manure and 500g HB-101 are mixed in polyvinyl alcohol among 1.5kg in manure and 10L of water is given to a plant in C, growth of sasanqua, rose, and a bluepoint expresses a good thing.
This culture medium has the feature that does not evaporate when it does not touch on an air intake.
By carrying out mixed use of C polyalkylene oxide and the polyvinyl alcohol, liquid manure can be adsorbed and a water holding operation can be raised.
It is possible to urge the water-repelling operation of polyvinyl alcohol with the granulation containing pulp, solid fertilizer, or the powder of a polyalkylene oxide. After planting a plant again, a root is established by carrying out adding water of tap water one to twice about one month, resin is penetrated of itself, and water absorption of moisture is possible.
Both A and C become the same growth as the plant of a solum, we may as well use them in places of few rain.
In case that much rain may exceed the water absorption of polyvinyl alcohol and cause root rot, A becomes unnecessary. In places of no rain, it is supposed that evaporation does not happen and a water retention effect continues as long as three years by using (i), (ii) and C in a solum, we can get a long-term root rot inhibitor by using manure.
It can be said that it is vegetable cultivation with the water retention agent which deserves the soil which fits the vegetable cultivation in the soil culture medium with little the adding water and the rain to use in a roof garden, a flower bed, a planter, and a desert in the vegetable cultivation of C by these experiments.

### 1-C

It is the vegetable cultivation method that employed efficiently the feature of the resin that shortens adding water with the high fertilizer concentration by the drainage of a polyalkylene oxide and polyvinyl alcohol, water retention, and a root rot preventive effect in solving these.
It is the cultivation of a method which replaces with the culture medium which makes mixing ratio 1:1 of a polyalkylene oxide and polyvinyl alcohol the quantity of 1:4-1:5, raises the concentration of liquid manure, reduces the number of times of adding water, and is made into 1 time per month.
By increasing a little polyalkylene oxide, much moisture is given and there is the method of making it into 1 time of the adding water per month.
Since the culture medium that swells and is blended culture media 1:2-1:5 is not suitable to grow the pansy of a therophyte, and North Peace to a humid culture medium, it is possible to make the culture medium into the good culture medium of drainage at this time by adding 0.5g of ion-exchange resin to it.
That is, it is a cultivation method that makes various culture media possible by one culture medium.
Although these are evaporated mostly and dryness is early in the object for the culture medium for room, these are not evaporated and can be used for a long time in the underground.
It is a same operation of manure and adding water, and is based on a root rot preventive effect and a filtration operation.
In the room hilling, it is possible to reduce the number of times of adding water from 1 time a week to 1-2 times a month by making fertilizer concentration which suited the plant 2-5 times indication of it and using ion-exchange resin together.

Vegetable cultivation method by a root rot inhibitor Experiment 1-B, D Mixed medium of a polyalkylene oxide, polyvinyl alcohol, and WaterLock
With reference to Figs. 27-29, in experiment 1-B, antibacteria medicine HB-101 is similarly used for polyvinyl alcohol, but it can be said that the bloom of a plant is behind since liquid manure is not adsorbed, and that water holding properties are insufficient.
In B and D, it is growth of the well alike drainage. Although it is the experiment of the mixed medium of nonionic resin and acrylic resin in D of Fig. 29, it is the culture medium which took in both adsorption and a water-repelling operation and took water retention and drainage into consideration, and corresponds to experiment 1-B and D.
When three kinds of functionality is employed efficiently, it seems that a big effect is brought about, but water absorption and a displacement are the lowest, and although it is based on what also depends water capacity on water-repelling, and water retention and is large, there is a drainage operation, and it becomes positive growth although growth of a flower is slow.
It is suitable for rose and a pansy.
Since water freezes in cold if drainage of the underground in a cold district is not improved, it is the cultivation method that valued drainage.
This experiment shows that three kinds of mixtures improve drainage by two kinds of mixtures.
The mixture ratio of a polyalkylene oxide, polyvinyl alcohol, and WaterLock (made in the U.S.) makes 1:1:1 an equivalent amount.
Although there is little water absorption, it is the safest and trustworthy.
When water retention, drainage, and root rot prevention are considered from the above thing, D with many deliveries is suitable for the vegetable cultivation in the area with much rain.
Since an effect does not go up to the amount of water-repelling of acrylic resin if it does not exceed the amount of the resin used, the disinfection effect of nonionic resin is set to D or B.
It is the safest culture medium.

### Manure and a soil agent

By the experiment of nonionic resin and acrylic resin, in the polyalkylene oxide, it is said that growth of a plant became difficult in about 1-2 weeks when manure was not used.
In the experiment by polyvinyl alcohol, when manure was not used at all and the plant were swollen with tap water, growth became difficult in about two weeks by the bactericidal action of a chlorine ion.
Although a disinfection effect will work further by adsorbing ion water and a growth effect will go up in 2-3 weeks, it turned out that a bactericidal action is continued for a long time in about 250 times as much tap water by the swelling magnification of polyvinyl alcohol. Although manure is made to stick to polyvinyl alcohol by experiment 1-A and C, in other (i)-(iii), B, D, and E, it is use of antibacteria medicine HB-101, and is not the manure that consists of Chisso, Lynn, and potash.
At the vegetable culture medium that a polyalkylene oxide and polyvinyl alcohol mixed, the plant comes good growth by 1 to 2 times a month of adding water.
In a culture medium for room, it is extraordinary good growth and use of liquid manure is good for tap water. Thus, since water holding property is further added by making manure adsorb with the combination by mixture of resin or drainage is improved, use of manure is effective and important.
The mixture ratio can be 1:0.2-1:1 especially for a pot flower, Western orchid and flowering trees, and can be 1:1-1:3 for plant with water holding property.
After one month, resin is reduction and a thing for which these methods can also be said to be the method of hydroponics although much moisture can be given beforehand, but soils, such as vegetable sap, are twisted to disinfection and a filtration operation even if it gives moisture so much.
It does not change into the root of hydroponics.
The flower of a bulb, a foliage plant, flowering trees and shrubs, a garden tree, ferns, a run, or the like are possible.
It becomes possible to improve drainage and to adjust it because the culture medium having contained many a flower or moisture, such as a therophyte, also increases a polyalkylene oxide or sets and uses ion-exchange resin.
By using ion-exchange resin until now, a water purification operation is urged, and fertilizer concentration is fixed and plant is grown.
Nonionic resin has an operation of this ion-exchange resin. By carrying out these operations in a solum, or making fertilizer concentration high, the number of times of adding water contracts, and evaporation does not occur, and use becomes possible for a long period of time.
Also in room hilling, according to the days and period which nonionic resin reduces, the adding water and the adding manure can be excluded for about one to three months.
With acidity, the country in Japan changes acid soil into alkalinity, and grows vegetable crops at the farmhouse engaged in vegetable crops.
In order to make this soil retain water, the organic acid out of which a microorganism comes from vegetable crops with organic farming was eaten, it is grown, and chaff, leaf mold, or the like are used and soil has been used again.
This operation is nonionic resin, is substitution of the solum which can control simultaneously manure, water retention, root rot prevention, and the loam that vegetable cultivation suits, and can be used as a soil material of the vegetable crops in an area without rain, and as manure of a root rot inhibitor which adsorbed manure.

### The method of rice crop cultivation

Although rice is a water plant and cultivation is hydroponics at the beginning and property of drainage is needed, if there is sufficient water, it can make also in a field.
In the cultivation of rice, a rice field is cultivated by the end of the previous year, water is led to it and unshelled rice is sown in a rice nursery from March to May. Rice seedlings are transplanted in 30 to 50 days, an ear comes out through management of weeding out, cultivation, crop dusting, irrigation, etc., and it will mow 40-50 days after the ear (August to November).
The optimal temperature of a sprout of rice is 30-34 degrees C.
Water and manure besides sunshine are required for growth. It buds with an ear sticking.
Although underwater buds, it becomes hypoxia and it is inelastic in a root when rice has too much water.
In the damp place, it will root, and a terrestrial part is also grown if there is enough oxygen.
This is why the water of a rice field must be dropped. There is a suitable temperature in vegetation and especially water temperature has big influence on growth with the temperature of the environment grown also when it is rice.
In order that irrigation water with low water temperature may enter from the intake of a rice field, growth of the rice of the neighborhood is behind.
In this case, a part for manure is thinned and there is a little harvest.
Thus, the management, which applied time and effort to cultivation of a rice, was made, and the great labor was applied and it has been performed.
Although it is changeful by development of mechanization in recent years, rice crop cultivation is hard work.
If mitigation of these labors does not change future agriculture, it is a basis that loses a successor and the labor force.
Management of temperature is important especially although it is possible the resin culture medium of polyvinyl alcohol or polyvinyl alcohol, and a starch acrylamide or soil and a mixed medium, and to rub, to plant seeds to mixed media, such as chaff and corn, and to make it grow up to be a seedling simply.
After making a nonionic resin culture medium carry out adsorption swelling of the manure, carrying out the sprout in houses or the like other than a rice field and becoming a seedling, it plants by machine.
There are various methods which plant seeds covering with resin directly by machine.
A seed also buds simply.
Management of water temperature is easy.
In a room, it can root and bud in 3-4 days, and can grow up.
A resin culture medium is kept warm by the culture medium with water holding property of polyvinyl alcohol considers it as substitution of the bed for rice plants of a paddy field, and room temperature is raised rather than winding into the water of a cold spring rice field.
Nonionic resin also has a solidification operation, is the same culture medium as a seed or a nursery, and is the best for a rice crop.
If there is even water like a foliage plant, it is a plant that can be grown and can grow easily from a foliage plant. It is possible to prevent water corrosion by using ion-exchange resin especially for nonionic resin, and to raise the greatest effect with a little manure by ion exchange.

### Experiment 1-A Culture-medium of polyvinyl alcohol and WaterLock

By figure 29, by the water-repelling operation of acrylic resin, soil maintains moisture, and vegetable cultivation becomes possible without adding water.
Although experiment 1-A becomes the same operation as the mini rose culture medium of experiment 2 and it becomes the growth that has high speed by the water-repelling operation of WaterLock, and the water holding property of polyvinyl alcohol, it may start root rot by adding water or rain. About 20 mini roses are planted in this culture medium. They are polyvinyl alcohol and the culture medium that made ion water and HB-101 adsorb WaterLock at equal weight. There was too little amount of the antibacteria medicine used to 20 mini roses.
For about one week, it was very good growth, but at the 10th day moisture became superfluous and the root rot state is started a little by water-repelling of WaterLock.
Even if polyvinyl alcohol has an adsorbing action, drainage will be in a bad state by water-repelling of acrylic resin, and the adsorbing action of polyvinyl alcohol will stop thus, accompanying by it.
Since this experiment can consider starting root rot, it raises fertilizer concentration, it is lessening the amount of the acrylic resin used, and prevents root rot, and the amount used sets polyvinyl alcohol and WaterLock to 1:0.8. Since ion-exchange resin changes a water-repelling operation when there is little rain into an adsorbing action, cautions are required.
The water retention effect was demonstrated because rose in the culture medium used for it having made liquid manure stick to polyvinyl alcohol of experiment 1-A and C and the bud of sasanqua gave water, and it bloomed early very much, and became good growth.
In a culture medium for room, in an about 300-500g culture medium, the mixed use of polyvinyl alcohol and WaterLock is suitable, and the amount of the 1:0.8 is good.
The growth of the fern, a mini rose, and a primula is good in the use of antibacteria medicine HB-101 in a culture medium at ion water, a bactericidal effect is a combination for which it is possible to use manure.

### Experiment 1-E Mixed medium of a polyalkylene oxide (AQUACALK) and acrylic resin WaterLock

E is a culture medium by the mixed use of acrylic resin repelled, and a culture medium suitable for hydroponics.
In the mixed use of this WaterLock and acrylic resin, the disinfection operation of a polyalkylene oxide and a filtration operation can protect the water corrosion by water-repelling.
The mixing ratio is set to 1:1 for a culture medium for room and is set to about 1:0.8-1:0.5 for underground, and the root rot by rain will be prevented if it is a small quantity of about twenty percent from the amount of the polyalkylene oxide used.
It is the method of using it by carrying out the same drainage operation as about 150-200g of polyalkylene oxide and about 0.5g of ion-exchange resin.
Since the underground bank water of rain cannot be known, the amount of the ion-exchange resin used is considered as a little use, and is kept from barring a water-repelling operation.
For the plant which is a durable plant in order to exclude adding water, it is a good culture medium a lot of water is supplied.

According to the average value of the water absorption and the displacement which are (i) and (iii) as for the result of experiment 1-E of Figs. 27 and 28
(i) Polyalkylene oxide (AQUACALK) 1.5kg
(iii)WaterLock 1.5kg
   When it is the mixture above, they are water absorption 5.85, displacement 4.15, and
(ii) polyvinyl alcohol (Mizu-mochi) 1.5kg
(iii)WaterLock 1.5kg
   When it is the mixture above, the water absorption 5.7 and displacement 4.3
   Above is based on the average value of an experiment, but they are E and an almost near numerical value.
   With the same numerical value as the polyalkylene oxide (AQUACALK) of E, and the water absorption 5.8 of WaterLock and displacement 4.2 polyvinyl alcohol (Mizu-mochi) of A, the water absorption 5.8 of WaterLock and displacement 4.2 and
(ii)(iii) it can say that average value, water absorption 5.7 and displacement 4.3, and the almost same water absorption and a displacement are shown.
It is possible for two kinds of mixed use to absorb moisture of most quantity, and to consider it as the minimum displacement.
The gap when a swelling time and swelling quantity having been large, when acrylic resin contained sodium ion and it was used for the soil water holding agent, but reducing is large, and if it reduces, have a fault which absorbs vegetable moisture.
It can be said by carrying out mixed use of an equivalent amount of nonionic resin that it is a soil water holding agent which can grow the same plant as a soil culture medium.
In the mixed use of polyvinyl alcohol and WaterLock, the bactericidal action of polyvinyl alcohol is continued at the long period of time, and a soft flower and tree grow by using tap water in large quantities beforehand.
There is a water holding method the bactericidal action which approaches the chlorine ion of polyvinyl alcohol is used together, and mixed in soil.
Conventionally, this polyvinyl alcohol has been used alone, and it swelled by rain and caused root rot.
The bactericidal action of resin does not happen, when the tap water which contains a chlorine ion in polyvinyl alcohol periodically is not given.
For this reason, WaterLock must perform a water-repelling operation periodically and must give a chlorine ion and water.
As polyvinyl alcohol has cooling action and bactericidal action besides water holding property, and makes survive plants such as a flower which felt tired for intense heat, as it is the water holding method coping with warming.
It turns out that the water absorption 5.85 by the average value of E(i) and (ii), the water absorption of displacement 4.15 single article, and a displacement are larger than C.
Although the displacement of three kinds of mixed use is large, in use of the sea water in an area with little rain, a polyalkylene oxide will adsorb sodium, as for use of the bactericidal action of polyvinyl alcohol, two kinds of mixed use is good, and WaterLock will melt in sea water.

### Experiment 1-B and D Mixture of a polyalkylene oxide, polyvinyl alcohol, and WaterLock

With reference to Figs. 27-29, although antibacteria medicine HB-101 is similarly used for polyvinyl alcohol, also in experiment 1-B, it can say that the bloom of a plant is behind since liquid manure is not adsorbed, and that water holding properties are insufficient.
In B and D, it is growth of the well alike drainage.
In D of Fig. 29, although it is the experiment where nonionic resin and acrylic resin are used mixed, both adsorption and a water-repelling operation are taken in, and it is a water holding method in consideration of water retention and drainage, and corresponds to experiment 1-B and D.
It becomes positive growth, although it is the cyclical form water holding method which water absorption and a displacement were the lowest, is based on what also depends water capacity on water-repelling which employed the original function of resin efficiently, and water retention taking advantage of three kinds of functionality, and was provided with the drainage operation and which carried out number 1 stability and growth of a flower is slow.
It is suitable for rose and a pansy.
Since water will freeze in cold if drainage of the underground in a cold district is not improved, it is the water holding method which valued drainage.
This experiment shows that three kinds of mixtures are improving drainage better than two kinds of mixtures.
The mixture ratio of a polyalkylene oxide, polyvinyl alcohol, and poly starch acrylamide WaterLock (made in the U.S.) makes 1:1:1 an equivalent amount.
Although there is a little water absorption, it is the safest and trustworthy.
From the above thing, when water retention, drainage and root rot prevention are considered, the vegetable cultivation in an area with much rain has good D with many deliveries.
Since an effect does not go up to the amount of water-repelling of acrylic resin if the water absorption of nonionic resin does not exceed, the disinfection effect of nonionic resin is set to D or B.
It is the safest water holding method and culture medium.

### Experiment 1-C

It is a water holding method according a polyalkylene oxide and polyvinyl alcohol to mixed use.
With reference to Fig. 27, the water retention which carried out mixed use and which was mixed in soil and drainage of a polyalkylene oxide and polyvinyl alcohol are the combination used well.
The mixing ratio is 1:1.
The plant grown is a water retention agent which hits loam suitable for the flower etc.
The cultivation which planted rose, sasanqua, the bluepoint, and the pansy by the culture medium of C, the polyalkylene oxide culture medium is a bluepoint and rose suitable, and a water holding property is required for the flowering trees and shrubs of sasanqua.
Water holding property is improved also in use in soil, and it becomes possible by making the mixture ratio of a polyalkylene oxide and polyvinyl alcohol into the 1:1 to 1:5 amounts used to shorten adding water.
Although it is an adsorbing action of these both, a polyalkylene oxide is an adsorbing action and polyvinyl alcohol is a water holding operation which does not repel water.
The number of times of this adding water is a relation of fertilizer concentration, and it is controlled by adding water and rain by one about 2 to 10 times the fertilizer concentration of this at combined use of ion-exchange resin in polyalkylene oxide 4-6 months.
It is suitable also for cultivation of a flower and flowering trees and shrubs.
Although 1kg manure and 500g HB-101 are mixed in polyvinyl alcohol and water is given to a plant in C, growth of sasanqua, rose, and a bluepoint expresses a good thing. This culture medium has the feature that it is not evaporated when it does not touch air.
After planting a plant, a root is established , resin is penetrated of itself and water absorption of moisture is possible by carrying out adding water once or twice a month.
Although both A and C become the same growth as the plant of a solum, it is possible to consider it as a long-term root rot inhibitor by using manure.
By these experiments, it can be said in the vegetable cultivation of C that the use in a roof garden, a flower bed, a planter, a desert, or the like is the directions for a soil water holding agent suitable for the vegetable cultivation in a soil culture medium with little adding water and rain.

It is the vegetable cultivation method which employed efficiently the feature of the resin which shortens adding water with the high fertilizer concentration by the drainage of a polyalkylene oxide and polyvinyl alcohol, water retention, and a root rot preventive effect in solving these.
It is cultivation of the water holding method which replaces mixing ratio 1:1 of a polyalkylene oxide and polyvinyl alcohol with the quantity of 1:4-1:5, raises the concentration of liquid manure, reduces the number of times of adding water, and makes adding water 1 time per month. By increasing a little polyalkylene oxide, there is the method where much moisture is given and making it into 1 time of the adding water per month.
It is possible to consider it as the good culture medium of drainage by swelling, and adding ion-exchange resin at this time, since it is not suitable for the culture medium of 1:2-1:5 to grow the pansy of a therophyte and North Peace for the mixture ratio to a humid culture medium.
Although it evaporates mostly in hilling for the culture medium for room and dryness is early, these cannot be evaporated but can use the bottom of a soil inland for a long time.
It is a same operation of manure and adding water, and is based on a bactericidal action and a filtration operation. Suppose that it is possible at a soil culture medium, making 1 time a week of adding water reduces to 1 time a month by increasing the fertilizer concentration which suited the plant to about 2-10 times of an indication.

The vegetable cultivation of a soil culture medium is moisture of soil, and a relation of manure, and is also moisture of a resin culture medium, and a relation of manure.
The use of the water retention agent mixed in soil can carry out control of drainage or water retention by making the culture medium suitable for a plant by the mixture ratio of the mixed medium of nonionic resin.
The mixture ratio of a polyalkylene oxide and polyvinyl alcohol
1:0.1-0.9
1:1 It becomes running dry in about one week (6-7 days).
1:2 It becomes running dry in about two weeks.
1:3 It becomes running dry in about three weeks.
1:4 It becomes running dry in about four weeks.
1:5 It becomes running dry in about five weeks (30 days). The polyvinyl alcohol which put into the container reduces in about two weeks at a 200g culture medium, and it reduces in about one month at 400g, and is held.
At a 600g culture medium, it reduces to 200g in one month, and is held.
About a polyalkylene oxide at a 200g culture medium, it is maintenance for about one to two months, and at a 400g culture medium, it is slow reduction for 2-4 months, and is held.
At a 600g culture medium, it is 4-6 months.
As compared with polyvinyl alcohol, a polyalkylene oxide is low in water holding property, and in a vegetable hilling, although the operation of property of drainage is carried out, it turns out that moisture can be stored rather than polyvinyl alcohol at a long period of time.
These two mixed media maintain a water holding property within soil, and are used as a water retention agent.
The vegetable culture medium which adsorbed liquid manure at nonionic resin ran dry periodically in 1-2 weeks.
If the amount of manure goes out, energy will not come out. Even if liquid manure has quick action, it is difficult to maintain a plant in the long run, and a nutrition piece occurs.
Since the plant which adsorbed HB-101 is not manure but the nutrient having contained antibacteria medicine, a vitality agent must be given to it every week.
In the soil culture medium, the directions for the manure in which the liquid manure undiluted solution which consists of Chisso, Lynn, and potash is displayed serve as the same cycle as running dry of the nonionic resin culture medium which adsorbed manure.
A flower (primula, snow pole, pansy, cyclamen) foliage plant, or the like serve as running dry in about one week in the culture medium of a polyalkylene oxide and polyvinyl alcohol 1:1.
Ferns, rose and Western orchid serve as running dry in two weeks in the culture medium of a polyalkylene oxide and polyvinyl alcohol 1:2.
This is the operation as loam suitable for vegetable cultivation with the same combination of a polyalkylene oxide or polyvinyl alcohol, and agreeing with the adding water of this liquid manure is shown.

When adsorbing the liquid manure uses the vegetable culture medium of nonionic resin, it has caused the running dry state like the manure of a soil culture medium, or running dry.
Moreover, since it is difficult for plants, such as a flower with soft roots, grown in this soil culture medium, for example, ferns, the primula and a pansy, to absorb moisture directly from polyalkylene oxide having low water holding property, it can be said that the plants are grown by adsorbing moisture contained in polyvinyl alcohol having high water holding property, but because the contraction of the polyvinyl alcohol is early, the result of starting running dry is obtained when there is little rain.
For this reason, in this plant with soft roots, such as flower, a water-repelling operation is used together and water-repelling from a polyalkylene oxide with few water holding properties is urged by mixing acrylic resin; and adding water is completely unnecessary by using a circulatory system. When this mixture ratio is approximately 1: 1: 1, stabilized water holding agent use is obtained.
Moreover, although a water holding property is high in polyvinyl alcohol simple substance and it swells about 200 to 300 times in the water absorption, which does not contain chlorine, such as rain, because a bactericidal action does not act in this culture medium, growth of a plant is not good. When tap water is used, in approximately 250 times, a bactericidal action works with a chlorine ion and it becomes good growth.

The manure and soil agent by water holding property solution corrosion prevention agent
By the experiment of the nonionic resin and the acrylic resin, when manure was not used in the polyalkylene oxide, it was said that growth worsens in about one or two weeks. In the experiment by polyvinyl alcohol, when manure was not used at all but were swollen with tap water, and manure was not used, growth worsens by water-repelling in about two weeks, but a disinfection effect will work further by adsorbing ion water, and a growth effect will go up in two or three weeks.
Although manure is made to stick to polyvinyl alcohol in experiment 1-A and C, in other (i) - (iii), B, D, and E, antibacteria medicine HB-101 is used, but the manure is not used, which consists of nitrogen, Phosphorus, and Potassium.
Also, in the mixed medium of a polyalkylene oxide and polyvinyl alcohol, it becomes the best growth by giving water once or twice per month. In culture medium for room, it is extraordinary good growth, and use of liquid manure is good for tap water. Thus, since mixing and combining resin, and being made to adsorb manure further improve water holding property and drainage, use of manure is effective and important.
Moreover, resin is reduction after one month, although much moisture can be given beforehand, and these methods can be said to be the method of hydroponics, but soils, such as vegetable sap, are twisted to disinfection and a filtration operation even if it gives moisture so much. It does not change into the root of hydroponics. The flower of a bulb, a foliage plant, flowering trees and shrubs, a garden tree, ferns, a run, or the like are possible. It becomes possible to improve drainage and to adjust it by increasing polyoxyethylene or using together ion-exchange resin to a flower, such as a therophyte, and in the culture medium having contained many moisture.
By using ion-exchange resin until now, a water purification operation is urged, and fertilizer concentration is fixed and is grown.
Nonionic resin has to serve also as an operation of this ion-exchange resin. By carrying out these operations in a soil object, or making fertilizer concentration high, the number of time of adding water contracts, and does not evaporate, but use becomes possible for a long period of time. Indoors also, according to the days and period which nonionic resin reduces, a supplement of water and manure can be excluded for about one to three months.
Because the land in Japan has acidity, the farmhouse engaged in vegetable crops, has changed acid soil into alkalinity and grown vegetable crops in it.
Moreover, in order to make this soil retain, chaff and leaf mold, or the like are used and a microorganism eats organic acid which vegetable crops generate in organic farming, it is grown, and sterilization disinfection of the soil is carried out and the soil has been used again.
This operation is substitution of the soil conditioner in which nonionic resin controls manure, water retention, root rot prevention, and the soil in which vegetable cultivation suits simultaneously, and can be used as a soil conditioner of the vegetable crops in an area without rain and as manure of the root rot inhibitor by combined use of ion-exchange resin.

### A vegetable cultivation method of the roof

A roof garden is covering with the garden mat of nonionic resin; it adsorbs carbon dioxide, and can filter it and can soften the heat island effect of the building of summer.
In the vegetable cultivation,
(i) water retention, drainage, a root rot prevention,
(ii) windscreen and prevention of typhoon and windy, and
(iii) Prevention of direct rays
are needed.
According to the windscreen of the (ii), in order to be concerned especially a plant not only but also with others' life-threatening because of a thing's flying or falling by a wind or an earthquake, it is important to prevent danger so that the planter or plant becoming light by the wind may not fly by stretching wooden windscreens in a low building and by stretching windscreen and net made from steel in a high building.
According to the (iii), since it is possible that a plant loses energy with evaporation of moisture and the high temperature because direct rays hit, preventing with a windscreen like a wall or the like is important.
By putting the root rot inhibitor of (i) or a corneous polyalkylene oxide into the bag of a nonwoven fabric, and covering with them, the carbon dioxide mixed in rain is adsorbed simultaneously with rain.
Also, according to the plant grown in the soil culture medium of a planter, a flowerbed and rooftop gardening, by use of polyvinyl alcohol and a polyalkylene oxide, giving water once in 1 or 2 months attains cultivation of a plant. Moreover, according to a big plant, in order to give sense of stability, polyvinyl alcohol and charcoal are put in a planter and sterilization and the cleaning effect of water are made polyvinyl alcohol using the water of a chlorine ion. It solidifies by the solidification operation of resin in about one month.
Since swelling magnification is large and the difference of a swelling and shrinkage is large, acrylic resin and polyvinyl alcohol will be reduced if it does not rain.
When adsorption, filtration, disinfection, and a solidification operation work in the rooftop gardening of a polyalkylene oxide and polyvinyl alcohol, it is possible to acquire a big effect.
By using charcoal instead of a soil, a cleaning effect and a bactericidal effect are raised, and since ingredient, such as a pumice stone, a wooden bark of the pine, the Cryptomeria japonica, and a hinoki containing antibacteria medicine or a disinfection agent, the foods containing antibacteria medicine, for example, wine, agaricus, chitosan and catechin flow out, a bactericidal effect is raised, and sterilization processing is carried out so that it may not rot, and a bactericidal effect is raised by covering nonionic resin as a substitute of a soil, moreover, dryness of resin is prevented, and a healing roof garden becomes possible.

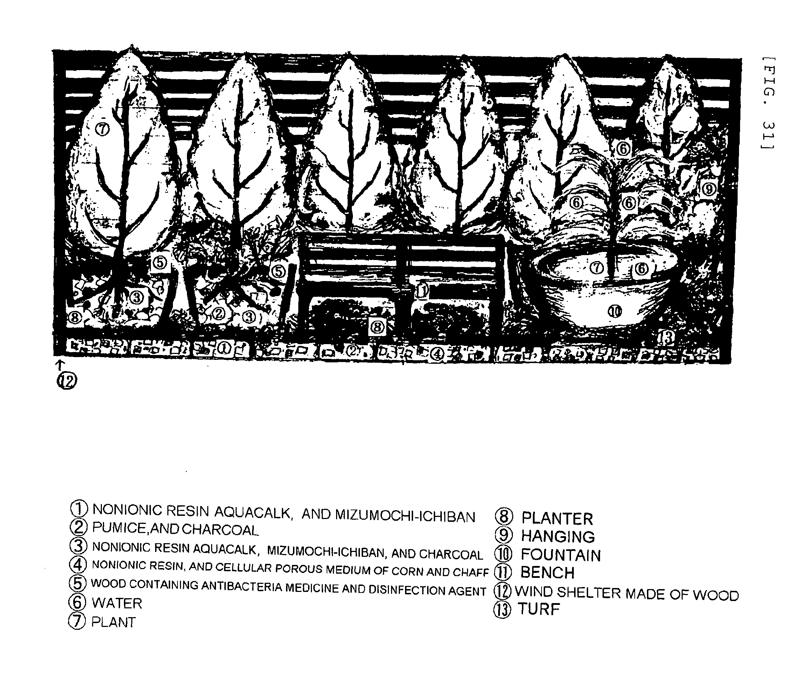

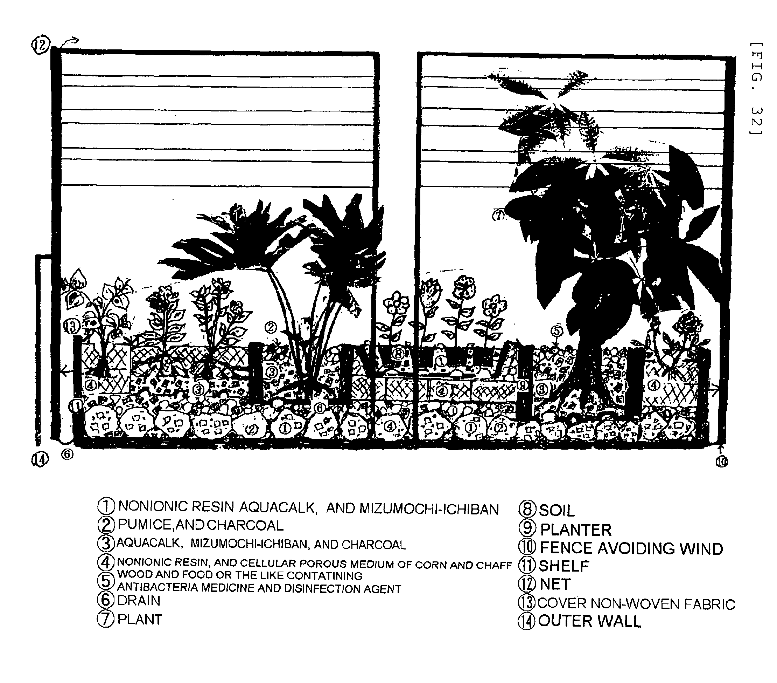

Fig. 31 and Fig. 32 show the example of the vegetable cultivation method of rooftop gardening, by using the water holding property, the drainage by an adsorbing action, and the operation of root rot prevention of this nonionic resin for a flowerbed and a planter, the vegetable cultivation of the root rot prevention which excluded adding water becomes possible.
Although a water holding property is low and drainage must be made high not only in rain but in a cold district, in the roof garden in a city part, the high temperature of summer is coped with, a water holding property is improved further, and it becomes the cultivation which presses down drainage low. It is possible for the water holding property of resin, a bactericidal action, and a cooling action to be needed for this, and to cope with the heat island effect and warming of a planter, a garden of flowers and rooftop gardening.
A plant dose not grow up only by the water holding agent of a soil culture medium and vegetable culture medium water holding property, and a plant of a hot planter and the plant of a flowerbed can revive by agreeing the bactericidal action or the cooling action based on a water holding property and a property of drainage, and conformity manure.
When it is taken into consideration that an acrylic resin will absorb vegetable moisture, if it contracts, cultivation is carried out by the mixed use of the polyalkylene oxide of C and polyvinyl alcohol, and the mixed use of charcoal It is further considered as 3kg - 5kg of nonionic resin by the culture medium of C (30 percent - 50 percent).
About (300g-500g) ten percent is used for nonionic resin for charcoal.
About 1 time may be sufficient as adding water in one to two months.
Manure, HB-101, wine, wood vinegar, or the like is adsorbed and used for nonionic resin.
A plant is taken out from the pot and bowl of a solum and it puts on the soil of the planter or the flowerbed. The plant circumference is filled with 1000cc-2500cc manure water. A material with an antibacterial effect, such as antibacteria medicine, charcoal, and a wooden bark or the pumice stone are put on it, heat is intercepted, and moderate breath ability is given.
In order for rooftop gardening to attract attention as a measure against the heat island effect for which temperature rises at summer and to pile a lot of soils in the roof, there are problems that there is a possibility of a part flowing out and blocking a drain pipe, and also water supply operation takes time and effort.
Using the garden mat of an adsorbing action for these solutions could solve the carbon dioxide problem. In order to cause oxidization and generating of mold by discoloring this nonionic type hydrophilic resin by ultraviolet rays, or neglecting it in the air, a cut flower and vegetable cultivation become good only with tap water by adding and supplementing resin with minerals, such as magnesium calcium, using these optical absorption agents and ultraviolet-rays prevention, or antioxidizing, mold prevention and antibacteria medicine.

The applicant has applied for artificial hilling by thermoplastic nonionic type hydrophilic resin and a potted plant which uses the artificial hilling. Although the resin currently used is ingredient polyethylene oxide of AQUACALK (trademark) TW by Sumitomo Seika Chemicals Co., Ltd., and an ingredient polyalkylene oxide of TWB, it is the thermoplastic nonionic type hydrophilic resin which comprises the same ingredient.

Nonionic type hydrophilic resin has a bactericidal action, and the simple substance use of a polyalkylene oxide, the simple substance use of polyvinyl alcohol, and a mixed use of the polyvinyl alcohol and the polyalkylene oxide and polyethylene oxide is carried out, water holding methods and sterilizing methods, such as a vegetable culture medium by the bactericidal action of this resin, a water holding agent regulator, manure, and a vegetable hilling, the water holding agent regulator, the root rot inhibitor manure, having the bactericidal action which made nonionic resin and acrylic resin the mixed medium, use of ion-exchange resin, the filter medium, and use of manure or antibacteria medicine to resin, or the like are carried out. At the polyalkylene oxide and acrylic resin of property of drainage, the mixture ratio is 1:1, and at polyvinyl alcohol simple substance 1 and acrylic resin 0.8 of the water holding property, the mixture ratio is 1:0.8. This becomes it to the amount of swelling completion mostly.

It turned out that nonionic resin has a bactericidal action, when we have purchased MIZUMOCHIICHIBAN (trademark) made by Japanese composition industrial Co., Ltd., since this polyvinyl alcohol melted into water, use was made difficult and use of the water retention agent of a soil culture medium or cut flowers was said to be difficult. Also in use of these cut flowers, it was difficult to hold cut flowers for a long time, and was used by neither the freshness maintenance of a flower, nor the arrangement of cut flowers. When inspection analysis of this polyvinyl alcohol was conducted again, it turned out that there is a problem in the swelling method or directions for use. Polyvinyl alcohol was understood that a bactericidal effect is very high with the residual chlorine in tap water from the inspection result of Table 3, and although the bactericidal effect was high, it turned out that it seldom swells but swells very greatly at pure water or rain again. There are using method, in the case of using by sprinkling soil as a soil water holding agent and in the case of mixing soil in order to employ this bactericidal effect efficiently.

**[Table 3]**

| Table.3 Time variation of number of bacillus | | | | | |
|---|---|---|---|---|---|
| (A) Time variation of number of bacillus using polyvynil alcohol with pure water | | | | | |
| pure water | Number of bacillus (/ml) | | | | |
| | just started | after 3 days | after 5days | after 7 days | after 10 days |
| 5g 300ml(×60) | 4.6×10⁵ | 1.6×10⁶ | 2.0×10⁶ | 1.7×10⁶ | 1.5×10⁶ |
| 5g 500ml(×100) | 1.6×10⁵ | 6.0×10⁵ | 8.2×10⁵ | 7.3×10⁵ | 5.4×10⁵ |
| 5g 600ml (×120) | 1.6×10⁵ | 5.4×10⁵ | 5.5×10⁵ | 3.2×10⁵ | 2.3×10⁵ |
| 5g 750ml(×150) | 1.8×10⁶ | 1.8×10⁵ | 5.7×10⁵ | 4.0×10⁵ | 3.3×10⁵ |
| 5g 1000ml(×200) | 5.4×10⁴ | 8.9×10⁴ | 2.6×10⁵ | 1.5×10⁵ | 7.5×10⁴ |
| 5g 1250ml (×250) | 5.2×10⁴ | 1.6×10⁵ | 2.3×10⁵ | 1.0×10⁵ | 6.0×10⁴ |

| (B) Time variation of number of bacillus using polyvynil alcohol with tap water | | | | | |
|---|---|---|---|---|---|
| tap water | Number of bacillus (/ml) | | | | |
| | just started | after 3 days | after 5days | after 7 days | after 10 days |
| 5g 300ml (×60) | 1.5×10⁵ | 4.0×10⁵ | 9.9×10⁶ | 8.6×10⁶ | 6.5×10⁶ |
| 5g 500ml(×100) | 9.2×10⁴ | 3.3×10⁴ | 6.1×10⁶ | 9.9×10⁶ | 4.9×10⁶ |
| 5g 600ml(×120) | 1.6×10⁵ | 3.8×10⁴ | 2.3×10⁴ | 1.3×10⁴ | 4.5×10³ |
| 5g 750ml(×150) | 6.2×10⁴ | 1.5×10⁴ | 2.3×10⁴ | 9.5×10³ | 1.8×10³ |
| 5g 1000ml (×200) | 2.1 × 10² | 48 | 46 | 12 | 5 |
| 5g 1250ml (×250) | 0 | 0 | 0 | 0 | 0 |

| | | | | | |
|---|---|---|---|---|---|
| Test for identifying the effect against breeding of bacillus Procedure 1. Polyvynil alcohol ("Mizu-mochi-ichiban") of 5g as a sample, was mixed with pure water or tap water (waterworks in Yoshida-cho town) in a container made of polyethylene, with ratio as shown in Table.3, and the sample was swelled. 2. Add bacillus (colon bacillus : IFO No.3301) to each sample by about 10⁴/ml. 3. Keep the samples in a chamber at 25 degrees C. 4. After getting specimen from the samples, breed the specimen in agar at 35 degree C. for 24 hours, and measure the number of the bacillus. | | | | | |

It was possible to consider it as the water retention agent which considered environment by changing into the method of using it by sprinkling from the conventional method of mixing in soil by using the bactericidal action of nonionic resin. In the nonionic resin, such as a polyvinyl alcohol, polyalkylene oxide and polyethylene oxide, it is possible to raise a bactericidal action further, and maintain it with the photocatalyst by solar heat or light energy. As for a polyalkylene oxide or polyvinyl alcohol, with tap water, swelling magnification is low and the adsorption use of liquid manure (liquefied fertilizer) is seldom adsorbed by the result of experiment 7 shown in Table 4. Therefore, the fertilizer concentration used for resin falls, and it becomes a little use, and it is used sprinkling soil, and it permeate into the soil culture medium and water is sterilized and retained. Accordingly, most adding water is excluded, breeding of weeds or the like is prevented, and the plat, which lost energy, can be revived. By the method of using by adsorbing the liquid manure to resin, it is used making it adsorb by adding manure, and it will become good growth when sprinkling soil uses it. It is thought that this method is the same bactericidal action as the vegetable culture medium of the resin which sprinkles and uses manure for resin. When it added, and 2mL of liquid manure is adsorbed, is sprinkled and is used into 1L of tap water, although the flower of the primula of a soil culture medium attaches many flower buds, since it cannot maintain a petal for a long time, it must be made into low concentration.

[Table 4]

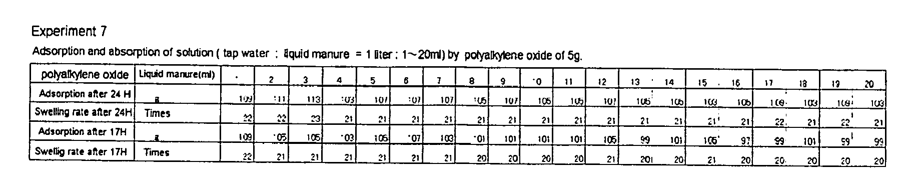

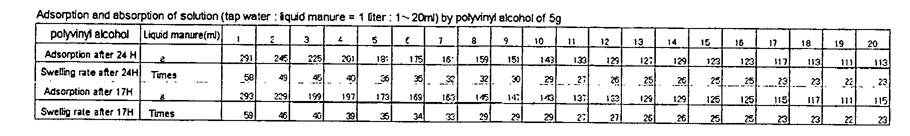

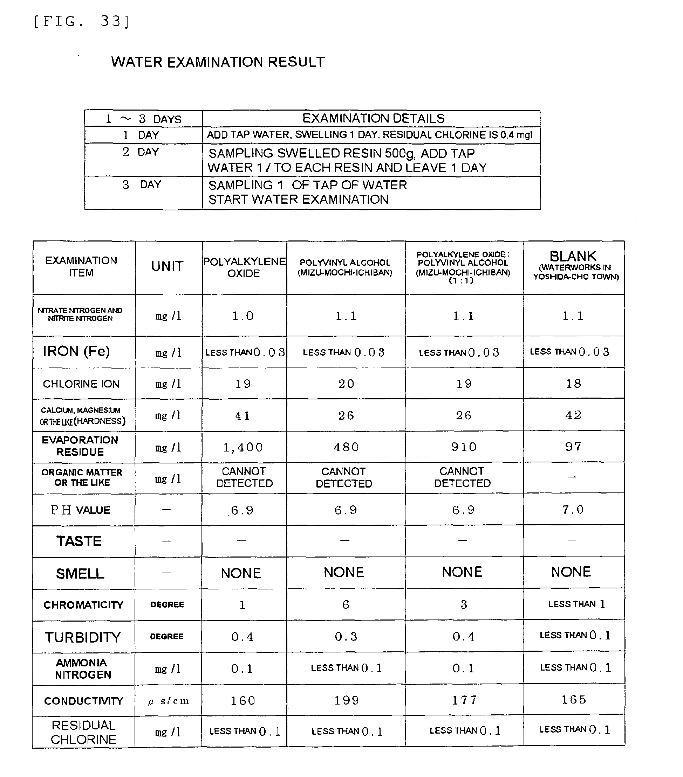

Although streamlining of the manure of agricultural products and agricultural chemicals grown is cried for in recent years, in the conventional agriculture, soil is activated with a lot of organic fertilizers, chemical fertilizers, etc., a noxious insect and weeds breed, and agricultural chemicals have been used for the extermination so much. If these soil culture media are sterilized, it will be thought that growth of a microorganism is annihilated. The bacteria of soil are generated in large quantities by warming, since it becomes difficult to absorb water and nourishment out of soil, the disinfectant which adsorbs excretions, such as sap discharged from a plant, must be needed, and the plant must sterilize and wash a culture medium like a hydroponics culture medium. The plant can carry out growth with a good revival by this bactericidal action. Superfluous breeding of a noxious insect and weeds is prevented in this operation, and it is possible to protect soil from dryness and to exclude a water holding operation. Although disinfectants, such as wood vinegar, have been used for soil in recent years, these disinfectants neutralize and sterilize vegetable sap temporarily, and serve as an effect for about one week. It is important to maintain these bactericidal actions at a long period of time, and it became possible. Although the conventional water retention agent was a water holding method which mixes these resin in soil at this appearance, it was presupposed that polyvinyl alcohol melted into water and use of a soil water holding agent has been made difficult. The bactericidal effect of this polyvinyl alcohol is heightened by soaking it in the tap water one day, and 1-4mL of liquid manure is added to it swelling at 80 percent, sprinkles the planter or the flowerbed, and soil is covered. By practices of this simple work, weeds sprang up also from neither the lower part of resin, nor between it above approximately half year. This is not use of agricultural chemicals and is based on the bactericidal action by the adsorbing action of the polyvinyl alcohol mixed in soil. Moreover, in the soil culture medium, a microorganism and bacteria were generated in large quantities according to warming or the high temperature of midsummer, it was short of oxygen, and the plant has lost energy. In order to cope with these, polyvinyl alcohol was sprinkled on soil, manure and resin permeated soil by covering soil, and air and solar heat were intercepted, resin was sterilized with this light and thermal energy, and the plant which had lost energy was able to revive. The manure of a small quantity and occasional rain continues a bactericidal effect. The cultivation method of the conventional agricultural products is caught in a vicious circle increasingly by increase in quantity of manure or agricultural chemicals. A plant grows at a long period of time by using a little manure to polyvinyl alcohol. It is thought that it is a bactericidal action by the ion exchange of ion-exchange resin and the same resin. When mixing in soil, it is possible not to annihilate a microorganism by carrying out mixed use of the powder of titanium, and to make a bactericidal action continue. Concerning use of the simple substance of polyvinyl alcohol, like this soil water holding agent, if it does not make amount used of 2-3 time, not be able to use bactericidal action, in the water retention agent of cut flowers and the freshness maintenance of water, as for the hard water contained many calcium or magnesium by titanium, such as a titanium ball, ion-exchange resin, and the water examination of Fig. 33, a bactericidal action is demonstrated by reinforcement of a residual chlorine. This is based on polyvinyl alcohol.

The bactericidal action and photocatalyst of nonionic resin enable it to raise a bactericidal action further, vegetable taking root is raised by use of a vegetable culture medium or the pot for plants, and it changes with the container to which a growth effect is urged.
The polyvinyl alcohol by which these are used also for the use of medical use can also be used for disinfectant for ridging for cultivation, water holding agent, regulator and root rot inhibitor of a plant or agricultural products, a soil modifier, a refrigerant, thermal insulation, and a freshness hold-back agent and a filter-medium disinfectant.

Moreover, the fertilizer concentration which carries out the maintenance effect of manure and water in long time, and the bloom in long time, was discovered with the experiment in vegetable conformity manure or the like by the new use for the bactericidal action of nonionic resin and manure.
The manure used in the conventional soil culture medium is use method of 1mL of 1000 times, 0.5mL of 2000 times, 0.25mL of 4000 times, 2mL of 500 times, and 4mL of 250 times of liquid manure, and any manure other than these manure is not used. With this culture medium which is 3.33 times that the fertilizer of 333 times from 400 times which add 2.5-3mL, and it is possible to lengthen the bloom of a flower and to continue blooming by using 6 to 10mL manure. The manure and bloom was able to be lengthened by using a numerical value with 6-10mL, 16mL - 20mL, 26mL - 30mL, and 36-40mL for 3 times as many numerical values, and maintenance of water was able to be made into the long period of time. This has shown that it adds the manure of 3mL in the water of 1000mL, uses of approximately 333 times, when with 6mL approximately 166 times, 9mL is added, it becomes use of the fertilizer of 111 times or more, but these are using 10% of manure of the weight of the resin culture medium to be used, and are sprinkling and using it for a resin culture medium. As shown in Table 5, at a soil culture medium, adding water needs from once in one week to 4 times in month, often adding water is necessary, but all of these manure flowed out from the pot bottom, and it has permeated underground. It is possible to lengthen the operation of these fertilization for two months, three months or longer and to exclude manure and adding water. When nonionic resin carries out adsorption use of the liquid manure by an adsorbing action, because water break is fast, the adding water of 1 week to 1 month is needed, like a soil culture medium. Although liquid manure has been absorbed and used as for the vegetable culture medium and water retention agent, using acrylic resin etc., the adding water of once a month is needed too and reduction of resin is very quick. By keeping this running dry for a long time, for example, two months, three months, and six months or longer, the commercialization from a production maker is attained. Because nonionic resin adsorbs and uses, and would discolor by being exposed to ultraviolet rays at a retail store or the like for a long time, it was difficult to carry out adsorption use of the liquid manure, and to sell it. When ion-exchange resin was used for this reason, running dry was quick, and the fertilizer component of the brown of ion-exchange resin began to melt, and the transparent beautiful resin hilling had been soiled. When adsorption use of the liquid manure was carried out, resin started the water-repelling operation, especially cultivation of rose was difficult. Although this water-repelling operation was not periodically repelled in very small quantity, since the water-repelling operation was breathing out the polluted moisture to which the resin culture medium once adsorbed, the bactericidal action fell, the water holding property increased again, and growth got worse temporarily. Since this was not a periodical thing, in a soil culture medium, it had soil retained, and did not change with a bad effect, but since growth was worsened with a small amount of moisture in a container, it was able to be made into the growth culture medium in which longer vegetable use and sufficient is carried out by using it, sprinkling a little manure over a resin culture medium. A soil culture medium can be retained and sterilized by using a little these manure. In a resin culture medium, a plant with drainage characteristic changes with good growth, so that resin contracts.

[Table 5]

**Table.5 Procedure**

| (For potted plant, or plant on planter) | |
|---|---|
| flowers · plant with beautiful leaves vegatables · herbs · western orchid 500~2000 times (1000 times generally) | cactus · eastern orchid wild grasses · bonsai · young plants 2000~4000 times |
| Given once in a week | Once in two weeks |
| (For garden plant) | |
| flower bed · vegetable garden · turf 250~1000 times (500 times generally) | flowers · garden trees 250~500 times |
| Given once in a week | Once in two weeks |

Also in use of a soil water holding agent, adsorption use of the manure has been carried out to resin. In acrylic resin, even if soil was retained by the water-repelling operation, it had to reduce soon and resin had to carry out the adding water of once a month. Moreover, it was presupposed that polyvinyl alcohol was melted into water and use was difficult for it in the soil water holding agent. In consideration of these, a little manure was used for resin, soil was sprinkled, and by covering and putting soil, soil was sterilized, and adding water could be excluded, and it has been possible to prevent breeding of weeds.
In this bactericidal action, when resin is swelled with tap water and manure is added to it swelling at 80 percent, a bactericidal effect will be demonstrated. Concerning polyvinyl alcohol, swelling magnification falls in tap water, and concerning manure using this sprinkling, the 2mL manure which carried out adsorption use completely is too strong, since a flower is unmaintainable for a long time even if the flower of a primula holds many flower buds, since fertilizer concentration becomes high in adsorption use from the following chart, a little manure is adsorbed, for example, it supposes that it is as about 10 to 30%, and, the liquid manure is used in a soil culture medium since concentration is low and differs depending upon the type of plant.

Concerning vegetable hilling and water retention agent made acrylic resin, vegetable culture medium is retained by the water-repelling operation with periodical and there is no operation which adsorbs soils, such as sap which the plant discharged, the plant grown in the soil culture medium started root rot, and long-term growth is difficult and has been made into temporary hilling only for appreciation. In the desert tree planting project, acrylic resin was used, the soil culture medium was formed into the hydroponics place by the water-repelling operation of resin, and, as for growth of a plant, an effect was not demonstrated in the tree planting project. Also in a synthetic resin or nonionic resin, it was considered the same operation as acrylic resin, and has been restricted to the culture medium of a foliage plant strong against the endurance grown in the hydroponics culture medium. By the bactericidal action by the adsorbing action of this nonionic resin, growth of a plant was attained by the culture medium both for a soil culture medium and a hydroponics culture medium, and it could be considered as substitution of soil. Although it was said that polyvinyl alcohol which is nonionic resin melted into water and the use had been made difficult, when the bactericidal action of resin was used, and it did not mix in soil but the use for sprinkling was carried out to soil, water was retained simultaneously with sterilization, breeding of weeds was prevented, and adding water almost changed with needlessness. In the vegetable culture medium and soil water holding agents of nonionic resin, such as a polyalkylene oxide and polyethylene oxide, soil was not retained by the adsorbing action and it had to carry out adding water periodically. The effect of a water retention agent is demonstrated because this nonionic resin, such as a polyalkylene oxide with little water holding property and polyethylene oxide, carries out mixed use of the resin with water holding property, such as polyvinyl alcohol and acrylic resin. Also in vegetable cultivation, such as tree planting of a desert tree planting project etc., and a planter, and the resin culture medium for the interior of a room, it becomes the directions for the same resin. A soil culture medium and a resin culture medium are activated by this method, and an effect is demonstrated by use of a root rot inhibitor, a disinfectant, weed killer manure, and agricultural chemicals, or the like besides a water holding agent regulator. By the acrylic resin of resin with water holding property, it has a bactericidal action by carrying out mixed use of the nonionic resin, and was able to be considered as the soil culture medium, and the same vegetable culture medium and hydroponics culture medium again. This mixture ratio must set to 1 to 1 with the swelling quantity of resin, and must make the amount of the nonionic resin used 80% or more.

This bactericidal action can make culture medium with water holding property a drainage nature culture medium, and can make a drainage nature culture medium culture medium with water holding property. That effect is demonstrated by polyvinyl alcohol, the polyalkylene oxide and polyethylene oxide by use of very little manure like this operation. A water holding operation and a drainage operation are performed simultaneously, soil is sterilized, water is retained and a plant serves as growth with a good revival. Therefore, it becomes possible to wash to improve soil such as counteragent and modifier of extermination and chain obstacle or the like of the agricultural chemicals residue by the agricultural chemical. Furthermore bactericidal action of the nonionic resin became important in the farm products and plant use attendant upon terrestrial warming.

Water holding operation and a bactericidal action are performed simultaneously, and growth of a plant revives. Thereby, growth of a plant is attained by culture medium with water holding property.
In this resin culture medium, the group planting which washed away the soil of the root of all plants which are grown with soil culture medium such as a grass flower, a pot flower, a non-Japanese-originated and herb, a view leaf, flowering trees and shrubs, a bulb, a cactus, and while in the soil culture medium, the group planting, became possible. In the former, they were the mixed species gathered and planted which covered the basket of wisteria with the wrapping sheet and incorporated the thicket of the pot of a soil culture medium in this basket. The fertilizer concentration of a resin culture medium differs depending upon the type of resin, and it is simply used to a horticulture store, a flower arrangement store, a production farmer, a tree planting project, or the like and
there are usage of the fertilizer of the resin where the group planting and tree planting are possible, the below-mentioned table, resin sterilization method, plant sterilization method by ion-exchange resin or titanium, the freshness retention method of the water, and an adiabatic medicine, bactericide and a sterilization method etc of the soil. Also in the acrylic resin culture medium used conventionally, the plant of a soil culture medium can be grown by use of ion-exchange resin or mixed use of an equivalent amount of nonionic resin. This mixture ratio is set to 1 to 1, and the amount of the nonionic resin used is made into about 80% or more of swelling quantity. The vegetable experiment has proved this used as growth of the root of hydroponics by less than this.

It was presupposed that this water holding property polyvinyl alcohol would be melted if tap water, liquid manure, or the like are used.
When you insert the hand in this polyvinyl alcohol dissolved in water and to scoop the resin, it becomes transparent vitrified, when it is inserted in a colander, the moisture is drained, it was found that the polyvinyl alcohol returns to soft lump state, consisting of the pile of gelatinization condition before. It is thought that it dissolved in the water, it is thought, but that form was changed from soft gelatinization state. And it is thought that it releases the moisture which has been held during the pile of the particle by touching chlorine, and it changes to the water-repelling operation.

In the culture medium of the tap water of the polyvinyl alcohol it was presupposed that was melted into water, flowers, such as Vinca rosea, do not change to the root of hydroponics, but are growing with the root of a soil culture medium, and it was assumed that it has a bactericidal effect. When it was used having sprinkled over soil the polyvinyl alcohol it was presupposed that was melted into this water, it was able to be considered as the directions for use which the soil culture medium was retained even on the midsummer, and adding water was shortened by once or twice per month and could carry out the simple improvement of the conventional using method of the soil water holding agent, and considered environment. This method is based on the bactericidal action and water holding operation of polyvinyl alcohol, and solar heat and light energy raise a bactericidal action further by using it, sprinkling soil. This bactericidal action of polyvinyl alcohol could be checked in the inspection and the experiment by an analysis organ. By the data shown in this bacteria breeding depression effect of polyvinyl alcohol, and Table 3, concerning to the use of polyvinyl alcohol of 5g and tap water of the 200 times, there was little bacteria breeding of a resin culture medium and it turned out by 250 times that bacteria do not breed for ten days at all, but it has a bactericidal effect. Although polyvinyl alcohol has melted with water, with the pure water of experiment 1, it absorbs moisture so much to Table 6, and is swelling also about 300 times to it. It was difficult to be unable to absorb moisture so much in the tap water of experiment 5 shown in Table 7, but to swell greatly. Accordingly, it is thought whether it does not mean that the soil culture medium which cannot use the tap water, swells large with the rainfall, loses bactericidal action and that growth deteriorates in.

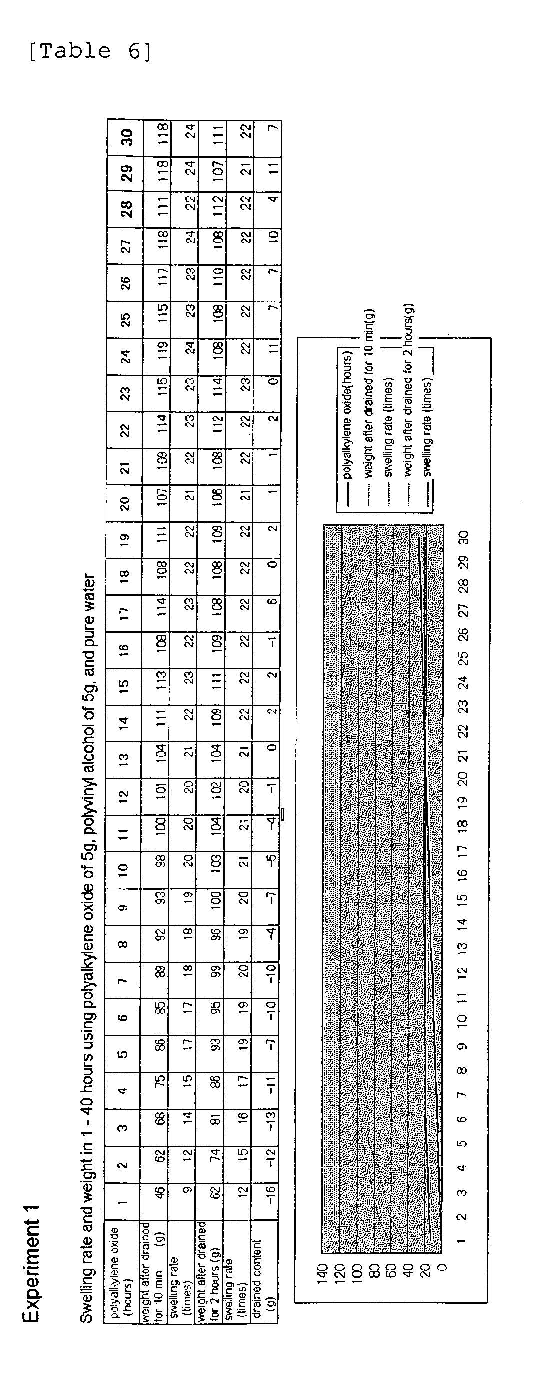

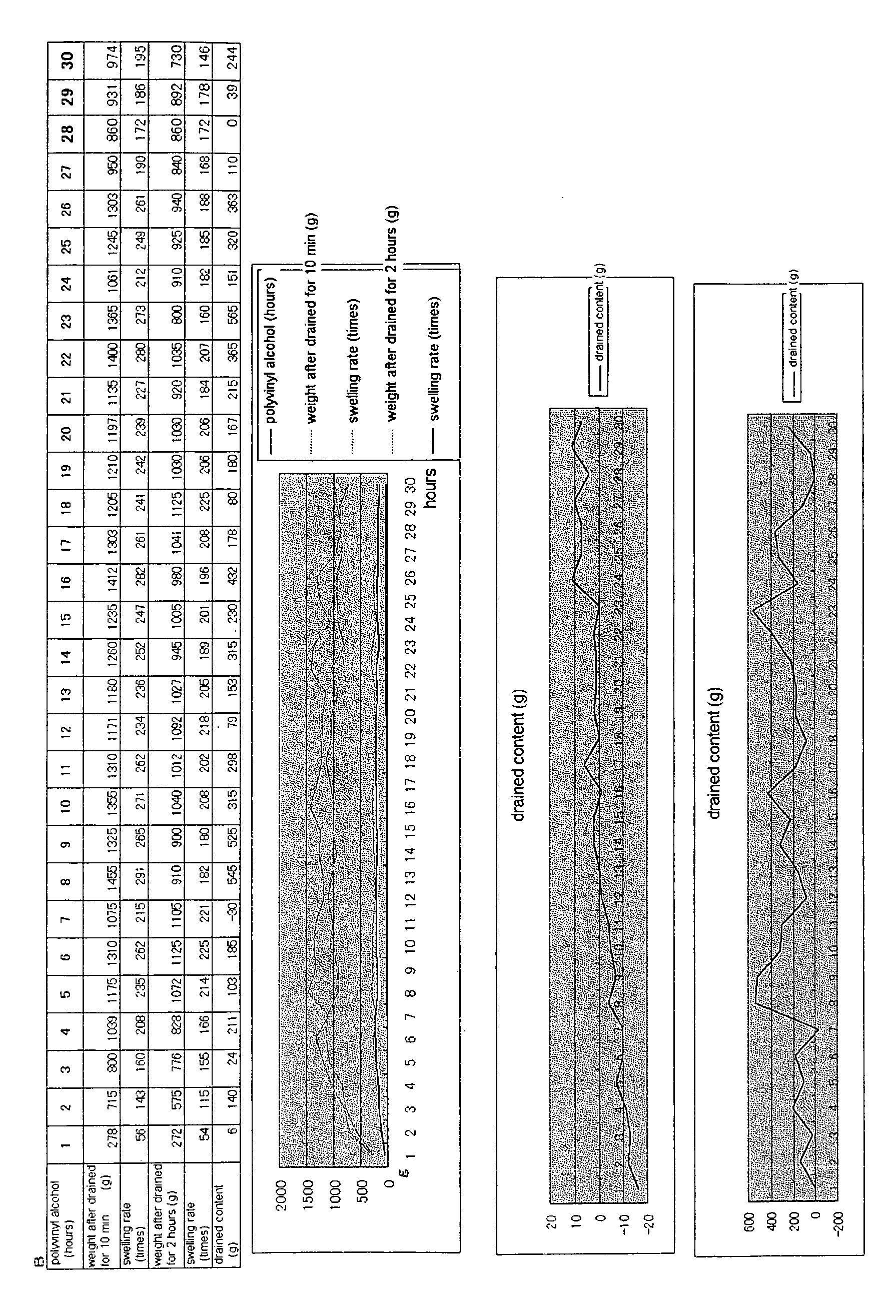

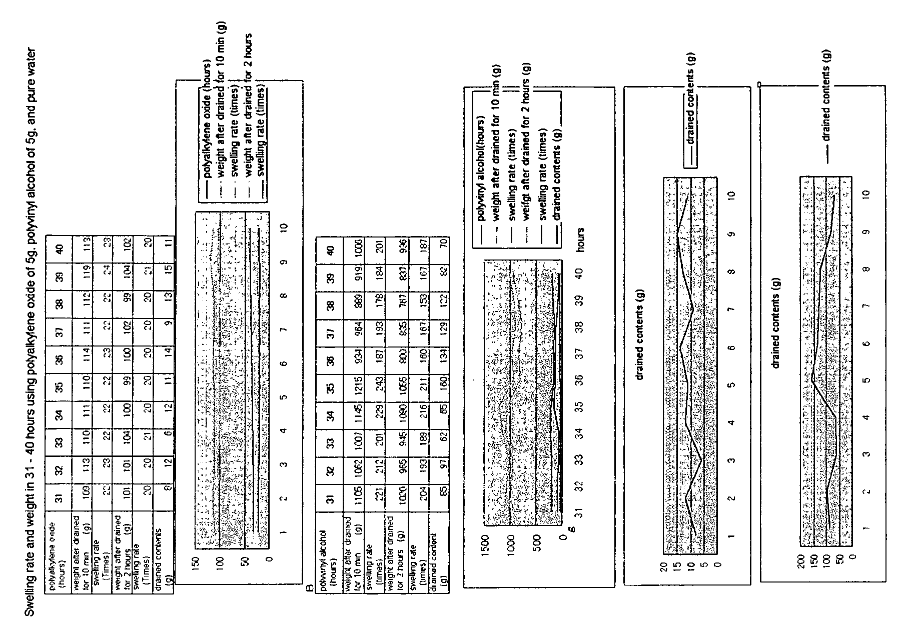

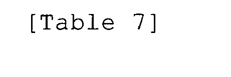

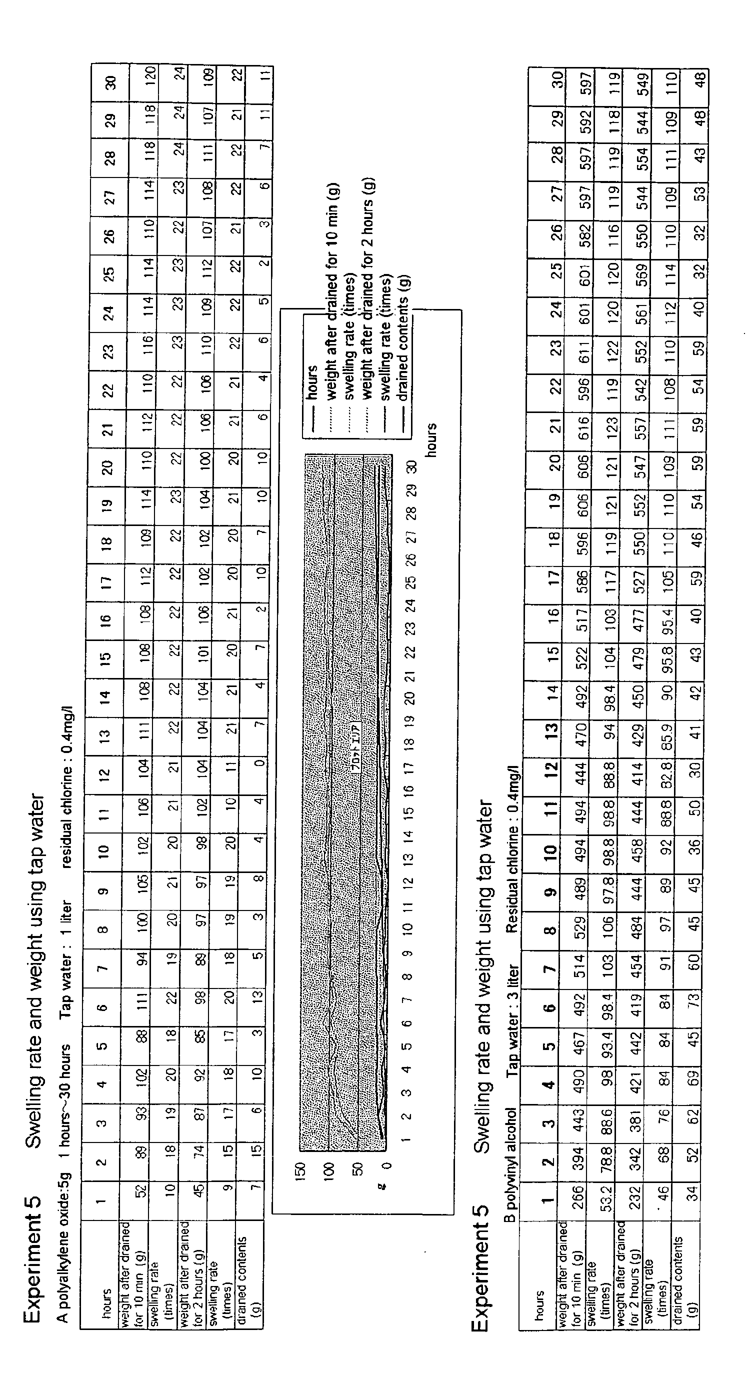

The compression use of polyvinyl alcohol and use of sodium hypochlorite, or tap water of experiment 2 demonstrate a bactericidal action in Table 8. This bactericidal action is based on the adsorption absorption function of resin, and especially in the vegetable culture medium, property of drainage and breath ability become important and have a key which determines the success or failure of growth of a plant. The better bactericidal action of the vegetable culture medium which uses this resin becomes possible by use and combined use of the chlorine ion by tap water, titanium ion exchange resin, and antibacteria medicine wood vinegar, etc.
Although streamlining of the agricultural chemicals of agricultural products and manure was cried for, we know and are surprised at the fact that agricultural chemicals were sprinkled on cabbage no less than 30 times in a cultivation farmhouse. Spreading the agricultural chemical is directly spread by the raw vegetable which everyday is eaten, loss in quantity of these agricultural chemicals and the fertilizer, same as the fertilizer of very low density in the ion-exchange resin, in polyvinyl alcohol are used by rice and vegetable growing for long term with use of the little fertilizer, it becomes possible to maintain growth, labor and cost also it becomes possible to reduce.

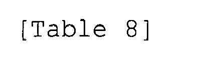

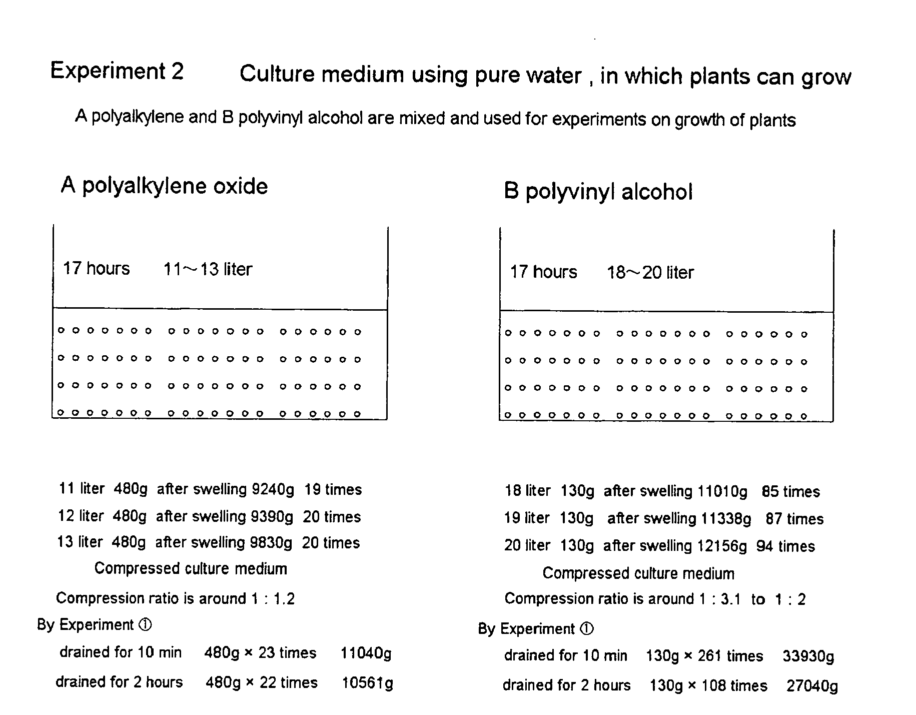

The bactericidal action of nonionic resin is used for cultivation of rice crop culture media, such as a sprout of the seed-rice of a rice vegetable cultivation, or the like besides a flower, a green plant, and a cutting or the like in the vegetable culture medium. Especially polyvinyl alcohol demonstrates an effect to sprout use of the seed-rice of a rice crop, and makes simultaneous weeding out of the cultivation culture medium of fields. In the sprout of a seed-rice, in order to make uniform growth of the bud at the time of a sprout in the conventional agriculture, a seed-rice is soaked in boiling water for five days to one week, and raised important with great care.
A rice has an upland rice and paddy rice, especially paddy rice is underwater growth of a paddy field, and since the culture medium which is similar to the culture medium of polyvinyl alcohol are liked and it is grown, it turns out that it conforms to the culture medium of a seed-rice.
Table 9 designates the sprout taking root of the seed-rice as the table in experiment 4, although there was little quantity of the resin used in experiment 4, by the seed-rice for a rice crop which likes culture medium with water holding property according to the kind of seed, a growth effect can be enough obtained for polyvinyl alcohol with 2mL manure at direct seeding. In the corn which does not like a water holding property, growth was difficult. Although based on the water temperature in mid-June, it is the early growth which will root and bud in about 2-3 days. Also in vegetable cultivation which likes a water holding property, such as white radish sprouts and a herb, the cultivation which considered it as the alternative culture medium of the soil culture medium by use of the low-concentration manure of ion-exchange resin or liquid manure, used it for rice farming or vegetable cultivation, and considered environment and safety is possible. Also in the culture medium of the about 250 times as many swelling magnification by the pure water of experiment 1 shown in Table 6, although cultivation of a herb is possible, it is quite culture medium with water holding property, and growth is using ion-exchange resin difficultly only with liquid manure. It is important that a rice crop of the manure is carried out by the low concentration which uses the bactericidal effect and water retention effect of ion-exchange resin manure or polyvinyl alcohol are attained, thereby, the shortened cultivation method and labor force mitigation coping with warming becomes possible. In the mixed medium of polyvinyl alcohol, a polyethylene oxide and polyalkylene oxide, it must be considered only as a vegetable culture medium in consideration of the safety of a meal. Since the absorptance of liquid manure will decline if tap water is used, especially concerning polyvinyl alcohol, most sufficient growth is carried out by use of ion-exchange resin or low-concentration use of liquid manure. Thereby, pure water must be made to add and absorb liquid manure. Also in a polyalkylene oxide and polyethylene oxide, in order that absorptance may decline and go as fertilizer concentration becomes high, when swelling time is made long, magnification ratio is enlarged, it will become good growth about. Although polyvinyl alcohol melted into water and use has been made difficult, the feature of this resin is understood and the cultivation having a bactericidal action is attained by the use method required in experiment or application manure.

**[Table 9]**

| **EXPERIMENT 4** A. POLYALKYLENE OXIDE (AQUACALK), B. POLYVINYL ALCOHOL (MIZU-MOCHI), C. STARCH ACRYLAMIDE (WaterLock) | | | | | | | | | | | | | | | MID JUNE |
|---|---|---|---|---|---|---|---|---|---|---|---|---|---|---|---|
| 7 DAYS | | LIQUEFIED FERTILIZER ml | 1 | 2 | 3 | 4 | 5 | 6 | 7 | | 9 | 10 | | | |
| 7 DAYS SEED RICE | A B 1 vs.1 | LEAF BUD mm | 4.7 | 6.7 | 7.5 | 6.3 | 7.3 | 6.7 | 6.2 | 7 | 6.7 | 6.7 | | | |
| | SPRINKLE 7DAYS | ROOT mm | 8.7 | 7.4 | 6 | 6.7 | 8.2 | 7 | 6.8 | 6.6 | 5.1 | 7.3 | | | |
| | | | | | | | | | | | | | | | |
| | B O 1 vs.1 | LEAF BUD mm | 2.5 | 3.2 | 3.3 | 3 | 3 | 3.1 | 2.7 | 3.7 | 3.7 | 3.4 | | | |
| | SPRINKLE | ROOT mm | 2.7 | 1.8 | 1.5 | 2.6 | 1.7 | 2 | 2.2 | 2.3 | 2.3 | 2.3 | | | |
| | | | | | | | | | | | | | | | |
| | A AQUACALK | LEAF BUD mm | 7.1 | 8.2 | 7.9 | 8.9 | 7 | 9.5 | 7.7 | 7 | 7.3 | 8 | | | |
| | SPRINKLE AQUACALK | ROOT mm | 12.6 | 10.7 | 13 | 7 | 7.7 | 8 | 5.5 | 6 | 6.3 | 7.5 | | | |
| | | | | | | | | | | | | | | | |
| | B MIZU-MOCHI | LEAF BUD | 4.1 | 4.4 | 5.4 | 5.4 | 4 | 7.5 | 5.9 | 5.5 | 6.2 | 4.9 | | | |
| | SPRINKLE | ROOT | 6.7 | 6.7 | 5.2 | 5.2 | 4.6 | 3.1 | 5.5 | 4.5 | 4 | 4.1 | | | |
| WATER IMMERSED SEED RICE | B MIZU-MOCHI | LEAF BUD | 29.7 | 28.6 | 27 | 31.8 | 29.7 | 26.6 | 5.4 | 18 | 6 | 17.8 | | | |
| | SPRINKLE | ROOT | 6.3 | 7.8 | 5.5 | 2.3 | 6.5 | 5 | 1.6 | 2.6 | 0.5 | 2 | | | |
| DIRECTLY SOWN SEED RICE | B MIZU-MOCHI | LEAF BUD | 23.6 | 35 | 23.7 | 24.9 | 21.6 | 7.5 | 11 | 12.5 | 17 | 15 | | | |
| | ADSORPTION | ROOT | 6.3 | 4.2 | 3.2 | 4.5 | 2.5 | 2.3 | 1.6 | 2.1 | 5 | 3.3 | | | |
| GLADIOLUS | AB 1 vs 1 | LEAF BUD | 23 | 6.5 | 6 | 11.7 | 7.5 | 2.7 | 12 | 3.5 | 1.5 | 1.2 | USED: | MIXTURE RATIO 1 vs MIZU-MOCHI ONLY | 1 :0.5 g 0.5 g |
| | ADSORPTION | ROOT | 1.1 | 1.5 | 0.2 | 0.8 | 1.5 | NONE | 2.5 | NONE | 2.5 | NONE | LEAF BUD 24.5 | LEAF BUD 22 | |
| | A B1 vs.1 | LEAF BUD | 12.4 | 26.5 | 1.7 | 24 | 40 | 2.3 | 4.2 | 37 | 10.3 | 16 | ROOT 11.5 | ROOT 1 | |
| | ADSORPTION | ROOT | NONE | 3.6 | NONE | 2 | 4.5 | NONE | NONE | 4.2 | 2 | 1.4 | | | |
| MORNING GLORY | A AQUACALK | LEAF BUD | 12 | 18.7 | 22 | 17 | 12 | 14 | 6.9 | 17 | 10 | 13 | | | |
| | SPRINKLE | ROOT | 6.4 | 7 | 7.5 | 5.1 | 6 | 8.7 | 5.8 | 9.1 | 1.5 | 1.8 | | | |
| WHITE RADISH SPROUTS | A AQUACALK | LEAF BUD | 5.2 | | | | | | | | 2.5 | 3 | | | |
| | SPRINKLE | ROOT | 5.1 | | | | | | | | 2.5 | 3.8 | | | |
| | B MIZU-MOCHI | LEAF BUD | | | 10.7 | | | | | | | | | | |
| | SPRINKLE | ROOT | | | 5.1 | | | | | | | | | | |

| | | | | | | | | | | | | | | | |
|---|---|---|---|---|---|---|---|---|---|---|---|---|---|---|---|
| 1 vs. 1: MIXTURE RATIO SPRINKLE: USED AS LIQUIFIED FERTILIZER IS SPRINKLED | | | | | | | | | | | | | | | |

Especially in summer, the arrangement of the cut flower which uses the water holding object made of PVA or the like, is difficult for holding a cut flower for a long time, because of water corrosion, and is not used.
Although it is thought that it will become difficult increasingly by global warming to enjoy a cut flower for a long time.
Use of the hard water in which the nonionic resin made of PVA or the like contains many calcium and magnesium, is needed, and the bactericidal action is able to be raised by ion-exchange resin, increase in quantity of sodium hypochlorite, and combined use of the photocatalyst by titanium.
With the photocatalyst by titanium, maintenance of sakaki for 40 days is attained by use of ion-exchange resin for about one month, and the arrangement of the cut flower becomes possible also in summer for tree or shrubs, such as cut flowers of a rose or the like, and sakaki, at the long period of time by combined use of titanium.
Maintenance of the cut flower is attained using tap water or pure water, and the arrangement becomes possible in summer.
Combined use of titanium became important at the cleaning effect of the tank of a fish or the like again at sterilization of water, or use of the cut flowers and vegetable culture medium by hydrophilic resin.
The prevention of mold besides the bactericidal action of water corrosion or resin is possible for use of this titanium.
This bactericidal action can be used in a septic tank, in the river, and in the sea .
Much more cleaning effect can be expected by adding an aromatic, after the use of photocatalyst by the above-mentioned ion-exchange resin, increase in quantity of sodium hypochlorite, or the combined use of titanium.

It has been misgivings about ecosystems, such as fish and shellfishes and marine algae, by breeding of the bacteria in the river or in the sea.
Since a bactericidal action increases by use of chlorine or salt, polyvinyl alcohol is applicable to the prevention from breeding of bacteria, and can maintain the ecosystem of sea water or a river.
An effect is demonstrated by the bactericidal action of polyvinyl alcohol by use of the tank of a fish, the filter medium of sea water, a bacterial absorbent, a disinfectant, and the modifier of sea water.

Coloring mixed use of this nonionic type hydrophilic resin is carried out, and also an aromatic is added, and it can be used as a filter media, for cut flowers, for arrangement of cut flowers, and for a tank of a vegetable culture or that of a fish.
Although colored resin had been known previously, mixed use had not yet been carried out, nevertheless the image and character in the TV display became very colorful today. Only monotonous and simple color was used, instead of the color tone using many colors.
It was difficult to make the color scheme using these many colors.
For example, in sky blue, marine blue, and the clear mixture ratio, if sky blue is increased and marine blue is somewhat lessened, it will become exquisite beautiful color.
Also in yellow, sky blue, and clear mixture, if there is much sky blue, it will become mint green, and if there is much yellow, it will become light green.
Although this color scheme is not traditionally Japanese and it is a color which does not cross at equal weight of mixed use at all also in the color by sky blue, purple, and clear mixture, or pink, yellow and clear color
When there is much yellow, yellow laps with pink and it is visible to orange, and it will become modern color if slight pink is increased.
Pink, purple, and a clearance -- if -- a clearance -- it becomes such thick mystical color that it seems whether coolness sensed if large, but to be pink and the completely same color resin as there being many colors of purple.
If there are much green, marine blue, and clear mixture and marine blue somewhat, it will become the color of the sea of bright sapphire blue, and if there is much green, it will become the color of the sapphire green of the dark sea.
Mixed use is also carrying out a little purple into this. Mixed use of a little yellow and purple is carried out to the clearance with this green and marine blue.
Also in yellow, purple, and a clearance, although it is the color which conflicts by the same intensity, if mixed use of the yellow is carried out thinly, it will become natural color.
Pink, purple, and yellow are made a small quantity, and clearance and sky blue are increased, and yellow is conversely increased for this combination, and pink and purple sky blue are made a small quantity.

Mix with black in a white's color scheme, and sky blue or the color of the sky blue mixture by dark blue in a white's color scheme,
The color of light green and sky blue, and light green and salmon pink, or autumnal leaves are expressed in the color of the color of an orange, brown, an orange and a clearance, or yellow using red and green,
Coloring of red food coloring is made by the combination of the color which makes the new color which is not made by the shade of the mixture ratio or a color from red food coloring -- a color will fall -- when water is used, and the monochrome use which uses these color schemes for clear resin in piles is different directions for use.
Although single color is used among 12 colors or 24 colors, transparency container becomes a canvas using the mixture of these colors, and this mixture serves as a flower and an art which backs up green.
Monochrome and clear resin can make everyone enjoy oneself in the way of thinking with those free who use it, irrespective of age and sex.
The mixture of resin is adjusting and using the color which beauty is spoiled by a little degree and can be easily made from nobody by the mixture ratio.
The color scheme by this mixture will be able to be used for hydrophilic resin, acrylic glazing, or the like other than nonionic resin, will turn into completely same color scheme on appearance, and will be the same similar goods. This mixture is used for appreciation uses, such as minerals, such as resin, glass ceramics, a marble and sand, and a stone, and is used for a plant, a cut flower, an artificial flower, or the like by the transparent container.
It is hilling for appreciation which mixes this material that carried out coloring work, and the material which does not carry out coloring work, and brews beautiful color. This resin hilling that carried out mixed use uses an adsorption absorption function for this precolored resin besides use of a cut flower or a vegetable culture medium, sprinkles the scent of a deodorizer, an aromatic, etc., is possible also for arrangements, such as an artificial flower, and is directions for use aiming at precolored resin holding functionality.
Since it becomes expensive to use resin of the coloring work which is not discolored to this hilling and a supply market is lost,
Colorant is added to the application manure for which the experiment was asked, and while absorbing manure to the resin which is not colored or sprinkling it, a budget prices resin culture medium can be made from using a liquid manure containing the colorant in which coloring is carried out.
Beautiful population hilling is made by combined use of hilling, such as acrylic resin, a glass marble, charcoal, ceramics and sand, stones, and a mineral system, being possible to such nonionic resin, and carrying out mixed use to it.
Although commercial liquid manure is colored light blue, this is coloring for the purpose which a color exception with water carries out. And by use of about 1-10mL of marketed liquid manure with this color was colored, even if it sprinkles liquid manure, it is not colored but it is colored by 6mL or more of adsorption use.
This liquid manure is used to color the resin.

The resin which is not colored is used as a cutting or a seeds and saplings culture medium as vegetable culture media, such as substitution of soil culture media, such as a potted plant, and also desert tree planting and rooftop gardening, and a flower bed, a field, a planter.
Taking advantage of the absorptance of the salt of hilling, or the feature of a solidification operation, it is used as substitution of the soil of the restoration construction of desert tree planting and a river, or the field along the seashore, or the soil by afforestation, the soil conditioner of a pollution culture medium, and a modifier of resin.

The bactericidal action of nonionic resin is based on the adsorption absorption function of resin, and has the same operation as ion-exchange resin or a photocatalyst. Especially this bactericidal action is based on the adsorbing action similar to the respiration of polyvinyl alcohol, and although resin contracts and is dry, plants, such as western orchid, rooted and it has attached many sprouts.
Also in a polyalkylene oxide, an adsorbing action becomes active by use of manure, tap water, or pure water, and a bactericidal action is demonstrated.
Even if this simple substance culture medium has high property of drainage and there is no use of manure, it has a bactericidal action which a plant grows, but since the water holding property is low, cultivation of plant with water holding property becomes difficult, but it becomes usable by carrying out mixed use of the polyvinyl alcohol of a water holding property.
Because the water holding property of polyvinyl alcohol is high, and property of drainage is low, there are difficulties for growth of the plant in a simple substance. And the growth becomes usable according to combined use of ion-exchange resin by use of plant with water holding property.
It becomes a soil disinfectant which has the water holding operation and bactericidal action of a soil culture medium. Although the polyvinyl alcohol is known to dissolve in water, it has a bactericidal action and a bactericidal action is actively continued by use of titanium, such as manure, a small amount of sodium hypochlorite and ion-exchange resin, and antibacteria medicine.
This contains ion-exchange resin, calcium magnesium, etc., and a bactericidal action increases further by using hard water.

A defervescence processing is not made every time it intercepts neither solar heat nor outside air temperature, since the temperature in a soil culture medium becomes high temperature, saprophytic bacteria breed and this bactericidal action gets worse.
Therefore, sprinkling soil, and using proper manure for polyvinyl alcohol, after solar heat and outside air temperature are intercepted, defervescence sterilization of the soil culture medium is carried out, and the defervescence processing of soil is demonstrated.
The bactericidal effect is increased, after the soil and the manure are mixed for more than 1 day.
The number of time of adding water can be excluded with these directions for use, and a bactericidal action is sometimes continued by rain.

The experimental data shown in Table 10 and Fig. 33 is the data in which the AQUACALK of the examination of a nonionic resin bacteria breeding depression effect and an experiment of a plant besides a water examination result used the polyalkylene oxide.
Acid of Table 11 and an alkaline water solution are excellent also in absorptance, and TW is a standard type and TWB is a strengthened type.

[Table 10]

**Table.10 Noion resin Results of bacillus breeding inhibition by polyalkylene oxide**

| | Number of bacillus (/ ml) | | |
|---|---|---|---|
| Sample | just started | after 3 days | after 5 days |
| 1.5 g | 8.3 × 10² | 7.3 × 10⁴ (4.7 × 10⁵) | 1.5 × 10⁶ |
| 5 g | 8.6 × 10² | 1.6 × 10⁴ (2.7 × 10⁴) | 4.9 × 10⁵ |
| 15 g | 9.5 × 10² | 3.2 × 10³ | 1.0 × 10³ |
| blank | 8.9 × 10² | 8.4 × 10⁴ (8.3 × 10⁵) | 1.6 × 10⁶ |

[Table 11]

**Table. 11 Absorptance by acid, alkali solution**

| | Concentration [%] | TW polyethylene oxide [g/g] | TWB polyalkylene oxide [g/g] |
|---|---|---|---|
| Pure Water | - | 30 | 20 |
| Hydrochloric acid | 1 | 30 | 20 |
| | 10 | 35 | 24 |
| Sulfuric acid | 1 | 30 | 20 |
| | 10 | 31 | 20 |
| Sodium hydroxide | 1 | 28 | 17 |
| | 5 | 5 | 5 |
| | 10 | 2 | 2 |
| Ammonia | 10 | 28 | 20 |

| | | Grade | |
|---|---|---|---|
| | | T W | T W B |
| Absorptance [ g / g ] | Pure water | 30~40 | 20~30 |
| | Artificial sea water | 30~40 | 20~30 |
| | Cement water ¹⁾ | 30~40 | 20~30 |
| Gel strength | [ g /cm²] ²⁾ | 0.1~0.2 | 0.3~0.4 |
| Viscosity | [Pa·s] ³⁾ | 200~400 | 200~400 |

| | | | |
|---|---|---|---|
| 1 ) Portland cement / water =1/1 extraction 2 ) Swelling rate of 10 times, using a constant speed distortion method 3 ) using Flow tester :170°C, 4.9Mpa,1mm ¢ ×L die | | | |

In Table 10, a bactericidal effect seldom appears in the experimental data for five days. A polyalkylene oxide bacteria breeding inhibition test is done further in Table 12, it has a bactericidal effect by swelling about 20 times with purified water. And also it has a bactericidal effect by swelling about 24 times with tap water, a bacterial count decreases for 3 to 6 days in Table 13.
It is thought that the bacteria which was once absorbed, are flowing out after 7 to 10 days, when the level's of chlorine fallen.
Although the once absorbed bacteria flow out again and it is possible that growth of a plant gets worse, since manure is not used, by this inspection, use of proper manure is the most important for this culture medium, desiccation can be transformed to an adsorption absorption function, and, as for the plant which the bacteria which flowed out were absorbed and got worse, energy can be regained.
A plant will root after the plant were re-planted in about 3 to 4 days. And a root with a plant will attain growth of the plant of hydroponics as it is of soil cultivation by a new root.
When proper manure is not being used in this vegetable culture medium, growth of a plant becomes weaker with the bacteria which flowed out, but it becomes possible for a cut flower and a plant to become fine by strengthening use of tap water or ion-exchange resin to this culture medium, and strengthening sodium hypochlorite to tap water, and to hold growth.
Usually, in tap water, 0.4-0.5mg/liter chlorine is contained, and 0.1mg/liter residual chlorine is needed at least. Even if tap water containing 0.1mg/liter were used for the manure, a bactericidal action is not obtained. But the 0.4-0.5mg/l chlorine maintains a cut flower or the like.
The bactericidal action of resin can be continued by 0.4-0.5mg/L residual chlorine being held also in a polyvinyl alcohol polyalkylene oxide and polyethylene oxide by this. The manure in this culture medium must be proper for the plant.
Although ion-exchange resin and liquid manure had been used in the vegetable experiment, especially growth of the mini rose was difficult, also in the same culture medium, the success or failure of growth depended on a little change of the manure, and it is found that property of drainage and fertilizer concentration is especially important. And when it is not proper manure, the growth is difficult.
Since growth of a plant becomes weaker by bacterial outflow and it gets worse, if sodium hypochlorite is beforehand strengthened and swollen in tap water, a bactericidal action can be strengthened and an effect can be obtained. By use of 0.2% of salt solution, a bactericidal effect works temporarily, but it can not be a good operation for growth of a plant.
Although 0.2% of this salt solution is almost equivalent to 20,000 to 30,000 ppm sea water, it is difficult for growth of a plant.
Since it does not become an operation good for growth of a plant, the mixed use of acrylic resin is possible to a culture medium, and proper moisture will also be absorbed by the strong adsorbing action of acrylic resin.
This proper manure and proper moisture serve for a long time. But if this moisture is not maintained, moisture must be given periodically.
Cultivation of all the plants grown by a soil culture medium by using tap water for this culture medium in consideration of these is attained.

[Table 12]

**Table. 12 polyalkylene oxide**

| Pure water | Number of colon bacillus (/ml) | | | | |
|---|---|---|---|---|---|
| | just started | after 3 days | after 5 days | after 7 days | after 10 days |
| Nonion resin (solid) 15g/300ml water | 3.1×10³ | 1.0×10 | 1 | 0 | 9 |
| blank | 3.5×10³ | 1.7×10³ | 3.7×10⁴ | 1.1×10⁵ | 1.6×10⁵ |

| | | | | | |
|---|---|---|---|---|---|
| 1. Purpose Number of bacillus was measured, to identify the effect to prevent breeding of bacillus by "AQUACALK" (polyalkylene oxide). 2. Test for identifying the effect to prevent breeding of bacillus 2-1 Testing method 1. "AQUACALK"(polyalkylene oxide) of 15g as a sample, was mixed with tap water (waterworks in Yoshida-cho town) in a container made of polyethylene, with ratio as shown in Table.3, and the sample was swelled. 2. Add bacillus (colon bacillus : IFO No.3301) to each sample by about 10⁴/ml. 3. Keep the samples in a chamber at 25 degrees C. 4. After getting specimen from the samples, breed the specimen in agar at 35 degree C. for 24 hours, and measure the number of the bacillus. | | | | | |

[Table 13]

**Table.13 Variation of number of bacillus using polyalkylene oxide with tap water**

| Tap water | Number of bacillus (/ml) | | | | |
|---|---|---|---|---|---|
| | just started | after 3 days | after 5 days | after 7 days | after 10 days |
| 15g 300ml (×20) | 5.4x10⁴ | <10 | <10 | 1.8×10⁵ | 6.5×10⁵ |
| 15g 330ml (×22) | 6.2×10⁴ | <10 | <10 | 1.4×10⁵ | 3.7×10⁵ |
| 15g 345ml (×23) | 5.3×10⁴ | <10 | <10 | 1.3×10⁵ | 3.4×10⁵ |
| 15g 360ml (×24) | 6.4×10⁴ | <10 | <10 | 1. 2×10⁵ | 3.1×10⁵ |

In experiment 6 in Table 14, polyvinyl alcohol in Table 3 was used with 250 times as much tap water. Swelling rate was investigated for 5g in 1250mL water. After 24 hours, it became 484g, that corresponds to about 97 times as swelling rates, and is 39% of amount of completion of amount of water. After 48 hours, it became 425g, 97 times, and 39%, respectively. After 72 hours, it became 400g, 80 times, and 32%, respectively. After 96 hours, it became 440g, 88 times, and 35%, respectively. The averages were 437g, 87 times, and 35%, respectively.
In one to four days, it turns out that resin is reduced in tap water.
Although the bactericidal effect of this 200 to 250 times as many resin culture medium is caused into moisture in a container.
It must be difficult to hold a cut flower also in underwater in this polyvinyl alcohol for two to three days, and for holding such freshness, the quantity of sodium hypochlorite must be increased to tap water, and a 0.4-0.5mg/L residual chlorine must be held.
2g salt and polyvinyl alcohol 5g are added to 11iter of tap water, and rose flower is arranged underwater.
The effect of the bactericidal action of polyvinyl alcohol shows up gradually by this, and it is effective for five days to one week.
This salt becomes almost equivalent to salt in sea water, and is not suitable for a flower.
It became possible to raise an effect further by the bactericidal action of the photocatalyst according these bactericidal actions to titanium, such as a titanium ball. In antibacteria medicine, such as a fluid, even if it was effective temporarily, it was difficult to continue the effect, and the sterilization use by titanium became important.
As for this titanium, it is possible to hold that effect in tap water without polyvinyl alcohol.
Although it was difficult to hold cut flowers for a long time by water corrosion until now, the arrangement and use for cut flowers became possible with titanium, such as this titanium ball.
The quantity of sodium hypochlorite is increased and the freshness maintenance of the water of a rose or the like also becomes possible.
Especially a bactericidal action is important also for growth of rose with a root, the bactericidal action was raised by combined use of ion-exchange resin, sodium hypochlorite, and titanium, and the vegetable cultivation by hydrophilic resin became possible.

[Table 14]

**Experiment 6 polyvinyl alcohol 5g**

| Weight after swelling with 1250ml in Table.3 | | | |
|---|---|---|---|
| 24 hours | 48 hours | 72 hours | 96 hours |
| 1 st day | 2nd day | 3rd day | 4th day |
| 484g | 425g | 400g | 440g |

| | | | |
|---|---|---|---|
| residual chlorine 0.4mg/l | | | |

**Conditions for cartridge-type water purifying machine "class pure"**

| Water conditions (according to Japanese waterworks law) | | |
|---|---|---|
| 1 | turbidity | less than 2 deg. |
| 2 | colority | less than 5 deg. |
| 3 | Fe | less than 0.3mg/l |
| 4 | COD Mn | less than 2.5mg/l |
| 5 | supply pressure | 0.15~0.3 MPa |
| 6 | supply temperature | 5~40°C |
| 7 | surfactant | less than 0.2mg/l |
| 8 | n-hexan extract | less than 0.5mg/l |

According to the water examination result shown in Fig. 33, in mixed use, such as simple substance use of polyvinyl alcohol, and a polyalkylene oxide, a chlorine ion increases from a blank with tap water, and if it compares that the hardness of calcium, magnesium, or the like is blank, it will decrease to 60%.
Since many evaporation residues is contained in resin, in use of cut flowers, it must be used after washing resin in cold water and it becomes possible to hold cut flowers fresh by adding the calcium magnesium which is decreasing and using hard water.
Conventionally, in the florist, replacement management of the tap water used with cut flowers is carried out every day.
Especially the freshness maintenance of the water for rose or that in summer, was difficult. And the arrangement of the cut flower by the water holding object made of PVA or the like, was not made.
The hard water which contains calcium or magnesium, the use of ion-exchange resin as durability agents such as an arrangement of a cut flower or sakaki, pure water, mixed use of polyvinyl alcohol or polyalkylene oxide polyethylene oxide with sodium hypochlorite, or sterilizing method by the photocatalyst of titanium, can prevent the water corrosion, and vegetable freshness maintenance became possible.

In experiment 3 in Table 15, by use of 1g polyvinyl alcohol, about 100g pure water, and 0.1g of ion-exchange resin, it became usable for cut flowers, such as sakaki, rose, and Margaret. And rose flower was able to be held by the culture medium which carried out compression use.
Using ion-exchange resin with pure water, can demonstrate an effect on the freshness of tree and shrubs, such as sakaki. After the use, these plants become shining glossily from the time of purchase fresh about 40 days or more with about 0.5g of ion-exchange resin with 500 cc pure water also in the summer.
Although it is somewhat inferior to pure water also in tap water, it becomes possible to prevent water corrosion, such as a cut flower, by use of ion-exchange resin.
Although it seems that this ion-exchange resin was originally developed for hydroponics, it circulates through tap water to culture medium for hydroponics, such as a high draw corn, and is grown.
It becomes possible to prevent the water corrosion of a vegetable culture medium like water corrosion, such as cut flowers and sakaki, and to reduce cost by using titanium, hard water, or pure water for such culture medium for hydroponics.

[Table 15]

**Experiment 3 Cut flowers using polyvinyl alcohol of 1 g with pure water**

| pure water (cc or g) | 50 | 60 | 70 | 80 | 90 | 100 | 120 | 150 | 180 | 200 | 250 |
|---|---|---|---|---|---|---|---|---|---|---|---|
| ion-exchange resin(g) | 0.1 | 0.1 | 0.1 | 0.1 | 0.1 | 0.1 | 0.1 | 0.1 | 0.1 | 0.1 | 0.1 |
| sakaki | × | ○ | △ | ○ | ○ | ⓪ | ⓪ | ⓪ | ○ | ○ | ○ |
| rose | △ | ○ | △ | × | △ | ⓪ | △ | △ | △ | × | ⓪ |
| margaret | ○ | ○ | ○ | ○ | ○ | ⓪ | ○ | ○ | ○ | ○ | ○ |

In a bactericidal action in Table 3 using 250 times the tap water, residual chlorine content is about 0.5 mg/l (tap water of an assay center waterworks in Yoshida-cho town).

Although the residual chlorine content of the tap water currently used for experiment 5 shown in Table 7 is 0.4 mg/l, the residual chlorine generally used for tap water is 0.4-0.5mg/L
Unlike the swelling rate in experiment 1 shown in Table 6, which uses polyvinyl alcohol with pure water, lower swelling rates are obtained, between 53 and 123 times.

The swelling quantity in the tap water in experiment 5 shown in Table 7 uses 3 liter of tap water, and swells within a calm container in 1 hour - 30 hours.
The average swelling quantity for drainer 10 minutes of polyvinyl alcohol in 1 hour - 30 hours, is about 530g corresponding to about 18% (about 1/6) of amount of water, about 106 times as many swelling rates. And that for drainer 2 hours, is about 482g, corresponding to about 16% (about 1/6) of amount of water, about 96 times as many swelling rates.
Almost equivalent swelling quantity (484g) to the result in experiment 6 in Table 14, was obtained, although 250 times tap water in 24 hours was used. Although the amount of water differs in the culture medium which uses 3 liter of calm tap water, and the culture medium which uses 1250mL of tap water, almost equivalent average swelling quantity was obtained.
Although the residual chlorine fell into 250 times as much tap water as experiment 6 shown in Table 14, the weight of the 2nd day, the 3rd day, and polyvinyl alcohol is that the quantity of it is decreased.

In table 3, although bacteria did not breed in 250 times as much tap water, and the quantity of amount of water was increased and the residual chlorine was decreased using polyvinyl alcohol in less than 0.1mg /from 200 times as much tap water, since the chlorine ion is increasing, it can be said by increasing the quantity of tap water that the bactericidal action is raised.

The result of the water examination of Fig. 33 is a result on the 3rd day.
500g of resin which swelled with tap water is made, 1 liter of tap water is added on the 2nd day, and it had been left for one day, and was examined on the 3rd day.
Tap water is added and the water examination is conducted on the 2nd day.
For this reason, it will decrease to less than 0.1 mg/l of residual chlorines over the 2nd day.

Seeing the swelling rate with tap water in 1 to 30 hours in experiment 5 shown in Table 7, swelling quantity using 250 times the tap water in experiment 6 shown in Table 14, is the swelling quantity in about 2 to 3 hours with the tap water of experiment 5, and can see swelling rate. Therefore, a bactericidal action happens for a short time, and it is thought that the resin is reducing after one to four days in experiment 6, or after five to ten days. Polyvinyl alcohol cannot adsorb chlorine, but will collect chlorine ions, will raise a bactericidal action, and will continue the operation.

Although 1-24 hours has passed, the swelling quantity with the tap water in experiment 5 is assumed to be decreased to half. Because it is assumed that the residual chlorine fell to about 0.2 mg/l from 0.4 mg/l since it will become less than 0.1mg after 48 hours on the 2nd day
Therefore, average swelling quantity with pure water may be 530 times 2 = 1060g.
When this figure is applied to the pure water in experiment 1, this figure that is equal to 1061g after 24 hours is twice the average value.

Seeing the growth of the plant with the pure water in experiment 2, the growth will have become possible when the swelling rate of polyvinyl alcohol is fixed at 87-94.
Since a cut flower can be used by about 100 times as much swelling rate also in the experiment of the cut flower in experiment 3, combined use of the manure, hard water, wood vinegar, and ion-exchange resin which calcium magnesium strengthened can grow.

Polyvinyl alcohol has heightened the bactericidal effect by using tap water, and if tap water is used also in a soil water holding agent, it can demonstrate an effect.
In the place where the tap water cannot be used, polyvinyl alcohol must be made twice to 3 times the amount of the culture medium used with tap water, the culture medium which about 1/2 to 1/3 compressed must be made, and it must be considered as use of manure, ion-exchange resin, or the like.
With pure water, as for the result of experiment 1 and experiment 5, in a polyalkylene oxide, a bactericidal effect raises by 10 to 12 hours of swelling 20 times, with tap water, it swells greatly after 23 hours conversely, moisture is flowed out, and repetitive exercises are acting actively.
Although using polyvinyl alcohol with tap water, it turns out that the bactericidal effect is increasing in 4 hours - 16 hours, on the contrary to using polyethylene oxide, nevertheless, after time continuation is acting.

Polyethylene oxide and polyalkylene with mixed use of the polyvinyl alcohol, will work as a regulating agent for resin, in the soil culture medium in which tap water cannot be used since a bactericidal action will be urged.
Although the resin magnification in pure water is computable with the content of this residual chlorine, it is possible that the numerical value of this residual chlorine changes somewhat with areas.

Pure water -- a cartridge-type water purifying machine-"-- class pure" is used.
This cartridge-type water purifying machine -- "-- class pure" is a device which manufactures pure water by using the spring according to waterworks water and its standard as raw water.
Water corrosion, in a cut flower or sakaki, can be prevented by using this water purifying machine, and sakaki or the like can be held fresh rather than the time of purchase one month or more by use of ion-exchange resin again.
This water purifying machine -- "-- class pure" is good to be used for sale of pure water or an object for sales tasks by a hydroponics use besides use of a cut flower, sakaki, or the like
The model and manufacture maker of a water purifying machine are not limited.

As nonionic resin, isobutylene maleic acid, PVA, N-vinyl acetamide, polyethylene-glycols, N-vinyl formamide, N-vinyl-carboxylic-amide, N-methyl-N-vinyl formamide, N-methyl-N-vinyl acetamide, and N-vinyl-alpha pyrrolidone, can be used.
These are the nonionic resin holding adsorbing actions. Acrylic resin polyacrylamide, starch acrylo amide, starch polyacrylics, polyacrylic acid, polyacrylonitrile, starch, an acrylic acid graft, a starch acrylonitrile graft, a cellulose acrylic acid graft, and a polyacrylonitroken may be used, by these, the root grows with hydroponics by desiccation.
Root rots by sap discharged from a plant, and cultivation of the plant, such as a view leaf, a flower, a pot flower, flowering trees and shrubs, a herb, western orchid, a bulb, a cactus, a wild grasses and herbs of mountain, was difficult. being restricted to cultivation of a foliage plant that was strong against the endurance raised on the hydroponics background as substitution of a high draw corn. It seemed that the plant grows with a nonionic resin culture medium similarly to that with an acrylic resin culture medium. Nevertheless, the root rot was prevented by carrying out mixed use of this nonionic resin to an acrylic resin culture medium in equivalent amount, and cultivation of plants of a soil culture medium, such as all plants, flower trees, etc., such as a view leaf, a flower, a pot flower, flowering trees and shrubs, western orchid and herb, and a bulb, was attained.
Because of the lack of the water holding property in a nonionic resin culture medium, mixed use of the same nonionic resin polyvinyl alcohol can help the bactericidal action, without adding water for a long time.

In the midsummer, soil, such as an inner pot for vegetable cultivation, a planter, or a flower bed, becomes high temperature by global warming, and growth of a plant is becoming difficult.
At these vegetable culture media, in use of the soil water holding agent by the conventional acrylic resin, temperature of a soil culture medium becomes high, and root rot will be started with the water in which saprophytic bacteria bred and were repelled from the resin.
Therefore, polyvinyl alcohol, polyalkylene oxide, or the mixture of these, can be used. Also the sterilizing method which intercepts epiboly solar heat and outside air temperature by polyvinyl alcohol, polyalkylene oxide, or polyethylene oxide, covered on the planter of a soil culture medium or the soil of a flower bed, is effective. Fine resin of polyvinyl alcohol and manure water permeated underground, heightened the bactericidal effect, and lowered the temperature of the planter or the soil of a flower bed, and it became possible to revive the plant which weakened by intercepting solar heat of them.
It is possible to use it for plants of rooftop gardening etc., such as tree planting, a flower bed, a planter, a pot flower, the agricultural products of fields, etc., and that it is important.
Especially, it is effective for the cultivation of agricultural products such as rice or fruits, whose quality depends on temperature and water.
The quantity of the manure used in soil can be decreased, hard water, wood vinegar, or the like are used with polyvinyl alcohol, and the conventional crop cultivation method will be converted.
By above mentioned method making the polyvinyl alcohol cover on, it becomes possible to prevent breeding of weeds and a harmful insect.
The effect of this manure can be raised using the polyvinyl alcohol that is soaked
in tap water for about one day, and a bactericidal action can be raised.

Although this is a bactericidal action which uses low-concentration manure, unlike agricultural chemicals, it serves as the same use also in use of agricultural chemicals.
It becomes the utility of the heat insulation agent defervescence disinfectant of resin.
And after one month, the sprinkled resin separates like a wafer paper.
After that, giving rain and water continues a bactericidal action, and a plant revives freshly.
After liquid manure is added to the resin which swelled with tap water by 80%, or manure is adsorbed at resin, and resin and manure water are given fully on bowls or a planter, manure water will permeate within a bowl and intercept solar heat.
If this resin and manure water are given to the plant of a planter, manure water will permeate in soil and a bactericidal action will happen.
By this method, the flower of the planter became vivid green by one use in two to three days.
Planter of margaret or Gardenia jasminoides which were withered, become green, and revive after the experiment.
It is thought that the bactericidal effect of resin increased and the plant rooted by solar light besides interception of solar heat also in the heat island effect or rooftop gardening.
A garden which was covered with a lot of resin used in the experiment on the flowering trees and shrubs of the garden or a lawn at the whole surface became cool, and flowering trees and shrubs and a garden tree revived.
An operation of this resin carries out a sterilization defervescence processing for soil in which miscellaneous bacteria bred according to high temperature, and growth became difficult, such as a planter and a flower bed, and approaches the bactericidal action which revives a plant. The operation is more effective using a little manure with the use of polyvinyl alcohol.
When tap water cannot be used with the soil culture medium, the mixture of polyvinyl alcohol with a polyalkylene oxide or a polyethylene oxide, can be used as the defervescence water retention agent, the disinfectant, modifier, and regulator of resin,
and high efficiency can be obtained.
Even the used water contains salt, such as a desert tree planting of Egypt etc., cultivation of a plant is possible using polyvinyl alcohol with a lot of amount, corresponding to the salinity of the water.
In the tap water containing chlorine, absorptance of the manure is low especially. It becomes low concentration by using a lot of resin, it becomes possible by use of the manure used for the experiment.
Property of drainage and a water holding property are controlled by use of the manure and ion-exchange resin which begin to melt slowly, and cultivation of vegetables or the like and cultivation of rice are attained especially by use with the simple substance of polyvinyl alcohol in a desert.
Growth of the plant in the nonionic resin culture medium containing the salt of sea water becomes possible by use of a polyalkylene oxide and polyethylene oxide.

Although the mixture of polyvinyl alcohol with other nonionic resin, such as isobutylene maleate, acrylic resin starch acrylic acid amide, or the like, can be used. Nevertheless, when a polyvinyl alcohol is used solely, these directions for a desert, rooftop gardening, a flower bed, a planter, or the agricultural products of fields, compressed polyvinyl alcohol into about 1/3 - 1/2 in residual chlorine 0.4 - 0.1 ml/l are used. The amount of 2 - 3 times or more of swelling quantity is needed, and the mixture of the manure can be made with soil, and a bactericidal action can be urged, the absorptance of moisture becomes large.
Although resin seldom swells, the absorptance of moisture becomes large.
By taking property of drainage into consideration, it becomes possible to cope with global warming at a long period of time.
Absorptance of the tap water containing salt in experiment 6 by polyvinyl alcohol, is low, and attention must be paid so that absorptance decreases, when fertilizer concentration increases.
Although use of manure is required of use in the fields which mix liquid manure and the solid fertilizer which melts slowly. It is good to add and use liquid manure for the water which does not contain chlorine, such as pure water, in the culture medium which uses tap water. Cultivation of a plant is possible also for liquid manure at very low-concentration use.

In the water retention agent and vegetable culture medium of resin, if a lot of tap water is given, it will seem that polyvinyl alcohol swells immediately and has a bactericidal effect. But in the resin culture medium in this short time, also in use of ion-exchange resin, growth of a plant is difficult and resin is reducing it for every time progress also in an experiment 250 times the tap water of this.
If a vegetable culture medium with the mixture ratio of 1 : 1 for polyvinyl alcohol and polyalkylene oxide, were used, the resin will contract, and the shape of polyvinyl alcohol will no longer be seen.
It can be said that growth of a plant is attained and the bactericidal action is functioning in this reduction state. Since polyethylene oxide or a polyalkylene oxide also swells slowly and is swelling after half a day, it will have a bactericidal action by giving tap water.

In experiment 1 shown in Table 6, 5g of polyalkylene oxide(A) or polyvinyl alcohol(B) was mixed with 1 liter of water for A, or 5 liter for B. And the water absorption and swelling rate in 1 hour - 40 hours were measured.
Using the polyalkylene oxide(A), the average swelling rates of 20 times for drainer 10 minutes in 1 hour - 30 hours, and of 21 times in 1 hour - 40 hours with swelling quantity of 112g, were obtained. The average swelling rate of 22.5 times was obtained in 31 hours - 40 hours.
Using the polyvinyl alcohol(B), the average swelling rates of 228 times in 1 hour - 30 hours with swelling quantity of 1140g, and of 205 times for drainer 10 minutes in 31 hours - 40 hours with swelling quantity of 1025g, were obtained. Also the average swelling rates of 142 times in 1 hour - 4 hours, of 160 times in 1 hour - 5 hours, of 250 times in 4 hours - 26 hours, were obtained.
The peak is arrived at in 8 hours and it swells 291 times of 1455g, and it is shrunken for a while after that, and swells 282 times of 1412g in 16 hours.
Then after a little shrinkage, the swelling rate became 280 times of 1400g in 22 hours, and became 261 times of 1303g in 26 hours, it turns out that the amount of desiccation in the time which has swollen greatly is also large.
The resin made of A, B was swollen in each container, drained off water for every time, and the rate was measured alone. The resin made of A swells gradually with time, while that made of B fluctuates as can be seen in the graph, because absorption and desiccation occur repeatedly in the water.
Although it has stopped swelling not much after 27 hours, it turns out that swelling and contraction will be continued till 35 hours repeatedly, after measuring in 31 hours - 40 hours.
In acrylic resin, once the resin absorbs water so much, it will be desiccated periodically. Therefore. the resin will be contracted to the original state in about one month, and the resin must be filled with water up. But it is thought that polyvinyl alcohol absorbs moisture by this repetitive operation, and improves the property of drainage and breath ability of a culture medium, and is desiccated, is made into a water holding culture medium, and holds moisture at the long period of time.

In experiment 2 shown in Table 8, the medium was made using the mixture of A polyalkylene oxide and B polyvinyl alcohol, each of 150g, plants, such as geranium, a mini rose, a primula, a pansy, cyclamen, azalea, and Goldcrest, were planted on the medium, it swelled by the culture medium in 17 hours and 24 hours, and growth of a plant was tried.
It was said that A polyalkylene oxide swell 25 times in 12 hours, and B polyvinyl alcohol swell 150 times in 24 hours. Nevertheless, measurement in 12 hours was difficult in time, on the whole, the place in which it experimented in 17 hours and 24 hours. And the culture medium which swelled in 24 hours had bad growth also in the manure culture medium of 1mL - 20mL, and growth of a plant turned good in every manure culture medium in the swelling culture medium of 17 hours.

In a culture medium that was swelled in 17 hours in experiment 2, using A polyalkylene oxide of 480g with pure water of 11 - 13 liter, swelling rate of 19 times of 9240g at 11 liter of completion weight, and swelling rate of 20 times of 9390g at 13 liter of completion weight, were obtained.
Using B polyvinyl alcohol of 130g with pure water of 18 - 20 liter, swelling rate of 85 times of 11020g at 18 liter of completion weight, and swelling rate of 94 times of 12156g at 20 liter of completion weight, were obtained.

Using the culture medium made of the mixture of A and B swelled in 17 hours, good growth was obtained, irrespective of the fertilizer concentration. While, using the medium swelled in 24 hours, good growth was obtained when the concentration was within a restricted range.

According to experiment 1 shown in Table 6, although A polyalkylene oxide has a bactericidal effect by swelling about 20 times with purified water, it is swelling the 24 highest times in 24 hours and even if it carried out a drainer for 1 hour, it is about 23 times.
Henceforth 24 hours, swelling magnification increases little by little and an amount of water-repelling is increasing with 24 hours - 40 hours in connection with it. Especially, the amount of water-repelling of 24 hour, 27 hour, and 29 hours increases, it becomes a bad culture medium of drainage by water-repelling, and it is thought that growth of a plant is getting worse.
For this reason, it does not swell to the limit of a swelling rate in 17 hours, but by being about 19 - 20 times about 84% - 88%, a plant is considered that it was able to maintain good growth.
According to calculation of experiment 1 on the swelling culture medium of 17 hours, the 9240g of amount of completion is about 1.1 times - 1.2 times as compared with the 10560g of amount of completion drained 2 hours of 11040g of amount of completion drained 10 minutes of 17 hours and since the swelling magnification of A polyalkylene oxide is small, much big change is not seen, but the plant is considered as good growth by using the compression culture medium being about 80% - 90% of the swelling magnification of resin.
Similarly on the B polyvinyl alcohol, by calculation according to calculation of experiment 1 of 17 hours, the 11010g is about 2.2 times - 3.1 times corresponds in 27040g amount of completion in drained 2 hours at swelling magnification in 33930g of amount of completion drained 10 minutes.
Although polyvinyl alcohol of B is large swelling magnification in pure water, it turns out that it is considered as about 32% - 45% of compression culture medium of the limit of resin swelling magnification, and good growth of a plant is carried out.
The displacement of experiment 1 from 1 hour to 13 hours, in particular 12, 13, 16, 18 or 28 hours, a water-repelling operation of A polyalkylene oxide will not commit. And by B polyvinyl alcohol, an amount of water-repelling becomes a small quantity in 7, 12, 18 and 28 hours, and water is not repelled at all in 7, 28 hours.

By these two nonionic resin culture media, the same adsorbing action and water-repelling operation are repeated in the almost same time zone, and it is thought that the repetitive operation similar to respiration is performed. Table 6 shows the each measurement of A and B of experiment 1 , a water-repelling operation stops almost simultaneous, and absorption is made again.
Since the quantity of runoff is increased 24 hours - 40 hours, if it is used after drained 2 hours and swelling to 20 times, it will become good growth.
With plants such as a flower which dislikes a water holding property since the water holding property of B polyvinyl alcohol is high, A polyalkylene oxide and B polyvinyl alcohol must carry out a drainer by the polyalkylene oxide of A from 2 to 4 hours after 13 hour, and polyvinyl alcohol of B must have this drainer in 20 times as much swelling magnification.
The bactericidal action serves as good growth especially in 10 or 11 hours.

The fertilizer concentration of the mixed medium of polyvinyl alcohol presupposed that it is from twice to 10 times the soil culture medium.
Ammonium sulfate urea, coal nitrogen, an oil cake, bony parts of a fish, a compost, or the like are among the nitrogenous fertilizers which make a leaf and a stalk from a soil culture medium, and the phosphoric acid which makes a flower and fruits is contained in chaenomeles sinensis acid coal, powdered bones, excrement of domestic fowl, rice bran, etc.
Ashes made from burned plants, sulfate of potash, or the like are among the potassic fertilizers which make plant textiles and cell membrane.
These manure is included in compost, it is used together with liquid manure, the shape of granulation, solid fertilizer, etc., and fertilizer concentration is raised. It can be known by the tone of the leaf of rose or geranium.

0.5g of ion-exchange resin is used for a plant experiment. The manure of 0.5g of ion-exchange resin which melts in underwater 11 per week is a 1.6mg/l nitrogenous fertilizer, and is about 1/1000mL of low concentration of the undiluted solution of liquid manure.
If 0.5g of this ion-exchange resin is added to 500 cc of pure water and tree and shrubs, such as sakaki, use it it is fresh even if sakaki passes one month or more in a summer.
In the polyvinyl alcohol culture medium which absorbed especially tap water, or the mixed medium of a polyethylene oxide polyalkylene oxide, a little use of ion-exchange resin is effective.
Nonionic resin, such as these polyvinyl alcohol, is raising the growth effect for about two to three months by the resin culture medium (200g-300g) to growth of a foliage plant in the minimum quantity of about 0.1-0.2g. This is considered to be based on very little about 1/5000 - 1/2000mL manure of undiluted solution 5:10:5 of commercial liquid manure, and to be based on the synergistic effect of nonionic resin and ion-exchange resin.
The ion-exchange resin currently used is shown the ingredient with Table 17 made in German Bajer.
Although this had a fertilizer component, nitrogen, and equivalent potassium, in order that the brown potassium manure which begins to melt into a resin culture medium may soil resin, its weight is reduced, and the quantity of phosphoric acid is increased.
It seems that the bactericidal action fell for a while by this.

### [Table 16]

**TABLE 16**

| Ion-exchange resin nutrient (Bayer AG, GERMANY): Ingredient is changed in July, 2002. |
|---|
| Difference of present ion-exchange nutrient is, ingredient of amount of fertilizer |
| [PRESENT PRODUCT] N : 1.8% · P₂O₅ : 0.8% · K₂O : 1.8% |
| [NEW PRODUCT] N : 1.8% · P₂O₅ : 1.1% · K₂O : 1.3% |
| N = TOTAL (T - N) , P2O5 = WATER ABSORBABLE NITROGEN PHOSPHORIC ACID |
| K2O = WATER ABSORBABLE POTASSIUM |

Chart 1 is expressed based on the nitrogenous fertilizer of this table 16.
A is the nitrogen volume according to weight out of which the nitrogenous fertilizer of 1.8% of ion-exchange resin melted in 1L of water.
B is the manure content of 30g, 300g applied culture media 2 of charts.
Since this nitrogen content is equal weight before or after the ingredient changed, is the growth manure of a plant leaf and a stalk and can check order by the eye, it is tested by comparison to growth of a plant, and let it be a conformity culture medium.
Although the potted plant of mini rose azalea or the like could continue blooming about half month at 0.5g and very good growth was carried out before ingredient change, some growth culture media are changing with loss in quantity of potassium.
C is the content of the only nitrogen contained in the liquid manure of B.

### (Chart 1)

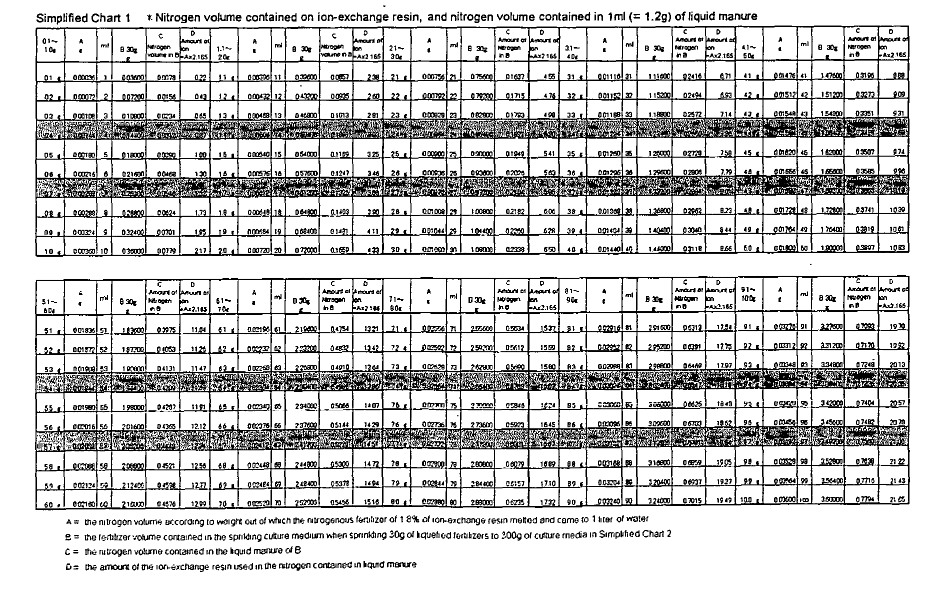

### (Chart 2)

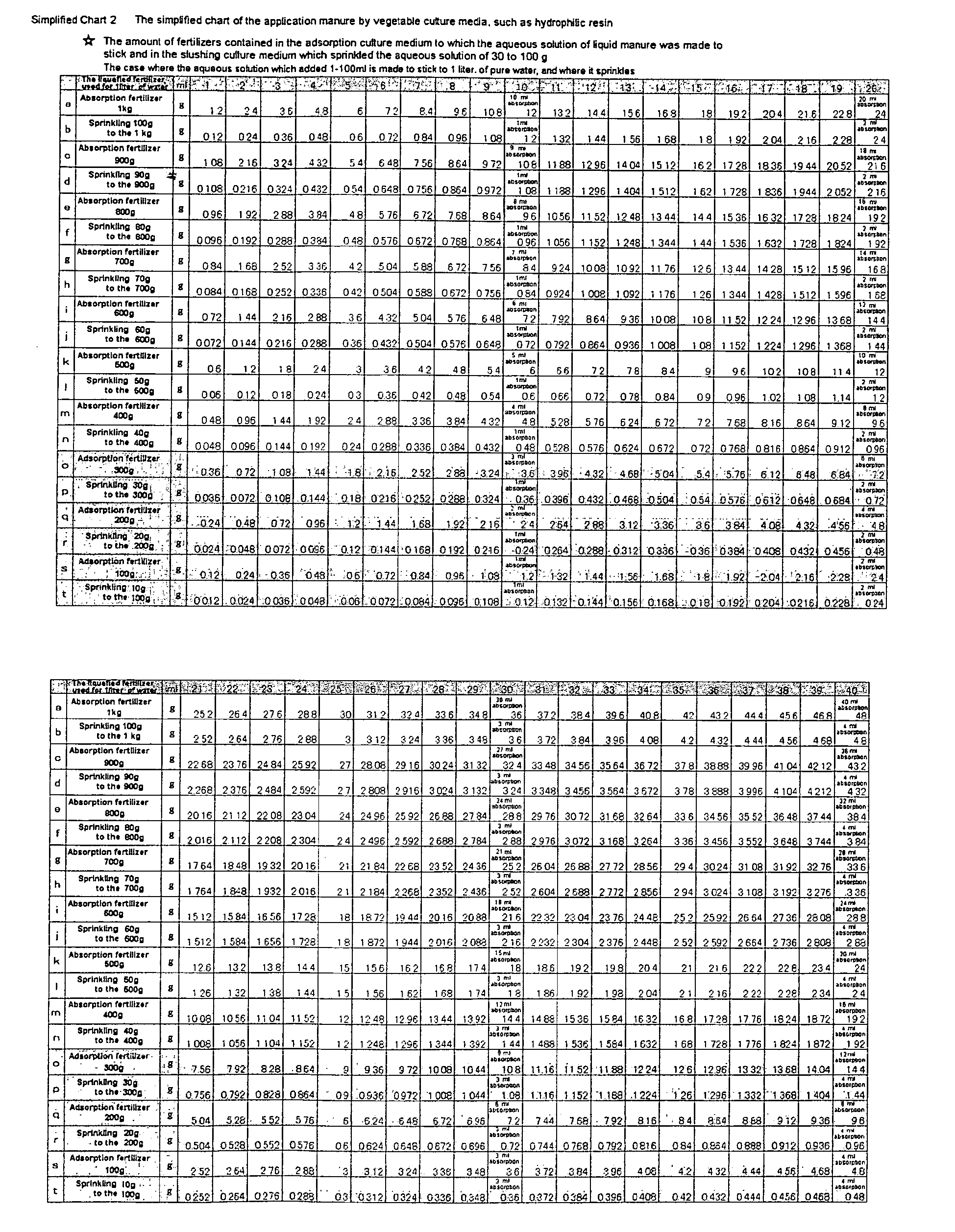

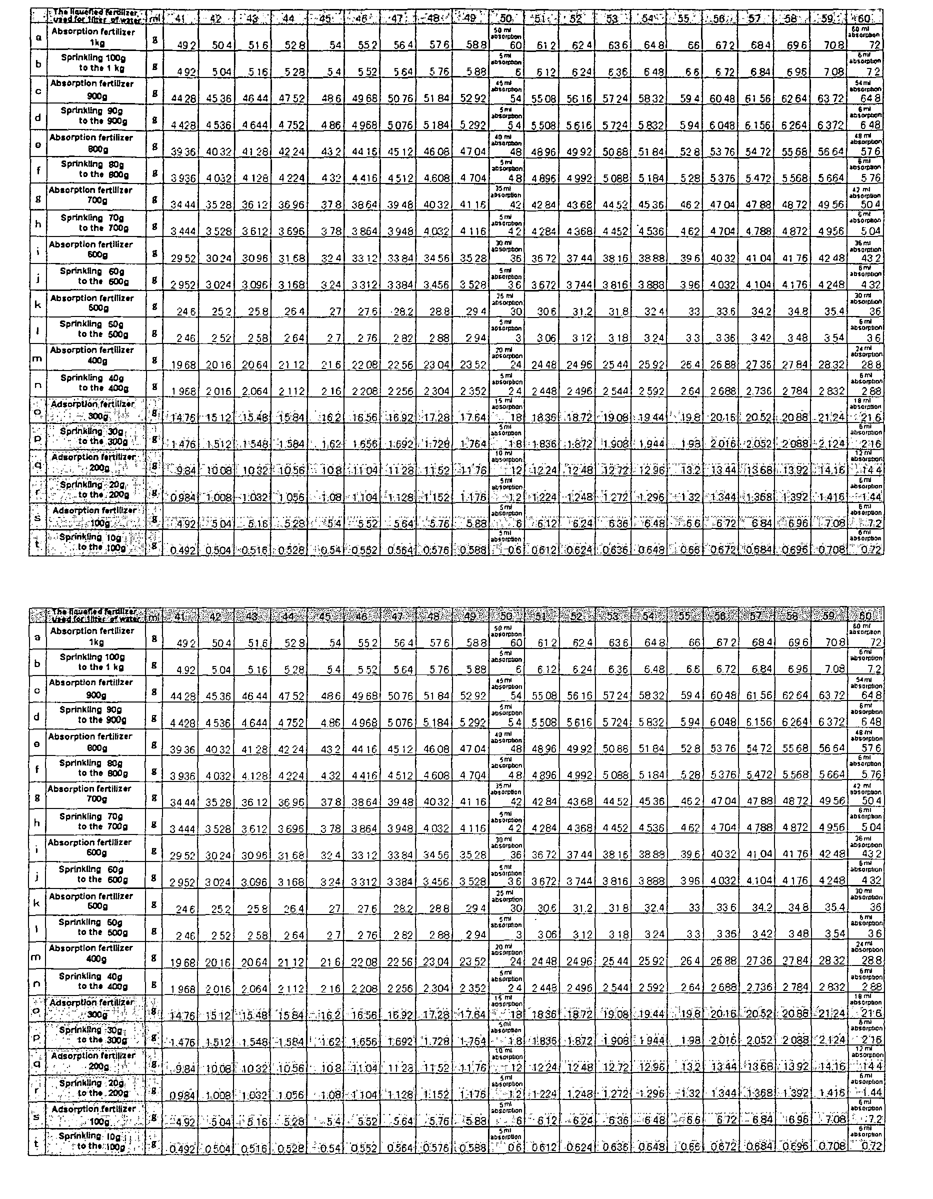

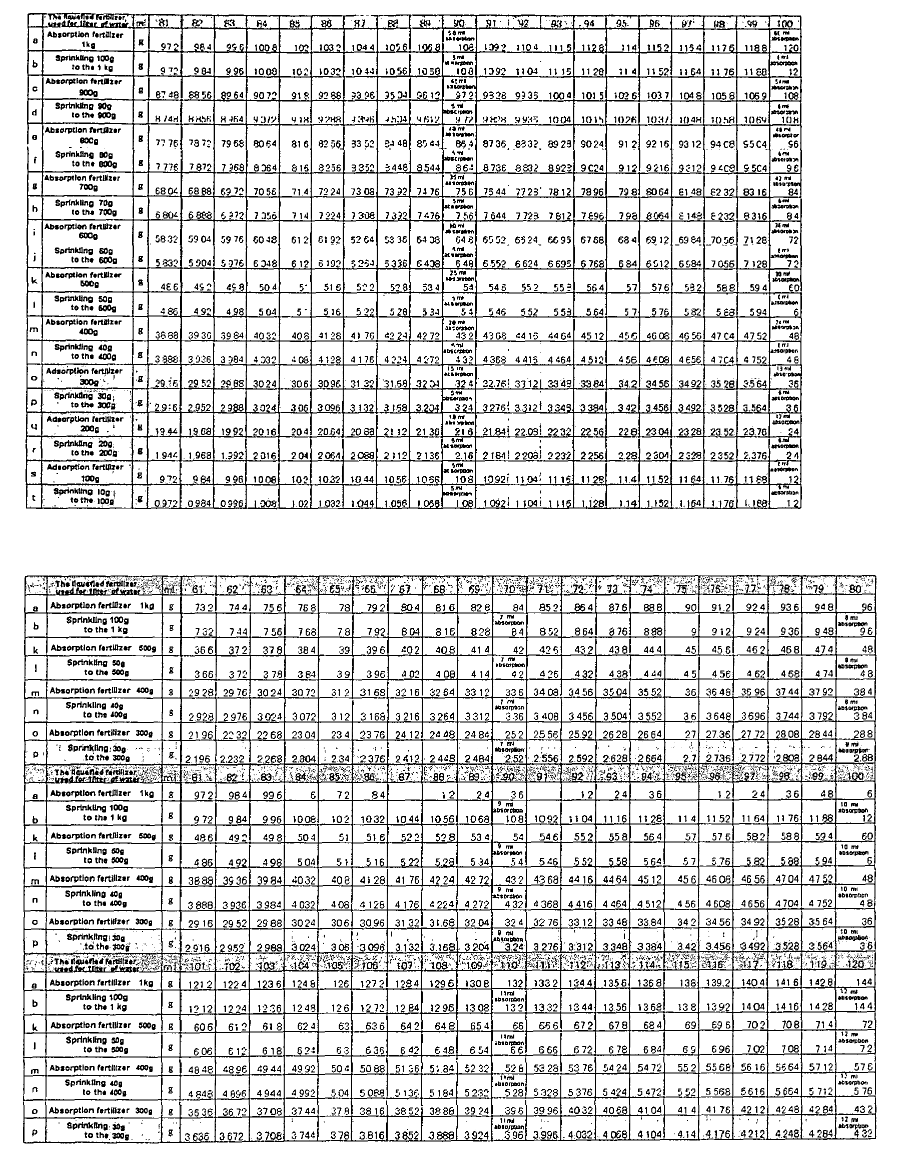

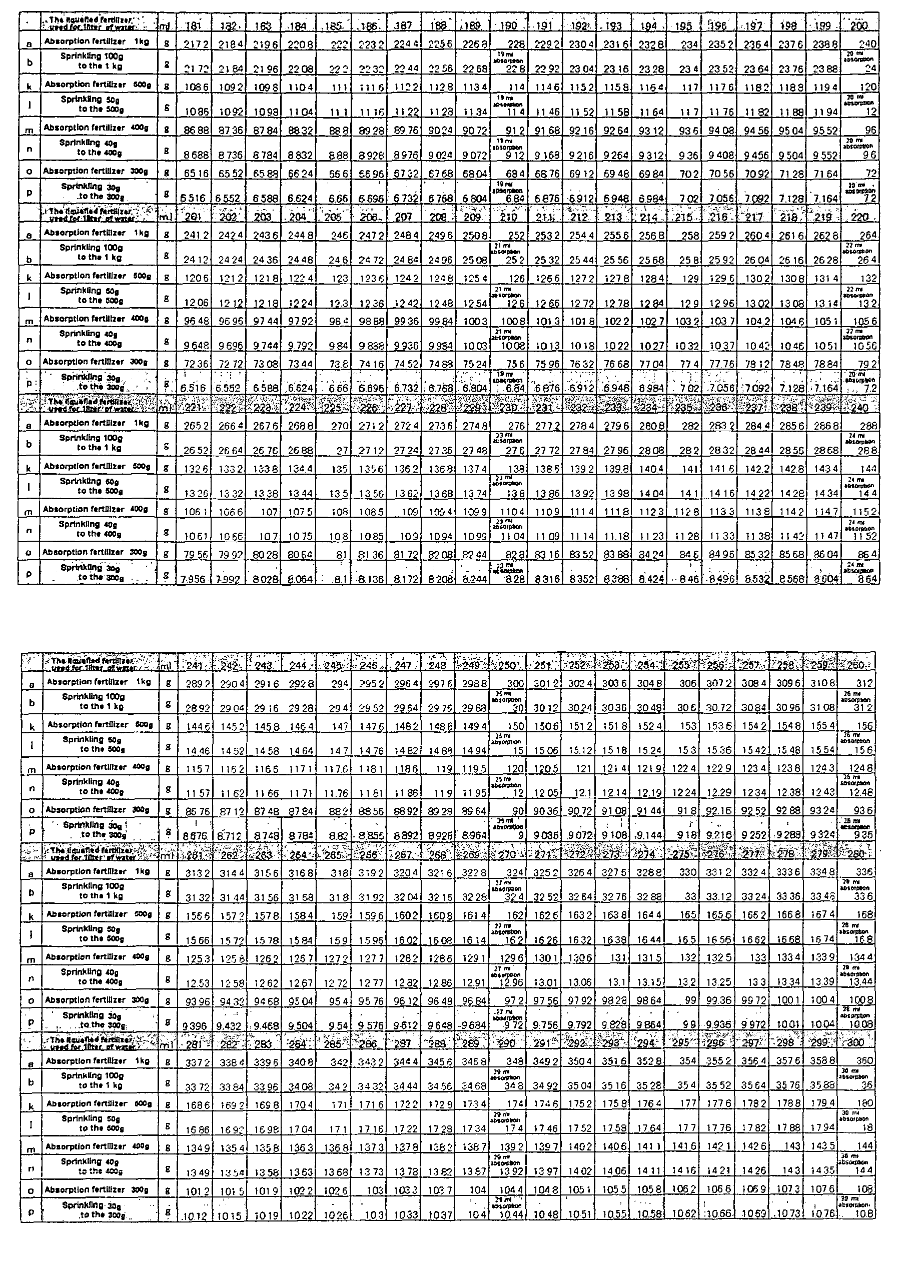

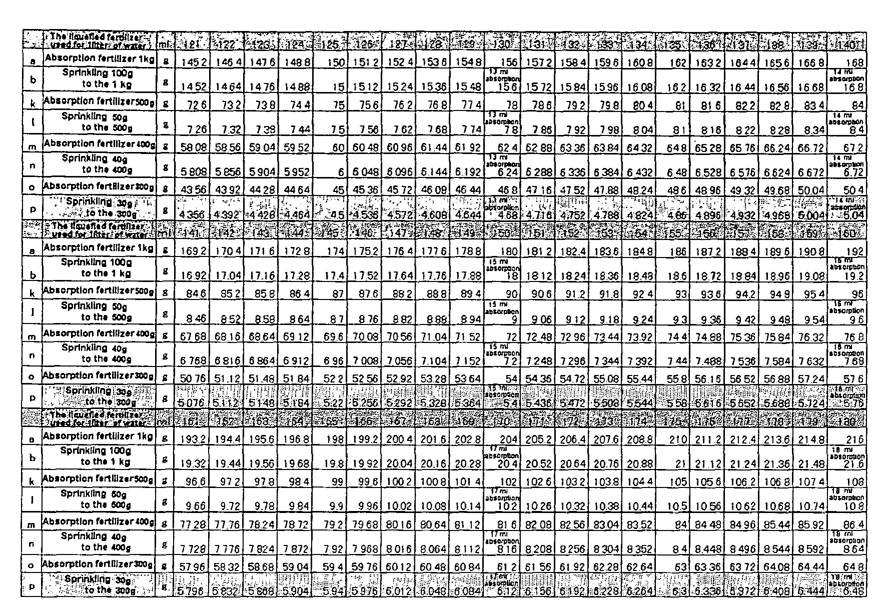

Although growth of the plant of a resin culture medium carries out growth with completely same use of ion-exchange resin manure and use of liquid manure and it seems whether to be the same fertilizer concentration, the A 0.1g nitrogen volume of ion-exchange resin is 1/5000mL of the B 1mL manure of liquid manure, and is the weight of 1/100. It hits 1/10 of the weight of 1mL manure at 1g.
The nitrogenous fertilizer of ion-exchange resin 0.1-10g serves as weight of 1/100 of the all manure of 1-100mL of liquid manure.
Since growth of a plant is resembles at the case of 0.1 - 1g, 1 - 10mL and 1.1 - 2g, 11 - 20mL and 2.1 - 3g, 21 - 30mL and 3.1 - 4g, 31-40mL are used, it is referred to as A and B and a table indicates.

In a 300g plant culture medium, the 3.33 times as many culture medium as ion-exchange resin of A has been equivalent to the plant good growth culture medium. This 3.33 times culture medium is directions for use currently used by the liquid manure culture medium.
In this culture medium, 3.33 times of the 0.1g nitrogenous fertilizer of A are a culture medium which Vinca rosea makes very good growth for about ten days at 0.4g in 0.33g.

It is set to 0.0012g by 0.00036g x 3.33 times this nitrogen volume of 0.1g of this and it is 0.3g - 0.4g manure culture medium.
3.33 times of the 0.2g nitrogenous fertilizer of A are a culture medium which a mini rose can grow for about ten days in 0.7g in 0.67g.
It is set to 0.0024g by 0.00072g x 3.33 times this nitrogen volume of 0.2g, and is 0.6g - 0.9g manure culture medium.

3.33 times of 0.3g of A equals 1g and it is set to 0.0036g by 3.33 times with a nitrogen volume 0.00108g.
This 0.9g - 1g is culture media which root most, and a saintpaulia is a culture medium grown while attaching a flower bud. 3.33 times of 0.33g equals 1.1g. This culture medium is 11 times of 0.1g of culture media.

3.33 times of 04g of A equals 1.33g and 1.4g becomes a conformity culture medium and they becomes a good growth culture medium of a mini rose. They are 1.3 - 1.4g culture medium. 3.33 times of 0.5g of A are 1.67g, and 1.7g becomes a conformity culture medium and they becomes a good growth culture medium of a mini rose in this culture medium. 1.6 - 1.9g become a growth range.

3.33 times of 0.6g of A equals 1.998g, and is equivalent to 2g.
3.33 times of 0.7g of A equals 2.33g, 2.4g becomes a conformity culture medium and 2.3 - 2.4g become a growth culture medium.
3.33 times of 0.8g of A equals 2.664g, 2.7g becomes a growth culture medium, and 2.6g - 2.8g become a growth culture medium.
3.33 times of 0.9g A equals 2.99g, and is equivalent to 3g.

3.33 times of 1.0g of A equals 3.33g, 3.4g becomes a conformity culture medium and 3.3g - 3.4g become a growth culture medium.
3.33 times of 1.1g of A equals 3.66g, 3.7g becomes a conformity culture medium and 3.6 - 3.8g become a growth culture medium.
3.3 - 3.4g of 3.33 times of 1g ion-exchange resin becomes the nitrogen volume of 0.012g and becomes 10 times culture media of 0.33g.
0.1g becomes 3.33 times the four cycles of 0.4g by 3.33 times cycle, 0.2g becomes one 3.33 times the seven cycles of 0.7g, and 0.3g becomes a cycle of a 1g multiple by 3.33 times.
Also in the ion-exchange resin manure culture medium, it is 3.33 times and 10 times the same cycle of 300g of liquid manure culture medium of this, and has become the growth as which the culture medium of the cycle may be sufficient.

The ingredient table of undiluted solution 5:10:5 of liquid manure expresses the nitrogen volume contained in the liquid manure of B in C of chart 1.
All the manure, such as potassium phosphate currently used, is 23.09%, the nitrogenous fertilizer of these is 5%, and a nitrogen content is 0.2165%.
This has indicated the nitrogenous fertilizer included in 1mL = 1.2g liquid manure even for 1 - 100mL by C.

The nitrogen volume contained in the liquid manure of C becomes about 22 times 21.66 times as compared with the nitrogen volume of 0.1g of A.
2.2g of ion-exchange resin manure is used, and it becomes 1mL of liquid manure. Although a mini rose temporally grows, its growth doesn't continue on 2.2g of manure-culture-medium culture medium. In twice, it is set to 4.4g by 2mL of use, and there will be too much quantity and a resin culture medium will look dirty with manure, such as potassium. In consideration of these, the nitrogenous fertilizer which hits about 22 times is calculated as liquid manure of 1/10, and D indicates it. Ion-exchange resin is raising the growth effect with very little manure.
By this, 2.165 times of 0.1g of A equals 0.22g, and it is actually 1/10 of the nitrogenous fertilizer of C.

2.165 times of 0.2g of A equals 0.43g, and D is equivalent to 2mL of B.
2.165 times of 0.3g of A equals 0.65g and it is 3mL, 2.165 times of 0.4g of A equals 0.87g and it is 4mL.
0.7g, 0.65g and 0.87g turn into 0.9g with measurement of a unit.
By 2.165 times as many use, 0.3g - 0.4g of ion-exchange resin of A serves as manure which is 3mL - 4mL of liquid manure at about 0.6g - 0.9g.
2.165 times of 0.5g of A equals 1.1g and it is 5mL 2.165 times of 0.6g of A equals 1.3g and it is 6mL 2.165 times of 0.7g equals 1.5g and it is 7mL 2.165 times of 0.8g equals 1.7g and it is 8mL.
2.165 times of 0.9g equals 1.95g and it is 9mL 1.3g - 1.95g is 6mL - 9mL. It is with the manure equivalent to 6mL - 9mL, 3.33 times of the 300g culture medium of liquid manure.

2.165 times of 0.5g equals 1.1g and it is 5mL 2.165 times of 1.0g equals 2.2g and 10mL. Using 0.1 - 1.0g of ion-exchange resin of A 2.165 times, as 0.22-2.2g culture medium, and is culture medium of 1mL - 10mL of liquid manure. Using 2.165 times of ion-exchange resin of 1.1 - 2.0g of A as 2.4g - 4.3g culture medium, and becomes a culture medium of 11-20mL of liquid manure. Using 2.165 times of 2.1 - 3.0g of A, it becomes 4.6-6.5g and becomes 21-30mL of liquid manure.
In 2.165 times culture media, it becomes a 3-4mL culture medium by a 0.65-0.9g culture medium.

2.165 times of 1.1g equals 2.38 and becomes 2.4g, it is 11mL.
2.165 times of 1.2g equals 2.6g, it is 12mL, and 2.165 times of 1.3g equals 2.8g, it is 13mL, and 2.165 times of 1.4g equals 3.1g. It is 14mL of liquid manure, in the 14mL plant culture medium of liquid manure is a good growth culture medium and growth of a mini rose turns into very good growth in a 1.4g culture medium but the growth in which growth of a pot flower is not much good does not become in this 3g culture medium.
2.165 times of 1.3g equals 2.8g, 2.165 times of 1.35g equals 2.9g. Therefore, in the culture medium of 2.4g-2.8g, growth of the mini rose is possible same as 1.4g-1.8g, and it is a culture medium equivalent to 11-13mL.
In 0.65g-0.9g, it becomes a culture medium of 3mL - 4mL, and 0.9g is 4mL, 1.8g which is twice is 8mL manure.
2.165 times of 0.65g equals 1.4g, and 2.165 times of 0.9g equals 1.95g.

Twice of 0.65g equals 1.3g, twice of 0.7 equals 1.4g, twice of 0.8 equals 1.6g, twice of 0.9g equals 1.8g, the pot flower serves as good growth in each culture medium, the mini rose in 1.4g and a 1.7g culture medium serves as very good growth but growth falls a little in 1.9g and it does not become not much good growth in 2g.
It becomes the good growth in 2.7g-3g.
By this, it becomes a culture medium of 6-9mL of liquid manure by 1.3g-1.9g.
Growth of the pot flower of a mini rose or the like turns into the best growth in 1.4g and 1.7g.
Also in this culture medium, it is the good growth in 1.3g-1.4g, 1.6g-1.9g.
In a 300g culture medium, 2.7g-3g which is 3 times of 0.9g serves as a good growth culture medium.

1.8- 1.9g manure make a 9mL growth culture medium.
It becomes 1.8g growth which is twice of 0.9g, and 2.7g which is 3 times, 3.6g which is 4 times and it becomes a culture medium of a multiple.
Although it becomes a conformity culture medium by 0.3g-0.4g, 0.6-0.9g, 1.3-1.4g, 1.6g-1.8g, 2.3-2.4g, 2.6g-2.8g, 3.3-3.4g, 3.6g-3.8g, 4.3- 4.4 g cycle, actual 2.2g becomes a pot flower and 4.4g becomes a conformity culture medium of a flower.
The culture medium of multiple 1g such as 1g, 2g, 3g, and 4g cannot say a good culture medium same as liquid manure.

As shown in Table 17, before change of an ingredient, the bulb of amaryllis can bloom twice according to combined use of 0.1g and 4mL of liquid manure.
Flowers, such as lily, mini rose, dendrobium and cattleya, herb, hydrangea, margaret, saintpaulia, pansy, petunia, dianthus superbus var. longicalycinus and a pot flower, a bulb and flowering trees and shrubs became good growth. By chart 1, by the 3.33 times and 10 times cycle which is the same as liquid manure, ion-exchange resin of A in a 0.3-0.4g, 0.7-1.0g, 1.3-1.4g, 1.7-2.0g, 2.3-2.4g, 2.7-3.0g, 3.3-3.4g, 3.7-4.0g, in conformity culture medium for pot flowers especially such as cyclamen, pansy, primula, western orchid, a herb, a saintpaulia, and gerbera are 0.65 - 1.0g, especially 1.4g and 1.7g are especially good culture media for a mini rose. And 1.8g or more which is twice of 0.9g are good culture media for especially bulb grass, a lily, and tulip.
Although by this the pot flower, a western orchid, herb and flowering trees can grow in 1.3-1.4g and 1.7-2.0g, a conformity culture are 2.7-3.0g and 3.7-4.0g for a flower, Chrysanthemum morifolium, a bulb, rose and Senecio cruenta. Ion-exchange resin manure for a flower, Chrysanthemum morifolium and view leaf demonstrate utility effect by use of a very small quantity.
At a foliage plant in a 300g culture medium, using 0.3 - 0.5g is good, and at 0.9g since manure is too strong, it must be used as separate from the plant of a flower and Chrysanthemum morifolium.

[Table 17]

**TABLE 17**

| | | | |
|---|---|---|---|
| lon-exchange resin nutrient, per 1 L: | | | |
| Nitrate Nitrogen | 15 g | Ammonia Nitrogen | 3 g |
| Phosphoric acid | 7 g | Potassium | 15g |
| Very small quantity amount of ingredient included: iron, manganese, copper, zinc, boron, molybdenum, or the like. | | | |
| In addition, fertilizer ingredient solved in water by adding ion-exchange resin 0.5g to 1 L of distilled water and leaving 1 week: | | | |
| Total Nitrogen | | 1.6mg/l | |
| Phosphoric acid | | 0.5mg/l | |
| Potassium | | 1.5mg/l | |

In chart 2, 1-100mL of liquid manure is used for a resin culture medium, and the content of the manure included in a resin culture medium is disclosed.
In the experiment, the resin culture medium 1kg - 100g which added liquid manure to 11 of pure water, and carried out adsorption of the solution of this manure and the culture medium which sprinkled and uses the solution of 10% of the liquefied fertilizer for 1kg - 100g of culture media which absorbed only pure water, and it checks in the success or failure of a plant is grown to the growth, and is considered as conformity culture medium.
The used liquid manure undiluted solution contains Chisso, phosphoric acid, and potassium with 5%, 10%, and 5% of all the manure, and it is explained based on 1mL = 1.2g manure. The upper row of chart 2 is liquid manure used for a-t. a-b, 1kg, k-1, 500g, and m-n400 g, o-p-300-g are explained.

At a, 1.2g of manure contained in 1 mL is added to 1mL of liquid manure in 1L of pure water.
The 1kg culture medium to which it stuck the whole solution whole circle of this manure serves as 1.2g manure at 1.2g/1001 mL x 1000g.
At b, the manure content of the 1kg adsorption absorption culture medium which sprinkled 100g liquid manure 10% becomes 0.12g at 1.2g/1001 mL x 100g to 1kg which absorbed pure water.
Henceforth, in the culture medium of hydrophilic resin, although liquid manure and water are absorption culture media, liquid manure is made into the culture medium which carried out adsorption, and is distinguished, and an adsorption absorption culture medium is called sprinkling culture medium.
At k, the 500g adsorption culture medium which absorbed the solution which added 1mL to 1L of pure water became 0.6g manure at 1.2g/1001 mL x 500g, and at 1, culture medium sprinkled 50g and which was sprinkled 500g is 0.06g manure in 1.2g/1001 mL x 50g.
At m, a 40g adsorption absorption culture medium serves as 0.48g manure at 1.2g/1001 mL x 400g, and at n it becomes 0.048g manure at 1.2g/1001 mL x 40g in a 40g sprinkling culture medium.
At ○ 300g adsorption absorption culture medium, it becomes 0.36g manure at 1.2g/1001 mL x 300g, and at p, it becomes 0.036g manure at 1.2g/1001 mL x 30g in a 30g slushing culture medium.
Although it is 2mg = 2.4g manure content in 2mL similarly, Add 2mL to 1L of pure water, and adsorption absorption culture medium which adsorbed this moisture of a 1kg of the whole circle serves as 2.4g manure content at 2.4g/1002 mL x 1000g.
At b, it becomes the sprinkled culture medium of 100g of solution which added 2mL in 1L of water with 0.24g manure at 2.4g/1002 mL x 100g.
At k, it is 1.2g manure in 2.4g of 500g adsorption absorption culture media/1002 mL x 500g, and at l the sprinkled 50g culture medium serves as 0.12g manure at 2.4g/1002 mL x 50g.
At m, a 400g adsorption absorption culture medium is 0.96g manure in 2.4g/1002 mL x 400g, and at n 40g sprinkling culture medium serves as 0.096g manure at 2.4g/1002 mL x 40g .
At o, a 300g adsorption absorption culture medium serves as 0.72g manure at 2.4g/1002 mL x 300g, and at p, a 30g sprinkling culture medium serves as 0.072g manure by 2.4g/1002mL x 30g.
Thus, the manure of a resin culture medium is raising the concentration of liquid manure for every mL, and 1mL = 1.2g manure is set to 2mL = 2.4g, and serves as involution of the manure to contain.
Since the sprinkling culture medium is 1/10 of an adsorption absorption culture medium, a sprinkling culture medium of b, 1, n, and p which sprinkled the solution of 1mL of sprinkling culture media, when 10mL, 10 times of each culture medium is used
It turns out that the manure of a b-p sprinkling culture medium becomes an equivalent amount with the manure of a culture medium in which each adsorption absorption culture medium a, k, and m and o adsorbed 1mL, and it becomes equivalent the 10mL sprinkling culture medium of b, l, n, and p to a 1mL adsorption absorption culture medium.
Also in sprinkling-culture-medium of 2mL of solution b, 1, n, and p, since it is 1/10 of an adsorption absorption culture medium, when 20mL, 10 times, is used, the manure of the sprinkling culture medium of sprinkling-culture-medium b-p becomes an equivalent amount as 2mL adsorption absorption culture medium a, k, and m and the manure of o, and it turns out that it is equivalent.
Since culture medium b, 1, and n which sprinkled 3mL of solution similarly, and p are also 1/10 of an adsorption absorption culture medium, if 30mL, 10 times, is used, the manure of sprinkling-culture-medium b-p becomes an equivalent amount as 3mL adsorption absorption culture medium a, k, and m and the manure of o, and it can be said that it is equivalent to a 3mL adsorption absorption culture medium.
Although the sprinkling culture medium after 4mL can also say the same thing
5mL of adsorption absorption culture media 4mL of adsorption absorption culture media as well as a 40mL sprinkling culture medium A 50mL sprinkling culture medium, An equivalent amount 6mL of absorption culture media / as for a 70mL sprinkling culture medium and an 8mL adsorption absorption culture medium, in a 60mL sprinkling culture medium and a 7mL adsorption absorption culture medium, an 80mL sprinkling culture medium and a 9mL adsorption absorption culture medium turn into a 90mL sprinkling culture medium, and a 10mL adsorption absorption culture medium as a 100mL sprinkling'culture medium.
Although these adsorption culture media are in the state where high-concentration manure has always collected, they can be grown within a high-concentration manure culture medium by the bactericidal action which approaches the adsorbing action of resin unlike a soil culture medium.
Within these high-concentration soil culture media and liquid manure, usually long growth will get worse in about two weeks difficulty.
although the other water holding properties and property of drainage of light or temperature are important for growth of a plant, a nonionic resin culture medium approaches the same adsorbing action as ion-exchange resin it can drainage-nature-culture-medium-ize and can grow.
This property of drainage is a bactericidal action.

In the growth culture medium of liquid manure, they are a sprinkling culture medium and an adsorption culture medium with growth of one 3.33 times the cycle of this like ion-exchange resin.
It is 3-4mL, 6-9mL, and 10-11mL, and has become a culture medium which is the cycle of 13-14mL, 16-19mL, and 20mL. Although use both for a pot flower and a flower is possible for this adsorption culture medium at the culture medium of property of drainage
Although it is an aptitude culture medium especially at growth of a flower, since fertilizer concentration is high and it is possible that resin starts a water-repelling operation and a bactericidal action falls, if the manure of about 10% of culture medium is added too much and titanium is used together, it will become possible to maintain good growth.
Use of this titanium has a bactericidal effect continued about 60-130g by a 300g culture medium.

Although the mixed medium of 1 to 1 of a polyalkylene oxide and polyvinyl alcohol running dry is early, this is both carrying out adsorption use of the liquid manure at resin. They are directions for use which hold this running dry for a long time.
The cultivation which lengthened this manure maintenance and was made into the alternative culture medium of substitution of soil or a hydroponics culture medium is possible.
Although it tends to seem in the resin culture medium that it is the same as the case where manure is sprinkled with the case where absorption is carried out, it turns out that the culture medium sprinkled so that the content of manure might be understood in a table is about 10% of manure content of an adsorption absorption culture medium.

When the numerical value of the manure content of the adsorption culture medium of a 1kg which includes 1mL = 1.2g manure in chart 2, and 0.12g of sprinkling culture media (10% of b and 100g) sees the motion which changes in connection with the weight to be used later on
In k500kg adsorption absorption culture medium, it is located in 2mL 1.2g, and is set to 2mL 0.12g by 10% of 1.50g sprinkling culture medium.
The 400g adsorption absorption culture medium of m is located in 2.5mL, and is set to 1.2g, and the 40g sprinkling culture medium of n is also set to 0.12g at 2.5mL.
The adsorption adsorption absorption culture medium of o 300g is located in 3-4mL, and is set to 1.2g at 3.3mL, and a p30g sprinkling culture medium is also set to 0.12g at 3.3mL.
1mL = 1.2g manure is the culture medium which 1kg of a absorbed the whole circle.
As for the 500g adsorption absorption culture medium of this k, the 400g adsorption culture medium of m is set to 1.2g 50% of 0.6g and 0.06g of 10% of a sprinkling culture medium by a 500g culture medium in 1/3 of 1kg in 1/2 of 1kg of weight by a 1kg culture medium 1/2.5 or 300g.
In a 400g culture medium, 1.2g 40%, it is set to 0.48g and set to 0.048g of 10% of the sprinkling culture medium.
In a 300g culture medium, 0.36g and 10% of the sprinkling culture medium and 0.036g become manure content 1.2g 30%.

When manure is doubled by a 500g culture medium, 2.5 times by a 400g culture medium and 3.33 times are used by a 300g culture medium, it will become the same manure content as a 1kg culture medium, and will become the same culture medium.
The weight and fertilizer concentration of resin which use the fertilizer concentration of a resin culture medium become an inverse proportion.

The 1kg adsorption absorption culture medium of a containing 2mL = 2.4g manure, and 0.24g of sprinkling culture media of 100 g of b of 10% are located in 2.4g at 4mL by the 500g adsorption absorption culture medium of k, and 50g sprinkling culture media of 1 are also set to 0.24g at 4mL. The 400g adsorption absorption culture medium of m and the 40g sprinkling culture medium of n are located in 2.4g and 0.24g at 5mL, the 300g adsorption absorption culture medium of o is located in 2.4g at 3.33 times and about 6.7mL, and the 30g sprinkling of p is also located in 0.24g manure at about 6.7mL.

3.6g of 1kg adsorption absorption culture media of a containing 3mL = 3.6g manure content and 0.36g of 100g sprinkling culture media of b fly 4mL and 5mL, are located in 3.6g of k500g adsorption absorption culture media at 6mL, and hit 0.36g of 50g sprinkling culture media of 1.
At the 400g adsorption absorption culture medium of m, it is set to 3.6g at 7.5mL, and a n40g sprinkling culture medium also corresponds to the position of 0.36g at 7.5mL. In the adsorption absorption culture medium of g 300g, the 30g sprinkling culture medium of p also serves as a position of 0.36g by 10mL in 3.6g at 10mL, and it hits a 1mL adsorption absorption culture medium.

4.8g of 1kg adsorption absorption culture media of a and 0.48g of 100g sprinkling culture media of b containing 4mL = 4.8g manure are located in 4.8g by 8mL 3 times as many k500g adsorption absorption culture media, and are located in 0.48g 8mL of 50g sprinkling culture media of 1.
The 400g adsorption absorption culture medium of m is located in 0.48g of 4mL sprinkling culture media 10mL of 2.5 times of 4.8g and 40g of n, and it is located in 4.8g in the 300g adsorption absorption culture medium of o at 3.33 times of 4mL.
The 30g sprinkling culture medium of p is located in 0.48g at about 13.3mL.

The 500g adsorption absorption culture medium of k is located in twice of 10mL of 6g by the 1kg adsorption absorption culture medium of a containing 5mL = 6g manure, and the 100g sprinkling culture medium of b, and 10mL of 50g sprinkling culture media of 1 are also located in 0.6 g.
By the 400g adsorption absorption culture medium of m, even the 40g sprinkling culture medium of n is located in 0.6g in 6g in 12.5mL middle at 12.5mL.
Furthermore, by the 300g adsorption absorption culture medium of o, it is located in 6g at about 16.6mL, and is located in 0.6g at the 30g sprinkling culture medium of p at about 16.6mL.

In the 500g adsorption absorption culture medium of k, 0.72g of the 1kg adsorption absorption culture medium of a containing 6mL = 7.2g manure and the 100g sprinkling culture medium of b of 50g sprinkling culture media of l are located in 0.72g in 12mL 7.2g.
In the 400g adsorption absorption culture medium of m, it is located in 0.72g in 15mL 7.2g at the 40g sprinkling culture medium of n.
The 300g adsorption absorption culture medium of o is located in 20mL 7.2g, and is equivalent to a 2mL adsorption absorption culture medium in 20mL 0.72g in 30g sprinkling culture media of p.

0.84g of the 1kg adsorption absorption culture medium of a containing 7mL = 8.4g manure and the 100g sprinkling culture medium of b is located in 8.4g at 14mL at the 500g adsorption absorption culture medium of k, and 50g sprinkling culture media of 1 are also set to 0.84g at 14mL.
At the 400g adsorption absorption culture medium of m, it is located in 8.4g in 17.5mL of 17-18mL middle, and even the 40g sprinkling culture medium of n is located in 0.84g at 17.5mL.
At the 300g adsorption absorption culture medium of o, it is located per 8.4g at 23.3mL.
30g sprinkling culture media of p are also equivalent to 0.84g at 23.3mL.

The 1kg adsorption absorption culture medium containing 8mL = 9.6g manure of a, 0.96g of the 100g sprinkling culture medium of b is equivalent to 0.96g of 9.6g of 16mL and 50g of sprinkling culture media of 1 of 0.96g, n of k.500g adsorption absorption culture media 9.6g in 40g of sprinkling media by 20mL of 400g adsorption absorption culture media of m.
At the 300g adsorption absorption culture medium of o, it is located in 9.6g at about 26.6mL, and hits 0.96g at about 26.6mL by 30g sprinkling culture media of p.

As for the 1kg adsorption absorption culture medium containing 9mL = 10.8g manure of a, 10.8g of 100g sprinkling culture media of b are located in 1.08g of sprinkling culture media of 18mL of k500g adsorption absorption culture media 10.8g and 1.50g.
In the 400g adsorption absorption culture medium of m, it is set to 10.8g at 22.5mL, and 40g sprinkling culture media of n are also located in 1.08g.
In the 300g adsorption culture medium of o, 30g sprinkling culture media of 10.8g and p are also set to 1.08g at 30mL, and it becomes a 3mL adsorption culture medium.

It is considered as the 1kg adsorption absorption culture medium containing 10mL = 12g manure of a, and 100g sprinkling culture medium 1.2 of b is located in 20mL 12g by the 500g adsorption absorption culture medium of k, and the 50g sprinkling culture medium of 1 is also equivalent to 1.2g at 20mL.
As for the 400g adsorption absorption culture medium of m, 40g sprinkle culture media of n are located in 1.2g in 12g at 25mL by 25mL.
At the 300g adsorption absorption culture medium of o, 30g sprinkling culture media of p also become 1.2g by about 33.3mL in 12g at about 33.3mL.

As for the 1kg adsorption absorption culture medium of a and 1.32g of 100g sprinkling culture media of b containing 11mL = 13.2g manure in the 500g absorption culture medium of k is equivalent to 13.2g of twice of 22mL, 50g sprinkling culture media of 1 are also located in 22mL 1.32g.
The 400g adsorption absorption culture medium of m is located in 1.32g at 27.5mL, the 40g sprinkling culture medium of n is located in 13.2g at 27.5mL.
It is located in 13.2g at about 36.6mL by the 300g adsorption absorption culture medium of o, and 30g sprinkling culture media of p are also equivalent to 1.32g at about 36.6mL.

As for the sprinkling culture medium of 1 of 500g of twice as many adsorption absorption culture media of k as this 24mL 14.4g and 50g, the 1kg adsorption absorption culture medium of a and 1.44g of 100g sprinkling culture media of b containing 12mL = 14.4g manure are located in 1.44g at 24mL.
The 400g adsorption absorption culture medium of m is set to 14.4g in 30mL, and this 40mL sprinkling culture medium is also equivalent to 1.44g at 30mL.
The 300g adsorption absorption culture medium of o becomes a position of 40mL, and is located in 14.4g in 1.44g of 40mL of 30g sprinkling culture media of h.
A 12mL adsorption absorption culture medium 1kg becomes a position of 40mL at 300g by becoming a position of 30mL in 400g, and the sprinkling culture medium changing in the adsorption absorption culture medium which is 3mL, and serves as the same manure content as a 12mL adsorption culture medium, and the sprinkling culture medium also is a 4mL absorption culture medium.

The 1kg adsorption absorption culture medium of a and 1.56g of 100g sprinkling culture media of b containing 13mL = 15.6g manure are located in 26mL of 1.56g at the 500g adsorption absorption culture medium of k in 15.6g at 26mL for the 50g sprinkling culture medium of 1.
The 400g sprinkling culture medium of m is located in 32.5mL, and the 40g sprinkling culture medium of n is also located in 1.56g in 15.6g.
It is located in about 43.3mL and the 30g sprinkling culture medium of p is also located in 1.56g at about 43.3mL in 15.6g at the 300g adsorption absorption culture medium of o.

The 1kg adsorption absorption culture medium of a and the 100g sprinkling culture medium of b containing 14mL = 16.8g manure are located in 28mL 1.68g by the 50g sprinkling culture medium of 1 in 28mL of 16.8g at the 500g adsorption absorption culture medium of k.
As for the 400g adsorption absorption culture medium of m, the 40g sprinkling culture medium of n is located in 35mL 1.68g in 35mL 16.8g.
As for the 50g sprinkling culture medium of p, the 300g adsorption absorption culture medium of o is located in 1.68g in 16.8g at about 46.6mL by about 46.6mL.

1.8g of the 1kg adsorption absorption culture medium of a containing 15mL = 18g manure, and 15mL of 100g sprinkling culture media of b although the 30mL sprinkling culture medium 18g and 50g of 1 is located in 1.8g at 30mL at the 500g adsorption absorption culture medium of k
This sprinkling culture medium also hits a 3mL adsorption absorption culture medium.
As for the 40g sprinkling culture medium of n, the adsorption absorption culture medium of 400 of m is located in 37.5mL 1.8g in 18g at 37.5mL.
As for the 30g sprinkling culture medium of p, the 300g adsorption absorption culture medium of o is located in 18g per 1.8g and in a 5mL adsorption absorption culture medium at 50mL by 50mL.

At the 500g adsorption absorption culture medium of k, as for the 1kg adsorption absorption culture medium of a and 1.92g of 100g sprinkling culture media of b containing 16mL = 19.2g manure, the 50g sprinkling culture medium of 1 also serves as a position of 1.92g at 32mL in 19.2g by 32mL.
At the 400g adsorption absorption culture medium of m, 1.92g of 40g sprinkling culture media of n have also hit the adsorption absorption culture medium of 4 mL by 40mL in 19.2g at 40mL.
As for the 300g adsorption culture medium of o, 30g sprinkling culture media of p are equivalent to 1.92g in 19.2g at about 53.3mL.

At the 500g adsorption absorption culture medium of k, 2.04g of the 1kg adsorption absorption culture medium of a containing 17mL = 20.4g manure and the 100g sprinkling culture medium of b of 50g sprinkling culture media of 1 are also located in 2.04g in 20.4g by 34mL at 34mL.
At the 400g adsorption absorption culture medium of m, the 40g sprinkling culture medium of n also becomes 2.04g by 42.5mL in 20.4g at 42.5mL.
As for 30g sprinkling culture media of p, the 300g adsorption absorption culture medium of o is located in 2.04g in 20.4g at about 56.6mL.

As for the 500g adsorption absorption culture medium of k, 2.16g of the 1kg adsorption absorption culture medium of a containing 18mL = 21.6g manure and the 100g sprinkling culture medium of b of 50g sprinkling culture media of 1 are also located in 2.16g at 36mL in 36mL 21.6g.
The 400g adsorption absorption culture medium of m is located in 45mL of 21.6g, and the 40g sprinkling culture medium of n is also equivalent to 45mL 2.16g.
As for the 30g sprinkling culture medium of p, the 300g adsorption absorption culture medium of o is located in 60mL 2.16g in 18mL 60mL of 3.33 times of 21.6g.
About 2.16g of this sprinkling culture medium is a 300g adsorption absorption culture medium of 6mL.

2.28g of the 1kg adsorption absorption culture medium of a containing 19mL = 22.8g manure and the 100g sprinkling culture medium of b is located in 22.8g at 38mL, twice, by the 500g adsorption absorption culture medium of k, and the 50g sprinkling culture medium of 1 also corresponds to the position of 2.28g at 38mL.
As for the 400g adsorption absorption culture medium of m, the 40g sprinkling culture medium of n is also equivalent to 2.28g at 47.5mL in 22.8g by 47.5mL, 2.5 times.
As for the 300g adsorption absorption culture medium of o, 30g sprinkling culture media of p are also equivalent to 2.28g at about 63.3mL in 22.8g by about 63.3mL.

At the 500g adsorption absorption culture medium of k, even 2.4g of the 1kg adsorption absorption culture medium of a containing 20mL = 24g manure and the 100g sprinkling culture medium of b of 50g sprinkling culture media of l are located in 2.4g by 40mL in 24g at 40mL of twice.
As for the 40g sprinkling culture medium of n, the 400g adsorption absorption culture medium of m is located in 2.4g at 50mL in 24g by 50mL, 2.5 times.
The 300g adsorption absorption culture medium of o is set to 24g at about 66.6mL of about 3.33 20mL times, and 30g sprinkling culture media of p are also located in 2.4g at 66.6mL.
In chart 2, by a 1kg culture medium, the degree concentration of manure becomes high very much, and since 20mL of the same use as a 300g culture medium is difficult, cautions are needed.
In the adsorption culture medium of a 1kg culture medium, it becomes use up to about 4 to 6mL.
Also in a sprinkling culture medium, it becomes to 20mL with 10mL and a flower by a pot flower.

In the plant experiment, the solution of 50g liquid manure was given to a 300g resin culture medium at the beginning, the bad culture medium of drainage was made from the excess of moisture, and growth of a plant has got worse.
The quantity of this was able to be decreased and it was able to be made 10% of growth as which 30g may be sufficient.
Unlike the culture medium with water holding property of hydroponics, growth of the plant of a resin culture medium makes the amount of the manure used 10% in order to worsen growth with superfluous moisture, but if a plant is approached, there is also a plant which likes 7 to 8% of drainage nature culture medium.
In the soil culture medium, when moisture is given so much, it would be drained from the pot bottom and root rot will be prevented, but a resin culture medium is hilling in which resin is storing manure and moisture, and this hilling is sterilization hilling which adjusts a water holding property and property of drainage.
Property of drainage becomes important for especially growth of a plant, and it can be said that the adsorption absorption function of this hilling reacts to chlorine or light, and makes the bactericidal action effective.
Soft pot flowers, flowers, or the like of a root, such as a fern Adiantum saintpaulia of the plant with water holding property grown by a soil culture medium, or the like and a Dianthus superbus var. longicalycinus pansy Petunia primula of a plant with drainage characteristic,
It becomes a cause by which accumulate and give moisture since it is hard to absorb moisture from resin, or an adsorbing action always is not made in the acrylic resin culture medium which repels water, and superfluous moisture makes the flower which bloomed finish early although moisture must be made easy to absorb and it must give, or root rot is started.
For this reason, moisture must be made easy to absorb by use of polyvinyl alcohol, and a water holding property must be controlled.
This property of drainage and water holding property are adjusted by the mixture ratio of a polyalkylene oxide and polyvinyl alcohol.
In plant with water holding property, it can be made the growth for which it is possible to set the increase of a polyalkylene oxide and two pairs of 1 to 1 to 1 or 3 to 1 at growth of the plant which grows well by setting the increase of polyvinyl alcohol and 1 to 1 to three in one pair two or one pair, and likes property of drainage. Although the quantity of 30g of manure water can be increased to 50g and fertilizer concentration can also be fallen with the plant which likes a water holding property although especially the bactericidal action by property of drainage is important for growth of the plant of a resin culture medium, as for a little plants which like property of drainage, growth maintenance becomes difficult for a long time by 10% of fertilizer component.
For this reason, it is considered as a little use and fertilizer concentration must be raised.
By resin's adsorbing manure 100%, and use of conventional hydrophilic resin making this a culture medium, and making it into a soil water holding agent, although it was the method of mixing use, running dry was rash in soil by carrying out adsorption use to these resin, and it had to be given once more again in one month.
1 time and quick adding water were water retention agent which approaches acrylic resin needed in one month with reduction of resin.
Maintenance of longer manure or water was attained at the use for sprinkling of manure.
This soil was sprinkled, the bactericidal action and the water holding operation demonstrated the effect for manure by about 10 to 30% of use of resin, and use became good directions for use which exceed mixing use in soil.
In the use of a water retention agent and the vegetable culture medium of resin which are mixed in soil, running dry had changed early also in the adsorption use of nonionic resin.
In consideration of these, the maintenance of longer manure and water of use of a little manure of a sprinkling manure culture medium was attained.
With the manure of this sprinkling culture medium, and the combination of an adsorption culture medium, it doubles with a use and use becomes possible.

In the experiment which asks for the conformity manure of the plant of chart 3, 300g of resin was used and it was the weight of 1/3 of 1kg.
In this culture medium, it is considered as the growth effect of the same manure as the time of using 1kg by use of 3.33 times as much manure as the manure used at 1kg.
At the soil culture medium, 1mL and 1000 times as many manure are given in one month 8 times by 2mL and 500 times 4 times in one month.
This operation is substituted for a resin culture medium at once, and two months, three months, and manure are held, and let a soil culture medium be a vegetable cultivation method which carries out water retention sterilization. Conventionally, adsorption use of manure or the water has been carried out in use of hydrophilic resin.
running dry is rash by this adsorption use, and adding water is carried out in about one week - one month when there was nothing, it did not become.
It became possible to make this operation into the long period of time of three months and six months or more.

### (Chart 3)

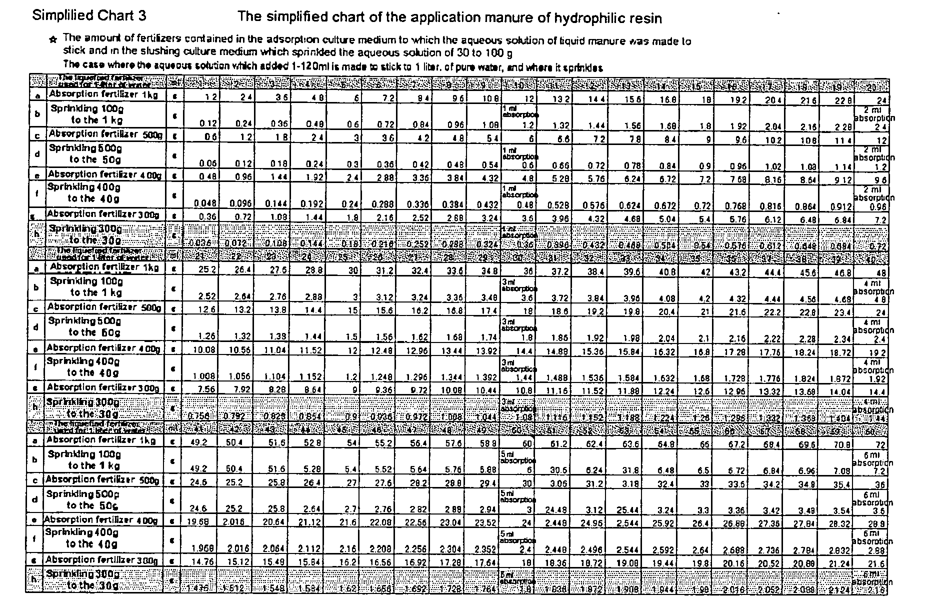

If growth of a plant is seen according to the chart of the manure of chart 2, the manure (1mL and 0.12g) which sprinkled and uses 100g manure by the 1kg culture medium of b will become 0.12g at 3.3mL, 3.33 times, at 300g and 30g sprinkling culture media of p, and 3.3-4mL will become a conformity culture medium.
It becomes growth culture media, such as a pot flower, a western orchid and herb, a bulb, and 1000 times as many flowering trees and shrubs, 1mL of soil culture media, growth becomes possible also in a 1-4mL culture medium, and especially 4mL becomes a good culture medium.

It becomes a culture medium in which plants, such as a flower of 0.072 g and a view leaf which it hears, can also grow 2-4mL 300g and 2mL of 30g sprinkling culture media. Thereby, 1mL of 2-4mL culture media turn into a growth culture medium with as common 2mL as plants, such as a view leaf and 500 times flowers, and - which it hears, besides 1000 times plants.
Especially, in 4mL, it becomes a pot flower, western orchid, flowering trees and shrubs, bulbs, etc., such as Dendrobium herb primula -, and becomes common culture media, such as Vinca rosea and a Dianthus superbus var. longicalycinus pansy, with a fern Adiantum pumila or a flower at a view leaf.

2mL of 1kg of 100g sprinkling culture media of b and 0.24g manure become 0.24g at 6.7mL, 3.33 times, at the sprinkling culture medium of 300 g.30g, and 6-8mL 7mL becomes a growth culture medium of a flower and a view leaf, and - rose that hears in a conformity culture medium especially.
Also in this 6-8mL culture medium, it becomes common culture media, such as a view leaf and a flower of plants, such as a pot flower, a western orchid and herb, flowering trees and shrubs, and 1000 times as many bulbs, and 500 times as many 2mL plants, and - which it hears, 1mL of soil culture media.

In 300g and 30g sprinkling culture media, 3mL of 1kg of 100g sprinkling culture media of b and 0.36g manure suit 10mL of 3.33 3mL times, and serve as a culture medium of 9-10mL and 0.36g.
It is a culture medium with equivalent 10mL of 3mL of 1kg and 100g sprinkling culture media, and 300g and 30g sprinkling culture media.
It is 33.3mL and 1.2g, and 10mL of a 300g culture medium is a 1mL adsorption culture medium, and they is 3.33 times of these 10mL and 0.36g are also a 10 time culture medium of 3.3mL and 0.12g, and also a liquid manure of 1mL = 1.2g of growth range.
Although it is a manure culture medium which is not used in a soil culture medium, it is 3.33 times as many 9mL - 10mL culture media, and it becomes a culture medium which roots most and 3mL of growth effects more than a 1mL adsorption culture medium are demonstrated.
9mL as well as 10mL is a rooting culture medium, and a saintpaulia is a culture medium which continues blooming for three months and to grow, attaching a flower bud. Although this saintpaulia is a pot flower which carries out completely same good growth in 1-4mL and an 11-14mL culture medium.
Although better growth was carried out, the flower was attached to full bloom and growth for two months was carried out at 8mL by 7mL, 3.33 times, and 8mL, it is possible to attach a flower bud further, when manure of 9mL and 10mL is used, and to continue blooming a flower for three months from two months and a half.
The growth effect of 10 times as many manure can be raised in the 10mL culture medium which hits 3.33 times by using it, sprinkling manure equivalent to a 1mL adsorption culture medium.
Especially a bulb, a herb, western orchid, and flowering trees and shrubs are the growth as which a 7-8mL culture medium may be sufficient, and it becomes a culture medium of 9-10mL of growth culture media also in this culture medium.
10mL of 100g and 10g sprinkling culture media and 0.12g are equivalent to 3.3mL and 0.12g in 300g and 30g sprinkling culture media.
20mL and 0.24g are equivalent to 6.7mL and 0.24g.
In a 300g culture medium, as for a pot flower, western orchid flowering trees and shrubs, a herb, and a bulb, 4mL, a flower and a view leaf, and - rose that hears change with 7-8mL of growth.
In 300g and 30g sprinkling culture media, twice is 2mL and 0.072g by 1mL = 0.036g.
3 times are 3mL and 0.108g, 4 times are 4mL and 0.144g, 10mL, 0.36g, and 11 times are 11mL and 0.396g 10 times, and 12 times are 12mL and 0.432g.
20 times 20mL, 0.72g, and 21 times 21mL, 0.756g,
30 times, it is set to 31mL and 1.116g 30mL, 1.08g, and 31 times, are a culture medium of the cycle by 0.036g involution, and with use of 3.33 times as many manure, it become a 3.3ml=0.12g culture medium, and it is set to 6.7mL and 0.24g of 3.33 times of 2mL of twice.
3.33 times of 3mL of 3 times is 10mL, 0.36g, and 4mL 4 times 13.3mL, 0.48g,
3.33 times of 16.7mL, 0.6g, and 6mL of 6 times become growth of the culture medium by a multiple of 20mL, 0.72g and 3.33mL = 0.12g and 0.12g.

It is set to of 11.1mL 3.33 times of 3.33mL of a 300g culture medium, and 0.12g, and is set to 22.2mL of 3.33 times of 6.66mL and 0.24g, and 3.33 times 33.3mL, 13.32mL, and 0.48mL are set to 44.4mL 3.33 times of 10mL and 0.36g. A pot flower is a growth culture medium (11mL - 34ml) in 1/2 of 34mL, and growth of a flower is a culture medium which 22mL - 44mL can mostly grow in 1/2 of 44mL.

2mL = 0.072g is a 0.036g twice of culture medium as this, and 11 times are set to 22mL and 0.792g at 20mL and 0.72g 10 2mL times.
3mL = 0.108g is 0.036g 3 times as many culture media, and 11 times are set to 33mL and 1.188g at 30mL and 1.08g 10 3mL times.
4mL = 0.144g is 0.036g 4 times as many culture media, and 11 times have become 44mL and 1.584g at 40mL 10 4mL times.

By this it becomes with growth of 3.33 times as many culture media in cycle of 1-10mL, 11-20mL, 21-30mL, 31-40mL, and 41-50mL.
It is 3-4mL, 6-8mL, 9-10mL, 13-14mL, 16-18mL, 19-20mL, 23-24mL, 26mL - 28mL, 29-30mL,
It is set to 33-34mL, 36-38mL, 39-40mL, 43-44mL, and 46-48mL, and 4mL, 7mL, 14mL, 17mL, 24mL, 27mL, 34mL, 37mL, and 44mL have become especially a good growth culture medium in this culture medium.
It becomes growth by the cycle of 3-4mL, 6-8mL, and 9-10mL. In a sprinkling culture medium, 10% of a culture medium is considered as use of conformity manure, and good growth is possible.
If this manure increases the quantity of resin and doubles it, it will become the manure of 1/2, but the quantity of resin is increased in prolonged use, and use of a 300g culture medium is possible also for manure.
The sprinkled soil water holding agent sprinkled over soil turns into 1-4mL of low-concentration use.

Unlike the manure of an adsorption culture medium, use of the manure of a sprinkling culture medium serves as growth of the manure culture medium of between an adsorption culture medium and adsorption culture media and a between, and serves as growth which may be set to this manure culture medium.
In contrast, in an adsorption culture medium, it is 10 times as much manure as a sprinkling culture medium, and running dry had not become quick good growth.
In order to hold growth of this manure culture medium, and quick running dry, it becomes the directions for the manure by the combination of the manure of an adsorption culture medium and a sprinkling culture medium.
It is good to become adsorption use for using this high manure as low-concentration manure, and to consider it as the directions for the manure by the combination of an adsorption culture medium and a sprinkling culture medium.

In chart 2, the adsorption manure of each culture medium of 1kg - 100g of adsorption culture media is as different, and sets a 1kg of 1mL - 100mL of numerical values of manure to 10, and changes with 1/10 - each 9/10 and the manure which hits 1 for weight of 1kg resin.
In a 300g culture medium, it is adsorption culture media of 3.3mL = 1.2g, and 1mL = 1.2g of the 1kg adsorption culture medium of A is set to 1mL = 33.3mL, and if it does not use 10 times as many manure, it does not change at a sprinkling culture medium.

Although it has hit 3.3mL = 0.12g, 3.33 times, in the sprinkling culture medium of a 300g culture medium using manure of 1mL, 1kg and 100g sprinkling culture media of b = 0.12g
In the 100g adsorption culture medium of S, the 3.3mL = 0.12g manure of these 300 g adsorption culture media is manure of 1mL and 0.12g, is simply called for by this culture medium, and changes that use is possible. periodically, from resin, the manure of this adsorption culture medium melts and it does not come out of it, and since the plant with a soft root cannot absorb manure from resin, it is used, giving it periodically, or does not be in arrears with it and use manure.

The 1mL adsorption culture medium of the 100 g adsorption culture media of S is the manure equivalent to 1/10 of the 1kg adsorption culture medium of a.
Although it changes that sprinkle and give 1-10mL manure in the 1kg sprinkling culture medium of this b, and a 0.12g equivalent amount manure culture medium, and growth is possible, if the 10mL manure of this 100g culture medium is sprinkled 10% and given, it changes with an adsorption culture medium of 1mL and 0.12g and the same manure culture medium.
It is possible not to carry out adsorption use, but to sprinkle 10mL manure 10%, and to consider it as a 10mL sprinkling culture medium.
Although it is equivalent, it is using it, sprinkling, and a plant will tend to absorb manure, and will change, and the manure to be used will raise a growth effect more.
When the pot flower of a 100g culture medium sprinkles 10mL 10%, and uses it, and 20mL is used with a 1mL adsorption culture medium and a flower, sprinkling it 10%, it changes with a 2mL adsorption culture medium, and are a 2mL adsorption culture medium and a culture medium with 20mL same sprinkling culture medium.
It becomes a 3mL adsorption culture medium, a 30mL sprinkling culture medium, and the same manure culture medium.
It can be said that it is a growth culture medium with the again most sufficient growth.
2mL of 200g adsorption culture media of Q turn into a manure culture medium which hits the twice of 1mL of 100 g adsorption culture media of S, and turn into a culture medium of 2mL and 0.24g by 1/5 of the 1kg adsorption culture medium of a of 1mL and 1.2g.
The adsorption culture medium of 1mL of this 200g culture medium is a common culture medium of the pot flower of 1mL and 0.12g and flower of a 100g culture medium, and turns into the same manure culture medium as 6.7mL of a 300g sprinkling culture medium, and 0.24g.
It is equivalent to the 0.48g manure culture medium of 13.3mL of 300g sprinkling culture media, and 2mL of adsorption culture media and 0.48g become a 14mL sprinkling culture medium and the same culture medium.
A 200g adsorption culture medium changes with the twice of a 100g adsorption culture medium, in the 200g culture medium which serves as the same growth by the culture medium of the numerical value of this multiple, a 5mL adsorption culture medium turns into a manure culture medium which is 1mL = 1,2g, and a 2mL = 2.4g growth culture medium changes with a 10mL adsorption culture medium.

It should be in culture media which root most, such as a pot flower, a western orchid and herb, flowering trees and shrubs, and a bulb, there is nothing, but it becomes a culture medium of the multiple manure 1mL and 0.12 g.2mL, and 0.24g of the 200g to 900g culture medium of a 200g adsorption culture medium.
the culture medium in which 2mL of 100g adsorption culture media include the 20mL manure of a sprinkling culture medium for a flower and a view leaf, Chrysanthemum morifolium and rose.

Growth of the plant of a sprinkling culture medium changes with growth of a longer plant by an 11-20mL culture medium from 1mL - a 10mL culture medium.
Growth of 3.33 times as many culture media is also the same growth in 1-4mL and an 11-14mL culture medium, and 11-14mL changes with the good growth culture medium.
Also in the adsorption culture medium, longer growth maintenance than a 1mL adsorption culture medium at a 2mL adsorption culture medium is made.
1mL of adsorption culture media are sprinkled, 1-10mL of manure is used 10%, and it changes with an 11-20mL sprinkling culture medium and the same manure culture medium.
2mL of adsorption culture media are sprinkled, and it is used, sprinkling 1-10mL of manure, and becomes a 21-30mL sprinkling culture medium and an equivalent manure culture medium.
It is used sprinkling 1mL over 1mL of adsorption culture media, and becomes an 11mL sprinkling manure culture medium.
It is used sprinkling 2mL over 2mL of adsorption culture media, and becomes a 22mL sprinkling culture medium.
It is used sprinkling 3mL over 3mL of adsorption culture media, and becomes a 33mL sprinkling culture medium.
In this culture medium, it becomes about 1.2g manure culture medium.
4mL is used for 4mL of adsorption culture media, and it grows [ in 44mL and 5mL of adsorption culture media ] into 77mL and 8mL of adsorption culture media in 7mL with 88mL at 55mL and 6mL of adsorption culture media at 66mL and an adsorption culture medium using 8mL using 7mL using 6mL using 5mL.
When 10mL is used for 9mL of adsorption culture media at 99mL and 10mL of adsorption culture media using 9mL, it changes with 110mL.
It is set to about 2.4g at 2.376g using the adsorption culture medium of 6mL, and 10% of 6mL manure, is set to 3.6g using the adsorption culture medium of 9mL, and 10% of 9mL manure, and changes that it is equivalent to a 10mL adsorption culture medium.
It is set to 3.96g by use of the manure of 10mL of adsorption culture media, and 10% of sprinkled manure of 10mL, and changes that it is equivalent to an 11mL adsorption culture medium.

10mL of adsorption culture media and 3.6g become the manure which hits 100 times of 1mL of a sprinkling culture medium, and 0.036g), and a manure culture medium changes by using 1/10 of the manure of an adsorption culture medium 10%, and it is used, sprinkling 11mL over 11mL of adsorption culture media, and changes with a 12mL adsorption culture medium at about 4.356g.
It becomes a 14mL adsorption culture medium from 13mL at 4.752g at 12mL of adsorption culture media using 12mL.
It changes with 6mL of adsorption culture media, and 2.16g twice as many 12mL of culture-media adsorption culture medium as this.
It grows into 13mL of adsorption culture media with about 14.5mL adsorption culture medium at 5.148g using 13mL.
This culture medium is 3.33 times of a sprinkling culture medium, and a culture medium equivalent to 13mL - 14mL. 1-3mL of adsorption culture media change that growth is possible by an 11-13mL adsorption culture medium, and especially 12mL changes with a growth culture medium.
In this culture medium, it changes with growth culture media, such as a pot flower, a western orchid herb, a bulb, and flowering trees and shrubs.

14mL is used for 14mL of adsorption culture media, and it becomes about 15.5mL adsorption culture medium at 5.544g. 15mL is used for 15mL of adsorption culture media, and it becomes a 16.5mL adsorption manure culture medium exactly at 5.94g.
16mL is used for 16mL of adsorption culture media, and it becomes a 17.5mL adsorption culture medium at 6.33g.
17mL is used for 17mL of adsorption culture media, and it changes with a 18.5mL adsorption culture medium at 6.732g. 18mL is used for 18mL of adsorption culture media, and it changes with about 19.5mL adsorption culture medium at 7.128g.
It becomes a 21mL adsorption culture medium at 7.524g at 19mL of adsorption culture media using 19mL.
It becomes a 22mL adsorption culture medium at 7.92g at 20mL of adsorption culture media using 20mL.
In the culture medium of a flower, it changes with use of a 15-18mL adsorption culture medium.
Also in the adsorption culture medium (11-13mL of a pot flower, and 22-30ml) of a flower, it changes that growth is possible.
A nonionic resin culture medium can be said to be that a culture medium is an artificial hilling which stored and holds manure.
In an adsorption culture medium, in order to adsorb high manure, even if it is a conformity culture medium, it grows into growth of a pot flower and a flower that the thing which is combined use and ion-exchange resin of titanium and for which good growth will be maintained if it is used is possible that it is easy to become culture medium with water holding property.
In an adsorption culture medium, fertilizer concentration becomes high and 1-3mL is adsorbed to this, and when it is used sprinkling 8-10mL, it changes that it is possible to consider it as long growth of a pot flower.

At chart 4, with the manure of 0.1mL - a 0.9mL culture medium, it becomes a 1mL manure culture medium 3.33 0.3mL times, and 0.5mL 3.33 times as many manure culture media become 1.7mL.
3.33 0.6mL times, it is set to 2mL and hits a 3.4mL culture medium at 3.33mL of 3.33 1mL times.
In a sprinkling culture medium, the culture medium of 2mL - 2.2mL of 1, for 2 minutes of 1mL - the 1.7mL to 4mL culture medium of 1, for 2 minutes of 1mL - a 3.4mL culture medium, and a 4.4mL culture medium is a conformity culture medium.

(Chart 4)

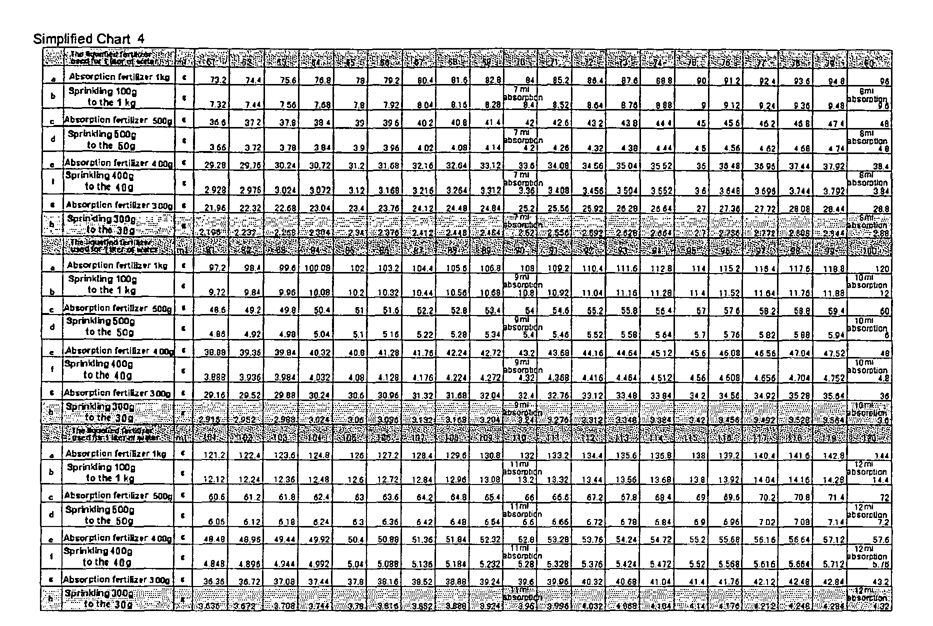

1-5mL of adsorption culture media turn into a 10-50mL sprinkling culture medium, and 6-10mL are a manure culture medium which deserves 60-100mL.
Although 5mL of adsorption culture media are located in the 10mL middle, 15mL is equivalent to 50mL in 3.33 times with the 3.33 culture media.
It is 16.7mL in 3.33 times of 5mL of sprinkling culture media.

Even if fertilizer concentration increases, growth of a flower grows a sprinkling culture medium and the same culture medium, and a 300g adsorption culture medium serves as cultivation which grows one 3.33 times the same cycle as a 300g sprinkling culture medium of this.
Since carrying out adsorption absorption of the high manure starts the water-repelling operation of resin and a bactericidal action falls, an adsorption culture medium becomes possible maintaining growth by using together a small amount of titanium.
Unlike the adsorption culture medium, to being 1-9mL and 11-19mL, the manure of a sprinkling culture medium carries out adsorption absorption of the high manure of 10mL, 20mL, 30mL, and 40mL of a sprinkling culture medium, and changes with the low manure culture medium of 1/10 by the adsorption culture medium, but it will be in the state where fertilizer concentration is high and dryness of water is early.

Moreover in chart 2, 1mL - 100mL of liquid manure of a 300g culture medium by 2.5 times and a 500g culture medium, by 1/2, in 3.33 times and a 400g culture medium, it is considered as the amount used 2/5, and is considered as the twice as many amount used as this 1/3 of a 1kg culture medium.
In a 1kg culture medium, it becomes 1mL, 0.12g, 2mL, 0.24g, and 3mL and 0.36g at 1 time.
A 300g culture medium turns into a longer growth culture medium.
Although it is possible in a sprinkling culture medium to hold manure for a long time by using 3.33 times as many manure of 4mL and 7mL, the manure maintenance of an adsorption culture medium is long, and serves as a short period of time as compared with one month and a sprinkling culture medium.
Since they do not have the bloom of a gay flower even if 2mL of adsorption culture media which adsorbed 20mL have stable growth, they use 12mL and 10 times as many manure. It is important to come together using manure of 8mL, 9mL and 10mL, to hold long manure, and to continue blooming a flower for a long time.
A plant absorbs the manure which has collected on the resin culture medium in small quantities, although this is also a period whose manure of that is lost, if the quantity of this manure water is increased, a water holding property will increase and it will change with the bad culture medium of property of drainage.
By a 3.33 times as many growth method as a sprinkling culture medium being used in consideration of this, it becomes the cultivation method which made maintenance of manure the longer culture medium.

Although it becomes a sprinkling culture medium equivalent to 11-19mL between 1-2mL of adsorption culture media, in this culture medium, growth becomes more possible than 16.7mL of about 1/2, and the pot flower and the flower serve as good growth.
By an adsorption culture medium, this must use 10% of manure of the conformity manure of the 3.33 culture medium for the manure of an adsorption, and it must be considered as the manure culture medium which can grow a sprinkling culture medium.
Manure maintenance became possible by carrying out increase-in-quantity use.
In a pot flower, it changes with an adsorption culture medium 1mL - 3mL.
With a flower, it changes with a 2-4mL adsorption culture medium, and a sprinkling culture medium and an adsorption culture medium are cultivation methods which approach one 3.33 times the same cycle of this.

It is shown that nonionic resin is growth by a twice as many manure culture medium as a soil culture medium.
If growth of a plant is seen, in a pot flower, it becomes good growth of the manure maintenance in which 2mL is longer than 1mL, and 4mL changes with better growth from 2mL with the flower.
Thereby, it will grow by the same culture medium, and although a pot flower and a flower change with growth of a 2-4mL adsorption culture medium, they serve as growth of an adsorption culture medium of 3.3-4mL and 6.7-8mL like a sprinkling culture medium.

Manure can be held because 6.7mL gives 6mL - 7mL to 6mL of adsorption culture media by 3.33 times of 2mL of manure culture media of a flower although 67mL, 10 times, is a conformity culture medium.
At a sprinkling culture medium, they may be 44mL - 45mL from a 34mL culture medium by 1/2 of 67mL.

3.33 times of 4mL of b, and 0.48g, it is set to 0.48g at 13.3mL, and is set to 0.504g at 14mL.
3.33 times 5mL of b and 0.6g are 16.7mL.
14mL and these 17mL are 11-19mL sprinkling culture media, and will not exist in an adsorption culture medium of 1mL and 2mL.
an adsorption culture medium runs early dry than a sprinkling culture medium in an adsorption culture medium, 2mL has the longest water preservation, and is about one month.
Although these 2mL of adsorption culture media and 20mL of sprinkling culture media have the same fertilizer concentration, growth of a plant changes with the growth culture medium of a different of pot flower and a flower, and it becomes a good culture medium with the longest manure maintenance in an adsorption culture medium.
Thus, although the manure content of 2mL of adsorption culture media is the same, it is growth contrary to a sprinkling culture medium.
Early and the maintenance of running dry of an adsorption culture medium are long, and maintenance of the manure for two months - three months or more or water is possible for a sprinkling culture medium to being one month.
The thing with quick manure and running dry of this adsorption culture medium expresses that the fertilizer concentration of an adsorption culture medium is not a conformity culture medium.
It is the cultivation method which combined the sprinkling culture medium with the adsorption culture medium in consideration of these, and was made into the longer manure culture medium.

It is set to 30mL, and 3.33 times 9mL of b are a 3mL adsorption culture medium, and is 3 time culture medium of a 10mL.
This culture medium is 9mL of a rooting culture medium, and is a culture medium of a multiple of 3mL and 6mL.
A 30mL culture medium turns into a double culture medium of a 15mL culture medium, and turns into culture media, such as a pot flower, a western orchid and herb, a bulb, and flowering trees and shrubs.
It roots most at 30mL of 3.33 9mL times, and let 30-31mL be a growth culture medium.
It is good to consider it as culture media, such as flowering trees and shrubs, a garden tree, a flower bed, and a lawn, by this culture medium.
Camellia japonica in flowering trees and shrubs, such as - sasanqua, a flower bud is always attached, and it roots and changes with a good growth culture medium.
In a pot flower, it is a growth culture medium with about 90% of sufficient fertilizer concentration in a 1mL = 1.2g manure culture medium.
In a garden tree, it is a culture medium with early busy with 35mL or more the flower which bloomed breaking up. Although 3.33 11mL times are set to 36.6mL and is a culture medium of a view leaf and rose who hears in this culture medium, growth of the pot flower of a mini rose or the like is taken as to 30mL.
This culture medium turns into 90% of 1mL = 1.2mL manure culture medium.
It is set to 34mL at 33.3mL 3.33 10mL times of b.
Although this culture medium turns into a 1mL = 1.2g culture medium, and is a rooting culture medium like 30mL and use of flowering trees and shrubs and a garden tree is possible for it, the culture medium of a mini rose becomes [ fertilizer concentration ] high 30mL.
3.33 times of 12mL are set to 40mL, and 3.33 times 13mL times are 43.3mL, and it can be considered as a 40-44mL culture medium.
In this culture medium, a lily, a western orchid saintpaulia, or the like serve as the very beautiful bloom. Since a flower bud decreases with a saintpaulia, 18mL is a culture medium with the most sufficient flower preservation.
By a 100g culture medium, 30-34mL of a 300g culture medium by the 9-10mL culture medium and this becoming culture medium Pot flowers, such as saintpaulia gerbera and western orchid,
It is also a culture medium which grows for three months and roots tulip / lily most, suiting flowers, such as Petunia and impatiens, and especially attaching a flower bud by African Violet.
Although the manure which blooms and maintains a flower has given the manure of the rooting culture medium after completing a difference flower in the soil culture medium, it is possible in a resin culture medium to perform the bloom of this flower and taking root simultaneously.

It is growth culture media, such as a garden tree, flowering trees and shrubs, a flower bed, a vegetable garden, a lawn, or the like grown by 4mL of soil culture media, and 250 times, and it is set to 0.48g at 13.3mL, 3.33 times, and 14mL of 4mL of the 100g sprinkle culture media of b and 0.48g becomes a conformity culture medium. 13-14mL becomes a growth culture medium, and growth of the pot flower, the herb, the western orchid, the flower, the view leaf, the flowering trees and shrubs, at least 13-14mL of bulbs, or the like which can be grown at 3-4mL is attained.
The plant in which 1mL - 4mL of growth is possible serves as the same growth also in this culture medium.
It becomes common culture media, such as 4mL of soil culture media, 250 times as many a garden tree, flowering trees and shrubs, flower beds, vegetable gardens, lawns.
In this culture medium, growth of a mini rose turns into growth of 16.7mL or more difficulty.

0.6g is a culture medium with maintenance of No. 1 manure long in this culture medium of b in which suit 17mL at 16.7mL at 3.33 times, and 16-19mL of 5mL becomes a growth culture medium.
Pot flower, Laon Herb, bulb, and flowering-trees-and-shrubs -, the flower, view leaf, and rose and chrysanthemum grown at 6mL - 9mL serve as growth stabilized more.
In 17mL, it is about 50% of 1.2g manure culture medium.
At the bulb of a tulip, a bud is taken out with a liquid manure culture medium of 1mL - 20mL simultaneously with 2,6,7,9 and 10 mL.
A 9-10mL culture medium is a rooting good culture medium especially.

6mL of 0.72g of b becomes equivalent to 20mL at 3.33 times. 300g is a 10 times as many 20mL culture medium as 0.072 g and 0.72g of 2mL of 30g sprinkling culture media.
It is set to 2.4g 3.33 this 0.72g times, and a 2mL = 2.4g manure culture medium is a 67mL culture medium.
In a 300g culture medium, 1mL and 0.12g become a 3.3-4mL manure culture medium in 3.3mL, and 33.3mL - these 40mL, 10 times, can call it a conformity growth culture medium.
If 33-44mL of 3.33 9-13mL times of a multiple of 3mL and 4mL is made into a growth range, it will become a good culture medium.
In a 300g culture medium, the pot flower, the western orchid and herb, the flowering trees and shrubs, and the bulb of 1mL and 1000 1-3.3mL again with 1-4mL.
It becomes 10-33.3mL and 10 times as many 10-40mL culture media, and 2mL of growth of a flower, a view leaf, and 500 times as many Chrysanthemum morifolium is possible at 2-4mL, and 20-40mL, 10 times, can consider it as a conformity culture medium.
A 20mL sprinkling culture medium is a culture medium equivalent to a 2mL adsorption culture medium.
10 2mL 6.7mL of 3.33 times are a culture medium which hits 6-7mL of adsorption culture media at 67mL.
By the culture medium of a pot flower, and 0.84g, 24mL about 70% of 34mL, 1.2g are good culture media, and when it is used also in the culture medium of a flower, sprinkling nonionic resin, growth will become possible at about 40 to 57% or less by the culture medium with least manure of a 27-37mL required culture medium.

The 3.33 times as many culture media of 7mL and 0.84g of b are set to 23.3mL, and 23mL - 24mL become a conformity culture medium.
Also in this culture medium, 24mL becomes a conformity culture medium, and it becomes being the plant and common culture medium which suited 3-4mL and 13-14mL.
Especially in the pot flower which serves as about 70% of 1.2g manure culture medium in a 23-24mL culture medium, 1-4mL, 11-14mL, and 21-24mL are conformity culture media more.
If 9-10mL of the end of the bloom late-coming solution culture medium of a flower is given, a gerbera, lily or the like will grow by attaching a sprout, even if a flower finishes.

In 26.6mL, 3.33 times, 26-28mL becomes a growth culture medium by a conformity culture medium, and, as for 8mL 0.96g of b, 27mL becomes about 80% of manure content.
In this culture medium, a flower serves as a better culture medium and is a common culture medium of 6-9mL, 16-19mL, and 26-29mL.
Especially as for the pot flower of a mini rose or the like, 13-14mL and 16-19mL become a conformity culture medium, and 26-38mL is a conformity culture medium in a twice as many culture medium as this at growth of a flower or a rose and chrysanthemum.
In a pot flower, it can be said to be 18-19mL, and 36-38mL can call it a culture medium with the longest manure maintenance with a flower.
By a pot flower, 8-9mL is used for 1mL of adsorption culture media for this with the combination of the manure of an adsorption culture medium, with a flower, it comes together to use 8-9mL manure for 3mL, and long manure maintenance becomes possible.
20mL of 3.33 6mL times is a 10 time culture medium of a 2mL flower, and is 50% of 40mL manure culture medium of 1.44g.

9mL of 1.08g of b suits 30mL by 3.33 times, this culture medium is 90% of 34mL and 1.2g of 1.08g in a growth culture medium, and 30mL becomes being the same as that of a 3mL adsorption culture medium.
Although it has rooted most by a 9-10mL culture medium, it is a long manure culture medium similarly, and no less than 8mL becomes 8mL - 9mL of use.
In 20mL of sum total manure, and 40mL, it does not change with a not much good growth culture medium.
It becomes a growth culture medium of a pot flower by a 0.36g 3 time culture medium.
It is a culture medium which roots most again.
Rooting also in a culture medium 10-11mL, 20-22mL, and 30-33.3mL, 6mL of pot flowers and 20mL, 3.33 times, of 10mL of 3.33 3mL times has become rooting culture mediums, such as a flower, a garden tree, flowering trees and shrubs, a flower bed, a vegetable garden, and a lawn.
9mL 3.33 times as many culture media of 30mL more a flower, hydrangea and sasanqua, and Camellia japonica flowering trees and shrubs and garden trees, trees, etc., such as - rose Rhododendron, are the growth culture media of a tree culture medium.
It has rooted more by the culture medium of a 3mL multiple.

Although an adsorption culture medium is a culture medium 10 times the concentration of a sprinkling culture medium, since manure melts and always has not come out and collected, if adsorption in manure is more possible for a plant than resin, an adsorption culture medium and a sprinkling culture medium can be used as an equivalent culture medium, but the plant with soft roots, such as a flower, must be given a little manure.
Although 10% of manure will be given by this or it will be used, accumulating, since poly vinyl alcohol is reduction of quick, if it is not considered as the twice as many amount used as this, it does not grow into use of a flower. Although it becomes the mixed use of acrylic resin, running dry is quick and adding water is used of acrylic resin needed from one month in two months.
It becomes longer manure maintenance to carry out the use for sprinkling of very little manure to a nonionic resin culture medium in consideration of these.
In plant with water holding property, if it is used sprinkling liquid manure, it will become possible to maintain growth very much at a long period of time.
Thus, using very little manure for resin could maintain growth for a long time, and it became indispensable of using it sprinkling a soil culture medium.
soil-culture-medium 4mL 1250 time Camellia japonica -- by tree planting of a tree planting project, it becomes use up to 30-34mL by growth culture media, such as a garden tree, flowering trees and shrubs, a flower bed, a vegetable garden, raw one, etc., such as - sasanqua hydrangea. Although this can be made into 3mL of adsorption culture media with 10% of 3-4mL use for sprinkling, and it must mix in soil, at the soil water holding agent which carries out a use for sprinkling, it becomes a water retention effect for six months or more, and a bactericidal effect by 3-4mL of use.

Furthermore, chart 5 calculated and indicated 0.1-0.9mL of a liquid manure culture medium.
1/10 of 1kg of b and 100g sprinkling culture media of 1mL is set to 0.1mL, and it is 0.012g manure.
3.33 0.1mL times of 300g of the 100g sprinkling culture media of b are set to 0.33mL of 30g sprinkling culture media, 3.33 0.2mL times of b are set to 0.67mL, and 3.33 0.3mL times of b are set to 1mL by 0.99mL of 300g culture media.
3.33 times of 0.4mL of b are set to 1.33mL.
3.33 times of 0.5mL of b are set to 1.67mL.
3.33 times of 0.6mL are 2mL, 3.33 times of 0.7mL of b is 2.33mL.
In 3.33 times whose 3.33 0.8mL times of b are 2.66mL and 0.9mL of b, 3.33 1mL times of b are 3.3mL of a 300g culture medium in 2.99mL of a 300g culture medium, and 3mL. 3.33 1.1mL times, in 3.33 times whose 3.33 times of 4mL and 1.3mL are 4.4mL and 1.4mL, 3.33 1.5mL times change with 5mL at 4.7mL, and, as for 3.33 times of 3.7mL and 1.2mL, even this 10 times as many culture medium serves as a growth range.
3.33 times of this 0.3mL and 0.036g are the culture media which are 1mL, and 0.5mL of 0.6g of 0.6mL and 0.072g of is a 2mL culture medium in the culture medium which is 1.67mL. 2mL is the 3.33 times range of 1.33mL - 1.67mL of 0.4-0.6mL.

(Chart 5)

**Simplified Chart 5 * The amount of fertilizers contained in 0.1ml - 0.9ml (1ml=1.2g) of liquid manure**

| | The liquified fertilizer added for 1 titer of water | ml | 01 | 02 | 03 | 04 | 05 | 06 | 07 | 08 | 0.9 | 1 ml | 2 | 3 | 4 | 5 | 6 | 7 |
|---|---|---|---|---|---|---|---|---|---|---|---|---|---|---|---|---|---|---|
| a | Absorption fertilizer 1 kg | g | 012 | 024 | 036 | 048 | 06 | 0.72 | 0.84 | 0.96 | 108 | 12 | 24 | 36 | 48 | 6 | 72 | 84 |
| b | Sprinkling 100g to the 1 kg | g | 0.012 | 0024 | 0036 | 0048 | 006 | 0.072 | 0084 | 0096 | 0108 | 012 | 024 | 036 | 048 | 06 | 072 | 0.84 |
| g | Absorption fertilizer 300g | g | 0.036 | 0.072 | 0.108 | 0.144 | 0.18 | 0.216 | 0.252 | 0.288 | 0324 | 0.36 | 0.72 | 108 | 1.44 | 18 | 2.16 | 2.52 |
| h | Sprinkling 30g to the 300g | g | 00036 | 0.0072 | 00108 | 0.0144 | 0.018 | 00216 | 0.0252 | 0.0288 | 00324 | 0.036 | 0072 | 0.108 | 0.144 | 0.18 | 0216 | 0.252 |

Also in 0.1-0.9mL of liquid manure of chart 5, are one 3.33 times the cycle of this, and a 10 time cycle, and 1.67mL - 2mL become a growth culture medium which is 1mL of soil culture media.
This double 3.3-4.4mL culture medium turns into a culture medium of a flower, and it becomes the growth culture medium where 10 times as many culture media (16.7mL - 22mL, and 33mL - 44ml), which are stabilized.

Thus, the culture medium of a plant (1mL - 4ml) turns into the same growth culture medium as 11-14mL by one 3.3 times the cycle of this, and in this culture medium, the manure maintenance for about one month is possible for it, and it must give manure once in one month.
13-14mL is a conformity culture medium especially.
Although the manure maintenance for about two months of 6-9mL becomes possible, in 16-19mL, the manure maintenance for four months - six months becomes possible.
Although geranium continues blooming repeatedly, in order that resin may contract, water must be given in 2 months - 2.5 months, and resin must be swollen.
After completing a flower, a saintpaulia roots for six to eight months, and it continues growing.
This culture medium is a culture medium with the longest manure maintenance.
Although it is the manure maintenance for about one month in a 2mL adsorption culture medium, the manure maintenance for three months is possible for 10mL of a sprinkling culture medium, it becomes the same growth culture medium as six more months, and the manure maintenance for about five months - six months of 20mL becomes possible.
A geranium saintpaulia can continue being bloomed in a flower for three months, attaching a sprout without giving manure and water for three months.
Furthermore at a flower, they are three months - eight months in 21-24ml;
Especially in pot flowers, such as a mini rose cyclamen pansy, 4mL, 7mL, 14mL, and 17mL are sufficient culture mediums and 3-4mL, 6-8mL, 13-14mL, and 16-18mL are growth ranges.
With a flower, 28-38mL, which is twice as many as 14-17mL, becomes sufficient growth culture medium.
It becomes a growth range (23-24mL, 26-28mL, 33-34mL, 36-38mL, and 43-44ml).
In a 30-31mL culture medium, the manure maintenance for three months is possible with a flower, and it becomes the same growth as 20-21mL.
It is possible to attach fresh leaves without manure or adding water eight months or more by 19mL of use, and to continue growth with a saintpaulia.

At chart 2, 1mL, 2mL, and 3mL of the 100g sprinkling culture medium of b are 300g, by a 30g culture medium, it becomes 3.3mL, 6.7mL, and 10mL of use, and 4mL, 5mL, and 6mL become 13.3mL, 16.7mL, and 20mL of use.
7mL, 8mL, and 9mL become 23.3mL, 26.6mL, and 30mL of use. It becomes growth of 3.33 times as many culture media (5mL - 10ml).
In a pot flower especially, growth by 20mL culture medium, which is 3.33 times of 4mL - 6mL, becomes longest maintenance of manure and sufficient culture medium. Moreover, for growth of a flower, 23.3-30mL of 3.33 times of 7-9mL and 33.3-43.3mL of 3.33 times of 10-13mL serves as a possible growth culture medium.
By 3.33 times growth of the 300 g and 30g culture medium, it becomes the sufficient growth by 1-4mL of 2mL and 500 times as many as flower culture media.
From 33.3mL which 3.33 times of 10mL, to 36.6mL which 3.33 times of 11mL, 40mL which 3.33 times of 12mL, and 13mL of 43.3mL becomes as a growth culture medium.
In a 300 g and 30g sprinkling culture medium, a manure culture medium (33mL - 44ml) turns into a good culture medium.

At chart 2, 10g of t100g sprinkling culture medium is 1mL of 1kg and the 100g sprinkling culture medium of b.
0.12g is 100g.
In a 10g sprinkling culture medium, it is 1kg in 10mL, 10 times, and becomes a culture medium equivalent to a 100g sprinkling culture medium.
300g of this 10mL culture medium is an equivalent culture medium at 3.3mL at 30g sprinkling culture medium.
100g becomes the use maintenance for one month in 10g sprinkling culture medium using 10mL.
100g of 2mL 0.24g of the 100g sprinkling culture medium of b becomes equivalent by 0.24g at 20mL, 10 times, at 10g sprinkling culture medium.
3mL 0.36g of b becomes equivalent at 30mL, 10 times, at 100g 10g sprinkling culture medium.
5mL 0.6g becomes 50mL 10 times as many culture media.
A 6mL 0.72g sprinkling culture medium is 20mL, 3.33 times, in a 300g 30g sprinkling culture medium, and is set to 60mL, 10 times, by a 10g sprinkling culture medium.
4mL no less than 0.48g is set to 40mL, 10 times, by a 100g 10g sprinkling culture medium.
It becomes the fertilizer concentration of 1/10 by making these one 10 times the resin amount of this, becomes the amount of the 1kg 100g sprinkling culture medium used of b, and becomes the amount of the same numerical value used as 0.12g of 1mL.

Although chart 2 shows the resin culture medium per 100g, Since the manure used sprinkling changes with materials of the culture medium to be used, if the quantity of a 100g 10g sprinkling culture medium is increased with twice and 3 times with the amount of the culture medium used, the fertilizer concentration of a culture medium will move to the left, and fertilizer concentration will fall. Especially in the sprinkling culture medium, long maintenance of manure of a flower is difficult in 1-4mL for a pot flower and in 1-8mL for a flower, and it becomes the manure maintenance for one month.
Thereby, use of the manure of a 300g culture medium is a growth method used as longer manure maintenance.
In culture media other than hydrophilic resin, it becomes the same use as soil, and becomes the operation as for which the number of times gives manure.
In chart 2, it becomes movement of the upper and lower sides of the almost same manure by increase in quantity of the amount used.
In culture media other than these resin, manure maintenance can be maintained for a long time by use of ion-exchange resin, and the mixed use of nonionic resin.
If the use and the disinfectant of a photocatalyst by titanium are used, it can be considered as a better growth culture medium.

Although resin contracts to about 1/2 for a while by the nonionic tree culture medium in three months after two months and a half
Although it will return to the state where reduced completely and it dried, in an acrylic resin culture medium, even if it does not add water at least eight months or more, it is a culture medium which can be grown in the mixed medium of nonionic-resin-culture-medium polyvinyl alcohol and a polyalkylene oxide.
Since manure becomes high in the sprinkling culture medium of 200g 20 g, and a t100g 10g sprinkling culture medium as for r, it is also possible to the same 33-44mL as a 300g culture medium to consider it as use of fertilizer concentration, and it is good to make manure into 10% of a resin amount.

Although 3-4mL 3.3 times as many culture media as 30g 300g of resin sprinkling culture medium are 1mL of soil culture media, and a plant, a pot flower, a western orchid herb, flowering trees and shrubs, a bulb, or the like grow at 1-4mL, 1000 times, and a flower, a Chrysanthemum morifolium, a rose, a view leaf or the like, suit for growth at 2-4mL, 500 times of 2mL, and it becomes a common culture medium, 1 time of manure must be given per month.
By this, a flower, a view leaf, a rose, and chrysanthemum, or the like becomes a common culture medium at 20-30mL at a pot flower, a western orchid herb, flowering trees and shrubs, a bulb, or the like.
Although it is set to 4mL, 7mL, 10mL, 14mL, 17mL, 20mL, 24mL, 27mL, and 30mL and the range which can be grown is a common culture medium which can be grown to both 16-18mL, 19-20mL, 23-24mL, 26-28mL, and 29-30mL in a conformity culture medium,
At bulbous plants, such as a mini rose, a lily, a tulip, it is set to 16-18mL or more, and at 16mL or less, it is difficult to hold a flower for a long time, and it serves as from 1.6mL to 2mL of growth.
In an adsorption absorption culture medium, in 2mL, water has long most, and the maintenance for one month is possible;
it can be said 2mL - 30mL to be the culture medium which can grow.
A wild grasses and herbs of mountain and a cactus make use up to 10mL.
With a cactus, 8mL of an adsorption culture medium is especially good.
Thus, although an adsorption culture medium is a 10 times as many manure culture medium as a sprinkling culture medium, it becomes a drainage nature culture medium and use of a cactus or a bulb is good.
Although growth of a mini rose is difficult in 6-7mL of sprinkling culture media, it becomes possible at 16-17mL and rose growth is possible also in an adsorption culture medium at 1.6mL - 3mL, 6-7mL, and 13-14mL, since especially a bactericidal action is important, long-term cultivation is asked for combined use of the bactericidal action by titanium.
In an adsorption absorption culture medium, since an absorbed dose, swelling magnification, or the like of liquid manure change with adsorption time or swelling magnification, cautions are needed.
It is possible to enhance a bactericidal effect according to combined use of ion-exchange resin or a chlorine ion.
At a swelling time, a polyalkylene oxide swells with tap water in 24 hours or more, and pure water must be used in use of 10mL or more of liquid manure.
In pure water, it drains off water enough by swelling in 7 hours - 12 hours, and is made one 20 times the completion swelling quantity of this.

Although the directions for this manure are the fertilizer concentration for carrying out growth maintenance for a long time, nonionic resin carries out the same operation as ion-exchange resin, and growth of it is attained by a little use in low-concentration manure.
Combined use of this manure, solid fertilizer, or the like is also possible.
Conventionally, hydrophilic resin was used as a water retention agent of a soil culture medium, and soil has been retained by the water-repelling operation of resin.
By this water-repelling operation, soil was covered with moisture, growth of a plant got worse, and root rot has been started.
In order to avoid these water-repelling operations, even if it does not carry out adding water at a vegetable culture medium by covering soil by resin with water holding property with the bactericidal action by the adsorption absorption function of polyvinyl alcohol, and intercepting air, it is possible to prevent dryness of soil.
This operation is not an operation of a water retention agent, and is based on the bactericidal action of the resin which uses solar heat and light energy.
These directions for use can prevent breeding of weeds, sprinkle over the culture medium of the agricultural products of fields the polyvinyl alcohol which added manure to tap water and swelled to it in a planter or a flower bed again, and cover and use soil.
Weeds does not spring up for about a half year in this one operation, but the growth of a plant can revive and turn into very good growth.
Also in midsummer, 1 to 2 times may be sufficient as adding water in one month, and this method becomes completely unnecessary except midsummer.
Although the conventional water retention agent had been used having mixed in soil, it was not accompanied by a bactericidal action but had started root rot.
It becomes the disinfectant which served as the operation the root rot prevention of this, and both for a water holding operation by the bactericidal action of nonionic resin.
It is because breeding of weeds was pressed down because resin intercepts air, and the bactericidal action of resin acted actively with solar heat or light energy.
The high temperature in soil and breeding of various bacteria can be pressed down in this operation, and it can prevent growth of a plant getting worse.
These use becomes possible by adsorption use, use of tap water, or use of rain at polyvinyl alcohol simple substance or mixed use, and liquid manure water, in order that a plant may maintain better growth.
It becomes still more possible by raising residual chlorine concentration.
In mixed media, such as polyvinyl alcohol, a polyalkylene oxide, polyethylene oxide, it does not adsorb, but is used, sprinkling and becomes possible according to combined use of solid fertilizer.
It becomes an operation of the regulator of the resin which sets the mixture ratio to 2 to 1, and carries out adsorption absorption of chlorine.

According to the directions for the liquid manure of a soil culture medium, by standard 1000 times, the solution added 1mL in 1L of water is given to a plant once at one week, and it gives 4 times per month.
A resin culture medium uses 4mL at once, and makes 4 times of this manure 1 time per month.
A plant is used for cultivation of a pot flower, a western orchid, a herb, a bulb, flowering trees and shrubs, a fruit tree, vegetables, or the like.
For 500 times, 2mL is added in 11 of water, a plant is given once at one week, and it gives 4 times per month. Suppose the operation which gives 2mL 4 times once that 8mL is given at once in the resin culture medium.
The plant serves as use of a flower, vegetables, a rose, Chrysanthemum morifolium, a view leaf, the flower bed, the vegetable garden, and the lawn.
It turns to giving 4mL 4 times per month 250 times by the method of giving the solution which added 4mL in 1L of water once to flowering trees and shrubs, a garden tree, a flower bed, a vegetable garden, a lawn, or the like at one week.
In a resin culture medium, it becomes the cultivation which gives 16mL at once.
If 30g of manure of a soil culture medium is given as well as a 300g resin culture medium each time
For a 300g soil culture medium, 0.144g manure is needed in one month at 4mL in 0.036g with 1mL 1000 times as 4 times; that is, 4mL for two months, 4mL for three months, 4mL for 4 four months, and 4mL is five months, and 20 mL for five months is needed with a pot flower, and it becomes 0.72g manure.
At 2mL of the soil culture medium of 300g 500 times as many manure, 0.288g (0.072g x 4 times) becomes required manure by 8mL in one month;
8mL for two months, 8mL for three months, 8mL for four months, 8mL for five months, 40mL is needed in five months, and it becomes 1.44g manure.
A soil culture medium will serve as the same manure content as a resin culture medium, if the number of times gives equal weight, but even if a soil culture medium is temporarily absorbed by soil, it is discharged from the hole of a pot bottom, prevents root rot, and it is improving drainage.

The resin culture medium can exclude the operation of 4 times of the manure per month of these soil culture media, or adding water for about three months in a 300g culture medium.
It becomes possible to increase the quantity of this resin, to consider it as the twice as many resin amount of 600g as this, and to become the fertilizer concentration of 1/2, and to exclude for about five to six months with 300g and equivalent amount fertilizer concentration.

3.33 times as many growth is possible for an adsorption absorption culture medium like a sprinkling culture medium. However, since high manure is absorbed and resin repel water in running dry and a bactericidal action falls, early an adsorption culture medium cannot be said to be a suitable culture medium, but use of the western orchid of a flower or a pot flower or the like serves as a drainage nature culture medium, and becomes good growth.
Unlike an adsorption culture medium, a sprinkling culture medium serves as a cultivation method in which prolonged growth is possible with a little of 10% of liquid manure. Since the absorptance of resin declines because fertilizer concentration increases in a resin culture medium, in an adsorption culture medium, in a sprinkling culture medium, 10mL or more must be considered as use, and 1mL or more must be considered as use of pure water.
Although the effect of the bactericidal action is expressed with tap water, since the tap water cannot swell greatly, even if it uses high manure, it is not absorbed, but since growth of a plant gets worse, cautions are needed.

It is possible to use it for other rice farming and vegetable cultivation of the plant which equipped a future water shortage with nonionic resin polyvinyl alcohol, considered it as water and the culture medium which stored manure, considered it as the alternative culture medium of not only seeds and saplings culture media, such as a seed-rice, but the soil culture medium, and uses low-concentration manure.
Although it is a cultivation method to which the vegetable cultivation method of a soil culture medium does not give manure when the flower has bloomed, but give manure after a flower finishes, and root a root, and a flower bud is made to be attached again, a resin culture medium will perform this operation simultaneously.
By giving manure and water 4 times per month, a flower continues blooming for a long time and hold for the plant of the fertilizer concentration which corresponds 1mL of liquid manure of a soil culture medium, 1000 times, and 2mL and 500 times.
However, although the plant of a soil culture medium holds manure also in hilling or a bowl also in this method, the flower has finished the period holding a flower as the saintpaulia or orchid or the like is short, which is one month - one and half months.
Even if it also gives fully the manure given to a potted plant, it is drained from a pot bottom and is flowing out underground.
In spite of holding vegetable required manure at soil, it is difficult for the plant of a soil culture medium to bloom and to hold a flower for a long time.
In this point for resin culture medium, it is possible to hold and enjoy a flower for a long time more than a soil culture medium because resin stores the manure which suits that plant.
Even if a flower finishes, it roots again, and it is possible to attach and repeat a flower bud and the directions for this manure can be used also for a rice crop or vegetable cultivation.

In an experiment, thermoplastic nonionic type hydrophilic resin and a polyalkylene oxide are used, and Table 11 compares and shows the acid alkaline water solution of the TW polyethylene oxide of an AQUACALK (trademark), and a TWB polyalkylene oxide.
Pure water or an aqueous salt solution does not have change in water-absorption ability, either, absorption of acid, alkali, and solution is possible for both, and they are excellent in light fastness.
A standard type and TWB of TW are intensity improvement types.
When each water absorption power is compared, the water absorption power of a TW polyethylene oxide of pure water, artificial sea water, and liquid manure is high.
In use of the simple substance of a TW polyethylene oxide, and mixture with polyvinyl alcohol, it excels in the soil water holding agent.
Since the absorbency of 20-30mL or more of the absorption power of liquid manure, which is absorption ability of an acid and alkaline water solution of TWB polyalkylene oxide, is declining, growth of a liquid manure culture medium of 30mL or more for a rose cultivation is especially difficult.
Although a bactericidal effect becomes possible by use of manure, such as a solid, powder, or the like which melt every in small quantities in a lot of use of resin, such as trees in a tree planting project, and a plant, in a garden tree and sasanqua, and Camellia japonica, even 30-31mL and 33-34mL, which is 3.33 times of 9-10mL, become a working range.

A bactericidal action increases the surface of soil with epiboly, solar heat, or light energy, and the bactericidal action of nonionic resin polyvinyl alcohol prevents breeding of the weeds of soil or the like, and stabilizes growth of a plant.
The leaf of the plant of a nonionic resin culture medium shines with use of ion-exchange resin with gloss.
If hold manure for a long time by use of a little manure to a nonionic resin culture medium, growth is maintained, moisture evaporates by hitting daylight and moisture of resin decreases, a bactericidal action will increase further and growth will be stabilized.
It can be known by rooting and pickling a sprout, although moisture in bowls, such as a orchid, a lily, and gerbera, is completely lost and resin is dry.
Even after resin has dried and contracted again, the plant is continuing growth six months or more from three months, and this is considered that does resin carry out the repetitive exercises which resembled respiration faintly like the plant, and the bactericidal action will be continued.
A bactericidal effect will increase further by it being based on the adsorbing action of resin and reducing.

Gardening by the photocatalyst using solar heat or light energy which used polyvinyl alcohol of nonionic resin or the like especially in future rooftop gardening is important.
It becomes possible to adsorb carbon dioxide and to ease the heat island effect by carrying out the hydroponics and tree planting of a herb, a foliage plant, or the like.
This is an operation of the photocatalyst of nonionic resin and the operation which makes the hydrogen energy by photosynthesis will be performed simultaneously.
Although mixed use of ion-exchange resin or nonionic resin must be carried out in acrylic resin, growth of the plant of a resin culture medium is raised by use of titanium, an effect is demonstrated especially to use of a foliage plant or trees, and the exhibition of the bactericidal action is carried out by use of the low-concentration manure by polyvinyl alcohol.

In connection with global warming, the role of nonionic resin is large, natural environment is kept, and it is thought in consideration of the safety of a meal that it contributes to a life of people.

Next, the freshness maintenance and the vegetable hilling of a cut flower which use photocatalyst titanium are explained.
The bactericidal action of titanium is maintenance for one month from about ten days in the freshness maintenance of cut flowers.
It is possible to hold for about 25 days in winter by a rose especially.
In the flower arrangement store, tap water is exchanged for cut flowers every day, and the freshness of a flower is held and it is managed.
Usually, although 0.4-0.5mg/L CL chlorine had to be used as for the residual chlorine of tap water and more than 0.1mg/L CL chlorine had to be used, since this residual chlorine will fall in about one day, it was difficult for holding for ten days with the tap water used first.
By using titanium (about 5g titanium in 500mL of tap water), it became usable for about 25 days.
By the amount of this titanium used, since the flower which blooms from 3 to 5 parts will be in full bloom in one to two days, if the quantity of the amount used is increased to 30-60g, it can be held without making a flower full bloom a little.

Use also of tree and shrubs, such as sakaki, will be attained similarly for about 25 days.
Although this experiment is caused during winter, with the freshness of a cut flower, usable years differ and are somewhat shortened in a summer.
When this is made into the vegetable culture medium of a pot flower and a flower with a root, in the culture medium of only titanium, water holding properties run short, it becomes growth of the same hydroponics culture medium as a hydrocorn or the like, and cultivation of a foliage plant is mainly attained.
Although cultivation of a flower tree is attained at 1-4mL by use of ion-exchange resin, and use of liquid manure, cautions are required for the appearance which water holding properties run short and does not start running dry.
In order to adsorb soils, such as vegetable sap, only with ion-exchange resin unlike a nonionic resin culture medium, it becomes about twice as many amount used as this, and becomes an equivalent amount with the case of a hydrocorn. Property of drainage and a water holding property are important for especially cultivation especially of a pot flower, a flower, or the like

Since titanium does not have the operation of a water holding property or property of drainage and cannot perform control of moisture, it is made into a hydroponics culture medium, puts manure water and ion-exchange resin into a container, and serves as the method of being in arrears with it, placing and carrying out manure water.
By a foliage plant, even if cultivation becomes possible easily, with a pot flower or a flower, property of drainage is important for it, and it serves as the same cultivation method as a soil culture medium.
By carrying out mixed use with nonionic resin, it becomes possible to use the culture medium of a pot flower or a flower.

Also in this titanium and a nonionic resin culture medium, use of about 30-60g titanium is needed.
This means that nonionic resin cannot absorb light easily, and a bactericidal action increases by a small amount of titanium by making it easy to absorb.
In use of ion-exchange resin, a growth effect is demonstrated by titanium almost 10-40g.
Also in the mixed use of hydrophilic resin, such as nonionic resin and acrylic resin, growth of the plant of a mini rose or the like is attained by use of ion-exchange resin 0.5-1.7g.
It changes that cultivation of a pot flower and a flower is possible by a mixed medium with nonionic resin.
In the vegetable culture medium which uses titanium, occurrence prevention, such as mold or an alga of a resin culture medium, and the prevention from discoloration of resin by ultraviolet rays are possible, and it is possible to demonstrate the deodorant effect of the room to be used simultaneously.
In use of nonionic resin, polyvinyl alcohol uses the product of Nippon Synthetic Chemical Industry Co., Ltd., and in use of polyalkylene oxide and polyethylene oxide is product of Sumitomo Seika Chemicals Co., Ltd.
Acrylic resin is a starch acrylamide and is using WATERLOCK by Grain Processing Corporation in U.S.A. (trademark).

It is used as water quality purification agents and water quality maintenance agents, such as freshners, such as cut flowers and sakaki besides the root rot inhibitor of a vegetable culture medium, a disinfectant, and a tank.
It can be used also as the soil water retention agent, the disinfectant, modifier, a weed killer, or the like of a soil culture medium.
Mixed use of the titanium is carried out to this nonionic resin, and it becomes usable the resin which raised the bactericidal action.

Poly vinyl alcohol is performing the bactericidal action without adsorbing chlorine into tap water, but calcium and magnesium are decreasing in number by the water quality analysis inspection in Fig. 33.
For this reason, adsorption of ammonia can be made smooth by use of hard water, and use of the filter medium of the nonionic resin which the polyalkylene oxide mixed with polyvinyl alcohol and polyvinyl alcohol by neutralizing chlorine of tap water, and water quality maintenance of the tank of a fish can be made possible.
Purification washing of the inside of a tank is carried out by using it for the tank of the tropical fish which uses sea water.
Combined use and mixed use are carried out for this bactericidal action and the bactericidal action of titanium.
Although use of hard water becomes higher also in price than tap water, it is suitable for the fish so that gently for human more than a neutralizer, and a motion becomes active and quick.

If a fluorescent light is used for 20L of tanks of glass and 3kg of pebbles and titanium grit 100g are supplied to the bottom of a tank, a fishy smell disappears, generating of an alga decreases and exchange of water is unnecessary only at addition of the rinse water of a filter.
The motion of a cyprinodont became active and became having a good appetite.
500g per 1 ton is supplied to a cooling tower, and it is possible to prevent decomposition of water.
Although it becomes calculation of the water quality maintenance for about two months by 10g titanium with a 1L tank at one animal, since the effect of a photocatalyst has the low effect in the tank of a fish, cautions are required of brown or green.

In water quality purification and a bactericidal action, titanium is put into 500g of use string bag at a bathtub, and it is used in the state where it dipped in the hot water of the bathtub, and except the time of bathing, where air in a bathroom is touched, it is neglected.
The deodorant effect of hot water is acquired, the soils in a bathtub decrease in number, and generating of the mold of tile joints can also decrease and can be pressed down.
By use of a bathtub, it is thought by the de-colorization operation of titanium that there is also whitening effect. By seeing the fish of a tank, since the fish is small, it was looking, having covered them, but these days, how depending on which these spectacles for the aged bend became legible.

A cleaning effect is demonstrated to air, the water, oil, or the like which are touched only by placing titanium. This mold preventive effect is based on a bactericidal action, and is used for prevention, sterilization, and the deodorant effect of generating of the mold of the circumference of water, such as a washroom and a dresser with sink, a sink-corner strainer (about 50g use), a refrigerator, a toilet, or a soil.

Since the freshness maintenance and the bactericidal action of water are possible, it changes in a refrigerator that the freshness maintenance of foodstuffs and deodorization are possible by use (about 100g - 200g).
This deodorant effect is used for the deodorizer and aromatic of pet, room, and passenger car.
This deodorizer is used only by titanium; by only placing, it can be effect about 100g - 500g at 6-8 mats in the room, and the car can raise an effect by 100g use by sedan of five-person riding.
It is possible to color this, to attach the scent and perfume of a hinoki, a rose, a mint, a herb, lavender, a grapefruit, an orange, or the like, to improve interior design quality, and to use it as an aromatic.
Although reduction of resin has reduced quickly the aromatic and deodorizer which approach the hydrophilic resin marketed in one to two months, long-term utility is acquired by using titanium.
It is possible to consider it as use of the deodorizer and aromatic by the mixed use of this titanium and nonionic resin.
Even if spice is added to mixture of polyvinyl alcohol, polyvinyl alcohol, and a polyalkylene oxide; and if a polyalkylene oxide, an artificial flower is put and is added aromatic, it will not reduce weight after three months pass, a scent is being smelled, and it is economical.
It becomes possible to raise the bactericidal effect of resin to this nonionic resin by carrying out mixed manufacture directly.

In antioxidizing of oil, 17 titanium balls supplied to tempura oil.
When titanium is fed into unusable oil (3 times used) with oxidizing degree 3, an oxidizing degree falls to 1 and changes that it is equivalent to new oil.
When 30-50g are used to tempura oil 1.5L, tempura become crunchy and there is also no disagreeable smell.
In the deodorant effect which suppresses the incomplete combustion of an oil stove, titanium ball 100g is fed into a cartridge tank in 3L.
The smell is lost at the time of ignition and deodorization, and incomplete combustion is lost, even if fire power improves and it carries out 1 graduation lowering use from usual.
It leads to the improvement in fuel consumption of fuel.

It turned out that this photocatalyst has an effect of a photocatalyst similarly in nonionic resin besides titanium. If the potted plant of the mini rose of the glass container which uses nonionic resin for the vegetable hilling in which growth got worse is leave to the outdoors, a rose will root and a green leaf will be attached.
If Dendrobium is planted and left in nonionic resin hilling also in the interior of a room and it is, even if resin of a potted plant contracts and moisture is completely lost, a plant will root without withering, will attach fresh leaves, and will attach many fine roots.
Although it thinks that this is the respiration of resin, the fluorescent light is used for the room on daytime and a night, and it is also considered the bactericidal action by an optical catalyst.

Also in the summer, the plant of the outdoor planter had become slumped and weaken in heat.
The place which sprinkled and uses nonionic resin for the soil of a planter, and the plant which had lost energy took out energy in one to two days, and has revived.
Only in this operation once, adding water could be excluded and weeds hardly sprang up.
It is thought that this operation is based on the same photocatalyst as the bactericidal action of resin and titanium.
This nonionic resin is based on polyvinyl alcohol and a polyalkylene oxide and polyethylene oxide.
Budget prices use is attained at the mixed use of this titanium and nonionic resin.
Moreover, by coating resin with titanium or carrying out mixed manufacture, in the bactericidal action of resin, growth of a cut flower and a plant is raised more further, it is highly efficient and multi-purpose use is attained.

Hereafter, the freshness maintenance of water in the case of using cut flowers with the tap water into which titanium is put is explained.

By the flower arrangement store, in order to keep the freshness of water fresh, the water of the flower was exchanged every day and the cut flower has been held fresh for a long time until now.
The work which water exchanges also in breeding of fish, such as tropical fish, is excluded.
By using titanium for tap water, the freshness maintenance of prolonged water becomes possible and prolonged use of a cut flower, a fish, or the like is attained.
That is, maintenance of the cut flower for about ten days to 25 days is possible by using about 4-6g titanium for 500mL of tap water.
Although the difference of these days is based on the freshness of a cut flower, a bactericidal action occurs by the amount of about 2g - 100g of the titanium used, the freshness maintenance of the water of the tank of a cut flower, a plant, and a fish is possible at about twice - 10 times that amount used of this, and it is proportional to that amount of water, and use is also possible.

A hydrophilic resin cellular porous medium, a water absorptivity film and PVA polyvinyl alcohol (polyethylene is mixed in oasis or oasis), and the thing that adsorbed or coated these with water-soluble titanium were used as freshness maintenance of water, a flower, or a plant. Further, use of the bactericidal action of the water and liquid manure, water which uses Vital-Atom running water for resin, and the freshness maintenance of a flower or a plant are possible.

In the experiment, transparent plastic containers are used, and 5g, 10g, 20g, 30g, 40g, 50g, 60g, 70g, 80g, 90g, and 100g of titanium is prepared.
The shapes are, A: gray titanium, B: glass cullet (white, dark blue, green, and brown), and C: spherical glass bead (white, dark blue, green, and brown).
By using about 5g of titanium, the bactericidal action appeared regardless of the shape and color of titanium of the above-mentioned A, B, and C.
Maintenance of a prolonged flower is attained without exchanging tap water.

By use of this 5g titanium, the rose flower, which state of flower blooms about 20 to 30 percent to 50 percent, has bloomed in full bloom in about 1 - 2 days.
Although it seemed that this is based on the hardness and room temperature of a bud of rose, or water temperature, the hard bud which is not yet opened is not opened.
In the same room temperature as use of 5g titanium, by use of titanium (about 30g - 60g), although it is possible to hold a flower, maintaining the state of the bud of this rose that blooms about 20 percent - 30 percent and as for about 50 percent blooms; however, in 70g - 100g titanium, a flower will open immediately.

If 10g of A: gray titanium and a total of 10g with 5g of B: glass cullet of white and 5g of dark blues are compared with, A holds for ten days, and in B, the flower has finished it as the experiment of use of titanium 10g in about 5 - 7 days.

For use of titanium 20g, for example, a total of 20g with 10g of B: white glass cullet and 10g of B: dark blue glass cullet, when white is mixed, it become bright blue, and it bloomed beautifully and bloomed for 80 percent to full bloom and is in bloom 10 days or more.
Even if it is the same 20g use, which is a total of 20g with mixed every 5g each of four colors of B of white, dark blue, green, brown, it bloomed about 30 percent, and does not become full bloom.
Although 20g of B: glass galette of dark blue, green, and brown, and 20g of C: bead of a spherical glass cullet of dark blue, green, and brown are used separately, the buds seldom bloom.
For use of a total of the 20g with 10g of A: gray titanium and every 2.5g each of four colors of B:glass galette of white, dark blue, green, and brown, roses become bloomed from 80 percent to and full bloom.
Maintenance of the flower for about eight days is possible for the white glass cullet and white bead of B and C at 10g.
In 10g of gray titanium of A, maintenance of the flower for about ten days is possible.
In the 20g dark blue glass cullet of B, maintenance of the flower for ten days is possible.

In mixture of titanium 30g, which is a total of 30g with 10g of gray titanium of A and 20g of glass cullet of B: 5g each of four colors of white, dark blue, and brown, a rose flower blooms 70 percent and holds 10 days or more.
In use of this titanium 30g, 10g of gray titanium of A, and 5g of glass cullet whites of B, is set to gray and white 15g, and is color 15g of the glass cullet of B, dark blue, green, and brown.
Mostly, white and the colors are a half to half, and it blooms for about 70 percent.
In 20g use of B, half and half use of white and dark blue become bright blue, and it blooms for about 80 percent by using 15g; however, the bud is not opened in 20g of dark blue and 20g of green only.

This experiment shows that use of white titanium tends to receive the effect of a photocatalyst, and dark colors, which are dark blue, green, and the brown, cannot receive the effect of a photocatalyst easily.
In use of a small amount of titanium (5g-10g) of A, B, and C, also with dark color or bright white color, a small quantity tended to receive the effect of the photocatalyst, the bactericidal action increased immediately, and the flower has bloomed.
By increasing the quantity of titanium, it becomes a layer of titanium thick in a container, and an operation does not appear immediately that the dark color of dark blue, green, and brown cannot receive the effect of a photocatalyst easily.
If it becomes a thick layer even if it is white titanium, it will be thought that an effect becomes difficult to show up.
A bactericidal action appears immediately and a flower blooms because light fully hits and passes in a large container.
In a narrow small container, light does not strike upon titanium enough, but the bloom of a flower becomes slowly and growth of a bactericidal action also becomes weak slowly.

Thereby, the amount of the titanium used is proportional to the water used for a container.
In 500mL of tap water, it becomes use about 5g - 10g, and in 1L of amount of water, about 10g - 20g is used.
About 500mL of tap water serves as use about 20g - 60g, and in 1L of tap water, about 40g - 120g is used.
With the size of a container, the use of titanium of dark color can suppress the bloom of a flower, and can be grown up slowly.

It is possible for an operation of a photocatalyst to change with colors, and to bring forward or delay vegetable growth by this, a plant is harvested early, and it can respond also to long-distance transportation, and the freshness maintenance of a cut flower is possible.

Next, the experiment which purifies the tank of the fish by titanium is explained.

### ( Experiment 1)

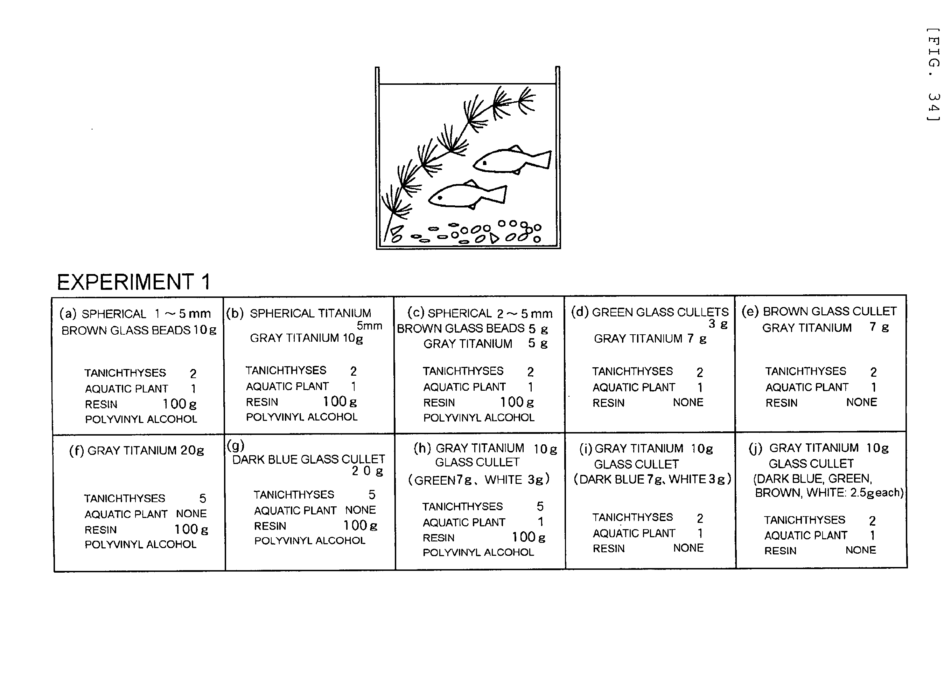

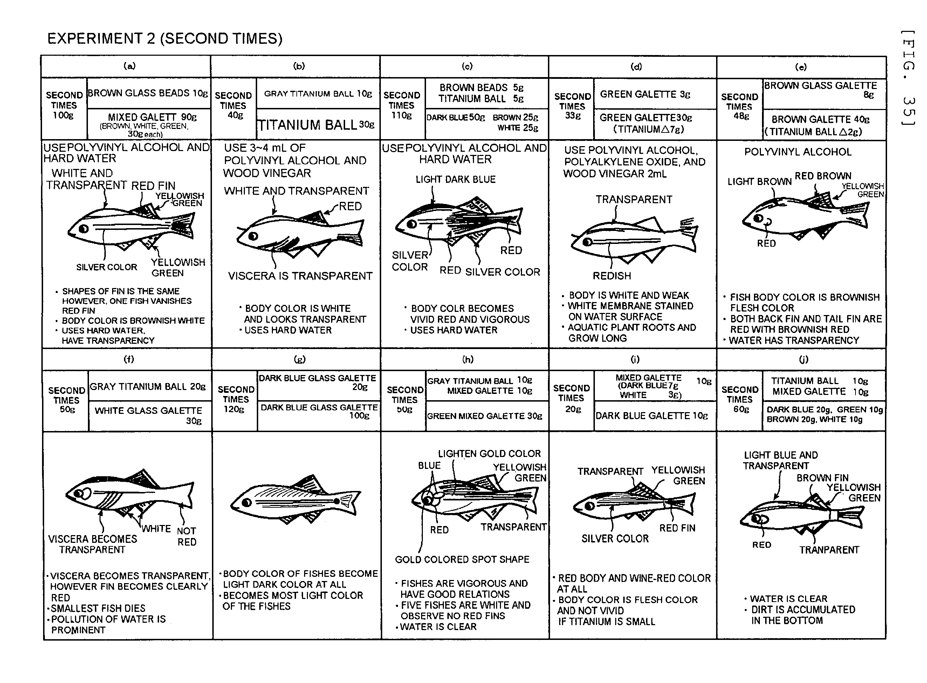

As shown in Fig. 34, 800mL of water cooled after boil and 200mL of water currently used when a fish was purchased are put in the tank.
As experiment 1, two - five Tanichthyses are used and the sizes are 2cm - 3cm.
Specifically, two Tanichthys are used for experiment a) - experiment e), experiment i), and experiment j).
The five Tanichthys are used in experiment f) - experiment h).
As for experiment j), the three Tanichthys are used.
In addition, in experiment a) - experiment c), experiment f) - experiment h) 100g of polyvinyl alcohol is used.
One aquatic plant will be used in all the experiments.
The food of a fish is given in small quantities one to twice at one week.

Although a) is the mixture of 1mm - 5mm of glass bulbs of a granule, 5mm is only about 15 pieces and it is at least 1/3 of the whole.
In the case of a spherical brown glass bead, the effect of a photocatalyst is low and muddiness of water will start in one to two days.
The water of b) and c) is clear at this time.
By the bead type of these granules, a bactericidal action is considered not to act well.
Then, about one week afterward, when 100g of resin is used for a), the transparent feeling of water is observed in about one day.
Although it is use for about 25 days now, resin has a filtration operation of water and the state where the white film of the water surface disappears in about one day.
If resin is used, in order for the transparent feeling of water to come out and to prevent evaporation of water, there is no reduction in water.

Although, b) is 10g of gray titanium, and c) is mixture of 5g of gray titanium and 5g of spherical brown glass beads of a), the dirty of water is later than a).
Since there is little amount of the titanium used, the object of the shape of the droppings of a fish or the like is not adsorbed by resin, but it remains in the bottom of glass.

d) is 10g with 3g of green glass culets and gray titanium 7g.
At use of a green galette and an aquatic plant, according to the same green color operation, the effect of a photocatalyst falls, and a fish tears an aquatic plant, the water of an aquatic plant or a tank rots, and one fish is died of shortage of food around the 20th day.
Polyvinyl alcohol is not used in the tank.
Then, since the underwater bactericidal action is weak, growth of an aquatic plant also becomes difficult, the water surface becomes dirty, and a white film is made. Amount of water will reduce its weight to about 1/3 in the 20th day, and amount of water has dropped to about 1/2 in 25 days.

e) is not like d), amount of water will be an amount of half in 25 days, and the aquatic plant became torn to pieces and is torn to pieces smaller than the time of 20th day.
By 8g of brown glass cullets, it turns out that the glass cullet is maintaining the effect of a photocatalyst as compared with 7g of gray titanium of d).
In 1L of amount of water for two fish, water becomes dirty, and water is dirty in a) early in one to two days.
If a bactericidal action is low, growth of an aquatic plant will get worse, and growth of a fish will become difficult. It is thought that the aquatic plant is torn by shortage of food.

Since d) and e) are not using resin, they are considered for a water purification operation to be low.
Water will be an amount of half in 23 days.

In f), g), and h), 100g of resin is used for five Tanichthyses.
In a) - c), two Tanichthyses and 100g of resin are used, since there is little quantity of titanium, a dirt at the bottom is transparent and appears.
However, the soil of water is not seen in f) - h).
An aquatic plant is uniformly fine and it means that the bactericidal action is working.
f) uses gray titanium 20g, g) uses dark blue glass cullet 20g, and h) uses 10g of gray titanium and mixtures of 10g of glass cullet with 7g of green and a 3g of white.

h) is, mixed glass cullet 10g of green and white, and 10g of gray titanium, there are also few soils of water, the color tone of Tanichthys comes out finely, the color is attached to the red line from the back to the tail, and they are also very fine.

a) - c), f) - h) are used 100g of polyvinyl alcohol, and 800mL of water which is cooled after boiled is used in the tank.
In water cooled after boiled, chlorine still remains; thus, polyvinyl alcohol is performing the bactericidal action of the photocatalyst without adsorbing chlorine, and it is thought that the use of tropical fish which uses sea water is possible.

In d) and e), 10g titanium is used without using polyvinyl alcohol; however, by d), one Tanichthys is dead, and an aquatic plant rots and only 1/4 remains.
This is considered that the freshness of water, growth and freshness of an aquatic plant fell because the ionic action of chlorine is weak and an operation of a photocatalyst is not able to demonstrate the effect.

Use of about 5-6g titanium is possible in 1L of water, and it has a water purification operation for one month with the glass cullet which is 20g.
The use for about five to six months is good at about 100-120g use.

In a car, a pet, a refrigerator, the door, a washroom, the room, and a toilet,
also in use of titanium 100g, or use of 50g titanium and glass cullet 50g, utility is demonstrated like titanium 100g;
when a refrigerator is opened, and a kitchen garbage will be put also on a washroom and the door for one day and it experiments in it on them, there is no smell when returning from outside and opening a door.
Double the amount of the usual use is for pets is good.

In the above-mentioned experiment 1, titanium 10g according to a glass cullet to one 2 - 3cm fish is required for the tank of 1L of water, and water is not renewed for one month, but it turns out that it is possible to breed in the state of the first clean water.
A photocatalyst can be effectively taken in by using a glass cullet from the bead type of the granule used by a) and c).
Although white titanium has few soils of water, it can raise growth of a fish by using the glass cullet by which color coloring was carried out, and can control the tone of the body of a fish.

i), j) are using 10g of gray titanium, and 10g of glass cullet.
10g of glass cullet of i) is 7g of dark blues, 3g in white, and 10g of glass cullet of j) is 10g with 2.5g each about dark blue, green, brown, and white.
i) is two Tanichthyses, and although j) is three Tanichthyses, which is one more, it does not have exchange of water because of the state of the same water, and the fish is sailing in it very actively.
i) and j) is the amount of the 20g twice as many titanium used as d) and e).
   Using 10g gray titanium each for both, the color of the body has a transparent feeling.

In g), growth of a fish is conspicuous especially in experiment 1, and it clarifies by comparison with other examples of an experiment, and is growing up a little greatly.
This uses the dark blue glass cullet used for the pot bottom, and is considered that the effect that a glass cullet with the good color of the body of a fish and larger surface area which receives much light than the spherical glass bead of the granule of a is a photocatalyst will demonstrate.
In g), dark blue glass cullet 20g and polyvinyl alcohol 100g are used.
It seems that it is what is depended on an operation of the photocatalyst of this dark blue glass cullet.
A golden line comes out from a back to a tail of a Tanichthys fish, and it is shining golden.
A back fillet and a tail fillet are not looked at by other fish, and serve as a more nearly crimson and deep color, and their color of the whole fish is blackish.
In f), by using gray titanium, the body of a fish is white and is tinged with the transparent feeling, and whiteness is conspicuous like Japanese icefish.
h) is mixture with titanium and a glass cullet, and although it is not as g), its color of the body of a fish is slightly blackish.

Next, the experiment at the time of using nonionic resin and a cut flower for a tank is explained.

### ( Experiment 2 )

a) uses brown glass bead 10g in experiment 1, in experiment 2, it mixes 30g each for glass galette brown, white, and green, and 100g is used.
Although one Tanichthys has a splendid red fin, another one fish becomes decent off-white colors, and completely comes to see the red color of a red fin.
A strong resemblance to the apistogramma of tropical fish, an Apistogramma nijsseni, and a Neolamprologus brichardi is born, and a red fin is lost.

The fillet red both two animals was held at the beginning which purchased the Tanichthys.
If polyvinyl alcohol is used in about one week, the transparent feeling of water will increase and transparency will become high most in having used resin.
The Amami-no-mizu water (trademark) of 100% of deep-sea water of hard water is used, and the transparent feeling of water is increasing further.
From the cut end of the aquatic plant, 3-4 of new white root is extended to about 5cm.
Even if it uses resin, a fish is very fine, can sail in resin, and is not dead.

b) uses gray titanium ball 40g.
Especially the effect of the photocatalyst of this gray titanium has a strong decolorization operation, by the use for about one month, internal organs are transparent, and it comes to be in sight, and looks weak-looking like Japanese icefish.
The bactericidal action of a photocatalyst increases, a fin becomes crimson, the white color of the body and a crimson red fin are objective, and it seems to be a golden carp. The pyroligneous acid, wood vinegar solution, shown in Table 18 is used without having used polyvinyl alcohol and using hard water.
When 3mL - 4mL increase and specification of the pyroligneous acid is carried out from d), it cannot grow and have died.

[Table 18]

**TABLE 18**

| | | | | |
|---|---|---|---|---|
| Analysis table of ingredient of wood vinegar (diluted 1000 times) (Product by Times Garden Reserch Institute) | | | | |
| Item | | | Diluted water _{(Tap water)} | Unit |
| Total Nitrogen | (T-N) | 0.84 | 0.77 | mg/l |
| Water absorble Phosphoric acid | (P₂O₅) | less than 0.05 | less than 0.05 | mg/l |
| Water absorble Potassium | (K₂O) | 1.4 | 1.4 | mg/l |
| Calcium | (Ca) | 5.6 | 5.5 | mg/l |
| Magnesium | (Mg) | 1.6 | 1.6 | mg/l |
| Sodi um | (Na) | 9.5 | 9.5 | mg/l |

| | | | | |
|---|---|---|---|---|
| * Environmental analysis center of Niigata Prefecture in JAPAN | | | | |

In c), when mixing 10g of mixtures of brown glass bead and titanium and brown, white, and dark blue which increased the quantity of mix galette 100g, the color becomes blue which white and dark blue as a subject.
Body color of a fish is tinged with red to the whole and vivid, and it is very beautiful and fine.
Here, although polyvinyl alcohol is used, the transparency of water is low and a soil is conspicuous.
This is because the soil was adsorbed between them since hard water was used about 20 days afterward after using polyvinyl alcohol, and transparency falls.
Since polyvinyl alcohol is neutralized when hard water is used, transparency is falling from the tank of a which uses hard water from the beginning for the effect of a photocatalyst to act.
Resin adsorbs the soil of water, such as food and ammonia, and resin is making it emerge.
The transparency of water becomes high by removing ammonia or the like and using hard water a little early by combined use of the filter of the water purification system of a tank.
In reddish silver, the color of the body of a Tanichthys is active, and is good habitation.
Here, the fish is not dead.

In d), 3g of green glass gallets (gray titanium, titanium 7g is removed in consideration of a decolorization operation) and also 30g of green glass gallets increase, and it is set to a total of 33g.
When the water of about 2/3 is exchanged and 2mL of pyroligneous acid is added, it does not suppose that the glass of a tank will be approached, and it will be frightened and will not move by the center of a tank. Although the quantity of 30g of green glass cullets is increased, neither the soil of water nor muddiness disappears, but it is in the state same for about two weeks.
When about 100g of color resin which the polyalkylene oxide colored with polyvinyl alcohol and mixed resin of the polyalkylene oxide is added, the fish which does not move will begin to move in about 5 minutes suddenly.
This is because a polyalkylene oxide adsorbs chlorine and pyroligneous acid which increased by pyroligneous acid and is removed.
Precolored resin of a light blue, yellow, purple, and a peach-colored polyalkylene oxide makes the inside of a dark tank bright rapidly.
A fish is surprised, approaches this resin and approaches the glass of a tank.
Even if it gives food, there are no signs that it flies and eats.
The transparent feeling of a tank increases and it becomes bright beautiful coloring.
The color of resin of sky blue or yellow purple makes soft colors of a glass galette or a bead, such as green and brown, and is carrying out the operation of a cushion.
The filtration operation of nonionic resin and the reforming effect of resin were demonstrated.
One fish has died from experiment 1 by use of wood vinegar.

In e), also increase the quantity of brown glass galette 8g (also, 2g of gray titanium is removed) to brown glass galette 40g, and it is a total of 48g.
A tank is dark color because of brown glass cullet and green of an aquatic plant.
In a) and e), there are both much brown at about 40g of brown and 48g, the color of the body of a fish serves as a yellow off-white, and it become decent white.
In e), red falls and it becomes reddish brown, and in the tip part of this fin, the point of a transparent fin is colored thin yellowish green, and a fin also seems to have attached the light.
It is thought that the green of the aquatic plant would be colored the fin of the fish in the operation of the photocatalyst of titanium.
This operation is an operation of titanium, polyvinyl alcohol, and hard water in the experiment of a cut flower, and it is thought that the same operation as that by which green drawing and leaf were printed on petal of rose is performed.
If light is applied and continued, the color of the body of a fish will be tinged with red.
If an operation of a photocatalyst increases, reddish brown will become crimson, if light is not applied, it will fall, and it becomes reddish brown.
It turns out that it reacted to light, and the color of titanium and the color of an aquatic plant which are used for a tank turned into the color of the body, and it have appeared.
A bactericidal action will increase by use of polyvinyl alcohol and hard water, and the transparency of water increases.
Even if the glass cullet of the bottom is covered with soils, such as food and stools, since this brown glass cullet is the same color, it is not conspicuous; and the transparency of water is high if water is not stirred.

In f), a 20g white glass cullet was added to 30g gray titanium, and a total of 50g was used for it. It seems that the color of the body of a fish becomes transparent white, internal organs are transparent, and it comes to be visible by having used 20g of gray titanium. It seems that the X-ray is seen more in 50g use. If light is not glared, it is the brass color which the Tanichthys was not conspicuous and was somber, but if light is applied, in the bottom, a Tanichthys will become crimson clearly. When white titanium and glass cullet are used, the soil of the bottom portion of a tank is conspicuous compared with the case where the brown glass cullet of e) is used. Since polyvinyl alcohol was used and neither hard water nor a neutralizer was used immediately, chlorine ions increased in number, and the smallest fish died, before using hard water. In f), by having used 20g gray titanium and a 30g white glass cullet, the operation of a photocatalyst increased by the increase in a chlorine ion, the internal organs of the fish were transparent and the red of the tail of a Tanichthys disappeared.

In g), a little white glass cullets were included in the dark blue glass galette, and it was made the quantity of 20g. When the quantity of 100g of dark blue glass cullets is increased and a total of 120g is used, the color of the body of a fish is colored the thin dark blue appropriate for reddish brown, and a Tanichthys becomes crimson. Hard water is used, a transparent feeling is in the high best state, and a Tanichthys is the dark tone near the state when purchasing in a store. A dark blue glass galette and hard water, and polyvinyl alcohol 100g are used, and the golden line is entering and shining with the tail from the back of the Tanichthys. As compared with other fish, the back fillet and the tail fillet became a more nearly crimson and deep color, and became splendid. On the whole, the fish becomes blackish, and swims around sharply. Polyvinyl alcohol was used also here, and before changing to hard water, about 2cm smallest fish died. Even if it is a case where the water which cooled hot water is used, it is possible that chlorine ions are increasing in number using polyvinyl alcohol. There are too many five fish in 1 liter of water.

In h), 30g of green glass cullets were added to 10g of gray titanium, and mix glass cullet 10g, and the whole quantity was 50g. It became green at a rate of 4 to 1 with titanium of green and gray at the bottom of the tank. Here, the effect of gray titanium was shown by 50g use, and the effect of the green photocatalyst of a green glass cullet and an aquatic plant did not fall. For this reason, the red of a Tanichthys was not seen in the operation of a green glass cullet and 10g of gray titanium. On the whole, the fillet of a fish and a bodily color were light brown. The deep golden line went into the tail from the back, the body was transparent by the degree of light, and the iris of the eye was greatly conspicuous. There was a transparent feeling in the upper part of a tank, and the soil of polyvinyl alcohol was conspicuous. By exchanging water and using titanium, the body was transparent. In f) and g), although the fish died, the fish did not die in h). In the case of the photocatalyst which uses titanium, the effect bactericidal action falls by green use of an aquatic plant and the same color. For this reason, in a tank, when only this green is used, the color of the body of a fish worsens and it becomes a cause by which water becomes dirty. This can be known from the tone of the freshwater fish in the natural environment of a river, a pond, or the like not being so beautiful. This can be said to be that it is shown that freshwater fish cannot live when a bactericidal action is high. If five large and small fish inhabit a 1L tank, it will seem that they sense stress very much, but although the beauty of a tank is halved, as compared with the fish of other tanks, it is the feature that fishes were very close and were always together. It is thought that a green effect is set to the level at which a native habitat is maintained because water becomes dirty, and has become the stable action. Although the five same fish were used in f), g), and h), any experiment used resin polyvinyl alcohol and the conditions of the experiment were the same, when a green glass cullet was used, in h), five fish were living. In f) and h), almost an equivalent amount of about 50g titanium is used, on the other hand, 120g of dark blue glass cullets are used in g), and it is the more than twice as many amount used as f) and h). Since the fish of g) is moving about very sharply, it can consider that the effect and bactericidal action of a photocatalyst are increasing. It seems that this dark blue color makes character more offensive than green since the smallest fish is dead. Five fish were suitably put into each tank of f), g), and h), the 2cm smallest fish was especially mixed in it in the tank of h), and there was no trouble in it.

In i), the quantity of dark blue glass galette 10g was increased to 10g of gray titanium. When titanium 20g is used for 1L of water, it is usable for three months without exchanging water. Since there was little food, there were few soils of water, and since resin was not used, soils, such as food and excrement, sank to the bottom and the transparency of water was high. Although the fish was transparent by having used gray titanium, therefore the bodily color was not so good, it is having increased the quantity of a dark blue gallet, and dark blue with a bodily thin color is coming once. Although i) is in the completely same state in one month, if it becomes near in two months, soils differ in the tank of two animals, and the tank of three animals.

In j), gray titanium 10g was used as it was. In this j), a brown gallet is used and the color of the body of a fish is thin off-white flesh color of a brown gallet ,but, since it was not a level on which the internal organs are transparent, progress was seen as it was. In j), although titanium 10g is used, as compared with 10g of gray titanium of b), 20g of gray titanium of f), and 10g of gray titanium of h), the transparency of a fish is sensed low. Use of gray titanium avoids concomitant use with white, uses many dark colors, and makes gray titanium a small quantity. In i) and j), since resin is not used, when it becomes in about two months, an aquatic plant adheres to glass, the soil of water, such as food and excrement, adheres, and the soil of glass is conspicuous. If resin is used, evaporation of water is prevented, a soil adsorbs, and glass does not become dirty but is simple for exchange of water.

Next, the experiment at the time of using titanium and nonionic resin for a tank is explained.

### ( Experiment 3)

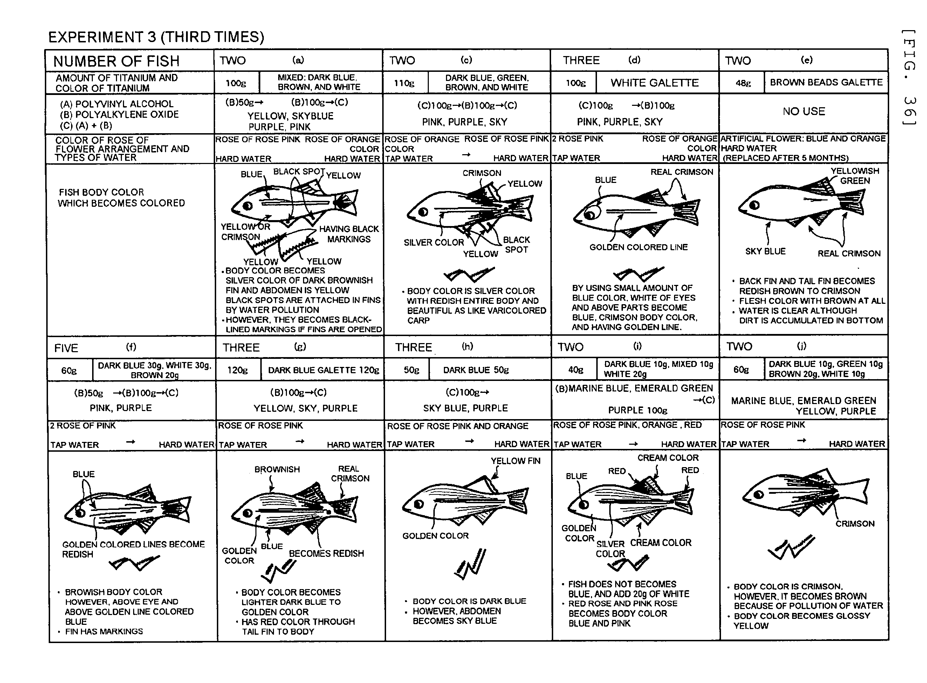

As shown in Fig. 36, in experiment 3, a filtration operation of resin is used and the effect is seen for the purpose of coloring a fish the coloring matter of resin, and the coloring matter of a flower. First, the neutralizer (shown in Table 19) which neutralizes chlorine of tap water was used, and gray titanium and white glass cullet, and the bead were removed. And the color of the body of the fish, growth of condition etc., and the transparency of water were observed, at the time of using three kinds of materials of A) polyvinyl alcohol, B) polyvinyl alcohol, a polyalkylene oxide, and C) polyalkylene oxide. Although only a dark blue glass bead and glass cullet can color especially to the body of a fish, it is the experiment which looks at whether use of coloring resin is effective. The water of the tank in which the soil of the water used in experiment 2 or resin is conspicuous is thrown away, and the water which added the neutralizer is used.

[Table 19]

**TABLE 19**

| Analysis table of neutralizer (TETRA KONTORAKURORAIN, diluted 5000 (Product of Tetra GmbH, Germany) times) | | | |
|---|---|---|---|
| Item | | Diluted water_{(Tap water)} | Unit |
| Calcium (Ca) | 5.5 | 5.5 | mg/l |
| Magnesium (Mg) | 1.6 | 1.6 | mg/l |
| Sodium (Na) | 11 | 9.5 | mg/l |
| Chlorideion (C1 ⁻) | 11 | 11 | mg/l |

| | | | |
|---|---|---|---|
| * Environmental analysis center of Niigata Prefecture in JAPAN | | | |

When 100g of resin which adsorbed pure water at polyvinyl alcohol of material A is used for the tank in g), three fish are gathering in the center of a tank without a fish's completely moving. Polyvinyl alcohol is appearing like a haze to the portion of about 2/3 of the water level of a tank. The fish passing through the inside of this resin bends the body, and does not pass along it easily. This was considered that the water which carried out adsorption use has a cause although it is transparent resin, and shortly after blowing up and using resin with tap water again, resin of the height of about 2/3 of the water level of the water of a tank fell or less in 1/2. A fish regains vigor suddenly and began to move. The dark blue glass cullet was used in g), and the brown glass cullet was used in e). The color of the body of a fish turns into the thin blue body or the cut thin dark blue color of the body in g), and turns into light brown in e). Thereby, it can know that the color of the body is changing according to the color of the titanium used for the tank. When having applied light, the color of the body of a Tanichthys clarifies, but unless it applies light, the color of the body does not become beautiful. In g), since yellowish green is also colored the fillet, a Tanichthys can also make the colorful color colored like tropical fish. The green glass cullet was used, and the effect of the photocatalyst was not shown by a relation with the green of an aquatic plant, but, as a result, water rotted, and the fish has died from d). According to this, to a fish, the color in a photocatalyst does not affect only the color of that body, but when maintaining that life, it plays an important role.

Although it is yellow in dryness, polyvinyl alcohol of material A is almost transparent if water is adsorbed. In the state where polyvinyl alcohol has come floating to 1/2 of the height of a water level, the soil of a tank will be adsorbed and the soil will be conspicuous. In experiment 2, resin must be exchanged in about one month - two months. Even when material B) is mixed, it has risen to surface to the about 1/2nd place of a water level similarly. In the case where the polyalkylene oxide of material C is used, it is located in the bottom portion of a tank and is about 1/4 to 1/5 of a water level. It is use of the same quantity as water, and it rises to surface in a lower position from the water surface, and specific gravity is about 0.8. When material C is used for the tank of i), it is the about 50g amount used. When it rises to surface to near the water surface when it is used for a flower vase, and it is used for a tank, this polyalkylene oxide has solidified in the bottom portion, and is very convenient.

In use of i), a very good result is brought by about 50g use, and the transparency of water was acquired. A tank can be lit up, sea water, a lake, or the like can be suggested by using the color of a dark blue glass galette, and the marine blue of colored resin, and emerald green and the color of purple, and the synergistic effect is shown. Since the tone of a glass galette or a bead is light green in an aquatic plant and the same color, it became an effect of minus, and the color of the body is bad and one fish has died from a photocatalyst.

Especially in the experiment of the cut flower, when the case where polyvinyl alcohol is used, and hard water are used, decolorization and coloring of rose petal have an effect, the green color adhered to the petal, and the copy phenomenon has occurred. The green of the aquatic plant currently used for a tank is considered like this that the portion at the tip of the most sensitive fillet of a Tanichthys was simply colored to yellowish green. Thus, freshness maintenance of water and purification of a tank are attained according to the synergistic effect which reduces the photocatalyst of titanium, uses together with an aquatic plant, a cut flower, the plant of hydroponics, or the like further, and makes the color of the body of a fish from using the filtration operation of nonionic resin, and an operation of a photocatalyst together beautifully. It becomes possible to prepare the color of the body of fish, such as red, pink, yellow, and purple, by using the minerals contained in hard water, a glass galette, and a bead.

According to experiments 1 and 2, since the decolorization operation of titanium happened and the color of the body of the fish became transparent, it seemed that use of titanium is difficult one, but if white titanium is used, the color of the body of a fish becomes white, and is the color of the body of thin dark blue in use of titanium dark blue again to light brown in use of brown titanium.
This shows that the color of the body of a fish is changing with the colors of titanium and the colors of surrounding environment to be used.
Although the colors of the titanium used for the experiment were four colors of dark blue, green, Thea sinensis, and white, the coloring of the original fish of them was attained in the free way of thinking by using all colors, such as pink, an orange, yellow, a light blue, red, and purple, except these 4 colors.

Although glass is coated with this titanium and it is used for bottoms, such as a tank, a pond, glassware
Although green titanium which is the same color as an aquatic plant reduces the bactericidal action of a photocatalyst in concomitant use with an aquatic plant, when it is used alone, it is not so effective, and it is using it, mixing with white or other colors, and the operation of a photocatalyst is shown.

Although the use of seeing white titanium also has especially a high decolorization operation as compared with other colors, and is white is difficult, it is using it, mixing with titanium of other colors, and it is possible to prevent the development of a decolorization operation according to concomitant use of coloring resin, a cut flower, an artificial flower, etc., and to change into a coloring operation. As for this white titanium, a photocatalyst is shown by the thing with the color which coloring resin, the cut flower, the artificial flower, or the like were colored used together. If the color of the body of a fish has much white titanium, will become transparent, but when deep-sea water of hard water was used, the silver color of the body like the abdomen of a pacific saury could be made, in a) and c), the wine red color was colored this silver color of the body using resin of pink and purple, and the fish was able to be made beautiful much more. It is possible to use this coloring operation for culture of a golden carp, tropical fish or freshwater fish, etc., and to make the silver color of the body.

Although use of these titanium is used for the bottom of water, it is possible to take in a photocatalyst effectively by using it for underwater or the water surface. An effect will be shown, if the artificial flower which surfaces on this underwater and water surface is coated with titanium and also it is used for the quality of the material of a plastic, cloth, paper, or the like The material and the deep sea water which are used for these accessories are recognizing variety existence, and the kind of a plastic or deep sea water is not limited.

In the tank of a fish, when a cut flower is used, water becomes dirty.immediately, but when it is an artificial flower, a coloring effect can fully be acquired. A coloring operation is given to a bulb or the like by using together titanium floating on underwater or the water surface, and the sinking glass titanium, and it is used for improvement of a species of the color of a flower. Titanium and light are made to act to the bulb of a yellow flower, and making an orange flower according to an operation of a red photocatalyst is expected, and making a blue photocatalyst act on the bulb of an orange flower, applying light to the bulb of a pink flower purple, and making it change to a dark blue flower or the like is expected.

In experiment 3, the flower of the rose of rose pink and orange was floated on the tank of a fish, and it was tried whether natural coloring matter would be preferred to coloring like an aquatic plant. The coloring resin polyalkylene oxide, the artificial flower, or the like were used, and deep-sea water of hard water was compared with the tap water which uses a neutralizer.

The coloring matter of the orange rose is colored the fillet of a), c), h) and i) yellow by use of deep sea water in about one to two days. However, even if it used it how many times, it was not colored the color of the body of the fish, but in i), rose pink color is using a rose-pink rose and a red rose together, and coloring of it was attained in the color of the body of the fish at blue and pink. In a), c), d) and f), mixed use of the coloring resin of purple is carried out to pink. At a), h), i) and j), even if it used the rose-pink rose, it was not colored but pink was colored wine red by use of coloring resin of this pink and purple in about 3 - five days at c), d), f), i) and j). If there is coloring matter which is easy to be colored, such as yellow and an orange, like a), g), and h), coloring of the coloring matter of pink or purple will become slow, and will stop however, being conspicuous. In a), h), and i), neither rose pink nor wine red is colored. Although coloring resin was light color, it is light color, such as yellow, a light blue, and purple, and was colored the fillet and hypogastrium of the Tanichthys. Although sky blue resin is 2-3 mere use, it is deeply colored the circumference of the corn of d), f), and i), and is colored the portion of the breast of a), f), and in g), is partially colored the hypogastrium or the like and is light color except the circumference of eyes. In use of an artificial flower, time was needed to a slight degree and a light blue and two yellow colors were colored the fillet in about two weeks after renewing hard water in e). In the tank of e), by use of brown titanium, although the color of the body was light brown, it became very beautiful by coloring of a light blue or yellow. Only hard water is filled up without exchanging water for about five months by use of titanium 48g. The bactericidal action of titanium fell, and even if there is a transparent feeling of water, dirty things, such as food and excrement, have collected. When 48g titanium is used, it is necessary to exchange hard water in about three to four months.

In the hard water used for a long period of time, even if it uses an artificial flower, a coloring effect does not immediately show up. In the tank of e), the light-blue artificial flower and the small yellow artificial flower were used, and, as a result, purple was colored the center section of the flower. About the color of this artificial flower, a light blue and yellow were colored the fillet of the fish, purple was colored after that, and, finally orange was colored. In the tap water which uses a neutralizer, in use of an artificial flower, since a coloring effect is low, it is necessity for a long time until an effect shows up. When hard water is used, although pink coloring is difficult under fluorescent lamp 27W, if a red rose is used for this tank together with a pink rose, by using a cut flower, it will become the color of the body of a pink fish. In i), when 20g titanium was carried out, the color of the body of a fish is the wine red which is tinged with lean, and became the color which faded. And the quantity of 20g of white titanium was increased, after making the color of the body of a fish white, it tried to color the blue of marine blue resin, but it is still white.

By using a red rose for this tank, coloring became possible about the color of the body of the fish of i) at blue and red. When not using red for blue or dark blue coloring matter, this blue resin is not colored. The quantity of white titanium was increased, and it was colored skillful red and blue, and yellow and the color of the body of the fish decolorized white became very beautiful. Various hard water is marketed, 100mg per 2L of magnesium and calcium 35.5mg are contained with natural water, and there is a coloring effect similarly in other deep-sea water, and a coloring effect is shown also in running water Vital-Atom water. Pink and blue are colored by using a red rose.

Use of hard water and a cut flower brought a result which soils the water of the tank of a fish. Depending on the grade of atmospheric temperature, a cut flower will change to blackish brown immediately, and it will break up underwater. At the beginning of spring, for about one week, what has been used for the tank becomes by the rise of atmospheric temperature only on about 3 - the 4th, and can hold under sunlight only for about one day. For this reason, although it must take out immediately, when to take out has been forgotten, the water of the tank was dyed brown and the color of the body of a fish has also become dirty. Although it seemed that it will fall if the black spot has adhered to the fillet of Tanichthyses other than e) and water is exchanged, when the Tanichthys opened the fillet greatly like the peafowl, this black point had become a linear pattern in the fillet. This phenomenon also resembles the pattern of the shape of a streak of the black looked at by tropical fish etc., and the print phenomenon of fish, such as abyssal fish, tropical fish, or the like containing many minerals, is considered that it was performed by the soil of light and such water or the like and the beautiful color of the body has been colored.

It was easy to be colored the fillet of a Tanichthys, the circumference of eyes, the side, the portion of a breast, and a portion with weak membrane, such as hypogastrium, and this print phenomenon has appeared in the place along which light tends to pass. This print phenomenon had appeared suddenly in the amount of conformity of titanium, when titanium and a deep-sea water of hard water in sea were used in the experiment of a cut flower. However, even if this operation uses neither titanium nor a deep-sea water in sea, under sunlight, the operation of a photocatalyst has taken place daily, it is carried out by natures, such as a field for growing a rose, a river and a pond which a fish inhabits, being sufficient, and it is thought that the color of the body, such as a pattern of fish, such as a cyprinodont metallurgy fish, has been made. The petal, when purchasing a rose flower already looks these at, and they can see that a color falls out, and the pink petal is white, and the color of a green leaf or drawing is colored the point of a pink petal. The green of an aquatic plant and the pattern in the back of a cyprinodont etc., and the red color of the body and pattern of a goldfish are based on an operation of a photocatalyst.

Magnesium and calcium which are contained in the tap water shown in Fig. 33 adhere to a petal, and these are considered to have happened, when solar light energy acts on this. Although the print phenomenon has happened to the color of the body of a cut flower or a fish simply by using deep sea water, if it experiments in the coloring operation of this fish on the outdoors of sunlight, it will be simply colored by use about 2g - 6g. By 1g titanium, even if it used tap water and deep sea water, the fillet did not become red and the coloring operation to the color of the body was not seen. However, at a cut flower, with 1g titanium, since the maintenance on the 14th is possible, it is thought by 1g titanium on the day of fine weather that the coloring to a fillet and coloring of the color of the body are also possible. Under both sunlight and a fluorescent lamp, coloring of the fish from 4g of titanium almost and long-term maintenance of the cut flower are attained, in a fluorescent lamp, it is an about 40g - 60g, and twice as many thing for which 80g - 120g are used as this, and the good coloring operation of fish and the freshness maintenance of water are obtained. However, if deep colors, such as dark blue, are used so much, coloring of thin color will become difficult. For this reason, by carrying out mixed use to white, a decolorization operation is prevented and the synergistic effect which prevents a decolorization operation is acquired by using together further the accessories by which coloring use was carried out.

Under sunlight, by a fine day, it is slightly colored at using about 2g - 3g, and is colored a little clearly in about 4g, and is especially colored good clearly by 5g-6g. This is the same result also when the tap water and the deep sea water which use a neutralizer are used. It is influenced by the weather especially under sunlight and operations of this photocatalyst differ in a fine day and a cloudy day. By the cloudy day, even if it is a tank which uses titanium 5g-6g, the fishy smell of a fish occurs and it is shown that the operation of a photocatalyst is falling. Thus, also in the water in which it became muddy and the bactericidal action fell, a fish lives, a hydrophyte is also grown, and an aquatic plant roots more.

Also when deep sea water is used, by titanium of about 2g - 4g, an operation of a photocatalyst is low and coloring does not become clear. By titanium of about 5g - 6g, mixed use of a red rose and the pink rose was carried out, and coloring of the color of the pink which was difficult until now became possible in about a day half. By about 5g titanium, the upper part of the back of a fish is green and a lower half is in the state appropriate for thin pink. In use of 6g titanium, blue and a light blue are colored the upper part of the back, it is colored pink and a lower half serves as very beautiful decent color. It is not colored pink even if colored only with a red rose.

It is color's being made from the combination of a color, not being colored even if it uses only pink, but using the molecule of color in a tank, and it turned out that it becomes a color of the color.
When the quantity of pink and red is increased, it becomes a Tanichthys of pretty pink.
This method is used for color printing or the like.
Red use serves as red coloring, in the case of sunlight or a fluorescent light, uses pink and red, and has become it with pink.
With paints, if white is mixed in red, it has pink, but even if it does not use white, it becomes pink by use about pink and red.
It is colored a fish by use of yellow and red at orange.
In an orange rose, this colors yellow the fin of the fish opposite operation.
In the experiment of sunlight, dark blue titanium is used and the color of the body of a fish becomes blue in the green of this dark blue titanium and an aquatic plant; it changes purple by the rose of dark blue titanium and red, and is colored a fish.

In g), which much amount of the dark blue titanium used, the color of the body of a fish is dark to the whole, and is the dark blue of blackish.
If it becomes such the black color of the body, it will become difficult to color light color.
For example, even if a deep color is colored a white campus and any color also applies light color on this color, that color colored will not be conspicuous and a coloring effect will not go up it.
In contrast, even if the color colored when a light color and white have applied previously and the deep color is applied gradually is any color, a coloring effect is demonstrated intelligibly.
Under sunlight, dark blue titanium is used for each (1g-10g).
Also in use of tap water or deep sea water, although a coloring operation is not seen in 1g, the pure white Tanichthys is faintly colored by the operation of a photocatalyst red in each tank (about 2g - 5g).
Although the tank of this glass is left on the wooden tables of a veranda, it changed to the fine day from the cloudy day, and the operation of a photocatalyst increased. The fish of the tank (2g, 3g, 4g, and 5g) of the deep-seawater use to the same day about ten days after is dead. Under sunlight, the bactericidal action increased by use of deep sea water, and the rise of water temperature in the tank, Tanichthys dies (5g and 6g).
It seems that this is because the water of the tank had become hot water at high temperature in the daytime.

In the operation of a photocatalyst, under sunlight, tap water and deep sea water are increasing at about 5g - 6g. Water temperature rises on the day of fine weather, especially a deep-sea water in sea changes water to hot water, habitation becomes difficult and the fish has died. It has died from the tank of titanium (2g - 5g), and in the two days, if it uses and experiments in a cut flower again, it dies with 5g and 6g.
In fine weather, a bactericidal action also increases at the same time water temperature increases, and it is considered that habitation became impossible as for the fish.
A red rose is used also for use of deep sea water (2g - 6g).
The transparency of water increases and the fish does not die for the tank which uses tap water.
In the tank of this tap water, in a cloudy day, water becomes muddy, it hangs on a tail from the breast of a Tanichthys, and a black line appears.
Under the fluorescent light of experiment 3, a rose flower discolored by water of deep sea water, water become dirty, the black point adhered to the Tanichthys, and this black point becomes a pattern as like the line.
The same print phenomenon as this phenomenon is happened. Under sunlight, an operation of a photocatalyst is demonstrated only with tap water, the pigment of the yellowish green of an aquatic plant or a dark green color is colored, and the color of the body of fish, such as a cyprinodont, is the color of the body in the brook.
An operation of a photocatalyst is demonstrated by cultivation of the flower of a rose or the like with chlorine of this tap water in the fields, the white decolorization operation on a rose-pink rose petal is seen, or a green leaf and drawing are printed on a petal, a rose flower is purchased, and it has already seen.
Under sunlight, it can be said that the coloring operation and the decolorization operation have been enough repeated with water, such as a river and a pond.
In the interior of a room, although an effect is low with the light of a fluorescent light and seven lighting 60W for the interior of a room besides this fluorescent light is used in 27W, it is use of about 200 to 300 W as a direct action effect.
In this lighting, with the tap water which uses a neutralizer, an operation of a photocatalyst is hard to be demonstrated and the deep sea water containing many minerals is considered to demonstrate the effect of a coloring operation more.
Coloring of the flower of a rose or the like uses a photocatalyst and chlorine ions, such as sunlight and color light, from this experiment, and it enables a flower to color.

Once, in the experiment of titanium and a cut flower, although a red rose had already held about 25 days by use of about 5g titanium, in about 1g - 5g, the flower of the rose of pink or yellow is used and a not much good result was not obtained by the original experiment.
When this rose flower is again made into a red color and it is used for about 1g - 4g, the use for about 14 days is checked and it is possible.
The water of the photocatalyst which uses this titanium is use of tap water.
Also in an operation of the photocatalyst which uses this titanium, and use of the running water system Vital-Atom water (Vital-Atom: a brand name, manufacturer is World Natural Science Co.) which makes the tap water which has the same bactericidal action, it can be said that use of red rose freshens a flower for a long time.
This raises a bactericidal action according to the red color and the chlorine ion with an operation of a photocatalyst by infrared rays.

This Vital-Atom running water machine is attached to the faucet of water service, and a red rose is put in the tap water which let this running water machine pass.
The rose of the light pink which just arrived by the florist after those two days is purchased, this running water machine is installed in a water pipe, and the rose of this light pink is put into the tap water used from the faucet of the water service which poured tap water enough. Although both flowers of the rose of the light pink which uses the tap water of this running water machine can hold a flower only for about one week, especially a red rose is fresh, and after two-week progress is long and it can hold a flower.
It supports upward so that calyx of five sheets may stick to a flower exactly.
The tap water which carried out connection installation of this running water machine to the faucet of water service, and took it out can say that a bactericidal action is higher than the tap water which carried out connection installation to the water pipe.
Although the red rose of the tap water (about 1g - 4g) which uses titanium also holds freshness, the calyx of five sheets is in the state horizontally opened to 180 degrees. This running water machine is installed in a water pipe, and it is thought that the bactericidal action by far-infrared rays by the time it comes out on the faucet of water service has fallen.

Although green coloring was not carried out to the petal of the red rose of the tap water which uses 1g titanium at the beginning, when lights, such as a fluorescent light, are applied to a rose flower, green coloring will certainly be carried out to a rose flower.
Although it seems that this green is colored, the color of a red flower is decolorized and it is thought that it is that to which green appeared in this portion.
In the tank, green is colored the flower of rose pink or orange, and this portion is decolorized immediately, and it changed to brown and has withered.
From the first, a rose is the green bud entirely wrapped in the green calyx, and is considered to have returned to the original green by the decolorization operation of the photocatalyst.

When a rose-pink rose is floated on the tank of the fish which uses dark blue titanium and it experiments in the color of the body of a fish on it, green will adhere to the rose of this rose pink color, pink will fall out, and it will become a dark blue rose, without becoming light brown. This is because many dark blue titanium is used at 120g. When it is considered to bring it to the photography studio on the next day, it changes to brown and has broken up underwater.
The color of the body of a fish is blackish dark blue by the amount of this titanium used.
It is possible to change the tone of a rose flower by increasing the quantity of titanium from this.
It is possible to use a photocatalyst for a bulb and for the color of a new flower to improve species.
It is also possible to apply the light of yellow and red, to make an orange flower bloom, and to apply the light of dark blue, blue, or red, and to make blue and a purple flower bloom, or to color and enjoy the color of the flower of a new rose or a tulip.

Especially the photocatalyst that uses titanium has an effect in the water quality purification of water, and since a fish lives for a long period of time without exchanging the water of the tank of a fish, an effect can be demonstrated to the plant of hydroponics, or cultivation of vegetables.
Although it is a plant which will be grown if aquatic plants, such as a rice, an aquatic plant, Eichhornia crassipes, do not need a cleaning effect so much but there is only water, aquatic plants, such as Ranunculus nipponicus var. submersus and wasabi, are plants which make a culture medium the water which is purified unlike plants, such as Eichhornia crassipes, and are grown.
Cultivation of cultivation of vegetables, such as cultivation of the wasabi from which use of a running water Vital-Atom is subsisted on by use of this titanium, lettuce, a herb, and white radish sprouts, is attained easily at home.
Also in rows of houses, the roof, and the interior of a room, titanium is used and symbiosis of a plant and a fish is possible.
The ripple garden of the waterside becomes possible.

[Table 20]

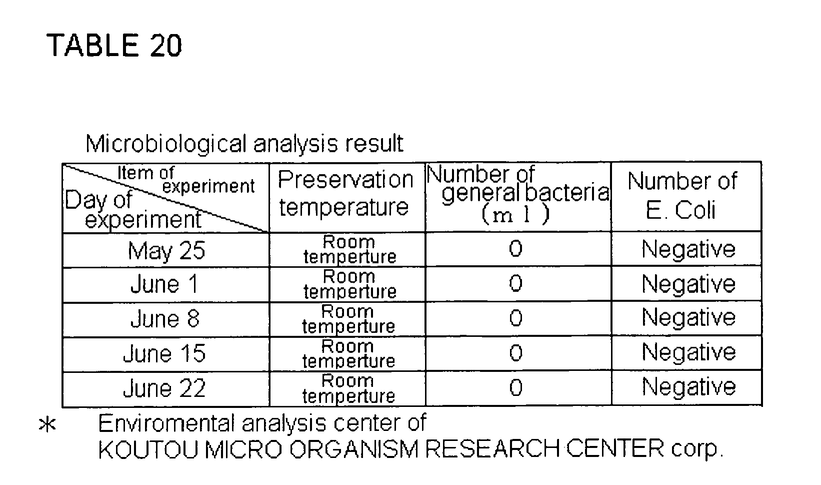

In the above-mentioned experiment, by normal temperature, it does not cover but is saved.
When it is a place by the window containing sunlight, minerals to contain, such as magnesium and calcium, absorb light and are considered to have raised the bactericidal action.
Also in an operation of the photocatalyst which uses a red rose in the tank of a fish, the minerals of deep sea water and sodium chloride absorb the electromagnetic waves which come out of a red rose, and are considered to raise the bactericidal action.
The deep sea water, and the running water and Vital-Atom water containing many minerals absorb ultraviolet rays and infrared rays by light of a photocatalyst, and raise a bactericidal action.
Agricultural products and the plant which use this water will carry out good growth.
Use of the soil improvement material and disinfectant which sprinkle and use titanium for soil (patent application JP2004-101769) holds the operation same with using Vital-Atom water.
Titanium absorbs light and a bactericidal action increases. Especially, when using it for soil, and taking in sunlight enough to tap water, light is made to absorb, a bactericidal action will become effective.
When adding deep sea water and a natural bittern (Table 21) to pyroligneous acid, antibacteria medicine, or the like which are used conventionally and adding a natural bittern to tap water since it becomes superfluous salt, after adding 1 - 2 mL of natural bitterns to polyvinyl alcohol and a polyalkylene oxide and making sunlight absorb, if it is used for soil, the same effect as deep sea water or Vital-Atom water will be acquired.

[Table 21]

**TABLE 21**

| **Minerals per 100 ml (sodium, potassium, iron, zinc, potassium, chromium, selenium, copper, magnesium, manganese, iodine, and phosphorus)** | | | |
|---|---|---|---|
| Ingredient | Amount per 100ml | Ingredient | Amount per 100ml |
| Energy | 0 | Potassium | 1,500mg |
| Protein | 0 | Chromium | - |
| Fat | 0 | Selenium | - |
| Carbohydrate | 0 | Copper | - |
| Sodium | 3,700mg | Magnesium | 6,000mg |
| Calcium | 8.3mg | Manganese | - |
| Iron | 0.23mg | Iodine | - |
| Zinc | 0.1mg | Phosphorus | 0mg |

Although Vital-Atom organic mineral water is tap water, including the same minerals as deep ocean water, a neutralizer is used in breeding of a fish and it can be simply used to coloring, a cut flower, or solid of plant growing.
This machine of running water is a product made by World Natural Science Co. (Japan), and installing in a domestic water pipe make possible to make such a water as the deep ocean water which contains many minerals by the effect of near infrared rays and a minus ion, without only installing in a domestic water pipe, being used semi permanently and not being a filter or the like exchanging.
Mineral water can hold the freshness of water at a long period of time.
It is possible for Vital-Atom running water to maintain a cut flower and the freshness of water for about one month like the case where the photocatalyst of titanium is used. As for the water which passes through a tap this chip and is made to generate a minus ion from the faucet of water service before installing this running water machine in a water pipe, it is possible to make a cut flower hold for a long time.
It is possible for use of the photocatalyst made from titanium to hold a rose for about 25 days.
It can be said that the photocatalyst made from this running water and titanium has the same operation and effect.
Because it is difficult for the tenant of buildings, such as a flower arrangement store and a horticulture store, to install a water pipe, we can use by attaching to a faucet also in the adding water of the agricultural products in a park flower bed difficultly, and it is considered that it can make it useful for supplement of minerals to cultivate the agricultural products which reinforce minerals without use of bittern.
It becomes budget prices.

This running water machine is made from the chip carried out sintering treatment of the minerals of 50 or more kinds of animals, a plant, and a mineral at high temperature. Chlorine is ionized because the tap water passes for this chip and the water collides with it.
In the water quality test report on examination of the tap water of this running water, it was reported that its hardness, such as calcium, magnesium, or the like is 32 mg/L This value is almost near to 100mg (inside of 21.) of deep-sea water Amami-no-mizu 250.
It can be used also for breeding of fish, such as tropical fish, if the nature of the water is chlorine ion 15 mg/l, nitrate nitrogen, and nitrite nitrogen 0.7 mg/l.

Although it is said that a fish will die, from the water examination of tropical fish, of accumulation of ammonia and nitrous acid which are excretions of a fish, ammonia in the sea water which uses titanium changes to nitrous acid, nitrous acid changes to a nitrate, and it is said that it becomes nitrous acid 0.7 mg/l, and can stabilize and live. When assay of the case where a neutralizer is used for tap water, and pyroligneous acid is used was conducted, in use of the neutralizer, magnesium, calcium, and a chlorine ion are completely equal weight with tap water, and it is only that sodium is increasing.
This neutralizer is German Tetracompany make (shown in Table 19), and is a TetraContraKoroRain (brand name).
In use of the pyroligneous acid, magnesium, calcium, and sodium are completely equal weight with tap water and manure is mixed. This pyroligneous acid is a product made by a Times Garden Reserch Institute (shown in Table 18).

Mostly, although the bactericidal action, like tap water, of a photocatalyst is confirm, when a neutralizer and pyroligneous acid are poured in a tank in the experiment of a fish, a photocatalyst will be used with tap water and a long time will be required for coloring it the color of the body of a fish.
The use of deep sea water has the effect equal to this in about 1 - 3 days.
Because this deep sea water includes most minerals, it is important for supporting life of a fish, a plant, and man. Because these deep sea water is expensive and it is difficult to use it for cultivation of a plant or soil, like this deep sea water, organic mineral water by the Vital-Atom running water system which contains many minerals similarly, and hydrophilic resin are used, and it is used as water retention agents for solid of plant growing and a cut flower.
By the use of hydrophilic resin, it can be considered as the vegetable culture medium which raised the bactericidal action of resin.

Although circulate of water makes the water quality clean at the farmhouse which especially products a plant for hydroponics produced, since in Vital-Atom water, bacteria are not generated for about one month and sterilization and the disinfection operation are high, an effect on a plant for hydroponics for cultivation of vegetables and plant is had.
This running water system can be used for a soil culture medium or hydroponics as substitution of the photocatalyst of titanium, it sterilizes and holds water for a long time, only by passing tap water in the pipe made from this stainless steel.
Since the water which passes through this pipe has the same bactericidal effect as the water which uses titanium, if this water is used for cultivation of the agricultural products in a field and a plant, it is said that agricultural products and the plant which are produced, unlike the thing which uses other water, are able to hold freshness as long as three months in case of the cut flower.
If the water produced by this running water system is put into a PET bottle or the like and carried, it is said that the bactericidal action by electromagnetic waves will be reduced.
Since, in consideration of these, it is difficult for the use for a flower arrangement store or agriculture, what is directly connected to a tap, is carrying freedom simply and can be immediately connected also to in front of the store is required.
The water which attached this pipe to a tap causes water to be fresher and the use of the cut flower to be longer than the water when water pipe picking attaching.
Although the photocatalyst of titanium can keep the freshness maintenance of a cut flower long in use of titanium 1g-4g, keep flower open and five calyxes which support leafs of rose horizontal in use of titanium 4g-5g, in use of Vital-Atom running water, the effect of freshness maintenance, that is, calyx is becomes stick to leaf and turned-up is confirm.
The cut flower which uses titanium can be used almost similarly in 1g-4g, although the cut flower can be used at 5g at the beginning at a long period of time.

A tap water by the running water system of a Vital-Atom causes The disinfection operation long.
According to the water quality test report on examination, the hardness in the tap water of a running water system get increasing as compared with common tap water, as shown in Fig. 33 which shows water quality analysis inspection table.
Since Magnesium, calcium, sodium, or the like absorb light in high hardness as infrared rays are also called the absorption light, it is thought that an operation of a photocatalyst is caused and the bactericidal action would increase.
Although trouble about the tanichthys of the fish is not accepted in the prolonged experiment and the fish is very fine under the fluorescent light in use of the neutralizer for tap water, since, under sunlight, magnesium or the like causes an operation of a photocatalyst, a bactericidal action increases, the temperature of sea water rises, it is thought that habitation becomes difficult.

Nonionic resin, polyvinyl alcohol, a polyalkylene oxide and this cut flower that carried out mixed use, and a vegetable culture medium become usable, since the counteraction of hardness occurs by the water quality analysis inspection table shown in Fig. 33, by using hard water and deep sea water containing minerals.
Use of titanium is important for holding this culture medium further at a long period of time.
Use of titanium, such as glass, will surely be used for the bottom of a container by the dignity of glass, and its amount used will increase.
If titanium is used with the same as resin made from a plastic, with a lightweight, square-shaped and bead type, and the shape of an ellipse or made from a glass square-shaped in order to improve the effect with a little of use of a photocatalst, it is possible for a sterilizing effect to reinforce.
Since a bactericidal action increases by using the water containing tap water and chlorine, polyvinyl alcohol can improve growth of a plant.

### (About far-infrared rays (nurture light))

### [ a Vital-Atom running water machine (trademark) / in 4-14-micron infrared wavelength called a nurture light in far-infrared rays ]

It is said that a Vital-Atom running water machine (trademark) transfer the wavelength of 8-14 microns said for especially usefulness and an effect to be high to water (infrared rays are also called a "absorption light" and there is the characteristic transferred on various objects).
When liquid manure is added to this running water and it is used for the resin culture medium, manure water of midsummer could not be decayed and could hold for a long time, and growth of a plant is helped.

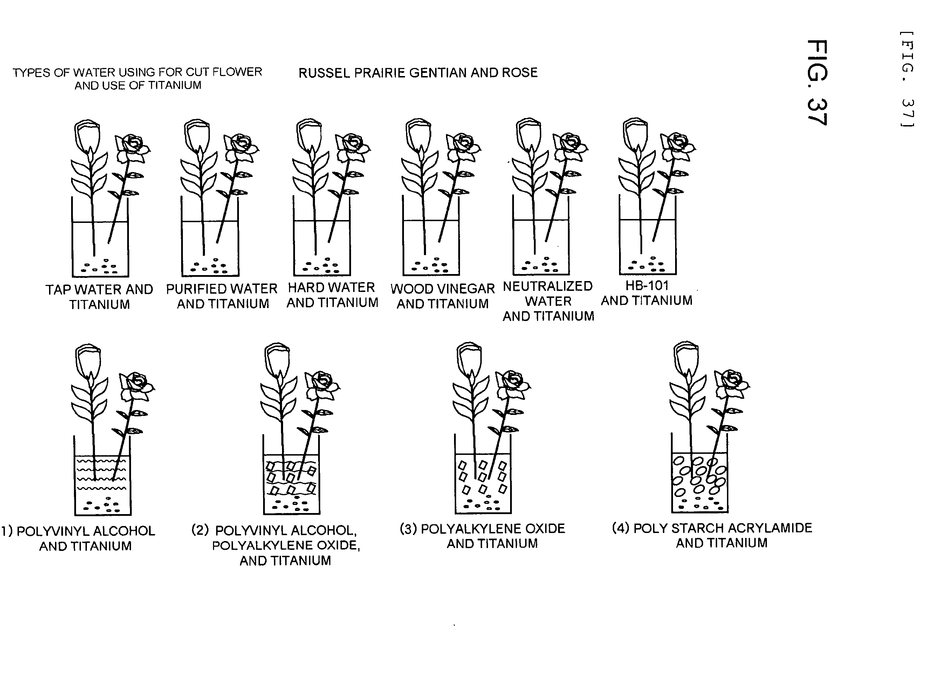

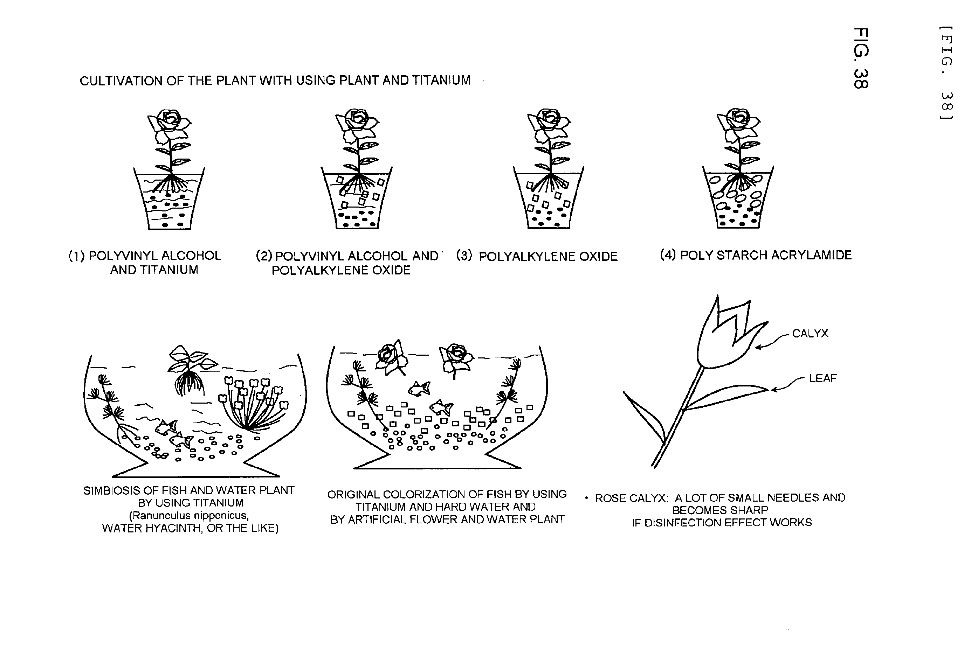

Next, the water cleaning effect of titanium by the kind of water and resin is explained using Figs. 37 and 38.

### Experiment (i)

Unlike the usual tap water, use of the cut flower is also able to hold the cut flower for a long time.
In order to use a cut flower for nonionic resin or acrylic resin, the kind of water is important, and it is used for an operation of the ingredient of the water by the kind of water at acrylic resin by the culture medium which uses tap water, hard water, wood vinegar water or a neutralizer, antibacteria medicine, and HB-101 grade by the water-repelling operation of resin, becoming.
In the case of nonionic resin, since the ingredient contained in these changes by the adsorbing actions of resin, a result that the change appears also in the photocatalyst which uses titanium has been brought. Although use of titanium is possible at tap water and use of a bactericidal action is possible at 4-6g also like pure water, hard water, wood vinegar water, neutralization water, and HB-101, it becomes usable with the affinity of resin and water.
Although the water-purifying machine is variously commercialized in recent years, and it is said softening drinks made by made absorbing chlorine in tap water is delicious, if this chlorine adsorbs, growth of a plant will get worse in the case of use it for a resin culture medium, since a bactericidal action will not happen.
In summer, water turns sour at once, and there will be the bad smell of water, the resin culture medium including the water of the water-purifying machine which does not contain chlorine added liquid manure to causes to get smell badly immediately such as rotten water.
Use of the manure which prevents this water corrosion can be prevented by use of Vital-Atom running water and wood vinegar, and HB-101.

In experiment (i), hard water and use of HB-101 are the most effective for use of polyvinyl alcohol and titanium. the vegetable culture medium in this simple substance will turn into a culture medium which can grow water retention vegetation, such as other hydrophytes of a foliage plant, if ion-exchange resin is used.
By use of titanium to the vegetable, culture medium which needs bactericidal actions, such as rose stabilized further, becomes possible.
In about 100g - a 300g culture medium, Rose growth is attained at 10g - 20g of titanium abbreviation by use of about 0.5-1.5g of ion-exchange resin, and a good growth culture medium is especially made by use of titanium (30g-40g).
Moreover, all cultivation of Yamano grass, a flower, a bowl flower, flowering trees and shrubs besides a rose, a herb, non-Japanese- originated orchid, a bulb, a view leaf, a chrysanthemum, or the like is attained.
In 100g - a 300g culture medium, in a pot flower or flowering trees and shrubs, the amount of the ion-exchange resin used turns into the amount used (0.15g-3g), and the amount used is set to 0.3-4g in a flower or rose.
Use of about 1mL - 20mL of such as a pot flower and flowering trees and shrubs and 1mL - 40mL of a flower and rose abbreviation serves as liquid manure.

Although pyroligneous acid is used as a soil improvement agent, sprinkling soil, it is possible to carry out adsorption use of sea deep-sea water or the bittern similarly, to use it for ion resin of polyvinyl alcohol as a soil improvement agent, a vegetable adjustment agent, and a vegetable active agent, and to use it, using together with manure.
Moreover, there are other kinds of the Muroto deep sea water, Sado deep sea water, or the like.
In experiment (i), the effect of the photocatalyst of this polyvinyl alcohol, hard water, and titanium is large, and the amount of about 30g - 60g used, and the glass cullet and bead of (B) and (C) are also about 30-60g in the amount used by titanium of (A).
And especially all over the range, the amount of about 50g used is effective, it does not make rose bloom in full bloom, but blooms about 30 percent - 50 percent, and becomes possible to hold a flower still longer.

Use of this titanium 50g does not make a bud bloom, where rose blossom is horizontally put to sleep in hard water sea deep-sea water.
This state is having dived into underwater of polyvinyl alcohol and hard water, it is thought that a flower is protected from dryness, freshness maintenance of the flower is carried out at low temperature, and the bloom is delayed.
In use of 50g of white glass cullet abbreviation, rose blossom does not open to full bloom.
Also in 40g of titanium abbreviation of (A), and 40g of white glass cullet abbreviation of (B), it blooms about 30 percent.
The portion of the point of the green calyx which supports the flower on the petal of rose thin pink by use of polyvinyl alcohol, hard water, and titanium 90g is printed on the point of the same similar calyx.
Since it is letting the sprig of the flower swim in this water, applying the light of a fluorescent lamp is continued and it seems that the print phenomenon of a photocatalyst appears, but this phenomenon has not happened in use of pure water.
From the first, since rose flower is entirely covered with the green calyx and a flower blooms out of this calyx, the effect of the photocatalyst is performed also to this flower and we can see this green calyx sometimes adhering to rose petal.
However, this phenomenon appears also in the water which neutralizes hard water, wood vinegar, and tap water, and the print phenomenon happens in water with many minerals.

This operation does not appear in use of pure water.
In use of polyvinyl alcohol and pure water, maintenance of a flower is about the day from one to two.
In use of pure water, the effect of the photocatalyst of titanium of (A) or the glass cullet of (B) does not show up, in use of titanium 40g, an effect is weak, and an effect does not show up at all in use of a white glass cullet.
In use of 60g of dark blues, and 80g of green or brown, an effect is weak and an operation of a photocatalyst cannot be expected.
Thus, a print phenomenon happens with the bactericidal action increased, and it does not happen in use of pure water.
Moreover, in an experiment, to polyvinyl alcohol 100g, 100mL of hard water is used and 100mL of solution which added 1mL of wood vinegar to 1L of tap water is used in use of wood vinegar.
Moreover, in use of only pure water, a rose flower is held for about one week.

The vegetable culture medium of (i) polyvinyl alcohol is a water retention culture medium, and the vegetable culture medium in this simple substance will turn into a culture medium which can grow water retention vegetation, such as other hydrophytes of a foliage plant, if ion-exchange resin is used.
By use of titanium of the vegetable, culture medium which needs bactericidal actions, such as rose stabilized further, becomes possible.
In about 100g - a 300g culture medium, rose growth is attained at 10g - 20g of titanium abbreviation by use of about 0.5-1.5g of ion-exchange resin, and a good growth culture medium is especially made by use of titanium 30g-40g.
Moreover, all cultivation of grass in mount and field, a flower, a bowl flower, flowering trees and shrubs besides a rose, a herb, non-Japanese- originated orchid, a bulb, a view leaf, a chrysanthemum, or the like is attained.
In 100g - a 300g culture medium, in a pot flower or flowering trees and shrubs, the amount of the ion-exchange resin used turns into the amount used 0.15g-3g, and the amount used is set to 0.3-4g in a flower or rose.
Use of about 1mL - 20mL of such as a pot flower and flowering trees and shrubs and 1mL - 40mL of a flower and rose abbreviation serves as liquid manure.

Although liquid manure is adsorbed and Rose cultivation is also possible, it is supposed that polyvinyl alcohol melts into water and use of a soil water retention agent or the like is not carried out.
If, however, in about 250 times as much tap water as a resin amount, it is used by sprinkling aqueous solution which has a bactericidal action and swells about 80 to 90 times and adds a fertilizer if over soil , the effect of the photocatalyst of resin will be heightened further and water and will be excluded, and for summer, it weakens by heat, and can be rehabilitated of vegetation in one to two days.
If this polyvinyl alcohol with wood vinegar and deep sea water or bittern liquid and titanium are used, use of a soil improvement agent or a property modification agent is attained.
In use of this soil water retention agent, since it is said that polyvinyl alcohol melts into water and use of the soil water retention agent is made difficult.
This causes and for resin to swell 250 to 300 times for vegetation and agricultural products to start root rot by a rainfalls, use of the polyvinyl alcohol in which tap water cannot be useful, if a bittern liquid of 1-2mL is added and used, the bactericidal action of this resin will happen. Moreover, use of a disinfectant, a herbicide, a heat insulation agent, or the like is possible by sprinkling this over a planter or the soil of a flower bed, if polyvinyl alcohol, titanium, hard water, wood vinegar, or a bittern liquid is mixed in soil, it becomes a better soil conditioner.
By use of deep sea water and a bittern liquid and wood vinegar to polyvinyl alcohol it can be possible to supply minerals, such as vegetation, vegetables, fruit, and to attach many flower buds for a flower beautifully again, to make vegetables more delicious, and to use them as a plant activator or a vegetable regulator.
Moreover, it can be considered as the freshness maintenance agent of water, or a water quality maintenance agent by use of titanium.
Moreover, deep sea water includes the Muroto deep sea water and other Sado deep sea water, and bittern liquid made from Indonesia contains many minerals extracted from deep sea, and are used.

### (Experiment ii)

Such as the simple substance of polyvinyl alcohol, products mixed with polyvinyl alcohol and the polyalkylene oxide and the photocatalyst of titanium, has an effect by use of the water which uses hard water, wood vinegar, and a neutralizer.
Use of 100g of mixed elegance of precolored resin 1 to 1 and 100mL of hard water is equivalent to using gray titanium of (A) and white gallet and beads of (B) and (C) of about 30g - 40g, and equivalent to using the coloring gullets and beads of (B) and (C) of about 30g - 40g.

In use of pure water, by using the white gullet and beads of (B) and (C) of about 10g - 60g, the effect is demonstrated , and it becomes operative for about ten days at the use which is especially 40g.
An effect is demonstrated in neither titanium of (A) nor the color gullet and beads of (B) and (C).
Moreover, with the white bead of (C), an effect shows up in 10g, 20g, and 40g, and it has become the use effect which are about 10g - 50g.
Since about 40g - 70g of the color gullets and beads of (B) and (C) are used for clear resin, the amount used is high, the white gullet and bead of (B) and (C) become precolored resin with the amount of about 30-70g used, and it will be a weak effect about 2 - five days in use of pure water. Thus, also in use of pure water, it changes with water quality to be used and it is thought that a uniform effect is not acquired.
Since polyvinyl alcohol swells greatly and it increases about 250 to 300 times gelatinization, it is in the state which will be in a state and does not have chlorine ion within a container.
Moreover, an adsorption action or bactericidal action of resin have not happened.
In these experiments, when a photocatalyst uses tap water, the bactericidal action is maintained for a long time, photocatalysts which uses of the running water of vital Atom, and a bittern liquid, it is thought that, has the effect on underwater which contains chlorine ion and happens.

Although this mixed elegance is transparent resin of polyvinyl alcohol, and precolored resin of polyalkylene oxide, in use of pure water, an effect of polyvinyl alcohol is not demonstrated but an effect of the polyalkylene oxide simple substance is demonstrated.
100mL of pure water is used for 100g of this mixed elegance, and the effect is checked at in about 10g - 60g in the color gullet and bead of (B) and (C), and about 40g - 70g in the white gullet and bead of (B) and (C).
Since, by the weight of baking titanium and the titanium dioxide which are coated and used as glass is heavy, it sinks under resin and light is interrupted, the photocatalyst by this titanium h brought a result in which utility does not show up easily.
The directions for this resin are the method of making a small quantity amount of water to be used, and putting a cut flower in resin directly and carrying out an arrangement to it.
In the tank of a fish, since habitation of a fish is possible in 1L of water by use of about 10g titanium, increasing the quantity of and using water enables it to reduce the amount used about 10g - 70g to 10g-50g.
In this case, in the flower vase of glass, it has the feature that resin surfaces near the water surface mostly, by an equivalent amount of use of resin and water.
By this, the amount used will turn into the amount of the titanium used which is about 10g - 20g.
Although it is possible to raise the effect of a photocatalyst by coating titanium to a glass container directly from this result, the coating cost of these titanium will be restricted to the container used highly. Since lightweight things, such as a plastic, from these things, can raise an effect it is difficult for polyvinyl alcohol to adsorb the solution of titanium.
A bactericidal action is raised more for an OFF flower or a vegetable culture medium to resin or the PVA polyvinyl alcohol oasis (trademark) which becomes making the solution of this titanium adsorb from paper or corn by adsorbing or coating titanium, and freshness maintenance of water is made.
moreover, the polyvinyl alcohol PVA solid thing coated [ this titanium ], powder and the shape of crossroads, and spherical and so on -- it is used in the shape of [ various ] a form, and freshness maintenance of water, or an OFF flower and a plant is possible.

(ii) The vegetable culture medium of polyvinyl alcohol and polyalkylene oxide can raise the growth effect for the water which cultivation of vegetation is possible and is used by the bactericidal action of this resin by use of wood vinegar, hard water, and a neutralizer.
In OFF flower use, the effect is demonstrated by coloring resin by use of about 40g - 50g in the white gullet or the bead.
Although it is the most effective directions for use that 30g - 40g of this conformity uses it, when it is liquid manure, an effect is demonstrated by use of about 10g - 20g.
Moreover, in use of ion-exchange resin, an effect is demonstrated by use of about 2g - 10g.
Also in this culture medium, cultivation of all plants, such as a bowl flower, non-Japanese-originated orchid, a herb, flowering trees and shrubs, a bulb, a view leaf, a flower, and a chrysanthemum, is possible, and it becomes substitution of soil cultivation.
Moreover, it is possible for there to be also a water holding property and to consider it as substitution of hydroponics.

### (Experiment iii)

As for the photocatalyst of a cut flower, polyalkylene oxide, and titanium, unlike polyvinyl alcohol, an effect is demonstrated by use of pure water.
Polyalkylene oxide has a bactericidal action with about 20 times as many refining water, and this is considered whether to be expression by this effect in Table 11. Moreover, according to the water analysis table of Fig. 33, polyalkylene oxide often removes the adhesion thing of washing resin, it will be in a near state by the case of being blank, and use of tap water can be considered, but in rose use, it is especially difficult, and rose maintenance is attained by use of the neutralizer of chlorine. Moreover, rose use is attained also in hard water or wood vinegar.
The polyalkylene is possible for the adsorption action of chlorine or ammonia, and also in the tank of a fish, since dirt, such as ammonia, is adsorbed and transparent clear resin becomes dirty, it is using coloring resin without daring to use clear resin.
In breeding of a fish, if the resin which adsorbs pure water is used, a fish will not move intently.
It turns out that it is not suitable in use of a fish even if it can use pure water by use of a cutting flower.
Also in use of hard water, wood vinegar, and a neutralizer, and use of HB-101, as for use of titanium, an effect is demonstrated by clear resin in a small quantity of about 10g - 20g by use of titanium of (A) gray by the white gullet of about 20g; (B) and (C), or use of a bead.
Use of the color gullet of (B) and (C) or a bead serves as the amount used higher than white by 30g-40g.
In use of coloring resin, use of white resin of 2 double 40g-80g is needed.

In a vegetable culture medium, although the vegetable culture medium for which the vegetable culture medium by polyalkylene oxide and titanium uses the adsorbing action of nonionic resin, a bactericidal action, and the cleaning effect of ion-exchange resin is very good growth, it turns into a vegetable culture medium which runs short of water retention by the adsorbing action of this resin.
If moisture is filled up, it will become a water holding culture medium in which a cut flower is possible, but since a bactericidal action and an adsorption action serve as a good culture medium more by use of titanium, the bactericidal action of resin in which a cut flower and a vegetable culture medium are possible occurs, and the amount of the titanium used is possible at about 10-20g, and serves as a good culture medium by about 30-40g use. The amount of resin of about 100g - 500g and ion-exchange resin, or the liquid manure used of the vegetable culture medium which uses 1.4g of ion-exchange resin is already patent application ending.

(Experiment iV) (use of acrylics system resin starch acryl amide)
As for the photocatalyst of a cut flower, acrylic resin and a starch acrylamide, and titanium, an effect is immediately demonstrated by use (about 5g - 60g) by use of tap water or pure water, and use of hard water and wood vinegar.
As for the gray titanium of (A), the white gallet of (B) and (C), or use of a bead, the effect of a photocatalyst shows up immediately like the case of use of tap water and titanium to the resin colored by the pink of red food coloring.
This is based on use of white titanium, 5g-30g, a flower finishes in about one week - about ten days early, and Rose bloom is sensed a few.
If 50mL of water used at the beginning [ of an experiment ] is given, for a suck reason, resin will have added 50mL for moisture.
Although it is also considered that the maintenance period of a flower becomes short by reduction of this water, by the gullet of (B) and (C) of dark blue, green, and brown, or use of a bead, it is 40-theg [ 60 ] amount used, and becomes clear resin with white, a coloring gallet and a bead, titanium, and the amount of 40g of common [ used ]. the bloom of a flower comes out slowly and 50g-60g have a long maintenance period of a flower.
Also in this experiment, as for acrylic resin, the effect of a photocatalyst shows up like the case of tap water, and it turns out that it is a culture medium of hydroponics.

A bactericidal action is continued by the water-repelling operation of resin, and the vegetable culture medium which uses acrylic resin and titanium cannot adsorb soils, such as vegetable sap, but serves as growth of the root of hydroponics in prolonged use.
Although the hydrophyte grown only with water can be grown in this culture medium, it becomes difficult for a long period of time to grow the vegetation which likes property of drainage, such as Pakira.
For this reason, in the vegetable culture medium of this acrylics system resin, use of adsorption resin, such as ion-exchange resin and non-ion resin system resin, is needed.
As for the mini rose which uses ion-exchange resin, 1.3-1.7g are used by an about 300g culture medium.
The starch acrylamide of acrylic resin is use of ion-exchange resin, nonionic resin polyvinyl alcohol, or a polyalkylene oxide, and the vegetable culture medium both for hydroponics and a soil culture medium of it becomes possible.

Titanium is used and growth of a pot flower, a flower, a herb, non-Japanese-originated orchid, flowering trees and shrubs, a view leaf, or the like is attained by use of titanium almost 5g-20g in use of a starch acrylamide and ion-exchange resin.
30g - 40g become the good amount used especially.
Moreover, in the mixed culture medium of acryl amide and non-ion resin, 30g - 40g become a good growth culture medium by use of the titanium abbreviation 5g-40g.
In this culture medium, growth of all the vegetation of soil culture media, such as a pot flower, a flower, a herb, non-Japanese-originated orchid, flowering trees and shrubs, and a view leaf, is attained by use of only liquid manure. Although especially the mixed media of a starch acrylamide and polyvinyl alcohol are the same water retention, their use by cultivation of a flower is effective, and use of the water retention agent of a planter is possible for them. However, in order that reduction may both contract in one month - one month and a half early, reduction will become loose, if giving water is made early and a little polyalkylene oxide is mixed.
Moreover, the effect of the soil water holding agent of a soil culture medium or a soil improvement agent is demonstrated by this culture medium by use of hard water and wood vinegar.

It swells greatly by use of the water in which polyvinyl alcohol does not contain any chlorine other than tap water in a soil culture medium, an adsorbing action does not work, and the effect of the bactericidal action of a soil water holding agent is not acquired'.
It is a relation from which starch acryl amide adsorbs excessive moisture, and the bactericidal action by adsorption action of polyvinyl alcohol is efficiently employed, and the effect of a water holding agent is acquired by the thing of the bittern which contains water of tap water and giving water, and salt in this mixed use to do for mixed use.
Since two kinds of this resin is early, 1 time of giving water is needed per month.
The mixed use of the late polyalkylene oxide of reduction is also possible.

It turns out that utility changes and an effect may show up easily due to the kind, amount of water, and light of water which use the photocatalyst of hydrophilic resin and titanium.
By use of a water holding agent, antibacteria medicine HB-101 is used for Table 22, and the ingredient table is indicated to it.

[Table 22]

**TABLE 22**

| Ingredient table of antibacteria medicine HB-101 | | |
|---|---|---|
| Hydrogenion concentration (PH) | Analysis of Minerals | |
| HB-101 undiluted (ACID) solution: | Ingredient | Analysis Value |
| PH4.0 | Sodium | 41 mg/l |
| | Calcium | 33 mg/l |
| | Iron | 1.8 mg/l |
| HB-101 solution diluted: 1000 times | Magnesium | 3.3 mg/l |
| PH6.5 (weak acidic) | Silicon | 7.4 mg/l |
| | Nitrogen | 9.7 mg/l |
| | Cadmium | Not detected |
| | Arsenic | Not detected |

The nutrition facts of the deep-sea water of hard water (trade name: marine deep sea water and Amami-no-mizu 250 trademark registration) used for the experiment are shown in Table 23.

[Table 23]

**TABLE 23**

| Deep-sea water (Product name: Amami-no-mizu (water of Amami) 250 (TM)) | | | |
|---|---|---|---|
| Ingredient of nutrition (per 2L) Content of energy, protein, fat, and carbohydrate: 0 | | | |
| Sodium | 37.0 mg | Copper | 2.2 µg |
| Magnesium | 100.0 mg | Iodine | 4.5 µg |
| Calcium | 35.5 mg | Phosphorus | 4.5 µg |
| Potassium | 34.5 mg | Selenium | 0.2 µg |
| Iron | 0 mg | Manganese | 25 µg |
| Zinc | 2.0 µg | Chromium | 15 µg |

Although the deep sea water used for the experiment this time is an ingredient table in 21., this Tenkai's water is health drink water containing many minerals, and HB-101 is the antibacteria medicine containing the nitrogenous fertilizer.
In tap water, chlorine ion increases by reduction of magnesium and calcium again, and maintenance of a cut flower is difficult for the non-ionic resin and polyvinyl alcohol which adsorb this drinking water.
The polyalkylene oxide seldom decreased, but calcium and magnesium had the large numerical value of evaporation residue, it others-lengthened them, and it has released them.
However, there is no change in which others are not much big, and by use of tap water, the result with a not much sufficient cut flower is not obtained, but it is use of hard water, wood vinegar, a neutralizer, and antibacteria medicine, and it can be said that the effect of the photocatalyst by titanium is acquired.
The insufficiency by the character of the resin is filled up and it can be said that the bactericidal action of a photocatalyst is attained.

### (Print phenomenon)

In the experiment of a cut flower, a print phenomenon occurs by the effect of the place which uses hard water (trade name: marine deep sea water, Amami-no-mizu 250) for nonionic resin, and a photocatalyst.
According to investigation, by gray titanium, it appears in nonionic resin polyvinyl alcohol, and in the case (40g, 60g, and 90g) where it is used, and white gallets 80g and 100g and a dark blue gallet, 50g when using it, it appears. In mixture of polyvinyl alcohol and a polyalkylene oxide, it appears in gray titanium 30g and 40g and blue gullet 60g, and in a polyalkylene oxide, dark blue bead of 30g when using it, it appears.

This phenomenon is large also to rose flower used for the tank of a fish, and a print phenomenon appears.
In the tank of a fish, if it is used for the purpose of coloring of the body of a fish and time imposes the color of precolored resin for moving to the physical strength of a fish, it is going to transfer the color of rose flower like a seaweed.
While having applied the light of the fluorescent lamp, this print phenomenon appears greatly.
Also in orange rose, although the print phenomenon was seen, a petal separates from a calyx that water becomes dirty easily.
A big effect is seen in the tank for which this print phenomenon used the neutralizer.
The water film of electromagnetic waves in color is made into the water surface of a tank.
This can do the water film of electromagnetic waves, such as blue, purple, yellow, and peach color, in use of titanium.
The color of titanium, such as blue, purple, yellow, pink, or the like used underwater, resin, a flower, etc., or the like serves as a wave of electromagnetic waves, and this water film is considered to have appeared in the water surface.
It is thought that this water film became a print phenomenon of a fish or a flower, and has appeared.

It becomes electromagnetic waves, and the color of gray titanium, a white gullet, and a bead decolorizes the color of the body of a fish, and is considered to make it transparent.
The seaweed of nature [ titanium / of dark blue, green, and brown / the glass titanium or coloring titanium ] and the coloring matter of a flower become this and reversely with electromagnetic waves, and it is thought that it transfers to the color of the body of a fish.
Causes, such as suntan and a spot, are also considered by touching this electromagnetic wave for a long time. Although it is thought that this phenomenon is what is mainly depended on titanium and optical energy, it seems that it happens to underwater [ which uses hard water, wood vinegar water, and a neutralizer only from tap water ].
Use of the deep sea water containing many minerals is effective for coloring of a fish etc.
However, in the environment and the logic which inhabit a nature, the beautiful color of the body of tropical fish is produced, and is cultivated, the coloring operation has not appeared with titanium and light energy, and the effect of the photocatalyst by titanium is considered that the quantity of the sodium contained in water is raised and speeding up the coloring operation and the bactericidal action.

The photocatalyst by titanium is used for protection from breeding and illnesses of a fish, such as a river and a pond, or the like by the water quality maintenance and the cleaning effect by breeding of a fish besides the freshness maintenance of a cut flower.
Moreover, in use of only titanium, the excretions of a fish have collected and precipitated on the sea bed.
Since these adsorbing actions are not in titanium, it is thought that sick infection and evaporation of water are prevented by using an adsorbing action, and a filtration operation and cooling action of nonionic resin, especially polyvinyl alcohol, and it is useful for protection of a spawning ground place in a fish.

Exchange of sea water has become frequent with the excretions of the fish by breeding of tropical fish, and it is said that a fish will die, if half sea water exchange is not carried out in two weeks before titanium uses it.
It is said that a fish will die by accumulation of ammonia and nitrous acid which are excretions of a fish.
However, although patent application of the filtration operation of nonionic resin has already been carried out, the adsorption filtration operation effect by the absorbing power of use of polyvinyl alcohol, use of polyvinyl alcohol and a polyalkylene oxide, and ammonia of a polyalkylene oxide or polyethylene oxide is demonstrated.

Use of deep sea water is effective for breeding of tropical fish, and various kinds also have it in it.
Especially, deep sea water is used also for breeding of a fish like water, such as wood vinegar, and a neutralizer which add the bittern liquid which contains many minerals. Moreover, use of this deep-sea water in sea or bittern water or wood vinegar stimulates an adsorbing action for non-ionic resin and polyvinyl alcohol, and use of a plant activator, a soil conditioner, and a soil water holding agent is possible for it.
Although the effect of a soil modifier is demonstrated by mixing titanium in soil, in the combination of a bittern and titanium, titanium cannot be used for cultivation of edible vegetables or agricultural products by the component of titanium melting and coming out.

The use which coats nonionic resin and acrylic resin with titanium can be considered.
However, by carrying out coating use of the titanium, mixed use with resin becomes possible, it is used for a cut flower or a vegetable hilling, and the water quality purification and the bactericidal action of the freshness maintenance of water or a vegetable culture medium are raised to the plastic which changes to this, a bead, etc. Since titanium arranges use of the titanium with which glass was coated at the bottom of a container, the stem of a cut flower touches titanium, and a flower will be burned black and will burn.
In the case where mixed use is carried out to resin, since titanium is located in the bottom of a container, many titanium must be used that it is hard to receive light.

The transparency of the water of a river increases because the photocatalyst which uses titanium uses titanium for sea beds, such as a river and a pond.
This water purification operation is used for indoor desk garden, the pond of the yard, etc., water quality purification is measured, the water garden of the waterside is made, and it becomes a water plant supposing river bottom, and the transparent waterside in which growth of Ranunculus nipponicus var. submersus (Baikamo) and a fish live.
In these tanks, water quality purification is measured by the thing which surface on the titanium used for a sea bed, or the water surface and for which magic flowers in water, such as a seaweed and a flower, are used underwater, and accessories, such as a crayfish, a shell, and a crab, are coated with titanium in these seaweeds and magic flowers in water, and a sea bed moreover it carries out titanium coating, and breeding of a fish is attained.

Since neither absorptivity nor water retention is seen, and control of moisture is difficult for the vegetable culture medium which uses titanium, if it does not use more moisture, moisture will evaporate immediately and vegetation will wither.
In order to cope with these, it is engaged in the vegetable culture medium of hydrophilic resin.
Titanium is that the bactericidal action which a high draw corn or the like does not have occurs, and cultivation of the flower which considers it as the vegetable culture medium which carries out full use of the liquid manure, and likes a foliage plant and water retention, or rose is also possible for it.

At use of ion-exchange resin or a fertilizer, in rose, by titanium of 50g-100g culture media 0.7-1.7g, although it is 2.4- 3.4 amount used in 1.4-24g, 200-300g, moisture will be lost in ten days - about two weeks, and it will wither by 1.4-3g, 100-200g.
For this reason, use of the culture medium of the hydroponics which a container is devised; cautions are needed so that moisture may not evaporate, and uses full moisture is good.
In consideration of these, it becomes usable [ the vegetable-culture-medium root rot inhibitor which prevents evaporation of moisture ] by carrying out mixed use of hydrophilic resin.

Although it can be considered as the vegetable culture medium of a soil culture medium or a hydroponics culture medium as a vegetable root rot inhibitor by the bactericidal action of nonionic resin, the bactericidal action of resin differs in swelling quantity by a swelling time, and is very difficult.
In use of this titanium, if the amount of liquid manure, the ion-exchange resin used, or the like is decided, anyone can use it easily.
By resin, when after-swelling time passed, since the freshness of resin fell, it had to be used a little early, but these worries of titanium are unnecessary.

It turns out that the amount of the titanium used differs also in hydrophilic resin according to kinds, such as polyvinyl alcohol, a polyalkylene oxide, and a poly starch acrylamide.
Although the amount of the plant used with cut flowers and a root is an equivalent amount mostly, the amount of titanium and the glass cullet used differs.

Polyvinyl alcohol 100g, titanium 10g, and 1.4g of ion-exchange resin formed very good Rose growth.
In growth of a rose, it is the use range of Titanium 5g-50g.
With the rose of cut flowers, Titanium 20g and 50 cc of ion water are used.

At 100g of mixture culture medium of a polyalkylene oxide and polyvinyl alcohol, it becomes use of cut flowers (70g-100g) with the glass cullet of titanium by use of titanium 30-50g.
In polyvinyl alcohol 100g and a titanium glass cullet, 10-30g and 1.4g of ion-exchange resin are used, and especially 30g is good growth.
Moreover, poly starch acryl amide 100g, Titanium 40g, and 1.4g of ion-exchange resin are used.
rose who has cut flowers and a root by titanium glass cullet 30g can also grow.

The amount of the liquid manure used in the vegetable culture medium of only titanium must be made into the same fertilizer concentration as a soil culture medium.
At chart 2 of hydrophilic resin, although 10% of fertilizer of a culture medium is used, fertilizer concentration also becomes twice by using titanium twice.
Even the amount of 1kg used uses 1mL of about 50g liquid manure by use of 1mL of titanium 100g, and serves as the almost same fertilizer concentration as the 500g fish flour fertilizer 50g of chart 2.
In the growth manure of a pot flower, it becomes a 300g manure culture medium 30g / 16.5mL, and 2mL is used, and it is a 1.2g manure culture medium in 33.5mL, and becomes a fertilizer range which can grow 3-4mL with 1-2mL and a flower by a pot flower.

Since the effects of a photocatalyst differ in the shape of this titanium and the amount used is changing, by the titanium with which the ball which is 6mm with large surface area, the plastic which surfaces, or the like are coated, it is thought also in concomitant use with hydrophilic resin, or simple substance use that an effect is demonstrated in a small quantity.
With a titanium 8mm ball, it is shown by the experiment of vegetation and a fish that the bactericidal action is raised by 1-use of 2g, and the weight and area, and the tone to be used also have an operation of a photocatalyst and an effect by concomitant use of 300g of resin and 1.4g of ion-exchange resin.

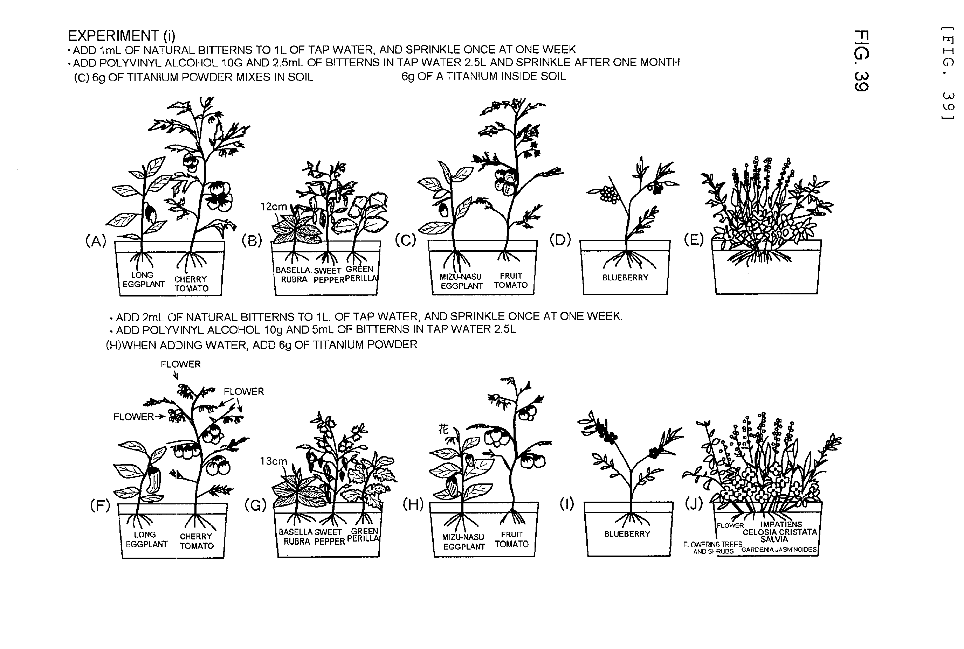

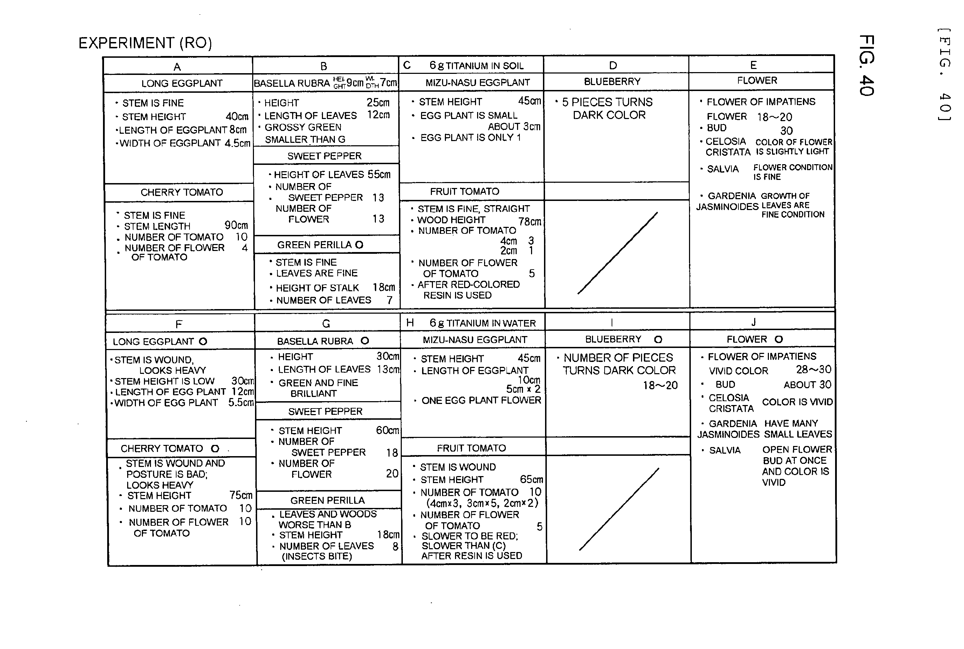

Next, as shown in Figs. 39 and 40, cultivation of the vegetation using a natural bittern, nonionic resin, and titanium is explained.

With the culture medium which grows vegetation and agricultural products, or the water used, when making quality, such as a flower of the vegetation, and the taste of agricultural products, it is thought that it is the most important.
When a cut flower is used for a nonionic resin poly vinyl alcohol polyalkylene oxide and polyethylene oxide, in tap water, it is difficult, and if the deep sea water for sea water is used, it is neutralized and can hold.
Although tap water can also be grown in a vegetable culture medium, if deep sea water is used, an aim will be delighted for a more beautiful flower.
Also in breeding of a fish, a fish is freshly grown by use of deep sea water rather than the tap water which uses a neutralizer, and it can be said that growth with more vigorously good vanity is carried out.

Since propagation of the bacteria in soil becomes active also in a soil culture medium by warming, it is though that a bactericidal action is needed increasingly as temperature goes up.
The experiment of the cleaning effect of the fish which uses titanium, nonionic resin, and deep sea water, and the experiment of the cut flower which uses titanium, nonionic resin, and deep sea water show the thing surely which cannot use deep sea water required in use of nonionic resin.

Although the cut flower must exchange water with tap water in two to three days, it will be held in deep sea water for abbreviation four to five days.
Therefore, if a natural bittern is used, and it adds to 1L of tap water with 1mL of natural bitterns, 2mL, 4mL, and 6mL and is used for it in the experiment which inserts cut flower rose, the maintenance for about seven days is possible.
It is thought that the plastic container to be used is transparent, and a natural bittern holds a cut flower for a long time, and the effect of a photocatalyst is held.
When this is requested from assay, a cut flower must be used with the plastic container painted white, and it is maintenance on four to the 5th with this white container. This natural bittern is used for breeding of a cut flower or a fish, and if about 2mL adds to a vegetable culture medium and a small quantity is given to it in the case of giving water, the bactericidal effect of a resin culture medium will increase, and it becomes good growth of vegetation.
Use of the water retention agent, improvement agent and root rot inhibitor of a soil culture medium, an active agent, and a regulator is possible in these things to a natural bittern.

A growth effect is shown when a natural bittern is sprinkled to the vegetable, the fruits, the flower, and flowering trees and shrubs of the planter of a soil culture medium.

In experiment (i), 1mL of natural bitterns are added to the planter of (A) - (E) at 1L of tap water, and it is sprinkled once at one week.
(F) In - (J), 2mL of natural bitterns are added to 1L of tap water, and it sprinkles once at one week.

The vegetables to be used are a cherry tomato and Naga-nasu (Naga-nasu eggplant) in (A) and (F), a Ceylon Spinach sweet pepper and green shiso in (B), and (G).
The vegetables to be used are Mizu-nasu and a fruit tomato in (C) and (H), fruits and a blueberry in (D) and (I), and impatiens, celosia, salvia in a flower of (E) and (J) and a Gardenia jasminoides in a flowering trees and shrubs.

The same thing is used for the length and the size of the length of stems, such as vegetables, fruits, or the like used for an experiment, and the stem of greens.
In experiment (b), carry out four spraying, and in experiment (ro) After spraying of experiment (b),
The bactericidal action and water holding operation of polyvinyl alcohol are used for the planter of (A) ~ (D) , and what adds 2.5mL 2.5 times as many natural bitterns to 2.5L of tap water is sprinkled.
To the planter of (F) - (J), what adds a 2.5mL twice as many natural bittern 5mL as this to 2.5L of tap water is sprinkled.
As for this method, poly vinyl alcohol 5g has a bactericidal action in 250 times as many 1250 cc tap water. Therefore, by adding a natural bittern of 2.5mL and 5mL to tap water of 2.5L 250 times as many, and sprinkling it over soil,
simple of one spraying and giving water is carried out to one week, and only giving water are made into about 1 to 3 times in the moon, and it is used accumulating a bittern in a soil culture medium, and is considered as substitution of liquid manure, and sunlight and heat are intercepted.
A planter (E) adds poly vinyl alcohol 10g and 5mL of liquid manure to 2.5L of tap water, and adds and sprinkles 5mL of pyrolignous acid.

At experiment (i), the cherry tomato which sprinkles 1mL of natural bitterns of a planter (A) is gradually colored crimson by spraying for about three weeks - four weeks 3 to 4 times.
The cherry tomato of the planter which uses 2mL of natural bitterns of (F) is colored crimson by two spraying by the use for about two weeks.
Although both of the cherry tomatoes, (A) and (F), are one about 1cm ball in diameter, and two about 2cm balls in diameter at the beginning, it is mouth feel which it becomes large about 1cm, is juicy, and feels refreshed. Both every one Naga-nasu each is attached at about 3cm.

The one-sheet one leaf of Basella rubra is greatly splendid at the greens of (B) and (G).
The length of a leaf is the largest and 9cm width has attached an about 7cm leaf.
Also in the sweet pepper, 6-7 pieces and an about 3-4cm sweet pepper are attached.
Green shiso has also attached 6-7 leaves.
The growth for one month of summer uses a bittern early, and can say that it brings each growth effect forward.

2mL is more splendid growth although the leaf of Basella rubra is splendid very in vivid green.
At (C) and (H), the powder of titanium is used, by (C), into soil, 6g titanium is mixed, 1mL of natural bitterns are added to 1L of tap water, and one Naga-nasu and a fruit tomato are planted.
In (H), only the first time adds 6g titanium powder and 2mL of natural bitterns to 1L of tap water, and is sprinkled to one Naga-nasu and a fruit tomato without mixing titanium in soil.
It is cultivation of midsummer and, as for one to four spraying, daily water will be needed with a planter of (F) - (J) for one week once with the rise of temperature on method of 1 time of giving water the 2nd.
At (C) and (H), growth comes out slowly and a good tomato is made from using titanium.
In one to four spraying, even if a fruit tomato becomes about 4cm, it does not become red, but it increases light in vivid green increasingly.
The portion near especially a calyx becomes deep green.
In order to become about 4cm size from about 2.5cm grade, it is thought that many hours are spent.
In order to increase saccharinely, it is thought that the color of a calyx becomes green very deeply and is making a thick taste.

Although it becomes deep green because the portion of the calyx of (A) and (F) also uses a natural bittern, (C) and (H) become deeper green.
Both blueberries of (D) and (I) are the colors of the small muscat which is tinged with lean.
It is colored by both somewhat black by one spraying, and 6-10 pieces color by 2 - three-piece (I) at (D).

On the flower of (E) and (J), Gardenia jasminoides is planted and sprinkled in impatiens, celosia, salvia and flowering trees and shrubs.
Gardenia jasminoides uses the tree which the flower used by a resin culture medium finishes.
With this planter, by 1mL and 2mL of use, it is hard to attach superiority or inferiority in about one month, and that it is 1mL, it is considered so that often [ direction / growth of a flower ].
1mL shows that the coloring operation of sweet taste increases early in 2mL.
Bitterness is strong.
From 1m, 2mL is sprinkled, bitterness becomes mellow and the strong Ceylon Spinach, and the sweet pepper and green shiso of bitterness of (B) and (G) are sensed easy to eat.

In experiment (ro), poly vinyl alcohol is used and it does not become red.
The fruit tomato' of (C) and (H) becomes red suddenly, and 1mL is sprinkled.
The length of the stem of the Naga-nasu, the tomato Ceylon Spinach sweet pepper, and green shiso of (A) and (B) becomes splendid, and becomes a straight tree.
In (F) and (G), many tomatoes, and a Naga-nasu and a sweet pepper are attached to a stem, it bends so that a stem cannot bear, and the style which becomes a stick needs.
The Ceylon Spinach of (G) is followed still more wonderfully [ one leaf ] than (B) and fresh, and those with the Perilla frutescens (L.) Britton var. crispa (Thunb.) Decne. arm, (B), and its (G) are splendid.
Although the Naga-nasu and the stem of green shiso of (A) and (B), and the posture of a leaf look splendid well and the leaf of green shiso is also beautiful, in (F) and (G), the leaf of an apple and green shiso has a little holes, and it seems that an insect eats.
If a natural bittern is used, insects, such as a butterfly and a dragonfly, will come together by a sweet scent.

The Naga-nasu of (H) is larger than (A) and (C).
Sweet taste of the Naga-nasu of (H) increases and it is more delicious than (A) and (C).
It does not become not much black, but is colored inside 18-20 pieces and the whole black by (I) at five pieces, and a blueberry (D) is sweet.
The cherry tomato of (A) and (F) senses that a hide is thin and juicy and that it is easy to eat compared with a commercial cherry tomato.
In a commercial cherry tomato, it seems that it is grown in consideration of long preservation so that neither a hide nor flesh may be crushed.
It seems that it is the number 1 grown here and it becomes red and also becomes the thinness of a hide.

It becomes crimson [ the fruit tomato of (C) and (H) ], and mouth feel when eating is considered to be very delicious by the elasticity when biting with the sweet blue scent just like a large tomato, and sweet juiciness.
It seems that this is a conclusive factor of the delicacy of a tomato.
In (H) which uses the powder of titanium underwater, only the maximum time attaches many fruits of a tomato from (C) which mixes the powder of titanium in soil, and the number of them is about ten, and that of them is six in (C). Although two pieces, 10cm and 5cm, change greatly by (H) also in the Mizu-nasu, it seldom changes to the beginning in (C), but is only one piece in about 3cm.

The vegetable, the fruits, and the flower used for this experiment are not adding the fertilizer in the state of removing and planting the pot at the time of purchase altogether except the planter of (E).
Although the number of flowers is four in (A), the quantity of the cherry tomato of (A) and (F) is also ten pieces, 2.5 times, in (F), although (A) and (F) are ten pieces, the length of a Naga-nasu is also 8cm in (A) and width is 4.5cm, the Naga-nasu of (F) is 12cm in length, and width is about 5.5cm.
The length of the Naga-nasu of (A) or the stem of a cherry tomato is long, a posture is good, and there is sense of stability.
on the other hand, in (F), heavily, a fruit is in the state which must be supported again, in spite of coming out, and the posture's getting worse and supporting with a stick. Shape is distorted small, the Naga-nasu of (A) has poor-looking appearance, it follows it, and there is no Perilla frutescens (L.) Britton var. crispa (Thunb.) Decne. arm. Also in the sweet pepper of (B) and (G), the number of 18 pieces and flowers is 20, and that of the quantity of the sweet pepper of (G) is longer than the sweet pepper of (B). Although the quantity of the sweet pepper of (B) of the number of 13 pieces and flowers is 13 pieces to many one and there are few things with the long shape, there are many short things.

By these experiments, the potassium contained in spraying and poly vinyl alcohol of a 1mL bittern, and 2.5mL 2.5 times as many natural bitterns helps growth of a root, absorption of the nitrogen currently used for vegetation or vegetables is made active, and it is considered 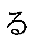 to which growth of a stem or a leaf is urged.
Since spraying of 2mL of natural bitterns and use of a poly beer alcohol and 5mL of twice as many natural bitterns as this make active absorption of calcium and phosphoric acid which are contained in a natural bittern, many flower buds are attached and it can be said that the harvest of a fruit can be obtained.
Although poly vinyl alcohol is resin with water holding property, it is thought that the soil which acts with the sodium contained in a natural bittern, and carries out warming is sterilized, and it acts actively a transpiration operation or photosynthesis.

As for (E) of a flower, and (J), change is seldom seen in experiment (i).
By (E), 2.5L of tap water, poly vinyl alcohol 10g, 2.5mL of liquid manure and 2.5mL of pyrolignous acid, and the water retention and the bactericidal action of resin are used, and it is used, sprinkling soil, and compares with the case of only the natural bittern of (J).
Although it is exactly good growth, yellow and red are being faded by that the bloom of a flower is slow although many flower buds of impatiens are attached in (E), and a salvia by the tone of Celosia.

Although a flower finishes Gardenia jasminoides, growth of a leaf is in an exactly good state.
Since the color of impatiens fades, it is not good.
On the other hand, in (J), the flower of impatiens is vivid and also holds 28 - 30 piece, and buds of about 30.
The color of Celosia is vivid, a salvia also attaches a flower bud, and blooms at once, and its color is vivid. Although Gardenia jasminoides has attached many leaves from (E), a flower bud is inside only by a flower finishing, and it is o .
(F) At - (J), the vividness of fruits, the color of a flower, or a color is acting in the operation of calcium and phosphoric acid.

By global warming, especially in the summer, soil also becomes high temperature and propagation of a microorganism or bacteria is active.
Although it is good to use titanium to sterilization of such soil, it is said that it is difficult to mix a natural bittern component with titanium, and for crops to use it in use of a titanium and a nature bittern.
It is possible to consider a natural bittern for this operation as use of a soil conditioner, or an active agent, a regulator and a root rot inhibitor, and to adjust growth of vegetation or crops.

It is thought that the tap water which contains chlorine in cultivation of the vegetation of a soil culture medium or crops conventionally, and a bactericidal action are annihilating a microorganism.
However, it seems whether since warming is advancing, is the measure which changes the conventional view little by little and adapts itself to natural environment taken in, and it must stop having to go.
Since the chlorine contained in tap water until now was not good, chlorine has been removed from the spread of water purifiers, but since mold occurs immediately, he cannot feel easy about the water which does not contain this chlorine by saving in the refrigerator.
Also in vegetation or crops like man's physiological phenomenon, it is thought that this ingestion of salinity will be needed.

Although it supposes that nonionic resin has a bactericidal action until now, and is used by the vegetable hilling or the soil water holding agent, and it does not swell greatly with tap water at this resin, with the water which does not contain chlorine, growth is worsened without swelling greatly and a bactericidal action's acting.
If polyvinyl alcohol is used as a water retention agent into the soil of a planter, it will swell greatly by a rainfall, root rot will be started, and growth of vegetation will be worsened.
If tap water is given just before according to the experiment a leaf rots, a stem and a flower wither and vegetation withers, Petunia will revive.
There is also no form.
The stem and leaf of marigold are extended.
This is because polyvinyl alcohol expresses a bactericidal action with chlorine.

Disaster, such as a drought, local severe rain, an earthquake, can be considered by warming.
Resin, such as nonionic resin poly vinyl alcohol, a polyalkylene oxide, polyethylene oxide, a poly starch acrylamide, needs to be used for these measures, and preparation arrangement needs to be carried out.
In a drought, the thing which is polyvinyl alcohol and for which evaporation of water will be prevented, and growth of a fish will be helped, and collapse of a bank will be prevented in local severe rain if it is used is possible. Reserving is needed as a measure against a flooded area region.
Although the filter medium of water and restoration construction of the river were once made possible at patent application, it is possible to ease disaster and to prevent collapse by arranging to such disaster.

First, 1 stuffing of Sambu is packed for a sand pebble, and about 60kg of halves are filled in strong bags, such as a hemp sack, for resin from 1 of Sambu at business.
It is possible for it to be necessary to fix to soil with concrete or a stone, to use a tetrapod together, and to weaken a stream, and it holds a priori.
It is important to make a mixed medium for the soil and resin in which the bloating tendency of resin gives remaining power greatly to a bag, and to harden and make the ground, and it arranges this.
Although polyvinyl alcohol swells also 250 to 300 times with the water of an abbreviation river, it becomes 100 or less times weakly in sea water.
Although it is strong to chlorine, such as a polyalkylene oxide or polyethylene oxide, it can reduce to 1 of Sambu by carrying out mixed use or pouring tap water in consideration of the feature of these resin, and processing of a later is easy.

In a summer, soil also becomes high temperature by global warming, and propagation of a microorganism or bacteria is active.
although it is good to use titanium for sterilization of such soil, it is said, in use of agricultural products, it is difficult by mixture of the component of a titanium and a nature bittern.
By using natural bittern polyvinyl alcohol for the bactericidal action of this soil, soil is cooled, bacterial propagation is suppressed and mineral supply is carried out.
It is possible to adjust growth of vegetation or crops as a soil conditioner, a root rot inhibitor and an active agent, or a regulator, and to be activated.

It is thought that the tap water which contains chlorine in cultivation of the vegetation of a soil culture medium or crops conventionally, and a bactericidal action are annihilating the microorganism of soil.
However, the conventional view is changed little by little, and it seems that the measure which adapts itself to natural environment must be taken in, by global warming.

To the chlorine contained in tap water until now, since it is not good, chlorine has been removed by the spread of water purifiers, but mold occurs immediately, and he cannot feel easy about the water which does not contain this chlorine as since it saves in the refrigerator.
Supply of salinity is needed also for man, such as causing heatstroke by intense heat.
Also in vegetation or crops, it thinks [ whether ingestion of this salinity is needed, and ] like the physiological phenomenon for this person.

Although it presupposed that nonionic resin has a bactericidal action and has been used by the vegetable hilling or the soil water holding agent, if tap water is supported especially to polyvinyl alcohol, a bactericidal action will increase, and growth of vegetation is attained. Although this nonionic resin does not swell greatly in tap water, since it swells greatly and the bactericidal action by an adsorbing action does not happen, growth of vegetation gets worse with the water which does not contain chlorine.

The soil culture medium which uses polyvinyl alcohol swells greatly by a rainfall, starts root rot, and is worsening growth of vegetation.
In an experiment, polyvinyl alcohol is mixed in the soil of a planter, and Petunia and marigold are planted and neglected.
Although good growth is carried out at first, it is in the stem which marigold completely disappears by a rainfall, a leaf rots, and Petunia withers, and is withering, and the state where four flowers wither.
If tap water is given to this planter, it will become little by little fine and three shares of Petunia will revive.
One share has about five stems, a flower is attached, respectively, and length is extended to about 20cm.
The stem is extended and marigold attaches the leaf, although a figure completely disappears.
In polyvinyl alcohol, a bactericidal action acts with chlorine of tap water, and this means that vegetation revives.
In these experiments, by warming, it becomes important and indispensable to use for aggravation of growth of vegetation or agricultural products the salinity of polyvinyl alcohol, tap water, and nature a nature bittern.

It is possible to prevent the fall of water temperature and evaporation of water by use of polyvinyl alcohol in measures which fish, such as Lake Biwa, grow, such as a fall of a water level and a drought, and to help habitation of a fish by warming.
Although there is no spawning ground place at the drawdown of Lake Biwa and it appeals for water saving, by transposing the water of Lake Biwa to the deep sea water from which the salinity of sea water is removed, the minerals which sea water contains neutralize with polyvinyl alcohol, and the habitation of a fish of them is attained.

By warming, the atmospheric temperature of the city part where a building and the ground are covered with concrete or asphalt rises, and the "heat island effect" is pointed out.
As this relief and solution, it is good to use the nonionic resin of the nonionic type hydrophilic resin polyalkylene oxide made from thermoplastic nonionic, polyethylene oxide, and polyvinyl alcohol for "cooling nature pavement." If the acrylic resin which repels water is used, it is possible to be in the state of scattering water and to become sultry with heat of vaporization conversely on a hot road like the acrylic resin which it was used for tree planting of a desert at the beginning, and went wrong.
Use of the nonionic resin of an adsorbing action is considered to be good.

It is possible to use this adsorbing action, to mix polyvinyl alcohol in soil, for softening this heat island effect in a street place or a pedestrian way, and to give tap water.
Growth of vegetation and a person are able for resin to intercept sunlight and thermal energy by using the bactericidal action of this resin and using it, sprinkling soil, to prevent the rise of temperature, and to regain energy.
In the acrylic resin which repels water in this use, moisture evaporates and it is not suitable.

It is a situation where there is no telling when danger, such as an earthquake and local severe rain, comes in flood damage.
A long time ago, the bank collapsed and this local severe rain used the straw rice bag.
Although disaster is urgent, since it will have a reserve of one about 250 to 300 times the swelling quantity of this when about 20kg of stones are filled in strong bags, such as a hemp sack, at preparation and about 200g of resin of the xerotes is put in, 60kg of abbreviation resin and a stone are about 80kg completion in 20kg.
Therefore, if it is this, storage is also easy and cost is also considered at a low price.
It is worried that the water level of sea water may go up by warming, and the bank by an earthquake may collapse. Since that this poly vinyl alcohol enters a bag softens the heat island effect so that it may only put on a pedestrian road or a roadside tree and an icy mountain may be placed, it is cool and it feels cool there.
This is because there is no place into which the resin used for an experiment is thrown away, so midsummer is also very cool when it passes in large quantities on the soil of the yard.
Since it will become a thin wafer paper-like film and will separate in about one month if it is then neglected, it is easy to processing.
Sprinkling tap water over this resin repeatedly can use it. It is possible to solve the heat island effect simply by scattering polyvinyl alcohol on the road of concrete.

Also in habitation of these experiments to a fish, growth of vegetation, and a life of man, use of resin is important.
It is possible for a bactericidal action to happen and to revive growth of vegetation by adsorbing chlorine at polyvinyl alcohol.
It is thought by use of the soil conditioner which uses a natural bittern similarly in the agricultural products of the fields where growth is difficult according to flood damage, or root rot prevention, and a vegetable active agent and regulator that this operation has a possible revival of agricultural products.

It supposes that a bactericidal action occurs and patent application is carried out to nonionic resin in October, Heisei 13.
Since this nonionic resin polyvinyl alcohol melts into water, the soil water holding agent those days that use is impossible of nonionic resin polyvinyl alcohol has supposed it.
If mixing use is carried out to soil, this resin swelled at least 250 or more times by the rainfall, in soil, it would file a lot of moisture, and could grow neither vegetation nor agricultural products, but will have started root rot. If this polyvinyl alcohol swells to 250 or more times with pure water, and sprinkles the tap water containing chlorine, resin of a form gelatinization becomes vitrified transparent resin immediately and, in water, it will change shape and will melt.

Since a bactericidal action is continued for a long time with 250 times as much tap water to polyvinyl alcohol 10g, the case where it is used sprinkling the soil water holding agent and soil which mix and use in soil the resin made in these underwater is compared.
In the once experiment, since this underwater bactericidal action was continued by 1250 cc tap water with one day, two days, three days, and four days by use of polyvinyl alcohol 5g, 10g resin and 4-5mL of liquid manure addition manure water were used for the planter of Petunia into this twice as many tap water 2.5L as this.

From about one-month time, it is completely lost and only a stem remains black, the flower of the leaf of Petunia also fades because of the soil water holding agent mixed in soil, and it withers in it.
If tap water is given lightly after that, 5-6 flowers of the planter of the Petunia which is withering will bloom, and it will revive.
When using it, sprinkling, the Petunia which changed into the very good state by spraying of the shot, and is given in heat will become good in one day.
What is necessary is just to have given giving water fully also in midsummer.
This method of sprinkling intercepts sunlight and thermal energy by using 250 times as much tap water as the quantity of resin, and using it, sprinkling this over soil, can prevent a rise and intense heat of the heat of vaporization of midsummer, and lowers and sterilizes the temperature of soil.
It will revive in one day and the vegetation given in heat will be grown good with two months and three months. Vegetable abnormalities are not seen when using after progress, sprinkling for about six months - one year.

A bactericidal action commits polyvinyl alcohol with the residual chlorine of tap water from these experiments, and it is because this operation is continued.
Thus, when it mixes in soil, it turns out that resin swells greatly and the rainfall loses a bactericidal action.
By using natural bittern for polyvinyl alcohol, since there is a limit by use of the agricultural products of fields about this tap water, production of agricultural products can use it also for the restoration construction of improvement of difficult soil, the collapse inhibitor of a river, or the soil to collapse for the flood damage of local severe rain, and it is thought that it is indispensable.
Patent application of these use has already been carried out.
By warming, by high-temperature-izing of soil and propagation of a microorganism or bacteria, the development of a noxious insect, etc., since spraying of agricultural chemicals or the like increases, soil is sterilized using polyvinyl alcohol and a natural bittern, production increase of agricultural products is measured, and better agricultural cultivation is attained.

## Claims

1. A cultivation method of a plant **characterized by** sprinkling nonionic resin over soil.

2. A cultivation method of the plant according to claim 1, wherein said nonionic resin is polyvinyl alcohol.

3. A cultivation method of the plant according to claim 1, wherein said nonionic resin is a polyalkylene oxide.

4. A cultivation method of the plant according to claim 1, wherein said nonionic resin is polyethylene oxide.

5. A cultivation method of the plant according to claim 1, wherein said nonionic resin is a mixture of polyvinyl alcohol, and a polyalkylene oxide and/or polyethylene oxide.

6. A water retention agent **characterized by** sprinkling nonionic resin over soil.

7. The water retention agent according to claim 6, wherein said nonionic resin is polyvinyl alcohol.

8. The water retention agent according to claim 6, wherein said nonionic resin is a polyalkylene oxide.

9. The water retention agent according to claim 6, wherein said nonionic resin is polyethylene oxide.

10. The water retention agent according to claim 6, wherein said nonionic resin is a mixture of polyvinyl alcohol, and a polyalkylene oxide and/or polyethylene oxide.

11. A disinfectant **characterized by** sprinkling nonionic resin over soil.

12. The disinfectant according to claim 11, wherein said nonionic resin is polyvinyl alcohol.

13. The disinfectant according to claim 11, wherein said nonionic resin is a polyalkylene oxide.

14. The disinfectant according to claim 11, wherein said nonionic resin is polyethylene oxide.

15. The disinfectant according to claim 11, wherein said nonionic resin is a mixture of polyvinyl alcohol, and a polyalkylene oxide and/or polyethylene oxide.

16. A weed killer **characterized by** sprinkling nonionic resin over soil.

17. The weed killer according to claim 16, wherein said nonionic resin is polyvinyl alcohol.

18. The weed killer according to claim 16, wherein said nonionic resin is a polyalkylene oxide.

19. The weed killer according to claim 16, wherein said nonionic resin is polyethylene oxide.

20. The weed killer according to claim 16, wherein said nonionic resin is a mixture of polyvinyl alcohol, and a polyalkylene oxide and/or polyethylene oxide.

21. A heat insulation agent **characterized by** sprinkling nonionic resin over soil.

22. The heat insulation agent according to claim 21, wherein said nonionic resin is polyvinyl alcohol.

23. The heat insulation agent according to claim 21, wherein said nonionic resin is a polyalkylene oxide.

24. The heat insulation agent according to claim 21, wherein said nonionic resin is polyethylene oxide.

25. The heat insulation agent according to claim 21, wherein said nonionic resin is a mixture of polyvinyl alcohol, and a polyalkylene oxide and/or polyethylene oxide.

26. A cultivation method of a plant **characterized by** adsorbing liquid manure into nonionic resin and sprinkling it over soil.

27. A cultivation method of the plant according to claim 26, wherein said nonionic resin is polyvinyl alcohol.

28. A cultivation method of the plant according to claim 26, wherein said nonionic resin is a polyalkylene oxide.

29. A cultivation method of the plant according to claim 26, wherein said nonionic resin is polyethylene oxide.

30. A cultivation method of the plant according to claim 26, wherein said nonionic resin is a mixture of polyvinyl alcohol, and a polyalkylene oxide and/or polyethylene oxide.

31. A disinfectant **characterized by** adsorbing liquid manure into nonionic resin and sprinkling it over soil.

32. The disinfectant according to claim 31, wherein said nonionic resin is polyvinyl alcohol.

33. The disinfectant according to claim 31, wherein said nonionic resin is a polyalkylene oxide.

34. The disinfectant according to claim 31, wherein said nonionic resin is polyethylene oxide.

35. The disinfectant according to claim 31, wherein said nonionic resin is a mixture of polyvinyl alcohol, and a polyalkylene oxide and/or polyethylene oxide.

36. A water retention agent **characterized by** adsorbing liquid manure into nonionic resin and sprinkling it over soil.

37. The water retention agent according to claim 36, wherein said nonionic resin is polyvinyl alcohol.

38. The water retention agent according to claim 36, wherein said nonionic resin is a polyalkylene oxide.

39. The water retention agent according to claim 36, wherein said nonionic resin is polyethylene oxide.

40. The water retention agent according to claim 36, wherein said nonionic resin is a mixture of polyvinyl alcohol, and a polyalkylene oxide and/or polyethylene oxide.

41. A weed killer **characterized by** adsorbing liquid manure into nonionic resin and sprinkling it over soil.

42. The weed killer according to claim 41, wherein said nonionic resin is polyvinyl alcohol.

43. The weed killer according to claim 41, wherein said nonionic resin is a polyalkylene oxide.

44. The weed killer according to claim 41, wherein said nonionic resin is polyethylene oxide.

45. The weed killer according to claim 41, wherein said nonionic resin is a mixture of polyvinyl alcohol, and a polyalkylene oxide and/or polyethylene oxide.

46. A heat insulation agent **characterized by** adsorbing liquid manure into nonionic resin and sprinkling it over soil.

47. The heat insulation agent according to claim 46, wherein said nonionic resin is polyvinyl alcohol.

48. The heat insulation agent according to claim 46, wherein said nonionic resin is a polyalkylene oxide.

49. The heat insulation agent according to claim 46, wherein said nonionic resin is polyethylene oxide.

50. The heat insulation agent according to claim 46, wherein said nonionic resin is a mixture of polyvinyl alcohol, and a polyalkylene oxide and/or polyethylene oxide.

51. A cultivation method of a plant which mixes nonionic resin and titanium and is **characterized by** things.

52. The directions for a plant according to claim 51 and a fish, wherein said nonionic resin is polyvinyl alcohol.

53. The directions for a plant according to claim 51 and a fish, wherein said nonionic resin is a polyalkylene oxide.

54. The directions for a plant according to claim 51 and a fish, wherein said nonionic resin is polyethylene oxide.

55. A cultivation method of the plant according to claim 51, wherein said nonionic resin is a mixture of polyvinyl alcohol, and a polyalkylene oxide and/or polyethylene oxide.

56. A disinfectant which mixes nonionic resin and titanium and is **characterized by** things.

57. The disinfectant according to claim 56, wherein said nonionic resin is polyvinyl alcohol.

58. The disinfectant according to claim 56, wherein said nonionic resin is a polyalkylene oxide.

59. The disinfectant according to claim 56, wherein said nonionic resin is polyethylene oxide.

60. The disinfectant according to claim 56, wherein said nonionic resin is a mixture of polyvinyl alcohol, and a polyalkylene oxide and/or polyethylene oxide.

61. A water retention agent which mixes nonionic resin and titanium and is **characterized by** things.

62. The water retention agent according to claim 61, wherein said nonionic resin is polyvinyl alcohol.

63. The water retention agent according to claim 61, wherein said nonionic resin is a polyalkylene oxide.

64. The water retention agent according to claim 61, wherein said nonionic resin is polyethylene oxide.

65. The water retention agent according to claim 61, wherein said nonionic resin is a mixture of polyvinyl alcohol, and a polyalkylene oxide and/or polyethylene oxide.

66. A weed killer which mixes nonionic resin and titanium in soil and is **characterized by** things.

67. The weed killer according to claim 66, wherein said nonionic resin is polyvinyl alcohol.

68. The weed killer according to claim 66, wherein said nonionic resin is a polyalkylene oxide.

69. The weed killer according to claim 66, wherein said nonionic resin is polyethylene oxide.

70. The weed killer according to claim 66, wherein said nonionic resin is a mixture of polyvinyl alcohol, and a polyalkylene oxide and/or polyethylene oxide.

71. A heat insulation agent which mixes nonionic resin and titanium and is **characterized by** things.

72. The heat insulation agent according to claim 71, wherein said nonionic resin is polyvinyl alcohol.

73. The heat insulation agent according to claim 71, wherein said nonionic resin is a polyalkylene oxide.

74. The heat insulation agent according to claim 71, wherein said nonionic resin is polyethylene oxide.

75. The heat insulation agent according to claim 71, wherein said nonionic resin is a mixture of polyvinyl alcohol, and a polyalkylene oxide and/or polyethylene oxide.

76. A cultivation method of a plant **characterized by** sprinkling nonionic resin and titanium.

77. A cultivation method of the plant according to claim 71, wherein said nonionic resin is polyvinyl alcohol.

78. A cultivation method of the plant according to claim 71, wherein said nonionic resin is a polyalkylene oxide.

79. A cultivation method of the plant according to claim 71, wherein said nonionic resin is polyethylene oxide.

80. A cultivation method of the plant according to claim 71, wherein said nonionic resin is a mixture of polyvinyl alcohol, and a polyalkylene oxide and/or polyethylene oxide.

81. A disinfectant **characterized by** sprinkling nonionic resin and titanium.

82. The disinfectant according to claim 81, wherein said nonionic resin is polyvinyl alcohol.

83. The disinfectant according to claim 81, wherein said nonionic resin is a polyalkylene oxide.

84. The disinfectant according to claim 81, wherein said nonionic resin is polyethylene oxide.

85. The disinfectant according to claim 81, wherein said nonionic resin is a mixture of polyvinyl alcohol, and a polyalkylene oxide and/or polyethylene oxide.

86. A water retention agent **characterized by** sprinkling nonionic resin and titanium.

87. The water retention agent according to claim 86, wherein said nonionic resin is polyvinyl alcohol.

88. The water retention agent according to claim 86, wherein said nonionic resin is a polyalkylene oxide.

89. The water retention agent according to claim 86, wherein said nonionic resin is polyethylene oxide.

90. The water retention agent according to claim 86, wherein said nonionic resin is a mixture of polyvinyl alcohol, and a polyalkylene oxide and/or polyethylene oxide.

91. A weed killer **characterized by** sprinkling nonionic resin and titanium.

92. The weed killer according to claim 91, wherein said nonionic resin is polyvinyl alcohol.

93. The weed killer according to claim 91, wherein said nonionic resin is a polyalkylene oxide.

94. The weed killer according to claim 91, wherein said nonionic resin is polyethylene oxide.

95. The weed killer according to claim 91, wherein said nonionic resin is a mixture of polyvinyl alcohol, and a polyalkylene oxide and/or polyethylene oxide.

96. A heat insulation agent **characterized by** sprinkling nonionic resin and titanium.

97. The heat insulation agent according to claim 96, wherein said nonionic resin is polyvinyl alcohol.

98. The heat insulation agent according to claim 96, wherein said nonionic resin is a polyalkylene oxide.

99. The heat insulation agent according to claim 96, wherein said nonionic resin is polyethylene oxide.

100. The heat insulation agent according to claim 96, wherein said nonionic resin is a mixture of polyvinyl alcohol, and a polyalkylene oxide and/or polyethylene oxide.

101. A cultivation method of a plant **characterized by** adsorbing liquid manure into nonionic resin and titanium, and sprinkling them over soil.

102. A cultivation method of the plant according to claim 101, wherein said nonionic resin is polyvinyl alcohol.

103. A cultivation method of the plant according to claim 101, wherein said nonionic resin is a polyalkylene oxide.

104. A cultivation method of the plant according to claim 101, wherein said nonionic resin is polyethylene oxide.

105. A cultivation method of the plant according to claim 101, wherein said nonionic resin is a mixture of polyvinyl alcohol, and a polyalkylene oxide and/or polyethylene oxide.

106. A disinfectant **characterized by** adsorbing liquid manure into nonionic resin and titanium, and sprinkling them.

107. The disinfectant according to claim 106, wherein said nonionic resin is polyvinyl alcohol.

108. The disinfectant according to claim 106, wherein said nonionic resin is a polyalkylene oxide.

109. The disinfectant according to claim 106, wherein said nonionic resin is polyethylene oxide.

110. The disinfectant according to claim 106, wherein said nonionic resin is a mixture of polyvinyl alcohol, and a polyalkylene oxide and/or polyethylene oxide.

111. A water retention agent **characterized by** adsorbing liquid manure into nonionic resin and titanium, and sprinkling them.

112. The water retention agent according to claim 111, wherein said nonionic resin is polyvinyl alcohol.

113. The water retention agent according to claim 111, wherein said nonionic resin is a polyalkylene oxide.

114. The water retention agent according to claim 111, wherein said nonionic resin is polyethylene oxide.

115. The water retention agent according to claim 111, wherein said nonionic resin is a mixture of polyvinyl alcohol, and a polyalkylene oxide and/or polyethylene oxide.

116. A weed killer **characterized by** adsorbing liquid manure into nonionic resin and titanium, and sprinkling them over soil.

117. The weed killer according to claim 116, wherein said nonionic resin is polyvinyl alcohol.

118. The weed killer according to claim 116, wherein said nonionic resin is a polyalkylene oxide.

119. The weed killer according to claim 116, wherein said nonionic resin is polyethylene oxide.

120. The weed killer according to claim 116, wherein said nonionic resin is a mixture of polyvinyl alcohol, and a polyalkylene oxide and/or polyethylene oxide.

121. A heat insulation agent **characterized by** adsorbing liquid manure over nonionic resin and titanium, and sprinkling them.

122. The heat insulation agent according to claim 121, wherein said nonionic resin is polyvinyl alcohol.

123. The heat insulation agent according to claim 121, wherein said nonionic resin is a polyalkylene oxide.

124. The heat insulation agent according to claim 121, wherein said nonionic resin is polyethylene oxide.

125. The heat insulation agent according to claim 121, wherein said nonionic resin is a mixture of polyvinyl alcohol, and a polyalkylene oxide and/or polyethylene oxide.

126. A cultivation method of a plant **characterized by** sprinkling nonionic resin and acrylic resin over soil.

127. A cultivation method of the plant according to claim 126 **characterized by** containing said nonionic resin 80% or more.

128. A disinfectant **characterized by** sprinkling nonionic resin and acrylic resin.

129. The disinfectant according to claim 128 **characterized by** containing said nonionic resin 80% or more.

130. A water retention agent **characterized by** sprinkling nonionic resin and acrylic resin.

131. The water retention agent according to claim 130 **characterized by** containing said nonionic resin 80% or more.

132. A weed killer **characterized by** sprinkling nonionic resin and acrylic resin over soil.

133. The weed killer according to claim 132 **characterized by** containing said nonionic resin 80% or more.

134. A heat insulation agent **characterized by** sprinkling nonionic resin and acrylic resin.

135. A heat insulation agent of the soil according to claim 134 **characterized by** containing said nonionic resin 80% or more.

136. A cultivation method of a plant **characterized by** sprinkling nonionic resin and liquid manure.

137. A cultivation method of the plant according to claim 136, wherein said nonionic resin is polyvinyl alcohol.

138. A cultivation method of the plant according to claim 136, wherein said nonionic resin is a polyalkylene oxide.

139. A cultivation method of the plant according to claim 136, wherein said nonionic resin is polyethylene oxide.

140. A cultivation method of the plant according to claim 136, wherein said nonionic resin is a mixture of polyvinyl alcohol, and a polyalkylene oxide and/or polyethylene oxide.

141. A disinfectant of soil **characterized by** sprinkling nonionic resin and liquid manure over soil.

142. A disinfectant of the soil according to claim 141, wherein said nonionic resin is polyvinyl alcohol.

143. A disinfectant of the soil according to claim 141, wherein said nonionic resin is a polyalkylene oxide.

144. A disinfectant of the soil according to claim 141, wherein said nonionic resin is polyethylene oxide.

145. A disinfectant of the soil according to claim 141, wherein said nonionic resin is a mixture of polyvinyl alcohol, and a polyalkylene oxide and/or polyethylene oxide.

146. A water retention agent **characterized by** sprinkling nonionic resin and liquid manure.

147. The water retention agent according to claim 146, wherein said nonionic resin is polyvinyl alcohol.

148. The water retention agent according to claim 146, wherein said nonionic resin is a polyalkylene oxide.

149. The water retention agent according to claim 146, wherein said nonionic resin is polyethylene oxide.

150. The water retention agent according to claim 146, wherein said nonionic resin is a mixture of polyvinyl alcohol, and a polyalkylene oxide and/or polyethylene oxide.

151. A weed killer **characterized by** sprinkling nonionic resin and liquid manure.

152. The weed killer according to claim 151, wherein said nonionic resin is polyvinyl alcohol.

153. The weed killer according to claim 151, wherein said nonionic resin is a polyalkylene oxide.

154. The weed killer according to claim 151, wherein said nonionic resin is polyethylene oxide.

155. The weed killer according to claim 151, wherein said nonionic resin is a mixture of polyvinyl alcohol, and a polyalkylene oxide and/or polyethylene oxide.

156. A heat insulation agent **characterized by** sprinkling nonionic resin and liquid manure.

157. The heat insulation agent according to claim 156, wherein said nonionic resin is polyvinyl alcohol.

158. The heat insulation agent according to claim 156, wherein said nonionic resin is a polyalkylene oxide.

159. The heat insulation agent according to claim 156, wherein said nonionic resin is polyethylene oxide.

160. The heat insulation agent according to claim 156, wherein said nonionic resin is a mixture of polyvinyl alcohol, and a polyalkylene oxide and/or polyethylene oxide.

161. A freshner of water **characterized by** mixing titanium to acrylic resin.

162. A root rot inhibitor **characterized by** mixing titanium to acrylic resin.

163. A disinfectant **characterized by** mixing titanium to acrylic resin.

164. Antibacteria medicine **characterized by** mixing titanium to acrylic resin.

165. A vegetable culture medium **characterized by** mixing titanium to acrylic resin.

166. A water retention agent **characterized by** mixing titanium to acrylic resin.

167. An improvement agent **characterized by** mixing titanium to acrylic resin.

168. A vegetable culture medium **characterized by** mixing nonionic resin and acrylic resin.

169. The vegetable culture medium according to claim 168 **characterized by** containing said nonionic resin 80% or more.

170. Antibacteria medicine **characterized by** mixing nonionic resin and acrylic resin.

171. The antibacteria medicine according to claim 170 **characterized by** containing said nonionic resin 80% or more.

172. A water retention agent **characterized by** mixing nonionic resin and acrylic resin.

173. The water retention agent according to claim 172 **characterized by** containing said nonionic resin 80% or more.

174. A freshner of water **characterized by** containing nonionic resin and acrylic resin.

175. A freshner of the water according to claim 174 **characterized by** containing said nonionic resin 80% or more.

176. An improvement agent **characterized by** mixing nonionic resin and acrylic resin.

177. An improvement agent of the soil according to claim 176 **characterized by** containing said nonionic resin 80% or more.

178. A freshness holding method of cut flowers **characterized by** adding titanium to tap water.

179. A freshness holding method of the cut flowers according to claim 178, wherein said titanium is 0.1 to 80 % of the weight to weight of said tap water.

180. A cultivation method of a plant **characterized by** adding tap water, liquid manure, and titanium to a flowerpot.

181. A cultivation method of the plant according to claim 180, wherein said titanium is 100 to 300 % of the weight to weight of said tap water and liquid manure.

182. A cultivation method of the plant according to claim 180 or 181, wherein a hole has opened in a bottom of said flowerpot.

183. A cultivation method of a plant **characterized by** impregnating nonionic resin with liquid manure and adding titanium further.

184. A cultivation method of the plant according to claim 183, wherein said titanium is 0.5 to 60 % of the weight to weight of nonionic resin and liquid manure.

185. A cultivation method of the plant according to claim 183 or 184, wherein said nonionic resin is polyvinyl alcohol.

186. A cultivation method of the plant according to claim 183 or 184, wherein said nonionic resin is a polyalkylene oxide.

187. A cultivation method of the plant according to claim 183 or 184, wherein said nonionic resin is polyethylene oxide.

188. A cultivation method of the plant according to claim 183 or 184, wherein said nonionic resin is a mixture of polyvinyl alcohol, and a polyalkylene oxide and/or polyethylene oxide.

189. A cultivation method of a plant **characterized by** impregnating nonionic resin and acrylic resin with liquid manure, and adding titanium further.

190. A cultivation method of the plant according to claim 189, wherein said titanium is 0.5 to 60 % of the weight to weight of nonionic resin, acrylic resin, and liquid manure.

191. A cultivation method of the plant according to claim 189 or 190, wherein said nonionic resin is polyvinyl alcohol.

192. A cultivation method of the plant according to claim 189 or 190, wherein said nonionic resin is a polyalkylene oxide.

193. Claim paragraph 189, wherein said nonionic resin is polyethylene oxide, or a cultivation method of the plant according to claim 190.

194. A cultivation method of the plant according to claim 189 or 190, wherein said nonionic resin is a mixture of polyvinyl alcohol, and a polyalkylene oxide and/or polyethylene oxide.

195. A vegetable culture medium **characterized by** mixing titanium and soil.

196. The vegetable culture medium according to claim 195, wherein said titanium is 0.5 to 80 % of the weight to weight of soil.

197. A vegetable culture medium **characterized by** mixing titanium, soil, and acrylic resin.

198. The vegetable culture medium according to claim 197, wherein said titanium is 0.5 to 80 % of the weight to weight of soil and acrylic resin.

199. A vegetable culture medium **characterized by** mixing titanium, soil, and nonionic resin.

200. The vegetable culture medium according to claim 199, wherein said titanium is 0.5 to 80 % of the weight to weight of soil and nonionic resin.

201. The vegetable culture medium according to claim 199 or 200, wherein said nonionic resin is polyvinyl alcohol.

202. The vegetable culture medium according to claim 199 or 200, wherein said nonionic resin is a polyalkylene oxide.

203. The vegetable culture medium according to claim 199 or 200, wherein said nonionic resin is polyethylene oxide.

204. The vegetable culture medium according to claim 199 or 200, wherein said nonionic resin is a mixture of polyvinyl alcohol, and a polyalkylene oxide and/or polyethylene oxide.

205. A deodorizer **characterized by** mixing titanium and acrylic resin.

206. A deodorizer **characterized by** mixing titanium and nonionic resin.

207. A deodorizer **characterized by** mixing titanium, nonionic resin, and acrylic resin.

208. The deodorizer according to claim 206 or 207, wherein said nonionic resin is polyvinyl alcohol.

209. The deodorizer according to claim 206 or 207, wherein said nonionic resin is a polyalkylene oxide.

210. The deodorizer according to claim 206 or 207, wherein said nonionic resin is polyethylene oxide.

211. The deodorizer according to claim 206 or 207, wherein said nonionic resin is a mixture of polyvinyl alcohol, and a polyalkylene oxide and/or polyethylene oxide.

212. A deodorizer **characterized by** mixing titanium, acrylic resin, and an aromatic.

213. A deodorizer **characterized by** mixing titanium, nonionic resin, and an aromatic.

214. A deodorizer **characterized by** mixing titanium, nonionic resin, acrylic resin, and an aromatic.

215. The deodorizer according to claim 213 or 214, wherein said nonionic resin is polyvinyl alcohol.

216. The deodorizer according to claim 213 or 214, wherein said nonionic resin is a polyalkylene oxide.

217. The deodorizer according to claim 213 or 214, wherein said nonionic resin is polyethylene oxide.

218. The deodorizer according to claim 213 or 214, wherein said nonionic resin is a mixture of polyvinyl alcohol, and a polyalkylene oxide and/or polyethylene oxide.

219. Freshness maintenance of water **characterized by** adding titanium in water.

220. Freshness maintenance of water, wherein said titanium is a glass cullet.

221. Freshness maintenance of water **characterized by** adding titanium and nonionic resin in water.

222. Freshness maintenance of water, wherein said nonionic resin is polyvinyl alcohol.

223. Freshness maintenance of the water according to claim 221 or 222, wherein said water contains a chlorine ion.

224. Freshness maintenance of the water according to claim 221 or 222, wherein said water contains a deep-sea water of hard water in sea.

225. Freshness maintenance of the water according to claim 221 or 222, wherein said water contains a natural bittern.

226. a culture medium -- nature -- vegetable cultivation **characterized by** pouring water of a bittern.

227. The vegetable culture medium according to claim 226 **characterized by** mixing powder of titanium to said culture medium.

228. Vegetable cultivation **characterized by** using a natural bittern and nonionic resin for a culture medium.

229. The vegetable cultivation according to claim 228, wherein said nonionic resin is polyvinyl alcohol.

230. The vegetable culture medium according to claim 228 or 229 **characterized by** mixing powder of titanium to said culture medium.

231. Vegetable cultivation **characterized by** using a natural bittern, nonionic resin, and titanium for a culture medium.

232. The vegetable culture medium according to claim 231 **characterized by** mixing powder of titanium to said culture medium.
